# EUROPÄISCHE PATENTSCHRIFT

(11) **EP 3 083 883 B1**
(45) Veröffentlichungstag und Bekanntmachung des Hinweises auf die Patenterteilung: **11.07.2018**
(21) Anmeldenummer: 14818875.8
(22) Anmeldetag: 16.12.2014
(51) Int. Cl.: B01D 61/44, C09K 19/00, C09K 19/12, C09K 19/54, C09K 19/06, C09K 19/04, C09K 19/30, C09K 19/02

(54) **VERFAHREN ZUM REINIGEN EINER FLÜSSIGKRISTALLMISCHUNG**
METHOD FOR CLEANING A LIQUID CRYSTAL MIXTURE
PROCÉDÉ DE PURIFICATION D'UN MÉLANGE DE CRISTAUX LIQUIDES

(30) Priorität: 18.12.2013 DE 102013021279
(43) Veröffentlichungstag der Anmeldung: 26.10.2016
(73) Patentinhaber: Merck Patent GmbH, 64293 Darmstadt (DE)
(72) Erfinder: KAETZEL, Uwe, 55271 Stadecken-Elsheim (DE)
(86) Internationale Anmeldenummer: PCT/EP2014/003376
(87) Internationale Veröffentlichungsnummer: WO 2015/090565

(56) Entgegenhaltungen:
- CN-A- 101 760 203
- CN-A- 101 760 204
- DE-A1- 10 125 708

## Beschreibung

Die Erfindung betrifft ein Verfahren zum Reinigen einer Flüssigkristallmischung.

Flüssigkristallmischungen sind fluide Substanzen mit kristallähnlichen richtungsabhängigen physikalischen Eigenschaften, die beispielsweise in Flüssigkristallanzeigen verwendet werden. Kommerziell erhältliche und vorteilhaft bei Anzeigen oder Displays einsetzbare Flüssigkristallmischungen weisen verschiedene Komponenten auf, die in einem vorgegebenen Verhältnis zueinander miteinander vermischt werden. Durch eine geeignete Vorgabe einzelner Komponenten und Mischungsanteile können gezielt die für den jeweiligen Anwendungsfall erforderlichen Eigenschaften und Vorteile der Flüssigkristallmischung realisiert werden.

Es hat sich gezeigt, dass bereits geringe Verunreinigungen einer Flüssigkristallmischung dazu führen können, dass die für den vorgesehenen Verwendungszweck erforderlichen oder wünschenswerten Eigenschaften der Flüssigkristallmischung beeinträchtigt werden können und eine wirtschaftlich sinnvolle Verwendung einer vorgegebenen Flüssigkristallmischung für einen bestimmten Verwendungszweck erschwert oder sogar unmöglich werden kann.

Aus der Praxis sind deshalb verschiedene Reinigungsverfahren bekannt geworden, mit denen eine Flüssigkristallmischung aufgereinigt werden kann. Die verschiedenen Reinigungsverfahren basieren auf unterschiedlichen Methoden. In industriellen Herstellungs- und Verarbeitungsprozessen stellen mechanische Filterverfahren oder die Zugabe und anschließende Abscheidung eines Sorbens häufig eingesetzte Reinigungsverfahren dar.

Die aus der Praxis bekannten Reinigungsverfahren weisen für die Reinigung von Flüssigkristallmischungen oftmals nur eine geringe Effizienz auf und sind dennoch vergleichsweise kostenintensiv.

CN 101760204 A beschreibt ein Verfahren zum Reinigen von flüssigkristallinen Verbindungen und flüssigkristallinen Mischungen durch Anlegen eines elektrischen Feldes unter Verwendung einer Reinigungszelle mit dem zu reinigenden flüssigkristallinen Material, wobei die Reinigungszelle sich zwischen einer Kathodenzelle und einer Anodenzelle befindet und von diesen jeweils durch eine lonenaustauschmembran getrennt ist.

CN 101760203 A beschreibt ein Verfahren zum Reinigen von flüssigkristallinen Verbindungen und flüssigkristallinen Mischungen durch Anlegen eines elektrischen Feldes unter Verwendung von Adsorptionsmitteln hoher Aktivität sowie von Ionenaustauschmembranen.

DE 101 25 708 A1 beschreibt ein Verfahren zum Reinigen von flüssigkristallinen Mischungen mittels Entfernung von ionischen Substanzen durch Elektrophorese.

Es wird deshalb als eine Aufgabe der vorliegenden Erfindung angesehen, ein Verfahren zum Reinigen einer Flüssigkristallmischung so auszugestalten, dass eine möglichst effiziente Reinigung der Flüssigkristallmischung möglichst günstig und zuverlässig durchgeführt werden kann.

Diese Aufgabe wird erfindungsgemäß durch ein Reinigungsverfahren gelöst, wobei die Flüssigkristallmischung durch eine erste Elektrodialysezelle gefördert wird, wobei eine Konzentratlösung durch eine an die erste Elektrodialysezelle benachbart angrenzende und durch eine lonenaustauschmembran getrennte zweite Elektrodialysezelle gefördert wird, und wobei mit Hilfe von einer außerhalb der Elektrodialysezellen angeordneten Anoden-Kathoden-Anordnung ein elektrisches Feld quer zu einer Förderrichtung der Flüssigkristallmischung durch die erste Elektrodialysezelle erzeugt wird, so dass ionisierte Bestandteile der Flüssigkristallmischung aus der ersten Elektrodialysezelle abgeführt und aus der Flüssigkristallmischung abgeschieden werden. Das erfindungsgemäße Verfahren entspricht dem zu Folge im Wesentlichen der Durchführung einer Elektrodialyse der Flüssigkristallmischung. Es hat sich gezeigt, dass viele in der Praxis relevante Verunreinigungen mit der Elektrodialyse von der Flüssigkristallmischung separiert und abgeschieden werden können. Durch eine geeignete Vorgabe der Konzentratlösung und der die erste Elektrodialysezelle begrenzenden lonenaustauschermembran können ionisierte Verunreinigungen zuverlässig und mit hoher Effektivität aus der Flüssigkristallmischung abgeschieden werden.

Das erfindungsgemäße Verfahren kann im Dauerbetrieb durchgeführt werden und ermöglicht eine kontinuierliche Probennahme und Kontrolle des Aufreinigungsprozesses, so dass in Abhängigkeit von der jeweiligen Flüssigkristallmischung, deren Verunreinigung und einem angestrebten Reinheitsgrad der zu reinigenden Flüssigkristallmischung eine geeignete Verfahrensdauer ermittelt und die bereits erzielte Aufreinigung während der Durchführung des Reinigungsverfahrens überwacht und gegebenenfalls geregelt werden kann.

Gemäß einer vorteilhaften Ausgestaltung des Erfindungsgedankens ist vorgesehen, dass die Flüssigkristallmischung mehrfach durch die erste Elektrodialysezelle gefördert wird. Es ist ebenfalls möglich, dass die Flüssigkristallmischung nacheinander durch mehrere Elektrodialysezellen mit einer mit der ersten Elektrodialysezelle vergleichbaren Anordnung einer lonenaustauschermembran und einer angrenzenden zweiten Elektrodialysezelle und von einem vergleichbaren elektrischen Feld gefördert wird. In beiden Fällen kann dadurch erreicht werden, dass eine Förderrate der Flüssigkristallmischung sowie eine Gesamtreinigungsdauer bzw. eine Gesamtverweildauer der Flüssigkristallmischung in der ersten Elektrodialysezelle bzw. in einer vergleichbaren Elektrodialysezellen-Anordnung unabhängig voneinander vorgegeben werden können. So ist es beispielsweise möglich, im Falle einer hocheffizient abscheidbaren Verunreinigung die Verfahrensdauer anzupassen und kurz zu halten. Wird dagegen festgestellt, dass sich die Verunreinigung der Flüssigkristallmischung nur vergleichsweise langsam abscheiden und aus der Flüssigkristallmischung entfernen lässt, kann das Reinigungsverfahren ausreichend lange durchgeführt werden, um eine vorgegebene Reinigungswirkung zu erreichen und zuverlässig zu gewährleisten. Durch eine zeitlich beanstandete oder kontinuierliche Probeentnahme kann die bereits erreichte Reinigungswirkung ermittelt und kontrolliert werden. Mit dem erfindungsgemäßen Reinigungsverfahren ist dem zu Folge auch eine geregelte Reinigung einer Flüssigkristallmischung möglich, so dass sichergestellt werden kann, dass ein angestrebter oder notwendigerweise vorgegebener Reinheitsgrad mit der erfindungsgemäßen Aufreinigung auch erreicht wird.

Gemäß einer Ausgestaltung des Erfindungsgedankens ist vorgesehen, dass die Flüssigkristallmischung über einen Zeitraum von mehr als einer Stunde, vorzugsweise von mehr als 4 Stunden, durch die erste Elektrodialysezelle gefördert wird. Sofern mehrere vergleichbare Elektrodialysezellen nacheinander durchströmt werden, kann ebenfalls vorgesehen sein, dass die gesamte Verweildauer der Flüssigkristallmischung in diesen Elektrodialysezellen mehr als eine Stunde und vorzugsweise mehr als vier Stunden beträgt. Es hat sich gezeigt, dass sich der spezifische Widerstand, der als ein zweckmäßiges Kriterium für die Reinheit der Flüssigkristallmischung angesehen werden kann, in Abhängigkeit von der Verfahrensdauer über einen Zeitraum von etwa 4 Stunden bis 8 Stunden um mehr als einen Faktor 20 erhöhen lässt.

Es hat sich als vorteilhaft herausgestellt, dass als Konzentratlösung deionisiertes Wasser verwendet wird. Zusätzlich zu einem vergleichsweise effektiven Ladungstransport in deionisiertem Wasser wird durch das Konzentrationsgefälle eine Osmose durch die lonenaustauschermembran hindurch begünstigt, was zu einer zusätzlich reinigenden Wirkung führt.

Es ist jedoch ebenfalls möglich und in Abhängigkeit von der Zusammensetzung der Flüssigkristallmischung gegebenenfalls vorteilhaft, dass als Konzentratlösung auch andere geeignete Lösungen, wie beispielsweise Transformatorenöl, Dodecan oder ein anderes organisches Lösungsmittel, verwendet werden können.

Untersuchungen haben ergeben, dass eine große Potenzialdifferenz und damit einhergehend ein großes elektrisches Feld quer zu einer Durchströmungsrichtung der Flüssigkristallmischung durch die erste Elektrodialysezelle besonders vorteilhaft für eine effektive Reinigungswirkung ist. Gemäß einer Ausgestaltung des Erfindungsgedankens ist deshalb vorgesehen, dass als lonenaustauschermembran eine Membran mit einer Durchschlagsspannung von mehr als 10 Volt, vorzugsweise von mehr als 80 Volt und besonders bevorzugt von 400 Volt und mehr, verwendet wird, und mit Hilfe der Anoden-Kathoden-Anordnung eine elektrische Potentialdifferenz vorgegeben wird, die einen möglichst großen, jedoch unterhalb der Durchschlagsspannung liegenden Spannungsabfall an der lonenaustauschermembran bewirkt. Als Durchschlagsspannung wird diejenige Spannung bezeichnet, ab der die Membran nicht mehr zuverlässig als Isolator wirkt und ein Stromfluss durch die Membran hindurch die Elektrodialyse beeinträchtigen könnte. Ein Spannungsabfall zwischen 10 und 1000 Volt innerhalb der ersten Elektrodialysezelle wird als geeignet für die Durchführung des Reinigungsverfahrens angesehen. Der Spannungsabfall in der ersten Elektrodialysezelle sollte vorzugsweise in einem Bereich zwischen 80 Volt und 120 Volt liegen, was sich als besonders vorteilhaft für das Reinigungsverfahren erwiesen hat.

Um zu verhindern, dass Wasser oder andere Stoffmengenanteile an den Elektroden zersetzt werden, ist gemäß einer vorteilhaften Ausgestaltung des Erfindungsgedankens vorgesehen, dass die Anode und die Kathode während der Durchführung des Verfahrens mit Transformatorenöl gespült werden. Das Transformatorenöl kann kontinuierlich oder in zeitlichen Abständen die zugänglichen Wirkflächen der Anode und der Kathode umspülen. Als Elektrodenmaterial für die Anode und für die Kathode können bevorzugt Edelstahl, jedoch auch Graphit, Mischoxide oder andere geeignete Elektrodenmaterialien verwendet werden.

Um zu verhindern, dass nach einem Reinigungsvorgang Rückstände der gereinigten Flüssigkristallmischung in der ersten Elektrodendialysezelle haften bleiben und zurückgehalten werden ist vorgesehen, dass nach Möglichkeit alle mit der zu reinigenden Flüssigkristallmischung in Kontakt kommenden Oberflächen beispielsweise aus Perfluoralkoxy-Polymeren (PFA) hergestellt oder damit beschichtet sind. Es ist ebenfalls möglich, dass die produktberührenden Komponenten, wie beispielsweise die Elektrodialysezelle, aber auch Leitungsschläuche, lonenaustauschermembranen oder Abstandselemente in einer Elektrodialysezelle aus einem inerten Polymer wie beispielsweise Polytetrafluorethylen (PTFE) hergestellt sind. Zweckmäßigerweise werden die produktberührenden Komponenten vor einem Beginn eines neuen Reinigungsverfahrens mit organischen Lösemitteln wie beispielsweise Aceton oder Toluol gereinigt.

Um während der Durchführung des Reinigungsverfahrens unerwünschte Druckschwankungen in der ersten Elektrodialyse zu vermeiden, durch die eine Leckage zwischen benachbarten Elektrodialysezellen begünstigt oder verursacht werden könnten, werden zur Förderung der Flüssigkristallmischung und der Konzentratlösung pulsationsarme Pumpen verwendet. Es hat sich gezeigt, dass beispielsweise durch die Verwendung von Zahnradpumpen eine sehr druckkonstante Förderung der Flüssigkristallmischung möglich ist und unerwünschte Effekte wie beispielsweise eine Leckage oder eine verminderte Reinigungswirkung erheblich reduziert oder vollständig vermieden werden.

Um eine möglichst effektive Reinigung der Flüssigkristallmischung innerhalb einer möglichst kurzen Zeit zu erreichen, ist vorgesehen, dass die Flüssigkristallmischung vor einem Einbringen in die erste Elektrodialysezelle durchmischt und homogenisiert wird.

Eine Vorrichtung, mit welcher das erfindungsgemäße Verfahren durchgeführt werden kann, weist eine erste Elektrodialysezelle mit einer Zuleitung und einer Ableitung auf, so dass eine Flüssigkristallmischung in einer Förderrichtung durch die erste Elektrodialysezelle gefördert werden kann, und eine an die erste Elektrodialysezelle benachbart angrenzende und durch eine geeignete lonenaustauschermembran getrennte zweite Elektrodialysezelle mit einer Zuleitung und mit einer Ableitung auf, so dass eine Konzentratlösung durch die zweite Elektrodialysezelle gefördert werden kann. Die erste Elektrodialysezelle und die zweite Elektrodialysezelle sind so zwischen einer Anoden-Kathoden-Anordnung angeordnet, dass mit der Anoden-Kathoden-Anordnung ein elektrisches Feld quer zu der Förderrichtung der Flüssigkristallmischung in der ersten Elektrodialysezelle erzeugt werden kann.

Die Anode und die Kathode werden von der ersten Elektrodialysezelle und von der zweiten Elektrodialysezelle jeweils durch eine lonenaustauschermembran getrennt, die gelöste Ionen mit einer Ladung austauschen, die ein entgegengesetztes Ladungsvorzeichen zu den von der lonenaustauschermembran zwischen der ersten Elektrodialysezelle und der zweiten Elektrodialysezelle ausgetauschten gelösten Ionen aufweisen. Befindet sich beispielsweise zwischen der ersten Elektrodialysezelle und der zweiten Elektrodialysezelle eine Kationenaustauschermembran, sind die Anode und die Kathode durch Anionenaustauschermembranen von der ersten und der zweiten Elektrodialysezelle abgetrennt.

Die lonenaustauschermembranen können vorzugsweise heterogen ausgestaltet sein und in einem Basispolymer eingebettete Ionenaustauscherpartikel aufweisen, oder aber homogen ausgestaltet sein und aus einem ionischen Polymer bestehen. Als Elektrodenmaterial wird bevorzugt Edelstahl, aber auch Graphit oder ein geeignetes Mischoxid verwendet.

Zwischen den jeweils benachbarten Ionenaustauschermembranen sind Abstandseinrichtungen angeordnet, die als Spacer bezeichnet werden und auch einer effektiven Fluidverteilung innerhalb der Elektrodialysezellen dienen. Die Spacer sind aus einem inerten Kunststoffmaterial oder Kunststoffmaterialgemisch wie beispielsweise Polyethylen, Polyethylen und Polyamid oder aus Polyvinylchlorid und Polyethylenterephthalat hergestellt. Eine typische Dicke geeigneter Spacer beträgt zwischen 0,3 mm und 1,5 mm, bevorzugt etwa 0,5 mm.

Für die Förderung der Flüssigkristallmischung und der Konzentratlösung werden in vorteilhafter Weise pulsationsarme und möglichst druckkonstante Pumpen wie beispielsweise Zahnradpumpen verwendet.

Alle mit der Flüssigkristallmischung in Kontakt kommenden Komponenten wie beispielsweise die Elektrodialysezellen, die lonenaustauschermembranen, die Spacer und die für die Zuleitungen und Ableitungen verwendeten Schläuche, sind vorzugsweise mit einem inerten Polymer hergestellt oder mit einer entsprechenden Beschichtung versehen. Als inertes Polymer eignet sich beispielsweise PFA oder PTFE.

Nachfolgend werden Ausführungsbeispiele des Erfindungsgedankens näher erläutert, die in der Zeichnung dargestellt sind. Es zeigt:
Figur 1 eine schematische Darstellung eines erfindungsgemäßen Reinigungsverfahrens, das mit Hilfe einer geeigneten Elektrodialysevorrichtung durchgeführt wird, und
Figur 2 eine schematische Darstellung einer zeitlichen Veränderung eines spezifischen Widerstands einer Flüssigkristallmischung während der Dauer der Durchführung des Reinigungsverfahrens.

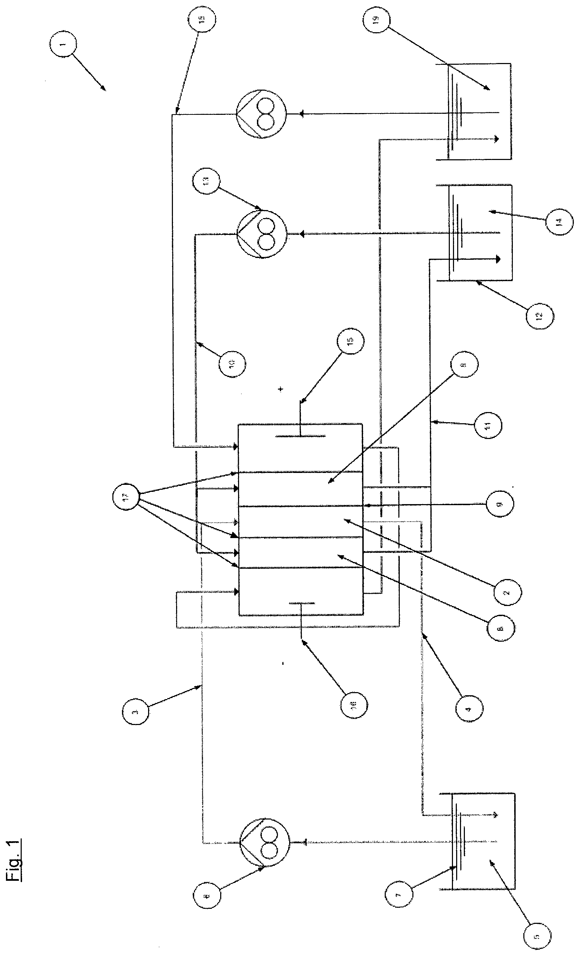

Eine in Fig. 1 exemplarisch dargestellte Reinigungsvorrichtung 1, mit welcher das erfindungsgemäße Verfahren zur Reinigung einer Flüssigkristallmischung durchgeführt werden kann, weist eine erste Elektrodialysezelle 2 mit einer Zuleitung 3 und einer Ableitung 4 auf, die mit einem Flüssigkristallmischungsreservoir 5 verbunden sind. Mit Hilfe einer Zahnradpumpe 6 kann eine Fluidmenge einer Flüssigkristallmischung 7 aus dem Flüssigkristallmischungsreservoir 5 heraus, durch die erste Elektrodialysezelle 2 hindurch und wieder zurück in das Flüssigkristallmischungsreservoir 5 hinein gefördert werden, so dass ein Kreislauf erzeugt und kontinuierlich die Flüssigkristallmischung 7 durch die erste Elektrodialysezelle 2 gefördert wird. In der Darstellung gemäß Fig. 1 durchströmt die Flüssigkristallmischung 7 die erste Elektrodialysezelle 2 in einer von oben nach unten verlaufenden Förderrichtung.

Eine an die erste Elektrodialysezelle 2 benachbart angrenzende zweite Elektrodialysezelle 8 ist durch eine geeignete Anionenaustauschermembran 9 von der ersten Elektrodialysezelle 2 getrennt. Die zweite Elektrodialysezelle 8 weist ebenfalls eine Zuleitung 10 und eine Ableitung 11 auf, die mit einem Konzentratlösungsreservoir 12 in Verbindung stehen, so dass mit Hilfe einer Zahnradpumpe 13 eine Konzentratlösung 14 durch die zweite Elektrodialysezelle 8 gefördert werden kann. Als Konzentratlösung 14 wird deionisiertes Wasser verwendet.

Die erste Elektrodialysezelle 2 und die zweite Elektrodialysezelle 8 sind so zwischen einer Anode 15 und einer Kathoden 16 angeordnet, dass mit dieser Anoden-Kathoden-Anordnung ein elektrisches Feld quer zu der Förderrichtung der Flüssigkristallmischung 7 in der ersten Elektrodialysezelle 2 erzeugt werden kann.

Die Anode 15 und die Kathode 16 werden von der ersten Elektrodialysezelle 2 und von der zweiten Elektrodialysezelle 8 jeweils durch eine Kationenaustauschermembran 17 getrennt und können mit Hilfe eines Transformatorenöl-Kreislaufes 18 kontinuierlich oder bei Bedarf mit Transformatorenöl 19 gespült werden.

Alle mit der Flüssigkristallmischung 7 in Kontakt kommenden Komponenten wie beispielsweise die Elektrodialysezellen 2 und 8, die lonenaustauschermembranen 9 und 17, die Spacer und die für die Zuleitungen 3 und 10 und die Ableitungen 4 und 11 verwendeten Schläuche sind mit einem inerten Polymer hergestellt oder mit einer entsprechenden Beschichtung versehen. Als inertes Polymer eignet sich beispielsweise PFA oder PTFE.

Zur Durchführung des Reinigungsverfahrens wird zwischen der Anode 15 und der Kathode 16 mit Hilfe einer Gleichspannungsquelle eine Potentialdifferenz von beispielsweise 80 Volt oder 120 Volt erzeugt. Die Zahnradpumpen 6 und 13 werden in Betrieb genommen und bewirken eine gleichmäßige Förderung der Flüssigkristallmischung 7 durch die erste Elektrodialysezelle 2 und der Konzentratlösung 14 durch die zweite Elektrodialysezelle 8. Während die Flüssigkristallmischung 7 die erste Elektrodialysezelle 2 durchströmt werden ionisierte Verunreinigungen durch das elektrische Feld entweder an die Anionenaustauschermembran 9 in Richtung der zweiten Elektrodialysezelle 8 gelenkt, oder bei entgegengesetztem Ladungsvorzeichen der ionisierten Verunreinigung an die Kationenaustauschermembran 17 in Richtung der Kathode 16 abgelenkt und dadurch aus der durchströmenden Flüssigkristallmischung 7 abgeschieden.

Die Förderung der Flüssigkristallmischung durch die erste Elektrodialysezelle 2 kann über einen ausreichend langen Zeitraum hinweg durchgeführt werden. Während der Durchführung des Reinigungsverfahrens können kontinuierlich oder in zeitlichen Abständen Proben entnommen werden, um die bereits erreichte Aufreinigung der Flüssigkristallmischung 7 zu ermitteln und zu überwachen.

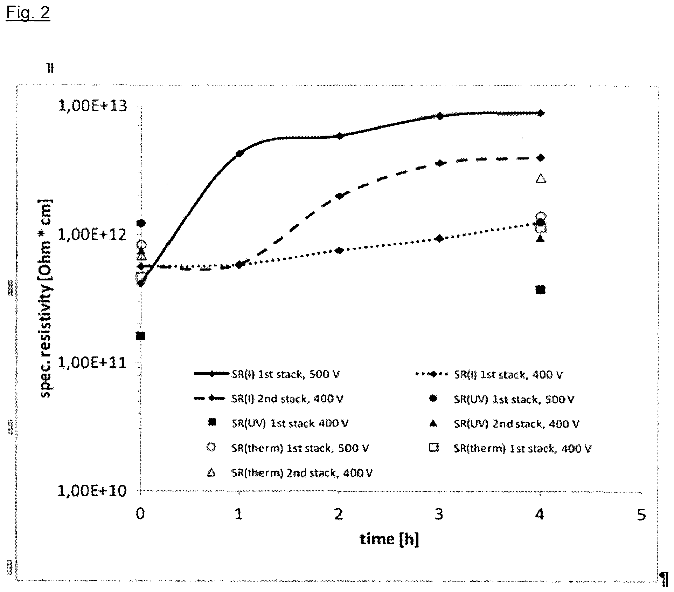

In Fig. 2 ist schematisch ein während der Durchführung des Reinigungsverfahrens für eine Flüssigkristallmischung 7 ermittelter spezifischer Widerstand p in der Einheit Ohm x cm in Abhängigkeit von der Reinigungsdauer t in der Einheit Stunden dargestellt. Der spezifische Widerstand p ist ein Maß für den Anteil an gelösten Ionen in der Flüssigkristallmischung 7 und damit zumindest indirekt ein Maß für den in der Flüssigkristallmischung 7 enthaltenen Anteil an ionisierten Verunreinigungen. Je größer der spezifische Widerstand p ist, umso geringer ist der Anteil an ionisierten Verunreinigungen und umso größer ist die Reinheit der Flüssigkristallmischung 7. Es hat sich gezeigt, dass sich der spezifische Widerstand p einer typischen Flüssigkristallmischung 7 bereits nach einer Stunde um etwa einen Faktor 10 erhöht und nach etwa vier Stunden um etwa einen Faktor 40 erhöht.

Das erfindungsgemäße Reinigungsverfahren kann mit laborüblichen Elektrodialysevorrichtungen durchgeführt werden und erfordert lediglich einen kontinuierlichen Betrieb der Zahnradpumpen. Das Reinigungsverfahren ist demzufolge mit geringem apparativen Aufwand und kostengünstig durchführbar und ermöglicht eine sehr effiziente Aufreinigung der Flüssigkristallmischung 7. Die Effizienz kann weiter gesteigert werden, indem zusätzlich vorab weitere Reinigungsverfahren durchgeführt werden, die auf anderen Methoden basieren.

Das vorangehend beschriebene Reinigungsverfahren ist insbesondere geeignet für Flüssigkristallmischungen enthaltend mindestens zwei organische Substanzen, vorzugsweise mesogene, insbesondere flüssigkristalline Substanzen, wobei die organischen Substanzen vorzugsweise ausgewählt sind aus den Verbindungen der allgemeinen Formel I, 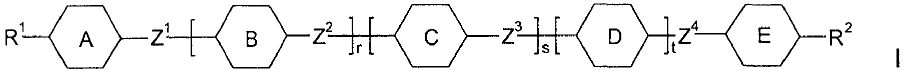 worin
- R¹ und R²: jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 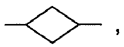 -C≡C-, -CH=CH-, -CF₂O-, -OCF₂-, -OC-O- oder -O-CO- so ersetzt sein können, dass O-Atome nicht direkt miteinander verknüpft sind, und einer der Reste R¹, R² auch F, Cl, CN, SF₅, NCS, SCN, OCN,
- Ringe A, B, C, D, E: jeweils unabhängig voneinander 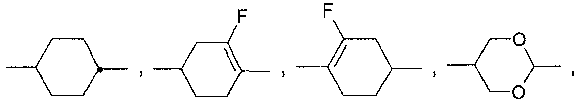 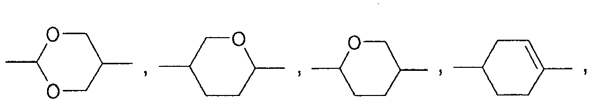 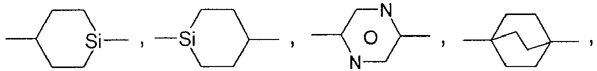 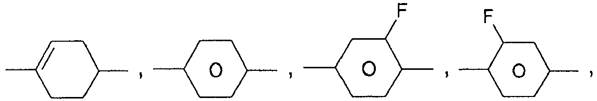 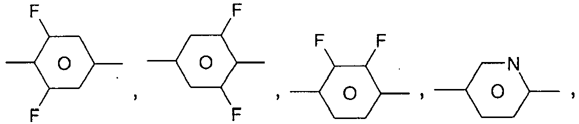 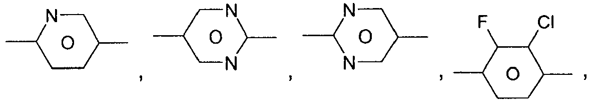 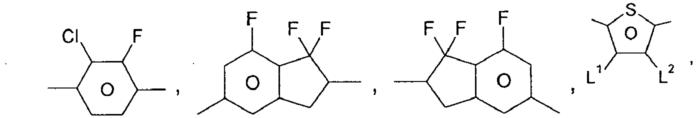 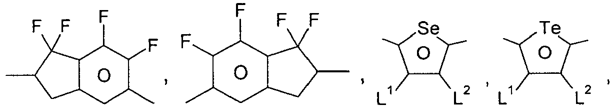 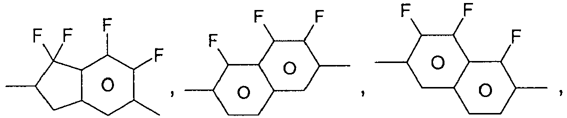 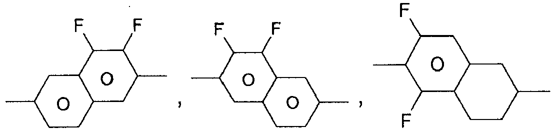 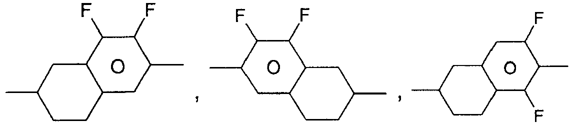 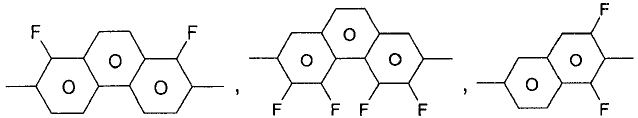 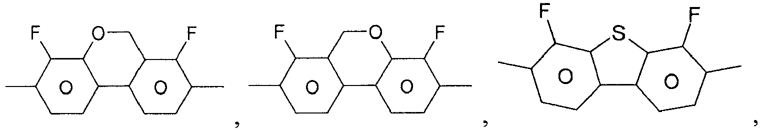 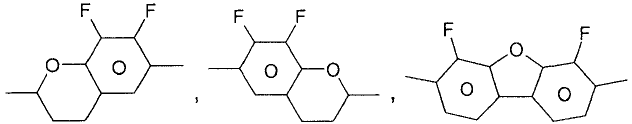
- r, s und t: jeweils unabhängig voneinander 0, 1, 2 oder 3, wobei r + s+ t ≤ 3 ist,
- Z¹⁻⁴: jeweils unabhängig voneinander -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- oder eine Einfachbindung, und
- L¹ und L²: jeweils unabhängig voneinander H oder F,
bedeuten.

Für den Fall, dass r + s + t = 0 ist, so sind Z¹ und Z⁴ bevorzugt derart ausgewählt, dass sie, wenn sie keine Einfachbindung bedeuten, nicht über zwei O-Atome miteinander verknüpft sind.

Die eingesetzten Flüssigkristallmischungen aus den mesogenen Einzelsubstanzen der Formel I können zusätzlich auch eine oder mehrere polymerisierbare Verbindungen, sogenannte reaktive Mesogene (RMs), beispielsweise wie in U.S. 6,861,107 offenbart, in Konzentrationen von bevorzugt 0,1 - 5 Gew.%, besonders bevorzugt 0,2 - 2 %, bezogen auf die Mischung enthalten. Derartige Mischungen können für sogenannte Polymer Stabilized VA (PS-VA)-Modes, negativ IPS (PS-IPS)- oder negativ FFS (PS-FFS)-Modes, bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Einzelsubstanzen, enthält.

Voraussetzung hierfür ist, dass die Flüssigkristallmischung selbst keine polymerisierbaren Komponenten enthält, die unter den Bedingungen, wo die Verbindung der Formel M polymerisiert, ebenfalls polymerisieren.

Die Polymerisation wird vorzugsweise unter folgenden Bedingungen durchgeführt :
Die polymerisierbaren Komponenten werden in einer Zelle polymerisiert unter Verwendung einer UV-A Lampe definierter Intensität für einen definierten Zeitraum und angelegter Spannung (typischerweise 10 V bis 30 V Wechselspannung, Frequenzen im Bereich von 60 Hz - 1 kHz). Als UV-A Lichtquelle wird typischerweise eine Halogenmetalldampflampe oder eine Hochdruckquecksilberlampe mit einer Intensität von 50 mW/cm2 eingesetzt. Dies sind Bedingungen, wo beispielsweise flüssigkristalline Verbindungen mit einer Alkenyl- oder Alkenlyoxyseitenkette, wie z. B. die Verbindung der Formel 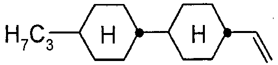 nicht polymerisieren.

Die polymerisierbaren mesogenen oder flüssigkristallinen Verbindungen, auch als "reaktive Mesogene" (RM) bezeichnet, sind vorzugsweise ausgewählt aus den Verbindungen der Formel II,

R^{a}-A¹-(Z¹-A²)ₘ-R^{b} II

worin die einzelnen Reste folgende Bedeutung haben:
- A¹ und A²: jeweils unabhängig voneinander eine aromatische, heteroaromatische, alicyclische oder heterocyclische Gruppe, vorzugsweise mit 4 bis 25 C-Atomen, welche auch annellierte Ringe enthalten kann, und welche optional durch L ein- oder mehrfach substituiert ist,
- Z¹: bei jedem Auftreten gleich oder verschieden -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ-, -CF₂CH₂-, -CH₂CF₂-, -(CF₂)ₙ-, -CH=CH-, -CF=CF-, -C≡C-, -CH=CH-COO-, -OCO-CH=CH-, CR⁰R⁰⁰ oder eine Einfachbindung,
- L, R^{a} und R^{b}: jeweils unabhängig voneinander H, Halogen, SF₅, NO₂, eine Kohlenstoffgruppe oder Kohlenwasserstoffgruppe, wobei die Verbindungen mindestens einen Rest L, R^{a} und R^{b} enthalten, der eine Gruppe P-Sp- bedeutet oder enthält,
- R⁰ und R⁰⁰: jeweils unabhängig voneinander H oder Alkyl mit 1 bis 12 C-Atomen,
- P: eine polymerisierbare Gruppe,
- Sp: eine Abstandsgruppe oder eine Einfachbindung,
- m: 0, 1, 2, 3 oder 4,
- n: 1, 2, 3 oder 4.

Die polymerisierbaren Verbindungen können eine polymerisierbare Gruppe (monoreaktiv) oder zwei oder mehr (di- oder multireaktiv), vorzugsweise zwei polymerisierbare Gruppen aufweisen.

Vor- und nachstehend gelten folgende Bedeutungen:
Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung ("RM") die mesogene Gruppe und die polymerisierbare(n) Gruppe(n) miteinander verbindet. Bevorzugt bedeutet Sp eine Einfachbindung oder ein 1-16 C Alkylen, worin ein oder mehrere CH₂-Gruppen durch -O-, -CO-, -COO- oder -OCO- so ersetzt sein können, so dass nicht zwei O-Atome direkt miteinander verbunden sind.

Der Begriff "organische Gruppe" bedeutet eine Kohlenstoff- oder Kohlenwasserstoffgruppe.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält. "Halogen" bedeutet F, Cl, Br oder I.

Die Begriffe "Alkyl", "Aryl", "Heteroaryl" etc. umfassen auch mehrbindige Gruppen, beispielsweise Alkylen, Arylen, Heteroarylen etc.
Der Ausdruck "Alkyl" umfasst in dieser Anmeldung geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" umfasst in dieser Anmeldung geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst in dieser Anmeldung geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m 1-6 oder m = 0 und n = 1-3.
Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Die Herstellung der polymerisierbaren Verbindungen erfolgt in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart.

Typische und bevorzugte reaktive Mesogene (RMs) sind beispielsweise in WO 93/22397, EP 0 261 712, DE 195 04 224, WO 95/22586, WO 97/00600, US 5,518,652, US 5,750,051, US 5,770,107 und US 6,514,578 beschrieben. Ganz besonders bevorzugte reaktive Mesogene werden in der Tabelle E genannt.

Das Verfahren wird zur Herstellung einer Mischung bestehend aus organischen Verbindungen angewandt, von denen vorzugsweise eine oder mehrere für sich mesogen, bevorzugt flüssigkristallin sind. Die mesogenen Verbindungen umfassen vorzugsweise eine oder mehrere flüssigkristalline Verbindungen. Vorzugsweise ist das Verfahrensprodukt eine homogene, flüssigkristalline Mischung. Das Verfahren umfasst im weiteren Sinn auch die Herstellung von Mischungen, die in der homogenen flüssigen Phase aus organischen Substanzen bestehen und darin unlösliche Zusätze (z. B. kleine Partikel) enthalten. Das Verfahren kann somit auch für die Herstellung von suspensionsartigen oder emulsionsartigen Mischungen basierend auf einer kontinuierlichen homogenen organischen Phase angewendet werden. Solche Verfahrensvarianten sind jedoch in der Regel weniger bevorzugt.

Mittels geeigneter Zusatzstoffe können die Flüssigkristallmischungen enthaltend mindestens zwei Verbindungen der Formel I so modifiziert werden, dass sie in jeder bisher bekannt gewordenen Art von LCD-Anzeigen, z. B. von ECB-, VAN-, IPS-, FFS-, TN-, TN-TFT-, STN-, OCB-, GH-, PS-IPS, PS-FFS, PM-VA, PVA-, PSA-, PS-VA- oder ASM-VA-Anzeigen einsetzbar sind.

Die Flüssigkristallmischungen können auch weitere, dem Fachmann bekannte und in der Literatur beschriebene Additive, wie z. B. UV-Stabilisatoren, wie z.B. Tinuvin®, z.B. Tinuvin® 770, der Fa. BASF, Antioxidantien, wie z.B. Irganox®, z.B. Irganox® 1076 (Octadecyl-3-(3,5-di-tert.butyl-4-hydroxyphenyl)-propionate, der Fa. BASF, Radikalfänger, Nanopartikel, Mikropartikel, ein oder mehrere Dotierstoffe, etc. enthalten. Beispielsweise können 0-15 % pleochroitische Farbstoffe zugesetzt werden, ferner Leitsalze, vorzugsweise Ethyldimethyldodecyl-ammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

Geeignete Stabilisatoren und Dotierstoffe, die bei der Herstellung der Flüssigkristallmischungen mit den Verbindungen der Formel I zusammen in die Elektrodialysezelle gegebenen werden können, werden nachfolgend in den Tabellen C und D genannt.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

In der gesamten Patentanmeldung werden 1,4-Cyclohexylenringe und 1,4-Phenylenringe wie folgt dargestellt:

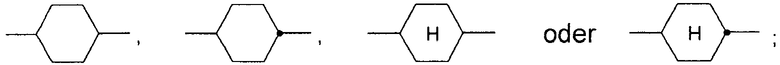

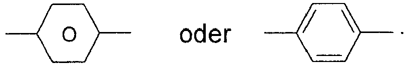

Bei den Cyclohexylenringen handelt es sich um trans-1,4-Cyclohexylenringe.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m, k und z sind ganze Zahlen und bedeuten vorzugsweise 0, 1, 2, 3, 4, 5, 6, 7, 8, 9, 10, 11 oder 12. Der Ausdruck "(O)CₘH₂ₘ₊₁" bedeutet OCₘH₂ₘ₊₁ oder CₘH₂ₘ₊₁. Die Codierung gemäß Tabelle B versteht sich von selbst.

In Tabelle A ist nur das Akronym für den Grundkörper angegeben. Im Einzelfall folgt getrennt von Akronym für den Grundkörper mit einem Strich ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte mesogene oder flüssigkristalline Substanzen, die für die Herstellung von Flüssigkristallmischungen geeignet sind und bei dem erfindungsgemäßen Reinigungsverfahren Anwendung finden können, sind insbesondere in den Tabellen A und B gelistet:

**Table A**

| | |
|---|---|
| 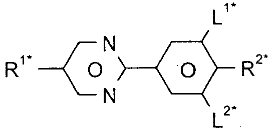 | 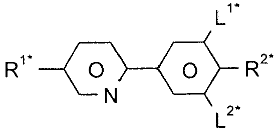 |
| **PYP** | **PYRP** |
| 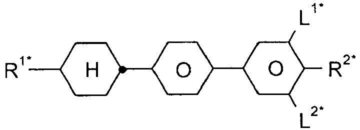 | 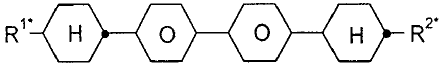 |
| **BCH** | **CBC** |
| 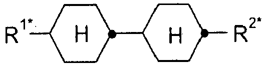 | 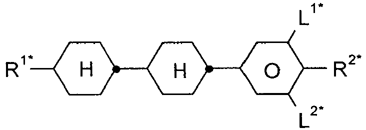 |
| **CCH** | **CCP** |
| 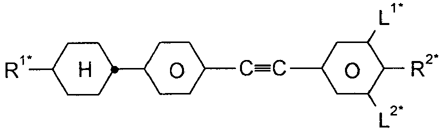 | 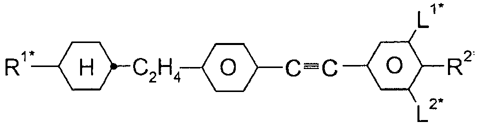 |
| **CPTP** | **CEPTP** |
| 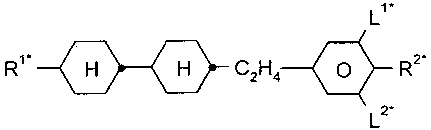 | 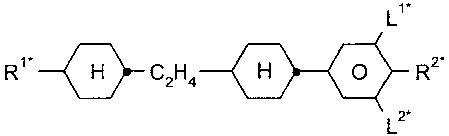 |
| **ECCP** | **CECP** |
| 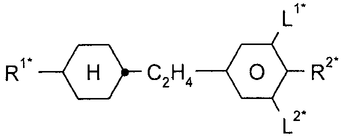 | 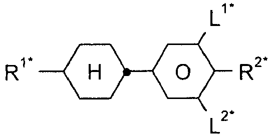 |
| **EPCH** | **PCH** |
| 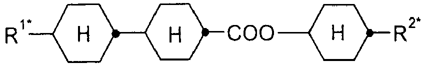 | |
| **CH** | |
| 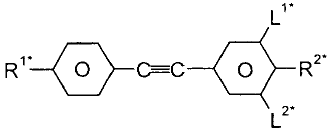 | 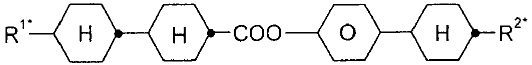 |
| **PTP** | **CCPC** |
| 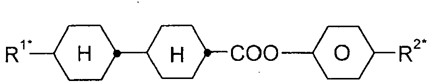 | 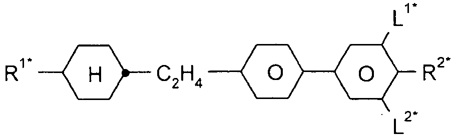 |
| **CP** | **BECH** |
| 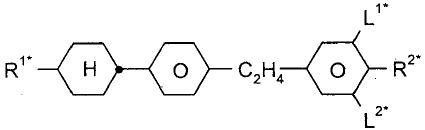 | 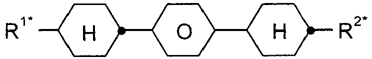 |
| **EBCH** | **CPC** |
| 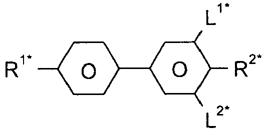 | 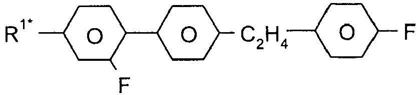 |
| **B** | **FET-nF** |
| 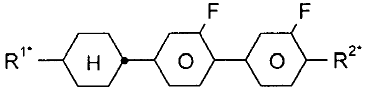 | 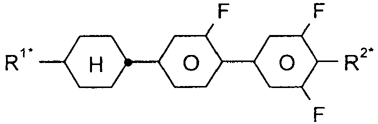 |
| **CGG** | **CGU** |
| 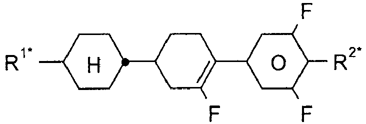 | |
| **CFU** | |

**Tabelle B**

| | |
|---|---|
| (n = 1-15; (O)CₙH₂ₙ₊₁ bedeutet CₙH₂ₙ₊₁ oder OCₙH₂ₙ₊₁) | |
| 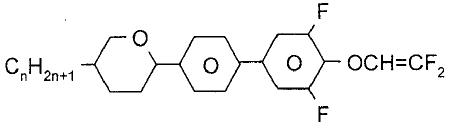 | |
| **APU-n-OXF** | |
| 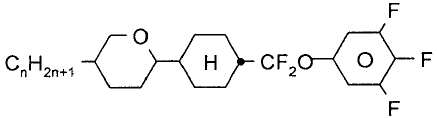 | 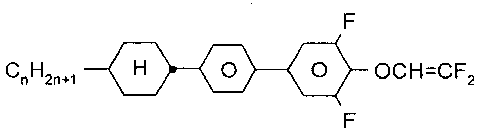 |
| **ACQU-n-F** | **CPU-n-OXF** |
| 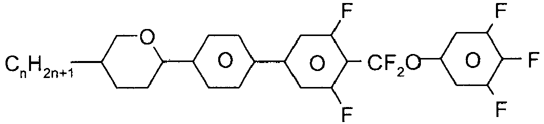 | |
| **APUQU-n-F** | |
| 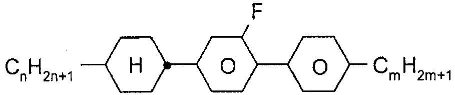 | 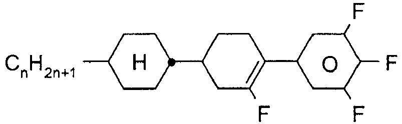 |
| **BCH-n.Fm** | **CFU-n-F** |
| 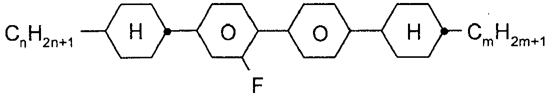 | |
| **CBC-nmF** | |
| 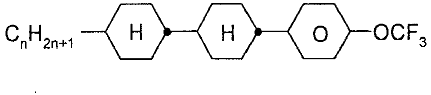 | 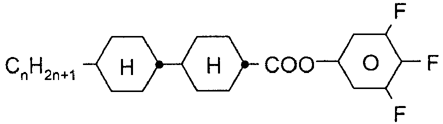 |
| **CCP-nOCF₃** | **CCZU-n-F** |
| 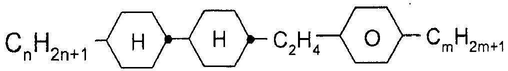 | |
| **ECCP-nm** | |
| 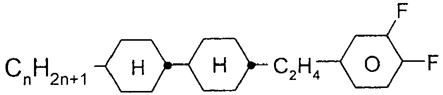 | |
| **ECCP-nF.F** | |
| 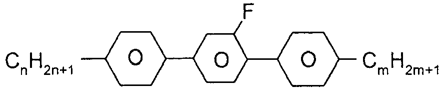 | 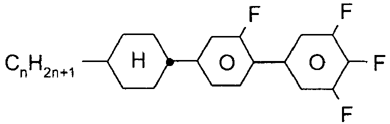 |
| **PGP-n-m** | **CGU-n-F** |
| 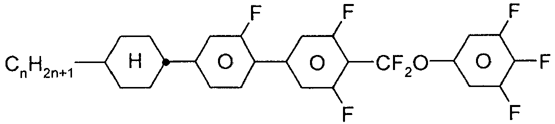 | |
| **CGUQU-n-F** | |
| 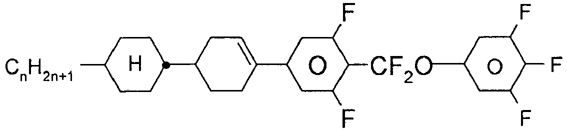 | |
| **CLUQU-n-F** | |
| 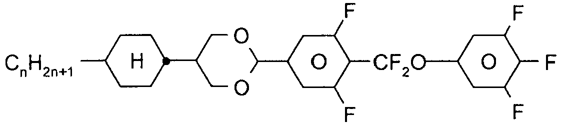 | |
| **CDUQU-n-F** | |
| 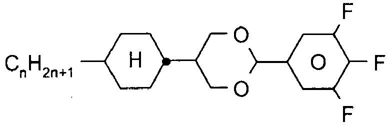 | 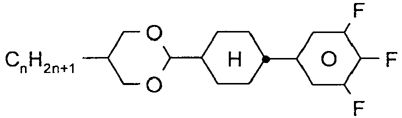 |
| **CDU-n-F** | **DCU-n-F** |
| 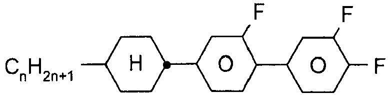 | 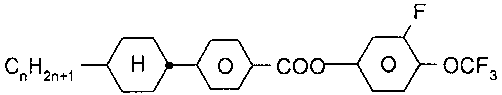 |
| **CGG-n-F** | **CPZG-n-OT** |
| 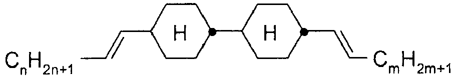 | 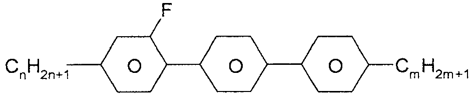 |
| **CC-nV-Vm** | **GPP-n-m** |
| 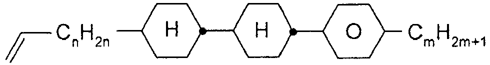 | 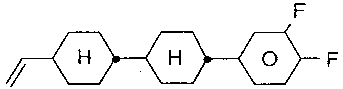 |
| **CCP-Vn-m** | **CCG-V-F** |
| 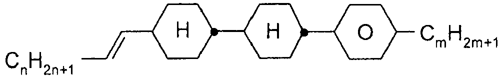 | 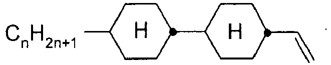 |
| **CCP-nV-m** | **CC-n-V** |
| 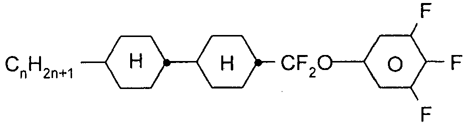 | 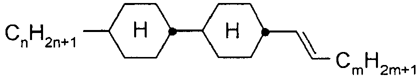 |
| **CCQU-n-F** | **CC-n-Vm** |
| 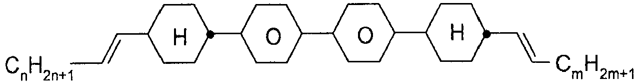 | |
| **CPPC-nV-Vm** | |
| 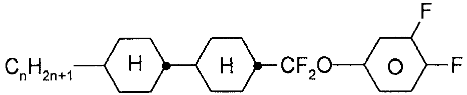 | 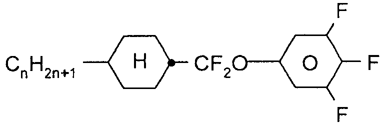 |
| **CCQG-n-F** | **CQU-n-F** |
| 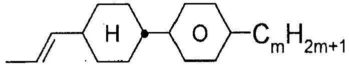 | |
| **CP-1V-m** | |
| 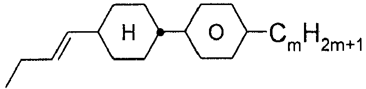 | 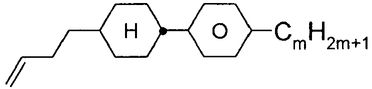 |
| **CP-2V-m** | **CP-V2-m** |
| 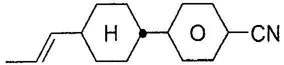 | 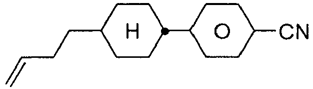 |
| **CP-1V-N** | **CP-V2-N** |
| 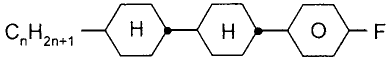 | 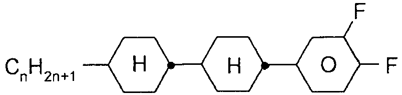 |
| **CCP-nF** | **CCP-nF.F** |
| 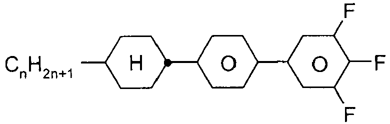 | 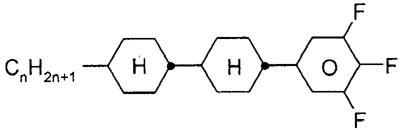 |
| **BCH-nF.F.F** | **CCP-nF.F.F** |
| 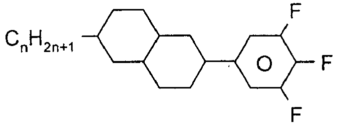 | 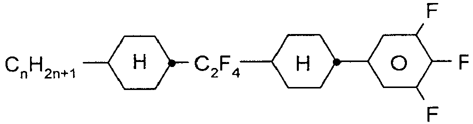 |
| **Dec-U-n-F** | **CWCU-n-F** |
| 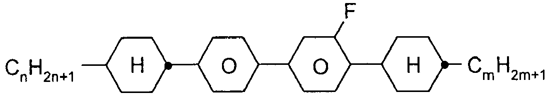 | |
| **CPGP-n-m** | |
| 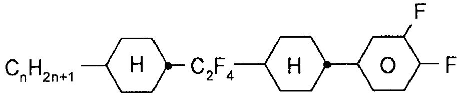 | |
| **CWCG-n-F** | |
| 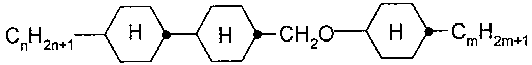 | |
| **CCOC-n-m** | |
| 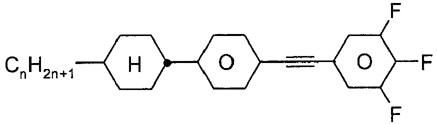 | 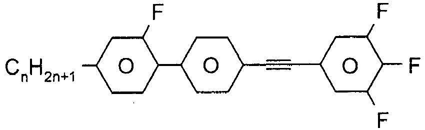 |
| **CPTU-n-F** | **GPTU-n-F** |
| 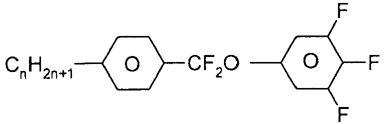 | 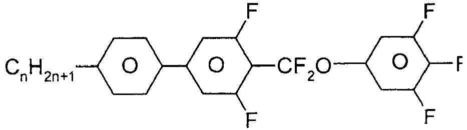 |
| **PQU-n-F** | **PUQU-n-F** |
| 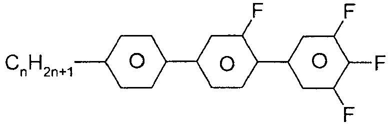 | 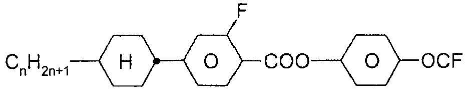 |
| **PGU-n-F** | **CGZP-n-OT** |
| 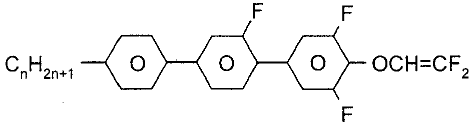 | |
| **PGU-n-OXF** | |
| 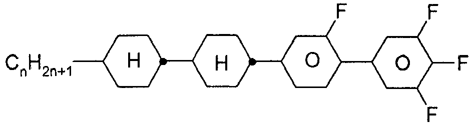 | |
| **CCGU-n-F** | |
| 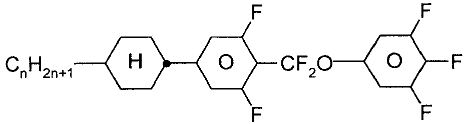 | |
| **CUQU-n-F** | |
| 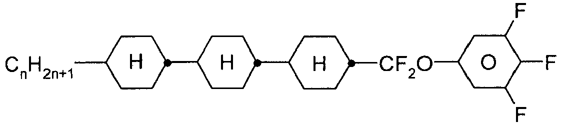 | |
| **CCCQU-n-F** | |
| 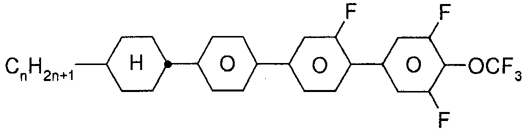 | |
| **CPGU-n-OT** | |
| 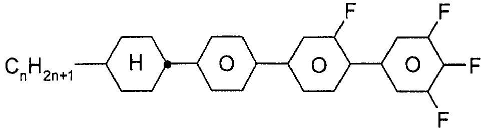 | |
| **CPGU-n-F** | |
| 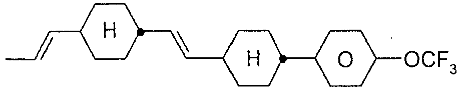 | 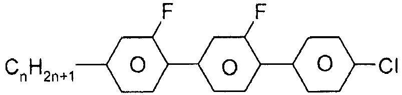 |
| **CVCP-1V-OT** | **GGP-n-Cl** |
| 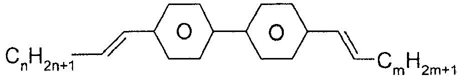 | 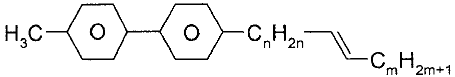 |
| **PP-nV-Vm** | **PP-1-nVm** |
| 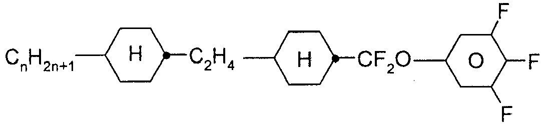 | |
| **CWCQU-n-F** | |
| 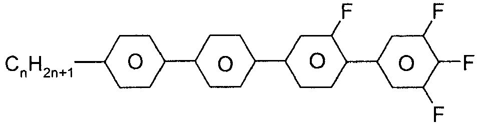 | |
| **PPGU-n-F** | |
| 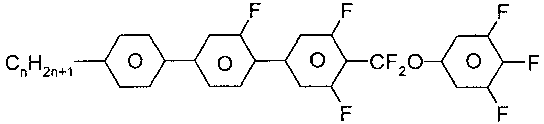 | |
| **PGUQU-n-F** | |
| 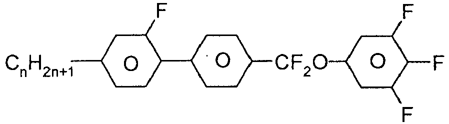 | 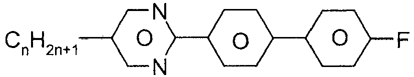 |
| **GPQU-n-F** | **MPP-n-F** |
| 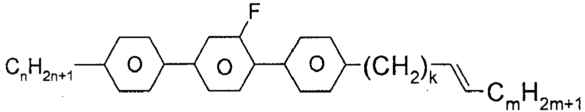 | |
| **PGP-n-kVm** | |
| 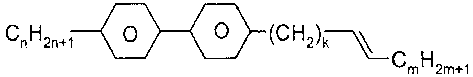 | |
| **PP-n-kVm** | |
| 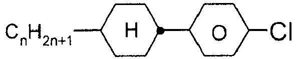 | 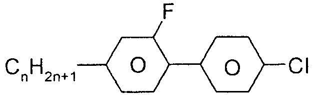 |
| **PCH-nCl** | **GP-n-Cl** |
| 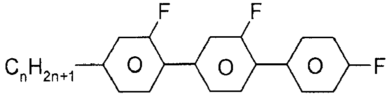 | 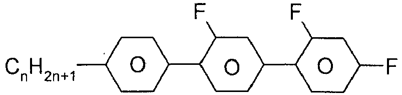 |
| **GGP-n-F** | **PGIGI-n-F** |
| 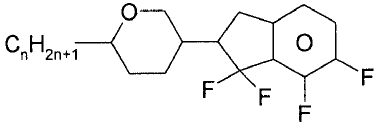 | |
| **AIK-n-F** | |
| 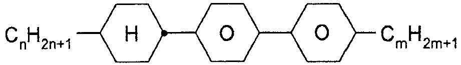 | |
| **BCH-nm** | |
| 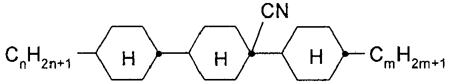 | 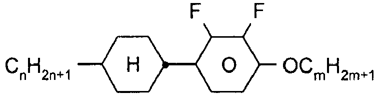 |
| **BCN-nm** | **CY-n-Om** |
| 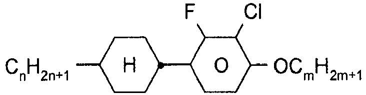 | 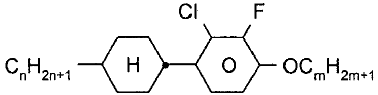 |
| **CP(F,Cl)-n-Om** | **CP(Cl,F)-n-Om** |
| 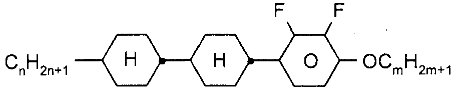 | 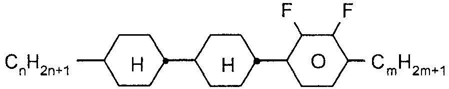 |
| **CCY-n-Om** | **CCY-n-m** |
| 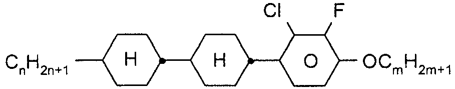 | 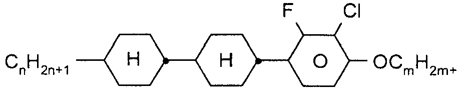 |
| **CCP(Cl,F)-n-Om** | **CCP(F,Cl)-n-Om** |
| 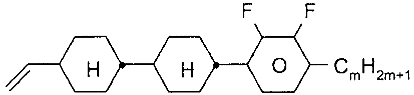 | 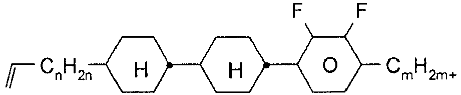 |
| **CCY-V-m** | **CCY-Vn-m** |
| 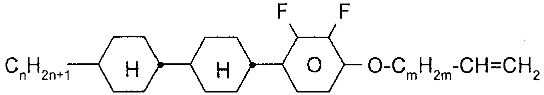 | |
| **CCY-n-OmV** | |
| 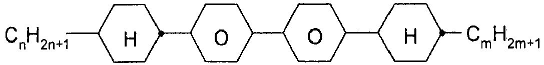 | |
| **CBC-nm** | |
| 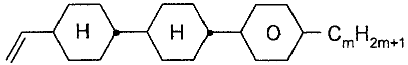 | |
| **CCP-V-m** | |
| 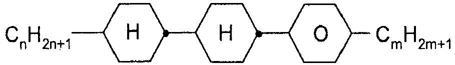 | |
| **CCP-n-m** | |
| 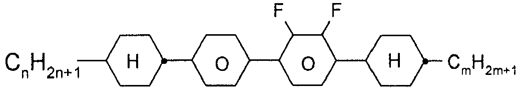 | |
| **CPYC-n-m** | |
| 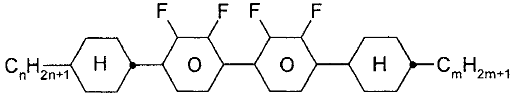 | |
| **CYYC-n-m** | |
| 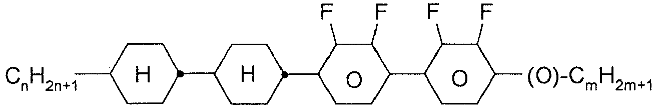 | |
| **CCYY-n-(O)m** | |
| 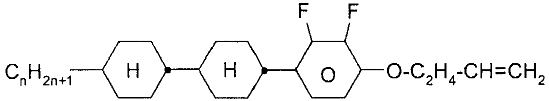 | |
| **CCY-n-O2V** | |
| 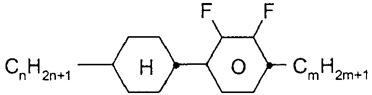 | |
| **CY-n-m** | |
| 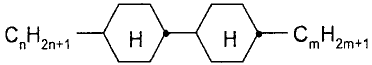 | 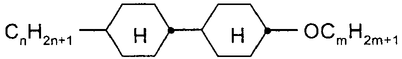 |
| **CCH-nm** | **CCH-nOm** |
| 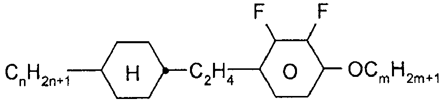 | 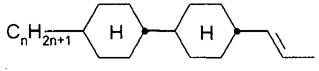 |
| **CEY-n-Om** | **CC-n-V1** |
| 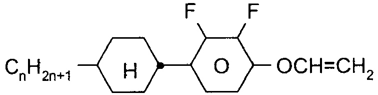 | 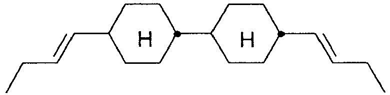 |
| **CY-n-OV** | **CC-2V-V2** |
| 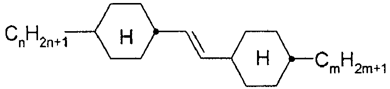 | 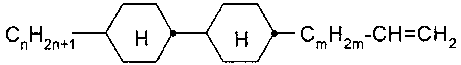 |
| **CVC-n-m** | **CC-n-mV** |
| 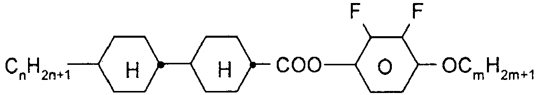 | |
| **CP-nOmFF** | |
| 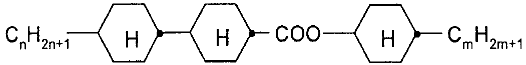 | |
| **CH-nm** | |
| 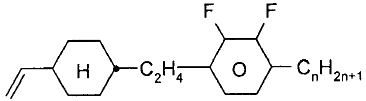 | 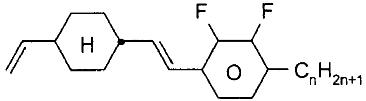 |
| **CEY-V-n** | **CVY-V-n** |
| 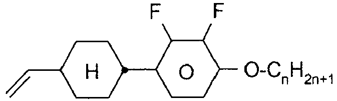 | 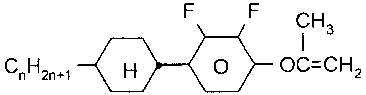 |
| **CY-V-On** | **CY-n-OC(CH₃)=CH₂** |
| 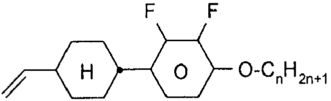 | 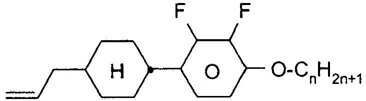 |
| **CY-1V-On** | **CY-V1-On** |
| 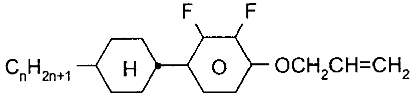 | 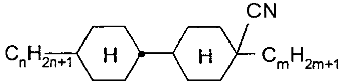 |
| **CY-n-O1V** | **CCN-nm** |
| 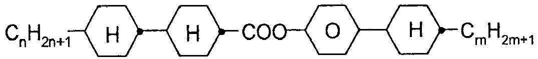 | |
| **CCPC-nm** | |
| 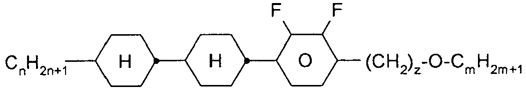 | |
| **CCY-n-zOm** | |
| 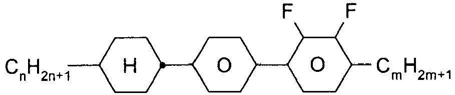 | |
| **CPY-n-m** | |
| 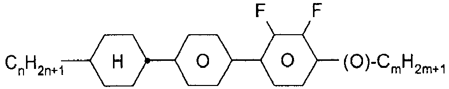 | 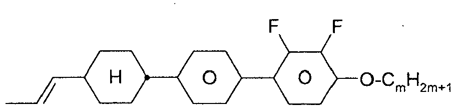 |
| **CPY-n-Om** | **CPY-1V-Om** |
| 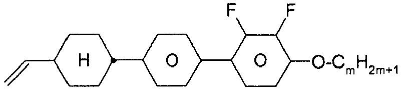 | 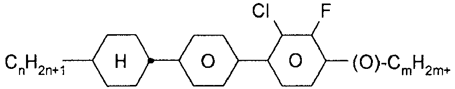 |
| **CPY-V-Om** | **CPP(Cl,F)-n-(O)m** |
| 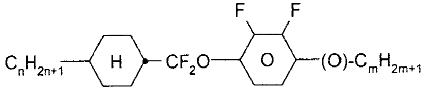 | 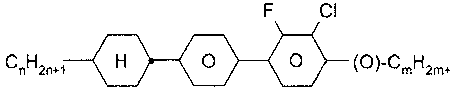 |
| **CQY-n-(O)m** | **CPP(F,Cl)-n-(O)m** |
| 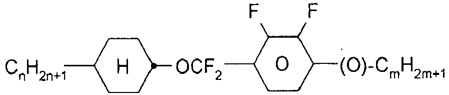 | 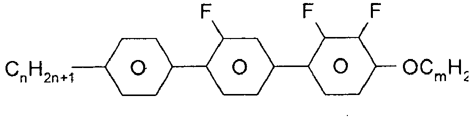 |
| **CQIY-n-(O)m** | **PGIY-n-Om** |
| 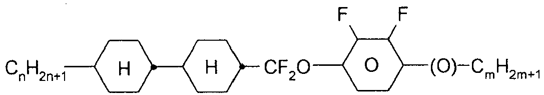 | |
| **CCQY-n-(O)m** | |
| 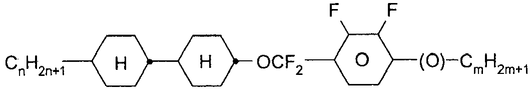 | |
| **CCQIY-n-(O)m** | |
| 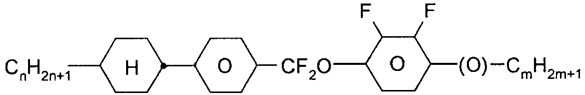 | |
| **CPQY-n-(O)m** | |
| 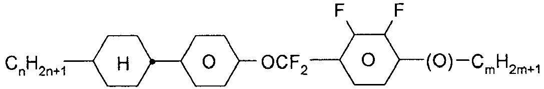 | |
| **CPQIY-n-(O)m** | |
| 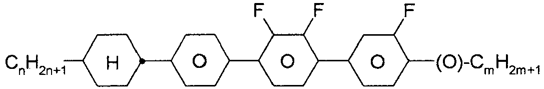 | |
| **CPYG-n-(O)m** | |
| 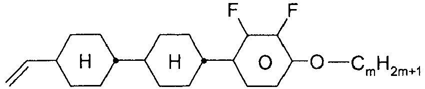 | 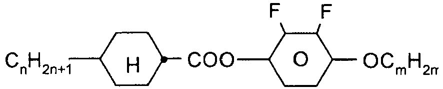 |
| **CCY-V-Om** | **D-nOmFF** |
| 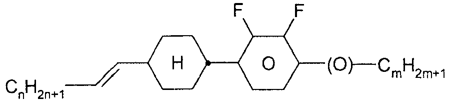 | 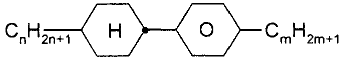 |
| **CY-nV-(O)m** | **PCH-nm** |
| 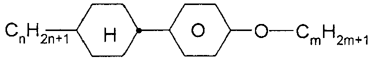 | 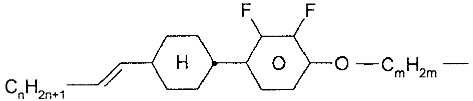 |
| **PCH-nOm** | **CY-nV-OmV** |
| 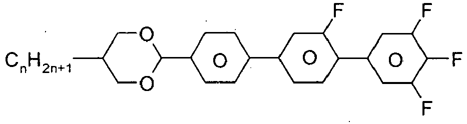 | |
| **DPGU-n-F** | |
| 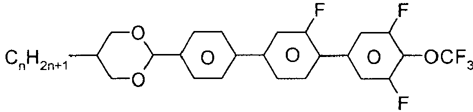 | |
| **DPGU-n-OT** | |
| 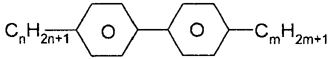 | |
| **PP-n-m** | |
| 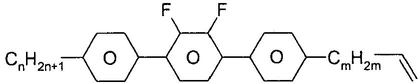 | 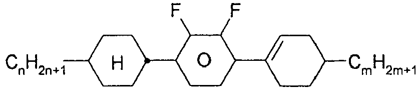 |
| **PYP-n-mV** | **CYLI-n-m** |
| 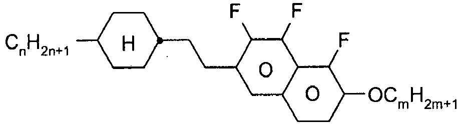 | 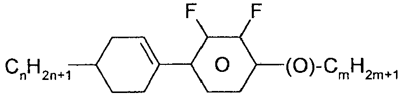 |
| **CENap-n-Om** | **LY-n-(O)m** |
| 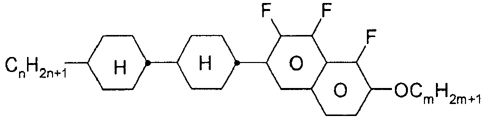 | |
| **CCNap-n-Om** | |
| 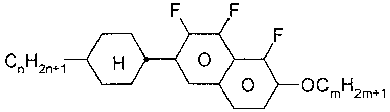 | 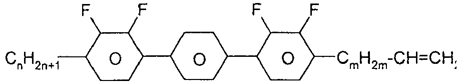 |
| **CNap-n-Om** | **YPY-n-mV** |
| 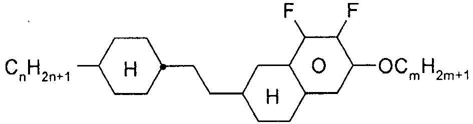 | |
| **CETNap-n-Om** | |
| 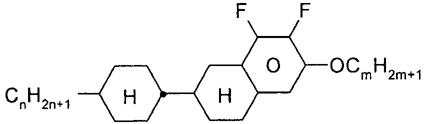 | 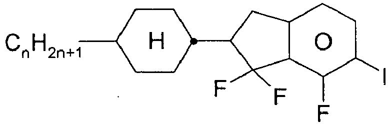 |
| **CTNap-n-Om** | **CK-n-F** |
| 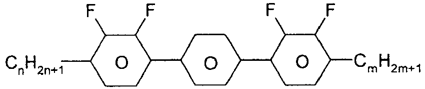 | 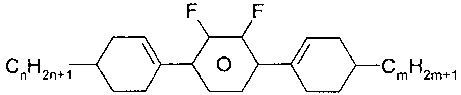 |
| **YPY-n-m** | **LYLI-n-m** |
| 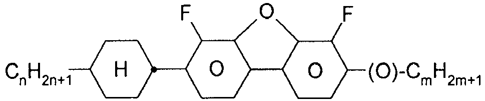 | |
| **C-DFDBF-n-(O)m** | |
| 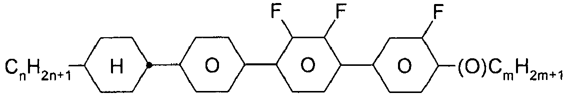 | |
| **CPYG-n-(O)m** | |
| 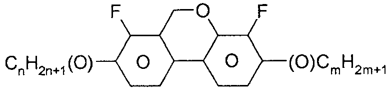 | 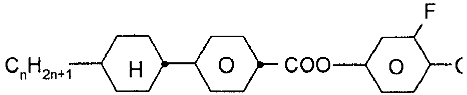 |
| **DFDBC-n(O)-(O)m** | **HP-nN.F** |
| 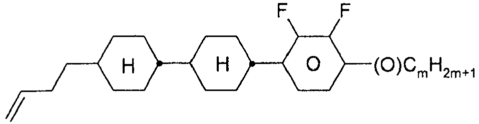 | |
| **CCY-V2-(O)m** | |
| 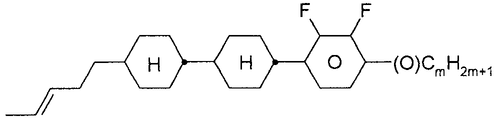 | |
| **CCY-1V2-(O)m** | |
| 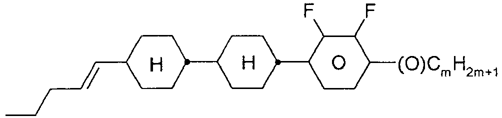 | |
| **CCY-3V-(O)m** | |
| 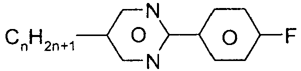 | 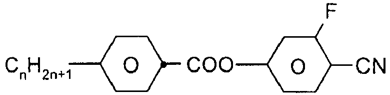 |
| **PYP-nF** | **MEnN.F** |
| 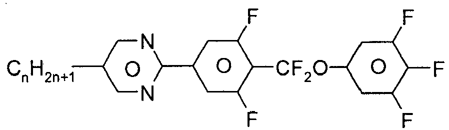 | 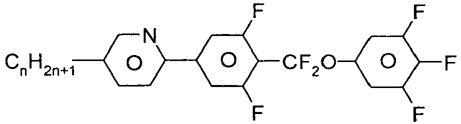 |
| **MUQU-n-F** | **NUQU-n-F** |
| 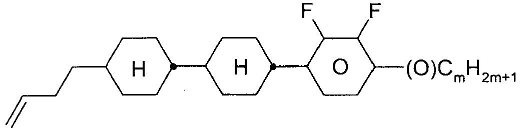 | |
| **CCY-V2-(O)m** | |
| 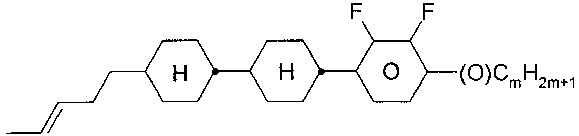 | |
| **CCY-1V2-(O)m** | |
| 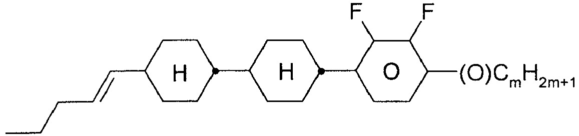 | |
| **CCY-3V-(O)m** | |
| 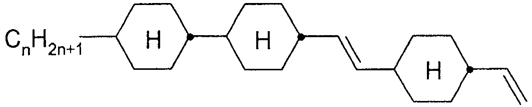 | |
| **CCVC-n-V** | |
| 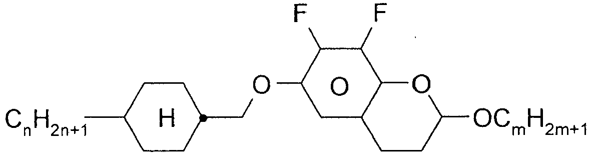 | |
| **COChrom-n-Om** | |
| 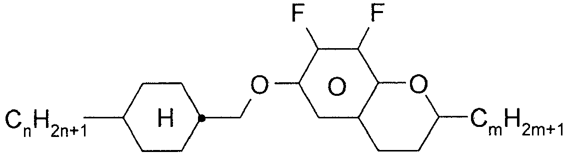 | |
| **COChrom-n-m** | |
| 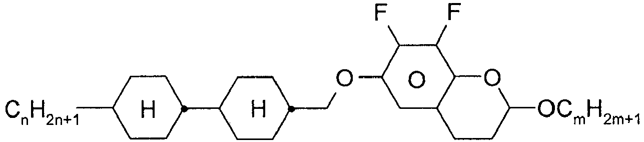 | |
| **CCOChrom-n-Om** | |
| 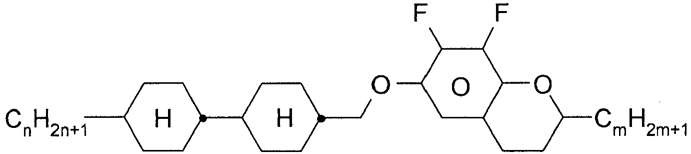 | |
| **CCOChrom-n-m** | |
| 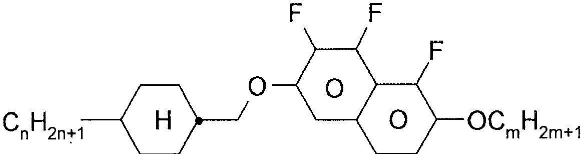 | |
| **CONaph-n-Om** | |
| 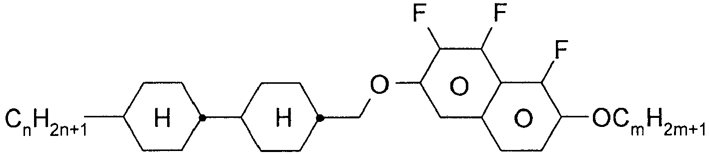 | |
| **CCONaph-n-Om** | |
| 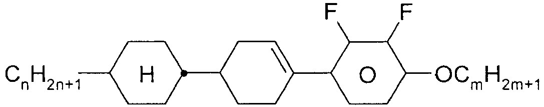 | |
| **CLY-n-Om** | |
| 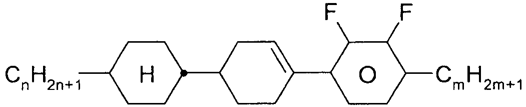 | |
| **CLY-n-m** | |
| 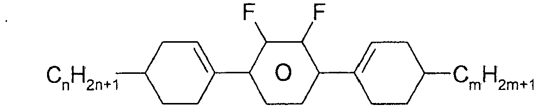 | |
| **LYLI-n-m** | |
| 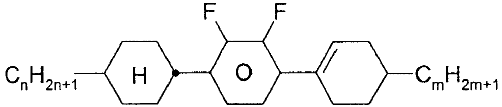 | |
| **CYLI-n-m** | |
| 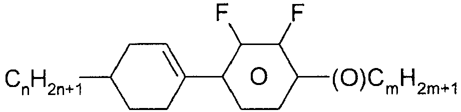 | |
| **LY-n-(O)m** | |
| 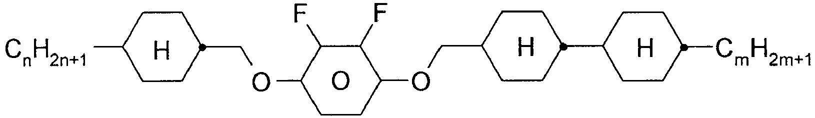 | |
| **COYOICC-n-m** | |
| 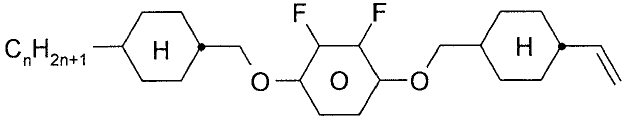 | |
| **COYOIC-n-V** | |
| 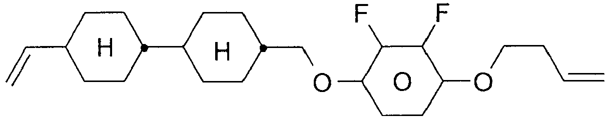 | |
| **CCOY-V-O2V** | |
| 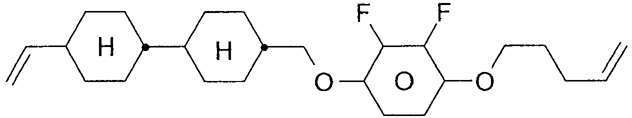 | |
| **CCOY-V-O3V** | |
| 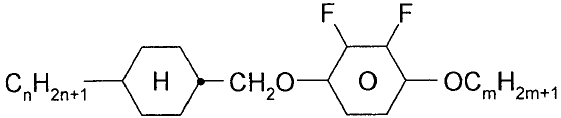 | |
| **COY-n-Om** | |
| 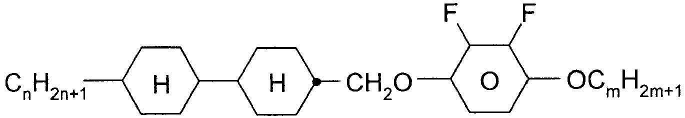 | |
| **CCOY-n-Om** | |
| 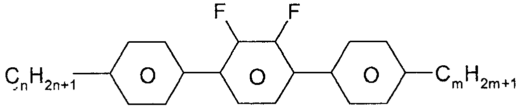 | |
| **PYP-n-m** | |
| 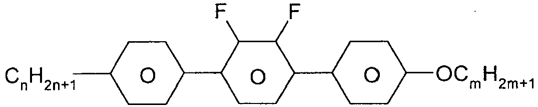 | |
| **PYP-n-Om** | |
| 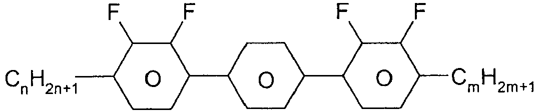 | |
| **YPY-n-m** | |
| 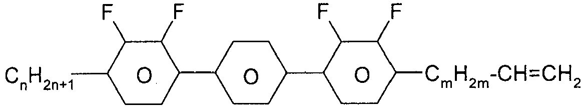 | |
| **YPY-n-mV** | |
| 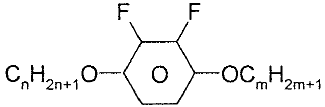 | |
| **Y-nO-Om** | |
| 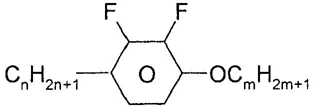 | |
| **Y-n-Om** | |
| 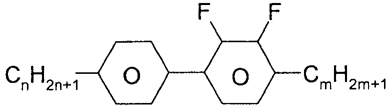 | |
| **PY-n-m** | |
| 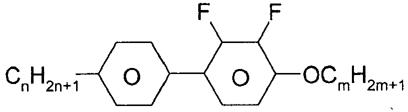 | |
| **PY-n-Om** | |
| 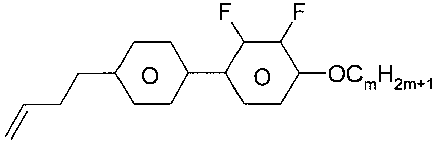 | |
| **PY-V2-Om** | |
| 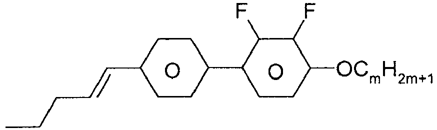 | |
| **PY-3V-Om** | |
| 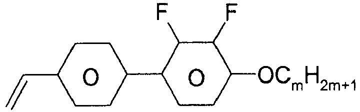 | |
| **PY-V-Om** | |
| 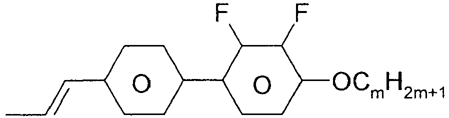 | |
| **PY-1V-Om** | |
| 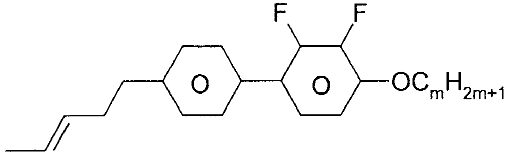 | |
| **PY-1V2-Om** | |
| 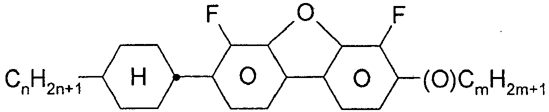 | |
| **C-DFDBF-n-(O)m** | |
| 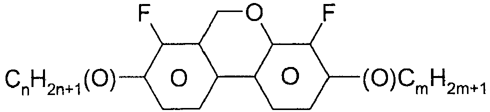 | |
| **DFDBC-n(O)-(O)m** | |
| 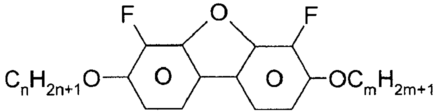 | |
| **B-nO-Om** | |
| 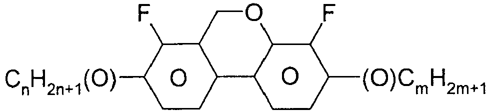 | |
| **DFDBC-n(O)-(O)m** | |
| 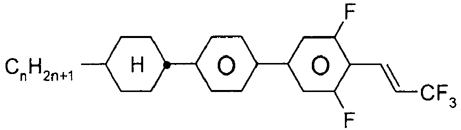 | 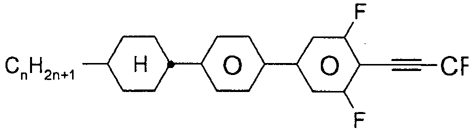 |
| **CPU-n-VT** | **CPU-n-AT** |
| 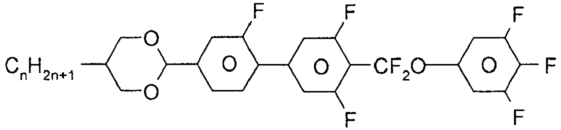 | |
| **DGUQU-n-F** | |
| 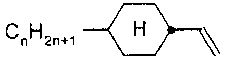 | 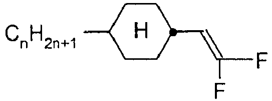 |
| **C-n-V** | **C-n-XF** |
| 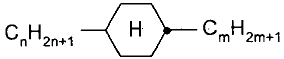 | |
| **C-n-m** | |
| 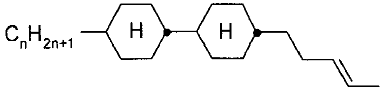 | 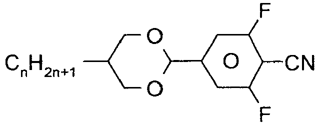 |
| **CC-n-2V1** | |
| 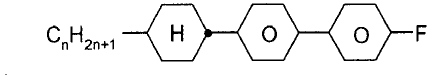 | |
| **BCH-nF** | |
| 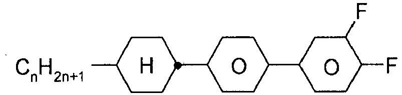 | |
| **BCH-nF.F** | |
| 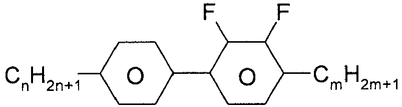 | |
| **PY-n-m** | |
| 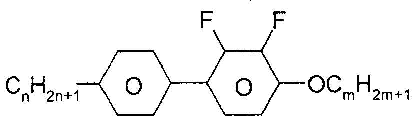 | |
| **PY-n-Om** | |
| 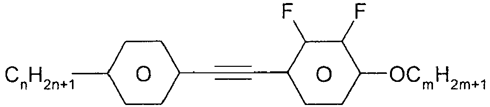 | |
| **PTP-nOmFF** | |
| 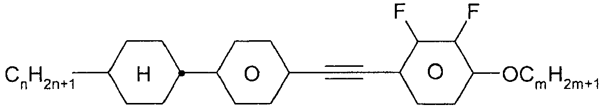 | |
| **CPTP-nOmFF** | |
| 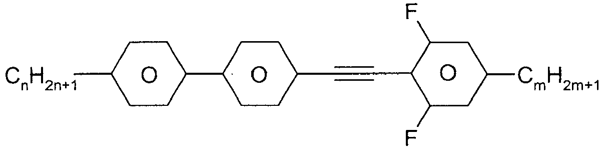 | |
| **PPTUI-n-m** | |
| 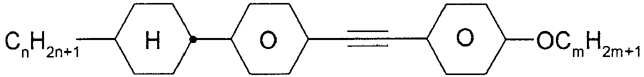 | |
| **CPTP-nOm** | |
| 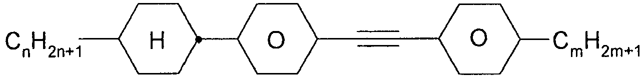 | |
| **CPTP-nm** | |
| 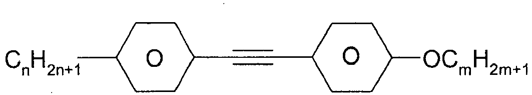 | |
| **PTP-nOm** | |
| 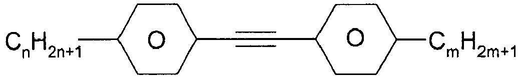 | |
| **PTP-nm** | |
| 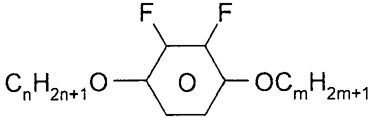 | |
| **Y-nO-Om** | |
| 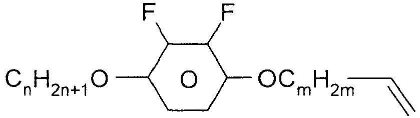 | |
| **Y-nO-OmV** | |
| 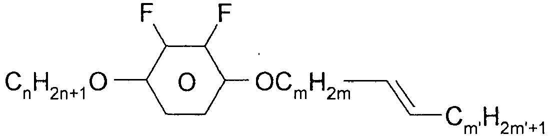 | |
| **Y-nO-OmVm'** | |

Besonders bevorzugt sind flüssigkristalline Mischungen, die neben einer oder mehreren Verbindungen der Formel I mindestens ein, zwei, drei, vier oder mehr Verbindungen aus der Tabelle B enthalten.

**Tabelle C**

| In der Tabelle C werden mögliche Dotierstoffe angegeben, die in der Regel den flüssigkristallinen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. | |
|---|---|
| 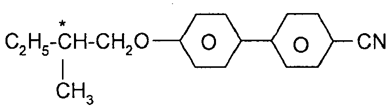 | 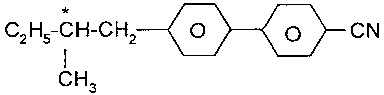 |
| **C 15** | **CB 15** |
| 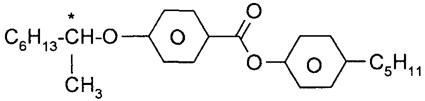 | 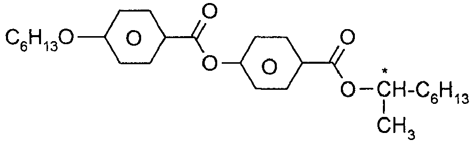 |
| **CM 21** | **R/S-811** |
| 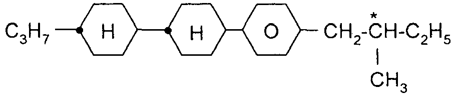 | 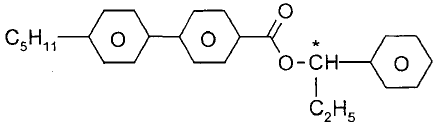 |
| **CM 44** | **CM 45** |
| 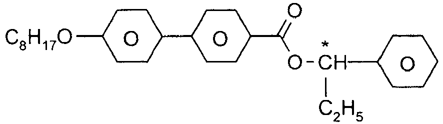 | 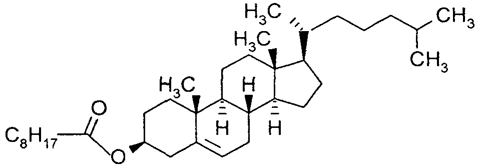 |
| **CM 47** | **CN** |
| 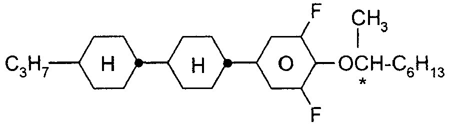 | 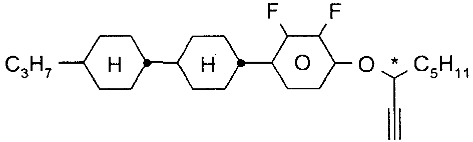 |
| **R/S-2011** | **R/S-3011** |
| 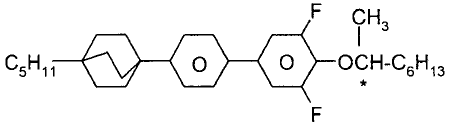 | 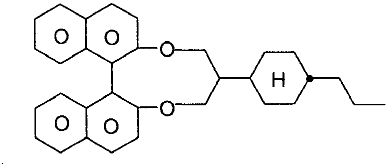 |
| **R/S-4011** | **R/S-5011** |
| 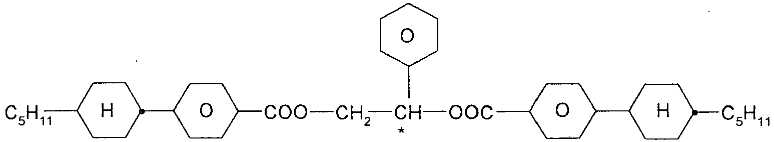 | |
| **R/S-1011** | |

**Tabelle D**

| Stabilisatoren, die beispielsweise den flüssigkristallinen Mischungen in Mengen von 0-10 Gew.% zugesetzt werden können, werden nachfolgend genannt. | |
|---|---|
| (n = 1-12) | |
| 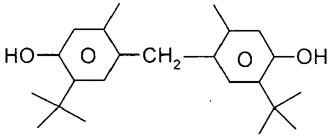 | 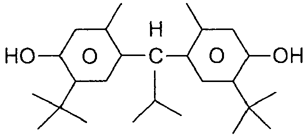 |
| **STAB-1** | **STAB-2** |
| 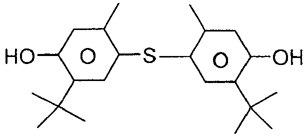 | 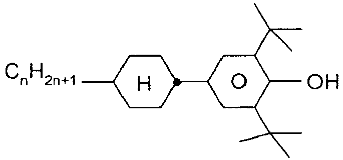 |
| | n = 1, 2, 3, 4, 5, 6 or 7 |
| **STAB-3** | **STAB-4** |
| 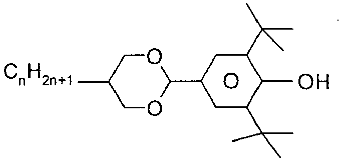 | 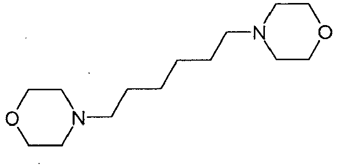 |
| n = 1, 2, 3, 4, 5, 6 or 7 | |
| **STAB-5** | **STAB-6** |
| 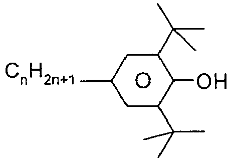 | 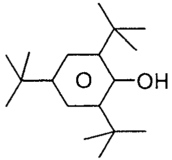 |
| n = 1, 2, 3, 4, 5, 6 or 7 | |
| **STAB-7** | **STAB-8** |
| 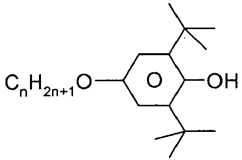 | 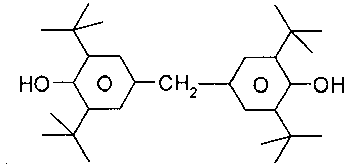 |
| **STAB-9** | **STAB-10** |
| 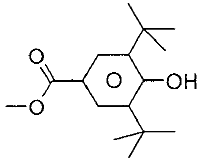 | 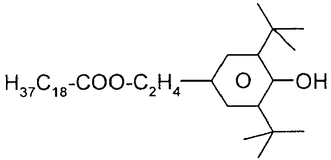 |
| **STAB-11** | **STAB-12** |
| 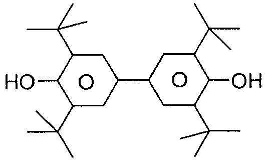 | 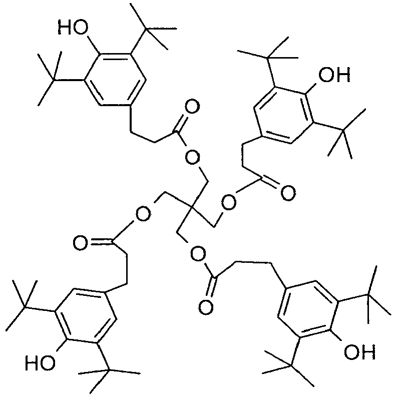 |
| **STAB-13** | **STAB-14** |
| 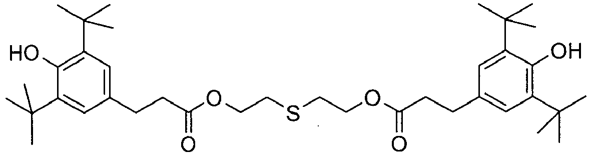 | |
| **STAB-15** | |
| 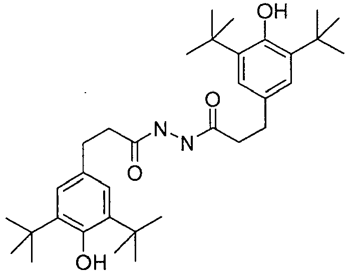 | 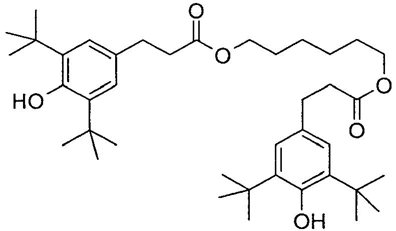 |
| **STAB-16** | **STAB-17** |
| 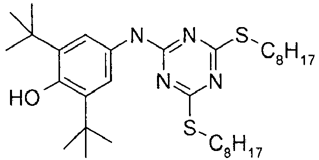 | 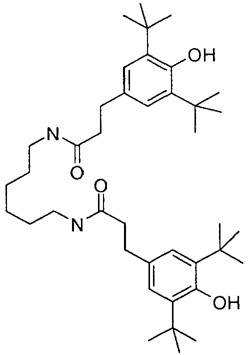 |
| **STAB-18** | **STAB-19** |
| 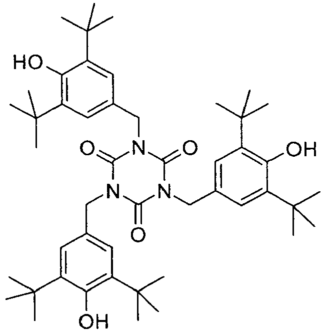 | 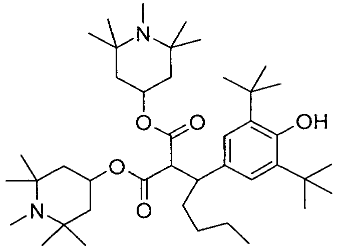 |
| **STAB-20** | **STAB-21** |
| 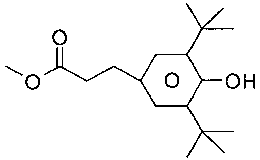 | 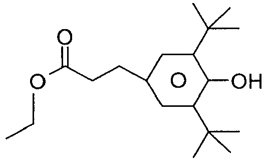 |
| **STAB-22** | **STAB-23** |
| 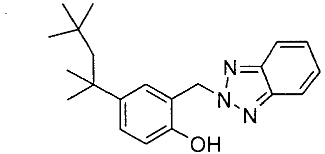 | 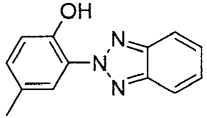 |
| **STAB-24** | **STAB-25** |
| 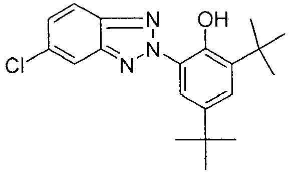 | 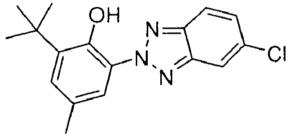 |
| STAB-26 | STAB-27 |
| 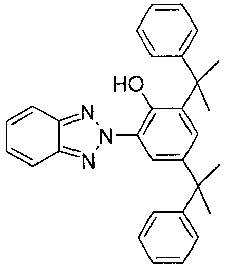 | 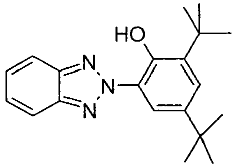 |
| | STAB-29 |
| 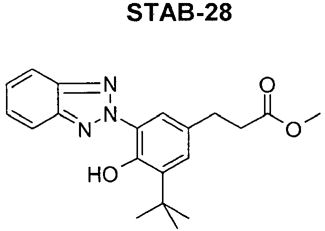 | 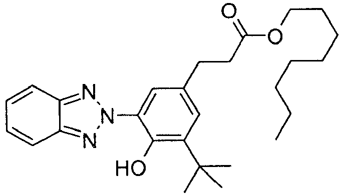 |
| STAB-30 | STAB-31 |
| 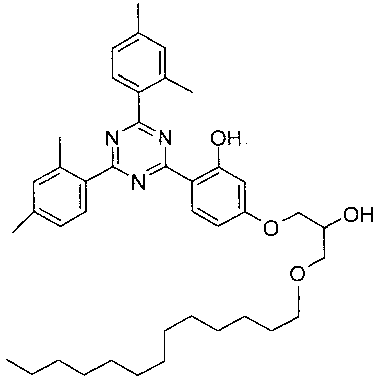 | |
| STAB-32 | |
| 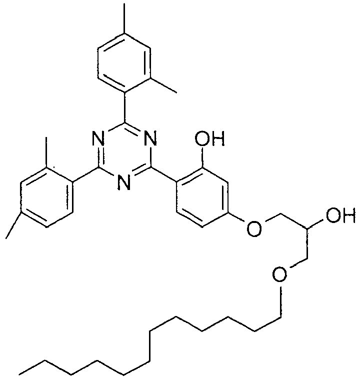 | 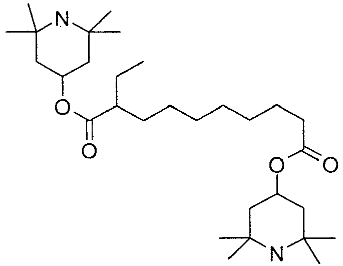 |
| **STAB-33** | **STAB-34** |
| 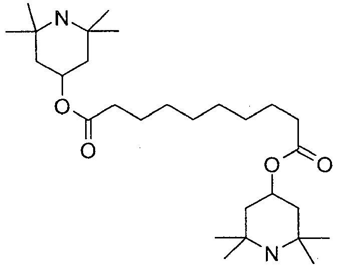 | 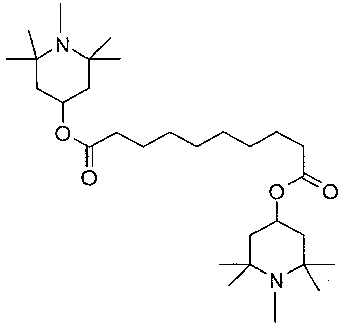 |
| **STAB-35** | **STAB-36** |
| 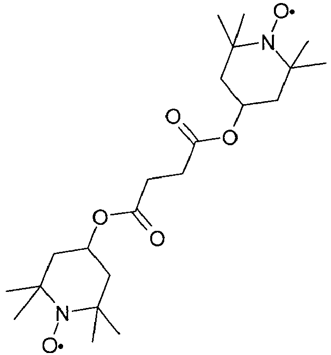 | 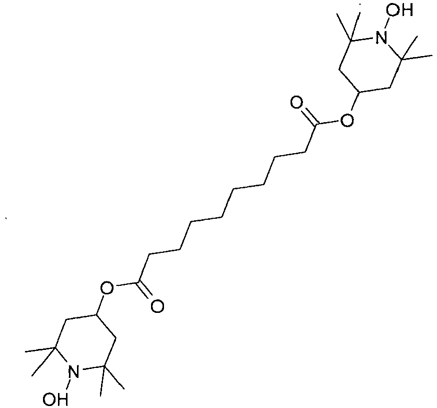 |
| **STAB-37** | **STAB-38** |

Geeignete polymerisierbare Verbindungen (reaktive Mesogene) für den Einsatz in den erfindungsgemäßen Mischungen, vorzugsweise in PSA- und PS-VA-Anwendungen oder PS-IPS/FFS-Anwendungen, werden nachfolgend in Tabelle E genannt:

**Tabelle E**

| In der Tabelle E sind Beispielverbindungen zusammengestellt, die in den flüssigkristallinen Mischungen vorzugsweise als reaktive mesogene Verbindungen verwendet werden können. Sofern die flüssigkristallinen Mischungen ein oder mehrere reaktive Verbindungen enthalten, werden sie vorzugsweise in Mengen von 0,01-5 Gew.% eingesetzt. Gegebenenfalls muss für die Polymerisation noch ein Initiator oder ein Gemisch aus zwei oder mehr Initiatoren zugesetzt werden. Der Initiator oder das Initiatorgemisch wird vorzugsweise in Mengen von 0,001-2 Gew.% bezogen auf die Mischung zugesetzt. Ein geeigneter Initiator ist z. B. Irgacure (Fa. BASF) oder Irganox (Fa. BASF). |
|---|
| Geeignete polymerisierbare Verbindungen (reaktive Mesogene) für den Einsatz in den erfindungsgemäßen Mischungen, vorzugsweise in PSA-und PS-VA-Anwendungen oder PS-IPS/FFS-Anwendungen, werden nachfolgend in Tabelle E genannt: |
| 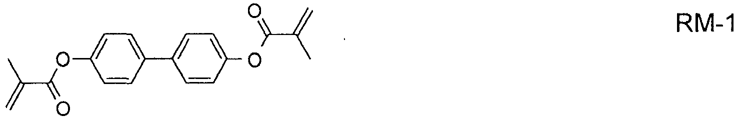 |
| 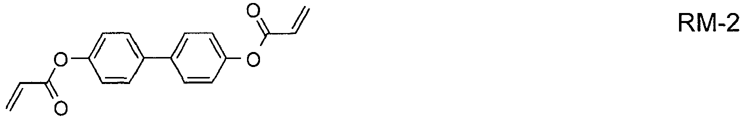 |
| 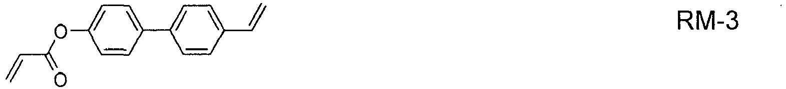 |
| 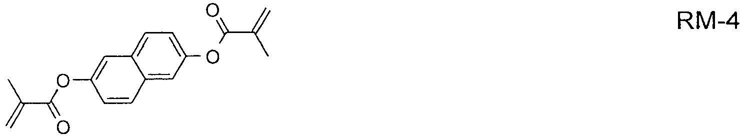 |
| 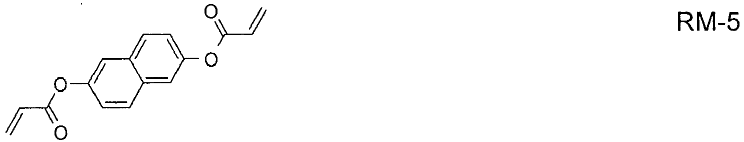 |
| 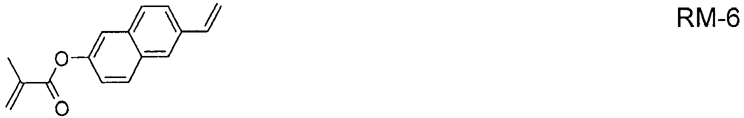 |
| 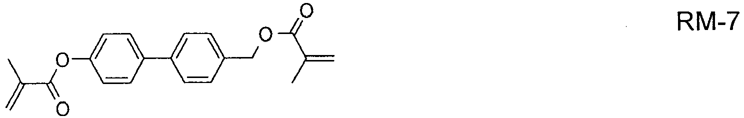 |
| 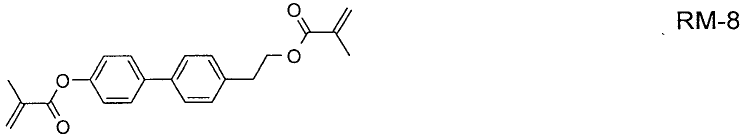 |
| 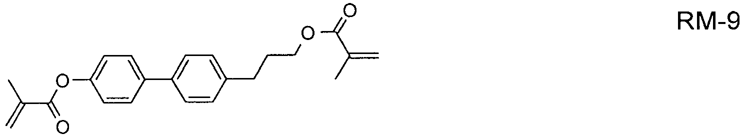 |
| 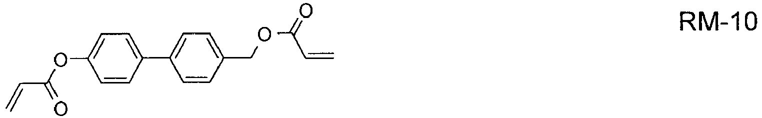 |
| 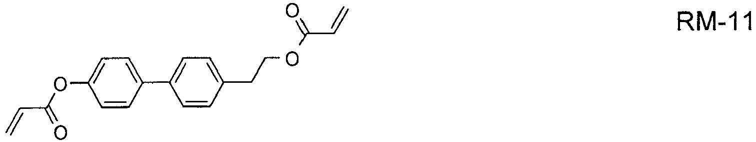 |
| 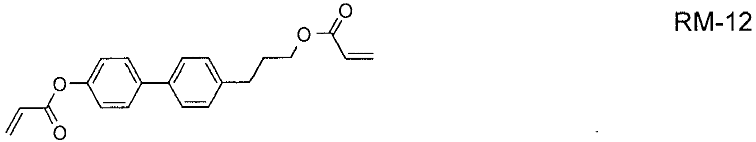 |
| 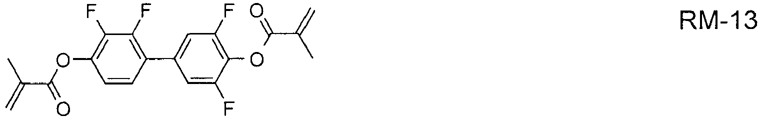 |
| 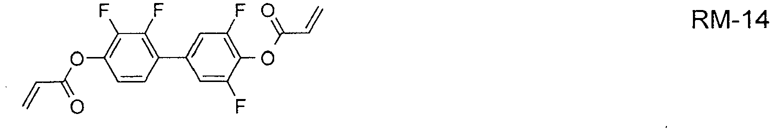 |
| 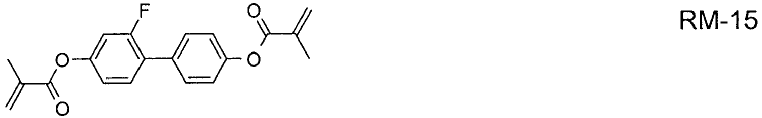 |
| 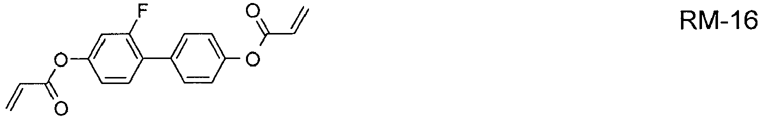 |
| 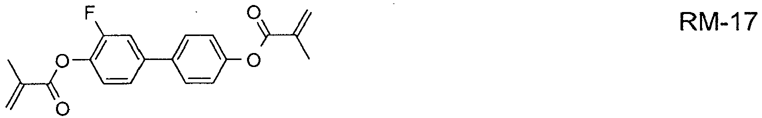 |
| 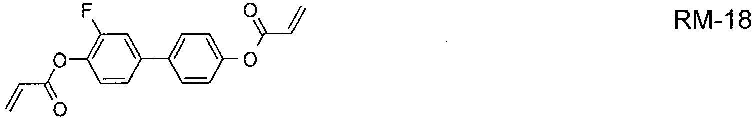 |
| 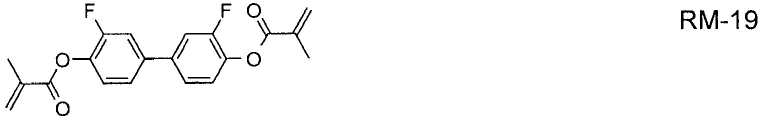 |
| 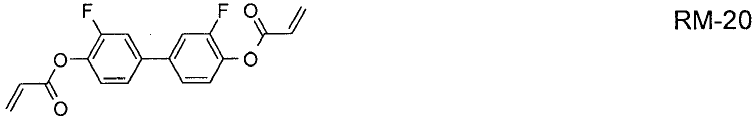 |
| 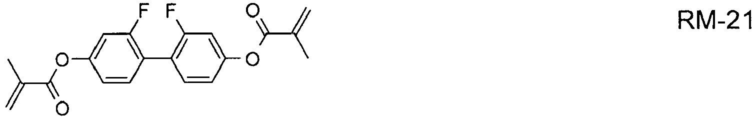 |
| 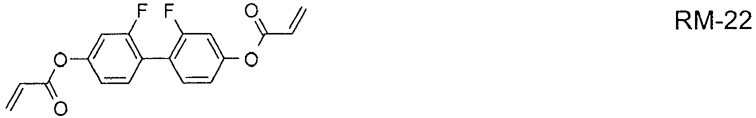 |
| 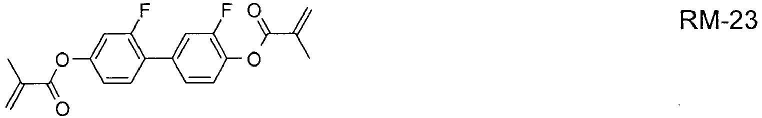 |
| 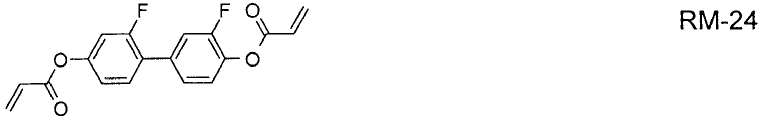 |
| 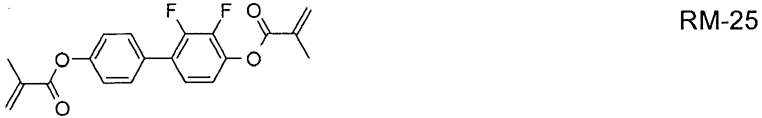 |
| 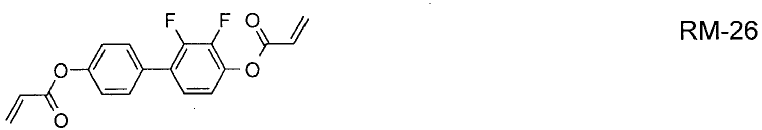 |
| 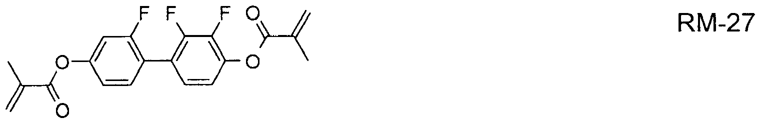 |
| 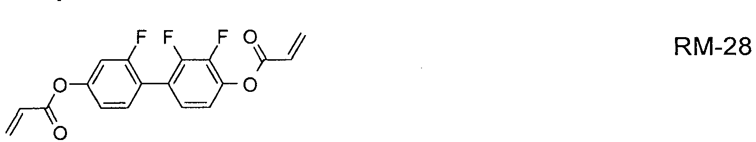 |
| 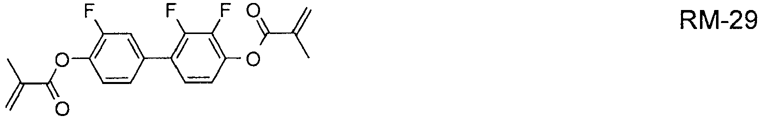 |
| 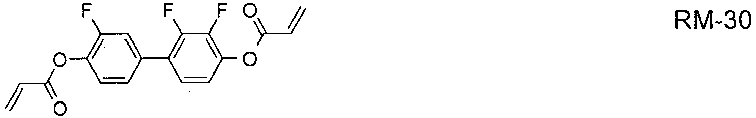 |
| 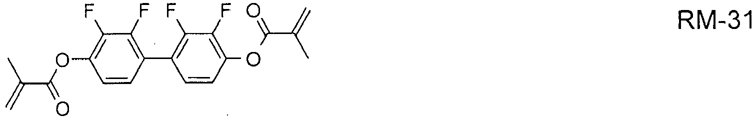 |
| 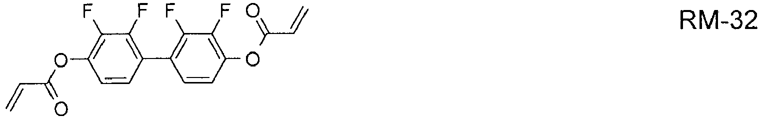 |
| 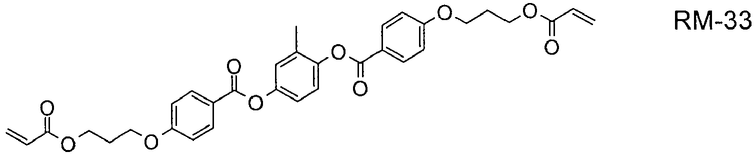 |
| 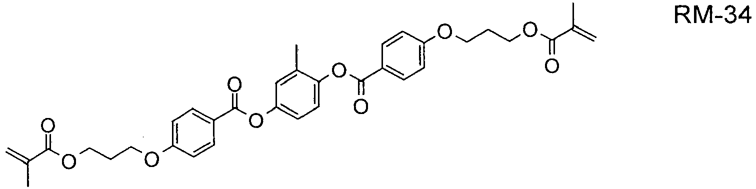 |
| 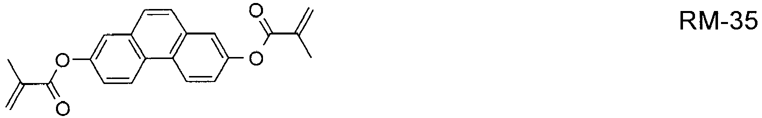 |
| 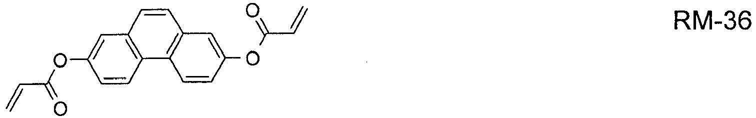 |
| 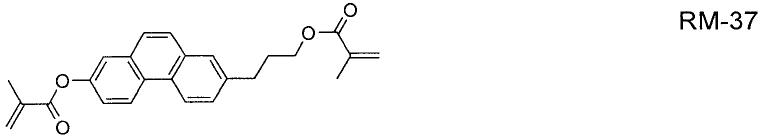 |
| 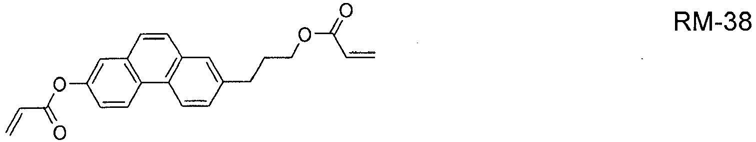 |
| 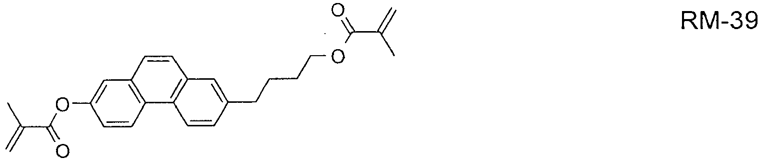 |
| 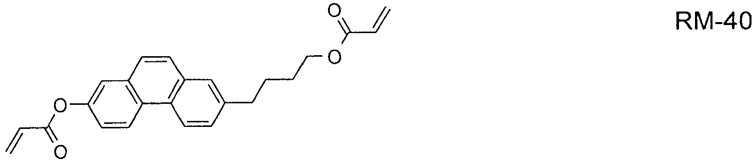 |
| 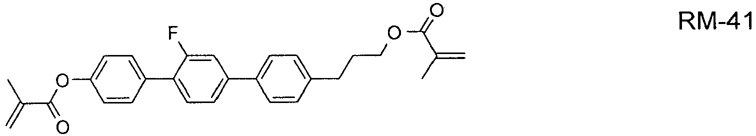 |
| 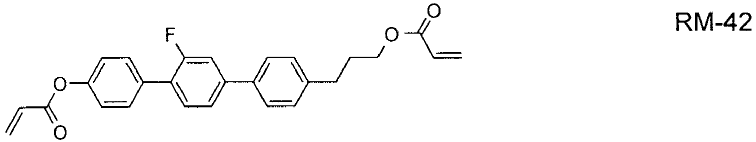 |
| 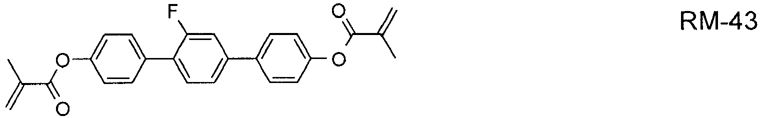 |
| 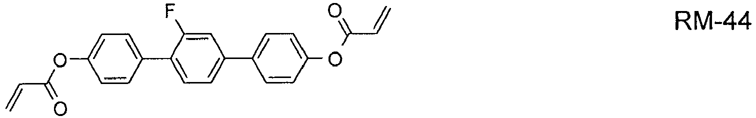 |
| 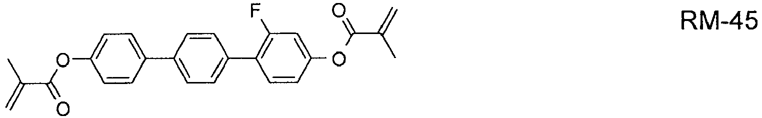 |
| 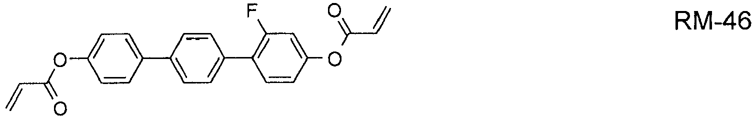 |
| 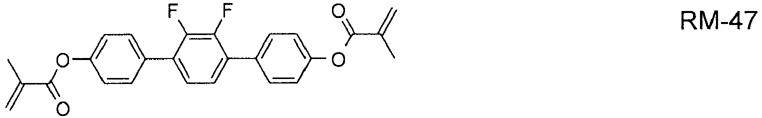 |
| 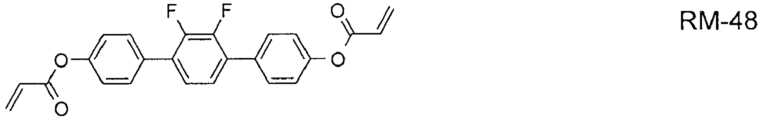 |
| 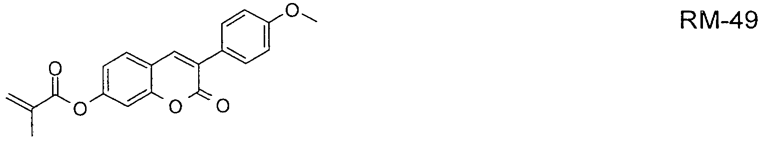 |
| 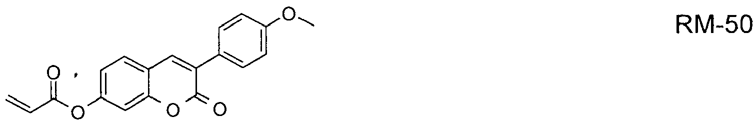 |
| 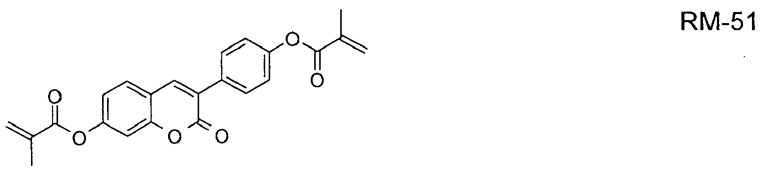 |
| 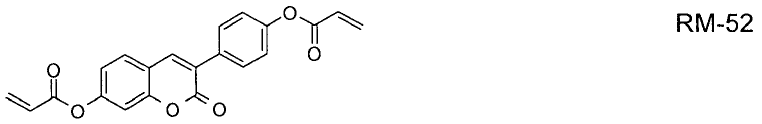 |
| 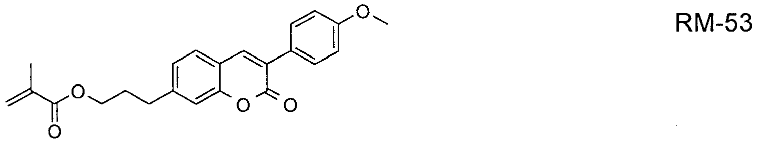 |
| 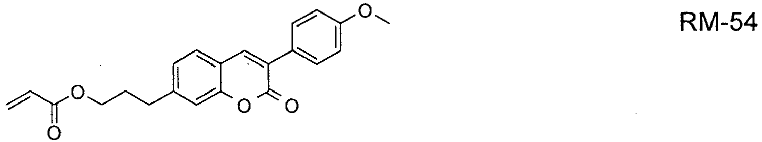 |
| 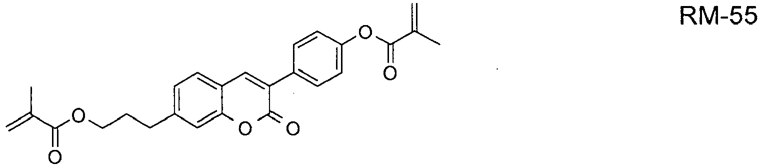 |
| 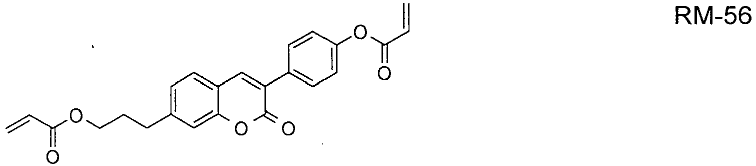 |
| 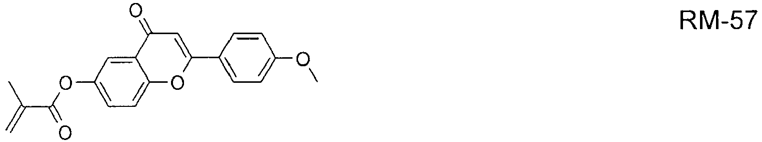 |
| 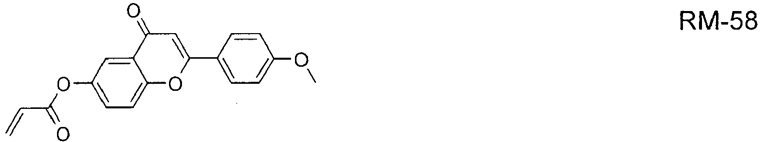 |
| 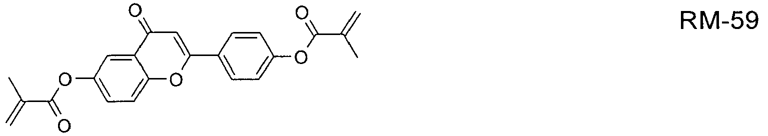 |
| 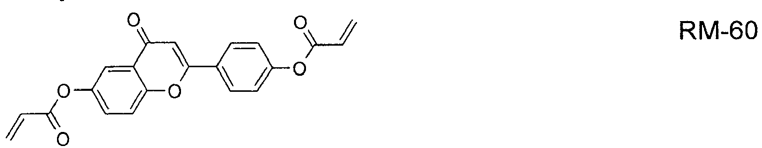 |
| 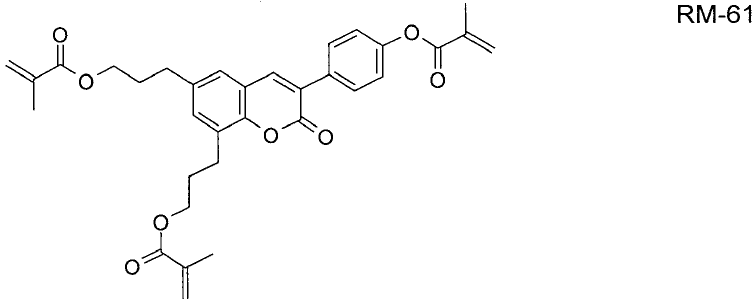 |
| 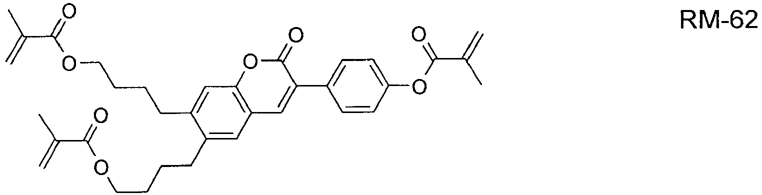 |
| 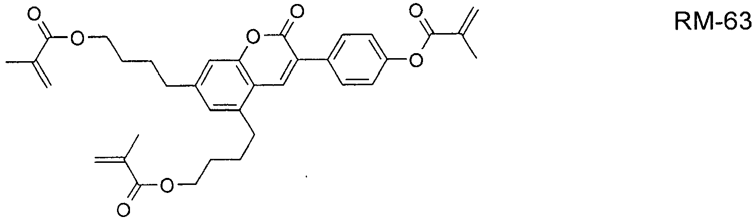 |
| 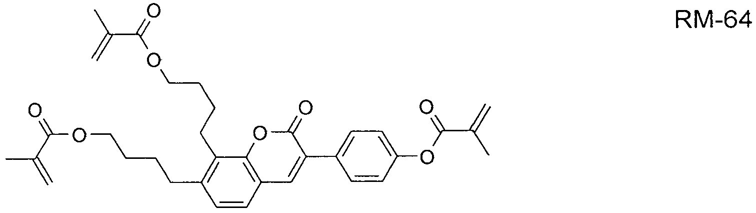 |
| 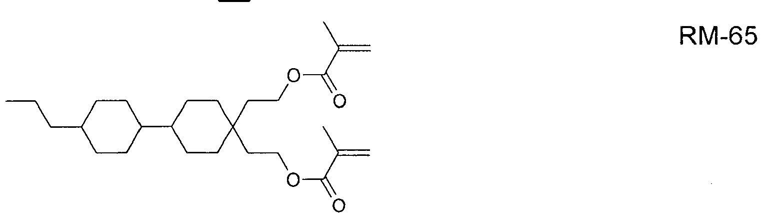 |
| 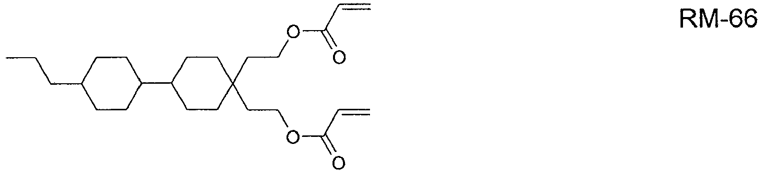 |
| 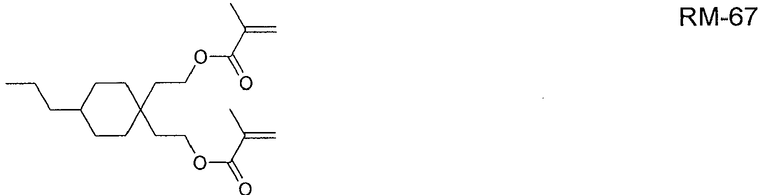 |
| 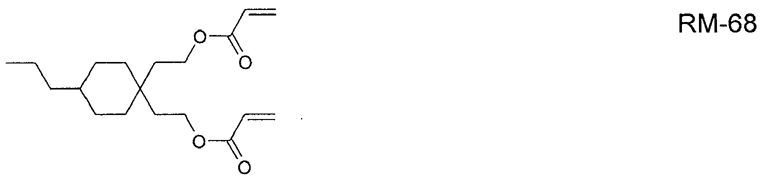 |
| 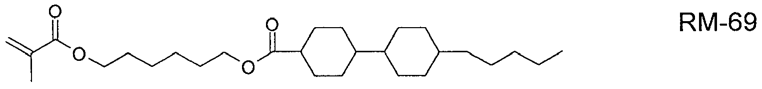 |
| 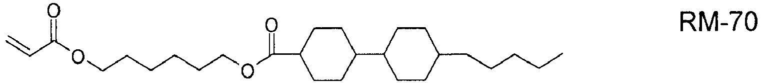 |
| 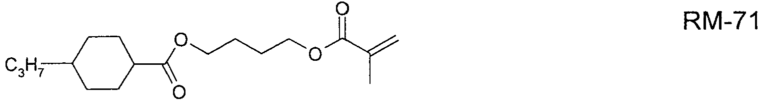 |
| 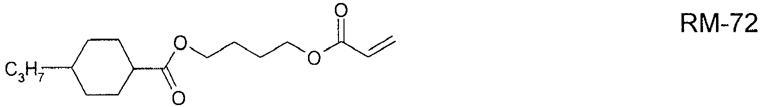 |
| 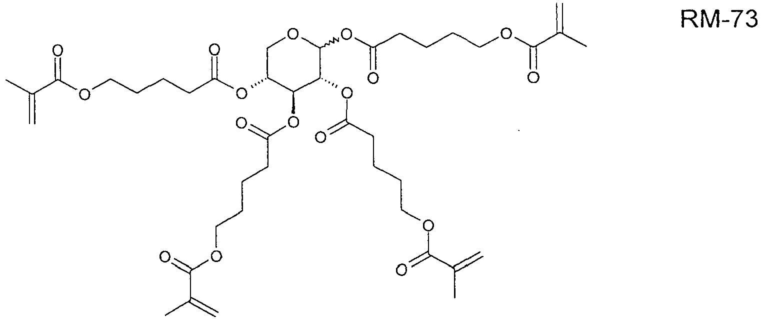 |
| 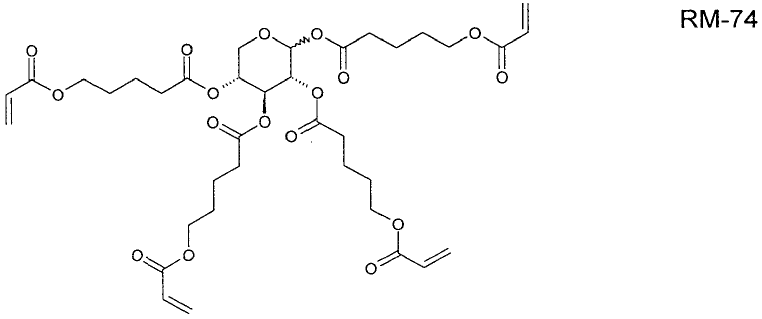 |
| 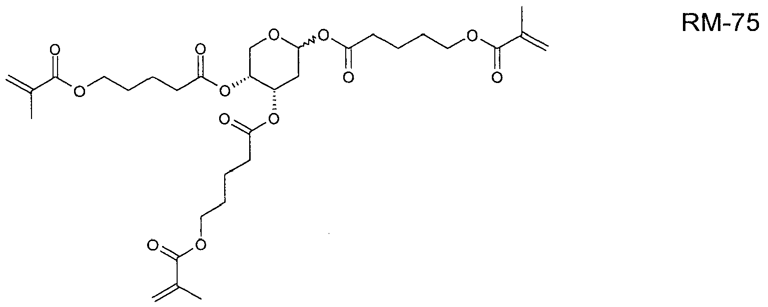 |
| 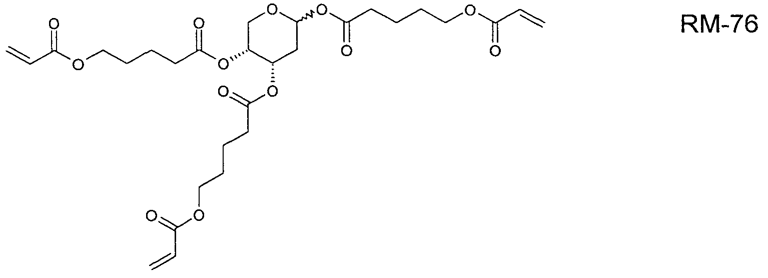 |
| 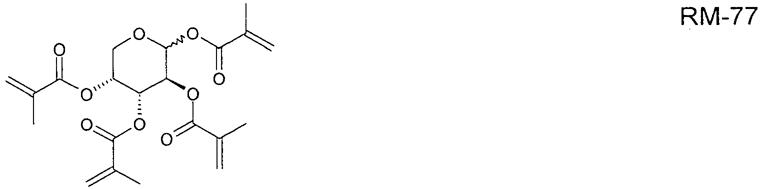 |
| 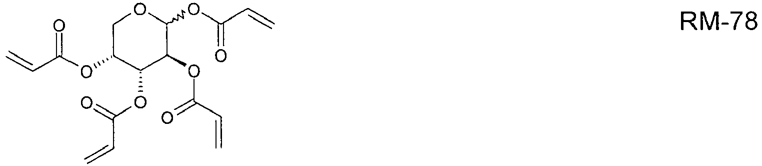 |
| 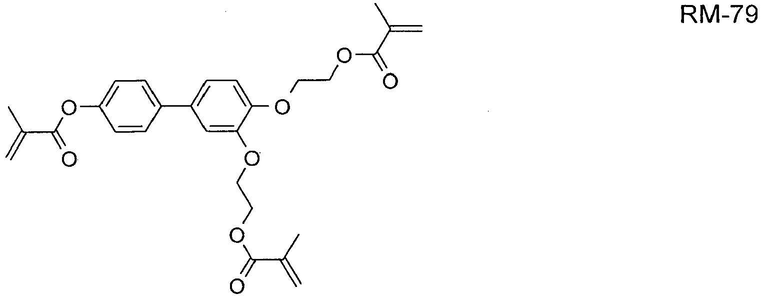 |
| 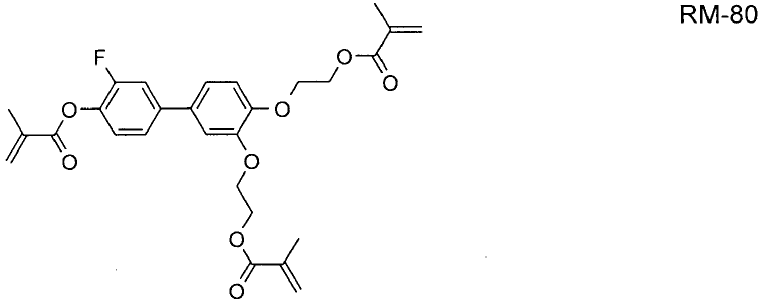 |
| 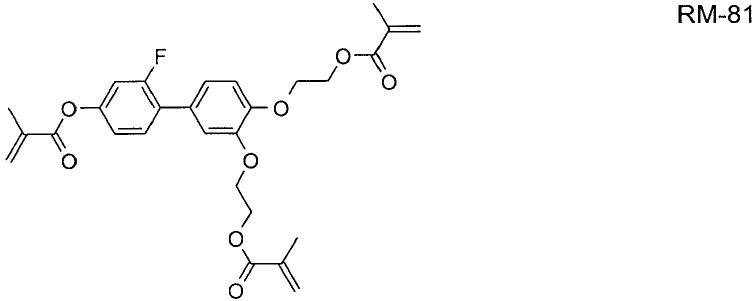 |
| 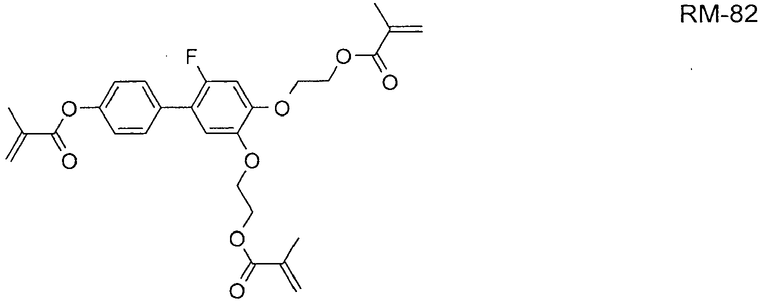 |
| 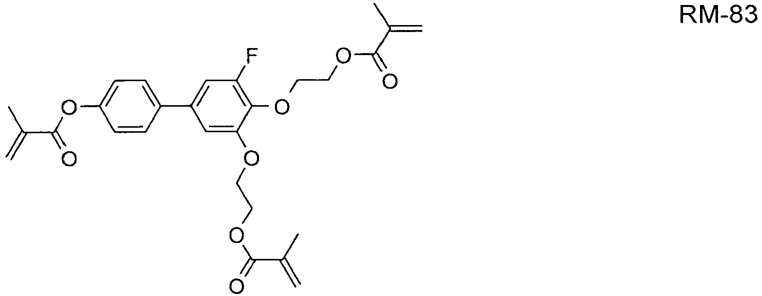 |
| 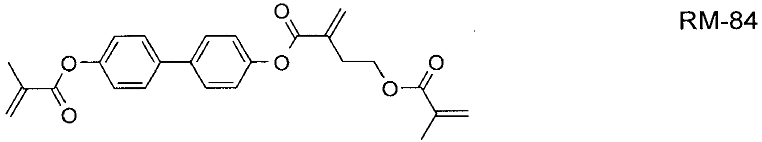 |
| 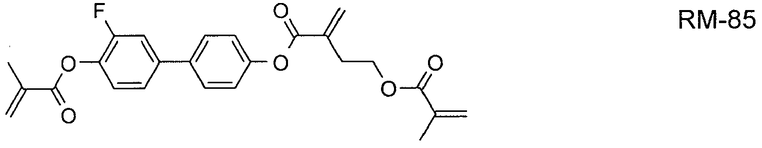 |
| 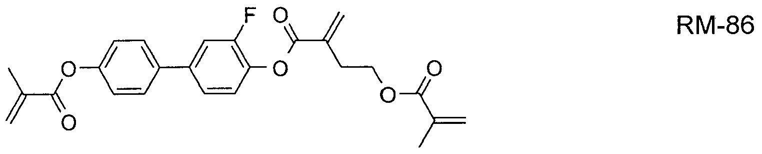 |
| 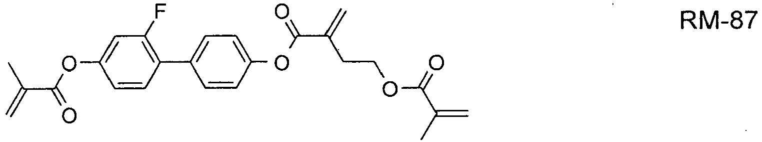 |
| 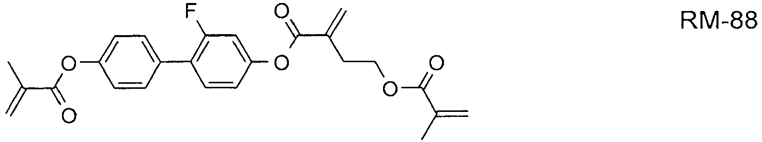 |
| 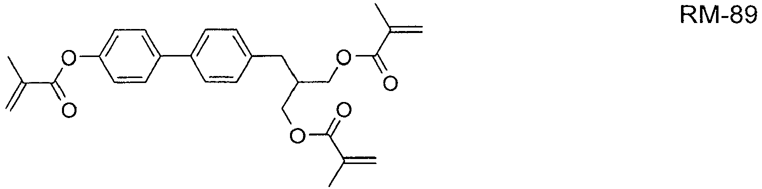 |
| 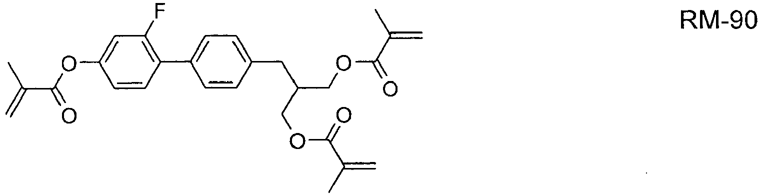 |
| 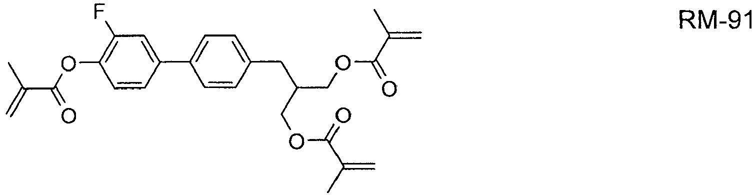 |
| 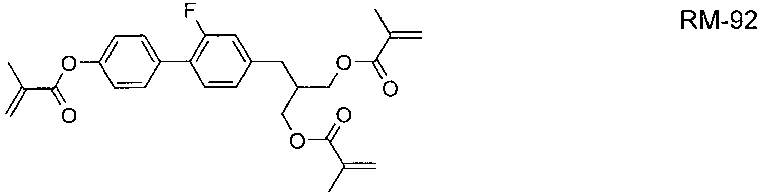 |
| 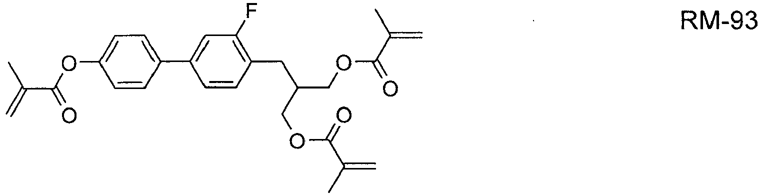 |
| 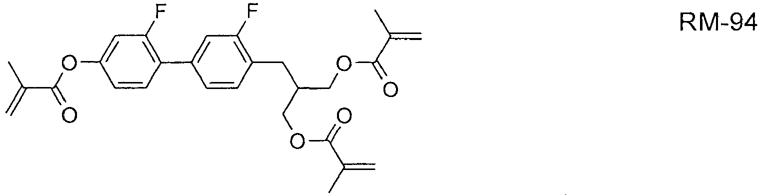 |
| 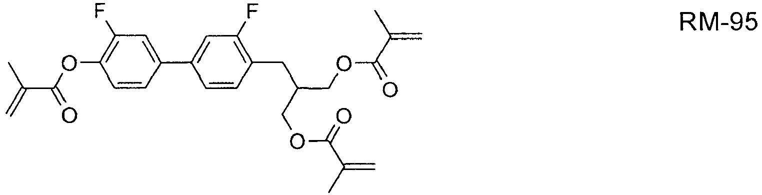 |

In einer bevorzugten Ausführungsform enthalten die flüssigkristallinen Mischungen eine oder mehrere Verbindungen ausgewählt aus der Gruppe der Verbindungen der Tabelle E.

### Beispiele

Die folgenden Ausführungsbeispiele sollen die Erfindung erläutern, ohne sie zu begrenzen.

Vor- und nachstehend bedeuten Prozentangaben Gewichtsprozent. Alle Temperaturen sind in Grad Celsius angegeben. Fp. bedeutet Schmelzpunkt, cp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Weiterhin bedeutet
- Vₒ: Schwellenspannung, kapazitiv [V] bei 20 °C
- Δn: die optische Anisotropie gemessen bei 20°C und 589nm
- Δε: die dielektrische Anisotropie bei 20 °C und 1 kHz
- cp.: Klärpunkt [°C]
- K₁: elastische Konstante, "Splay"-Deformation bei 20°C, [pN]
- K₃: elastische Konstante, "Bend"-Deformation bei 20°C, [pN]
- γ₁: Rotationsviskosität gemessen bei 20°C [mPa·s], bestimmt nach dem Rotationsverfahren in einem magnetischen Feld
- LTS: Tieftemperaturstabilität [Low temperature stability (nematische Phase)], bestimmt in Testzellen.

Die folgenden Beispiele sollen die Erfindung erläutern, ohne sie zu begrenzen.

Vor- und nachstehend bedeuten Prozentangaben Gewichtsprozent. Alle Temperaturen sind in Grad Celsius angegeben.

### Ausführungsbeispiele

### Beispiel 1

Eine flüssigkristalline Mischung, z. B. für PS-VA-Anwendungen, der Zusammensetzung

| | |
|---|---|
| CCH-35 | 9,47 % |
| CCH-501 | 4,99 % |
| CCY-2-1 | 9,47 % |
| CCY-3-1 | 10,47 % |
| CCY-3-O2 | 10,47 % |
| CCY-5-O2 | 9,47 % |
| CPY-2-O2 | 11,96 % |
| CY-3-O4 | 8,97 % |
| CY-5-O4 | 10,97 % |
| RM-1 | 0,30 % |
| PCH-53 | 13,46 % |

wird mit dem erfindungsgemäßen Verfahren gereinigt.

### Beispiel 2

Eine flüssigkristalline Mischung, z. B. für PS-VA-Anwendungen, der Zusammensetzung

| | |
|---|---|
| BCH-32 | 7,48 % |
| CCH-23 | 21,93 % |
| CCH-34 | 3,49 % |
| CCY-3-O3 | 6,98 % |
| CCY-4-O2 | 7,98 % |
| CPY-2-O2 | 10,97 % |
| CPY-3-O2 | 10,97 % |
| CY-3-O2 | 15,45 % |
| RM-1 | 0,30 % |
| PCH-301 | 12,46 % |
| PCH-302 | 1,99 % |

wird mit dem erfindungsgemäßen Verfahren gereinigt.

### Beispiel 3

Eine flüssigkristalline Mischung, z. B. für PS-VA-Anwendungen, der Zusammensetzung

| | |
|---|---|
| CC-3-V1 | 7,98 % |
| CCH-23 | 17,95 % |
| CCH-34 | 3,99 % |
| CCH-35 | 6,98 % |
| CCP-3-1 | 4,99 % |
| CCY-3-O2 | 12,46 % |
| CPY-2-O2 | 7,98 % |
| CPY-3-O2 | 10,97 % |
| CY-3-O2 | 15,45 % |
| RM-1 | 0,30 % |
| PY-3-O2 | 10,97 % |

wird mit dem erfindungsgemäßen Verfahren gereinigt.

### Beispiel 4

Eine flüssigkristalline Mischung, z. B. für PS-VA-Anwendungen, der Zusammensetzung

| | |
|---|---|
| CC-3-V1 | 8,97 % |
| CCH-23 | 12,96 % |
| CCH-34 | 6,23 % |
| CCH-35 | 7,73 % |
| CCP-3-1 | 3,49 % |
| CCY-3-O2 | 12,21 % |
| CPY-2-O2 | 6,73 % |
| CPY-3-O2 | 11,96 % |
| CY-3-O2 | 11,47 % |
| RM-1 | 0,30 % |
| PP-1-2V1 | 4,24 % |
| PY-3-O2 | 13,71 % |

wird mit dem erfindungsgemäßen Verfahren gereinigt.

### Beispiel 5

Eine flüssigkristalline Mischung, z. B. für TN-TFT-Anwendungen, der Zusammensetzung

| | |
|---|---|
| CBC-33 | 3,50 % |
| CC-3-V | 38,00 % |
| CC-3-V1 | 10,00 % |
| CCP-V-1 | 3,00 % |
| CCP-V2-1 | 9,00 % |
| PGP-2-3 | 5,00 % |
| PGP-2-4 | 5,00 % |
| PGU-2-F | 8,00 % |
| PGU-3-F | 9,00 % |
| PUQU-3-F | 9,50 % |

wird mit dem erfindungsgemäßen Verfahren gereinigt.

### Beispiel 6

Eine flüssigkristalline Mischung, z. B. für IPS- oder FFS-Anwendungen, der Zusammensetzung

| | |
|---|---|
| APUQU-3-F | 4,50 % |
| CC-3-V | 44,00 % |
| CC-3-V1 | 12,00 % |
| CCP-V-1 | 11,00 % |
| CCP-V2-1 | 9,00 % |
| PGP-2-3 | 6,00 % |
| PGUQU-3-F | 6,00 % |
| PP-1-2V1 | 7,00 % |
| PPGU-3-F | 0,50 % |

wird mit dem erfindungsgemäßen Verfahren gereinigt.

### Beispiel 7

Eine flüssigkristalline Mischung, z. B. für IPS- oder FFS-Anwendungen, der Zusammensetzung

| | |
|---|---|
| APUQU-3-F | 8,00 % |
| CBC-33 | 3,00 % |
| CC-3-V | 34,00 % |
| CC-3-V1 | 2,50 % |
| CCGU-3-F | 4,00 % |
| CCP-30CF₃ | 4,00 % |
| CCP-3F.F.F | 4,50 % |
| CCP-50CF₃ | 3,00 % |
| CCP-V-1 | 10,00 % |
| CCQU-3-F | 10,00 % |
| CPGU-3-OT | 6,00 % |
| PGUQU-3-F | 4,00 % |
| PUQU-3-F | 7,00 % |

wird mit dem erfindungsgemäßen Verfahren gereinigt.

### Beispiel 8

Eine flüssigkristalline Mischung, z. B. für IPS- oder FFS--Anwendungen, der Zusammensetzung

| | |
|---|---|
| APUQU-2-F | 5,00 % |
| APUQU-3-F | 7,50 % |
| BCH-3F.F.F | 7,00 % |
| CC-3-V | 40,50 % |
| CC-3-V1 | 6,00 % |
| CCP-V-1 | 9,50 % |
| CPGU-3-OT | 5,00 % |
| PGP-2-3 | 6,00 % |
| PGP-2-4 | 6,00 % |
| PPGU-3-F | 0,50 % |
| PUQU-3-F | 7,00 % |

wird mit dem erfindungsgemäßen Verfahren gereinigt.

### Beispiel 9

Eine flüssigkristalline Mischung, z. B. für TN-TFT-Anwendungen, der Zusammensetzung

| | |
|---|---|
| APUQU-2-F | 8,00 % |
| APUQU-3-F | 8,00 % |
| BCH-32 | 7,00 % |
| CC-3-V | 43,00 % |
| CCP-V-1 | 9,00 % |
| PGP-2-3 | 7,00 % |
| PGP-2-4 | 6,00 % |
| PUQU-2-F | 5,00 % |
| PUQU-3-F | 7,00 % |

wird mit dem erfindungsgemäßen Verfahren gereinigt.

### Beispiel 10

Eine flüssigkristalline Mischung, z. B. für TN-TFT-Anwendungen, der Zusammensetzung

| | |
|---|---|
| BCH-5F.F | 8,00 % |
| CBC-33F | 3,00 % |
| CC-3-V | 22,00 % |
| CCGU-3-F | 6,00 % |
| CCP-3F.F.F | 8,00 % |
| CCP-5F.F.F | 4,00 % |
| CCP-V-1 | 13,00 % |
| CCP-V2-1 | 11,00 % |
| CCQU-3-F | 5,00 % |
| CCQU-5-F | 4,00 % |
| PUQU-3-F | 16,00 % |

wird mit dem erfindungsgemäßen Verfahren gereinigt.

### Beispiel 11

Eine flüssigkristalline Mischung, z. B. für TN-TFT-Anwendungen, der Zusammensetzung

| | |
|---|---|
| CBC-33F | 3,00 % |
| CBC-53F | 3,00 % |
| CC-3-V | 17,00 % |
| CC-3-V1 | 4,00 % |
| CCP-3F.F.F | 8,00 % |
| CCPC-33 | 3,00 % |
| CCPC-34 | 3,00 % |
| CCP-V-1 | 5,00 % |
| CCP-V2-1 | 2,00 % |
| CCQU-2-F | 1,50 % |
| CCQU-3-F | 10,00 % |
| CCQU-5-F | 10,00 % |
| CGU-3-F | 6,00 % |
| PGP-2-3 | 7,50 % |
| PP-1-2V1 | 7,00 % |
| PUQU-3-F | 10,00 % |

wird mit dem erfindungsgemäßen Verfahren gereinigt.

### Beispiel 12

Eine flüssigkristalline Mischung, z. B. für TN-TFT-Anwendungen, der Zusammensetzung

| | |
|---|---|
| APUQU-2-F | 1,00 % |
| BCH-3F.F.F | 15,00 % |
| CC-3-V | 33,50 % |
| CC-3-V1 | 2,00 % |
| CCGU-3-F | 1,00 % |
| CCPC-33 | 2,00 % |
| CCP-V-1 | 4,50 % |
| BCH-2F | 5,00 % |
| BCH-3F | 5,00 % |
| PGP-2-3 | 8,50 % |
| PGUQU-3-F | 7,80 % |
| PP-1-2V1 | 11,00 % |
| PPGU-3-F | 0,20 % |
| PUQU-3-F | 3,50 % |

wird mit dem erfindungsgemäßen Verfahren gereinigt.

### Beispiel 13

Eine flüssigkristalline Mischung, z. B. für IPS- oder FFS-Anwendungen, der Zusammensetzung

| | |
|---|---|
| APUQU-2-F | 2,00 % |
| APUQU-3-F | 6,00 % |
| CC-3-V | 42,00 % |
| CCP-3-1 | 3,00 % |
| CCP-3-3 | 3,00 % |
| CCP-3F.F.F | 8,00 % |
| CCP-V-1 | 1,50 % |
| CCQU-3-F | 7,00 % |
| CCQU-5-F | 3,00 % |
| CPGU-3-OT | 6,50 % |
| PGUQU-3-F | 5,00 % |
| PGUQU-4-F | 4,00 % |
| PGUQU-5-F | 4,00 % |
| PPGU-3-F | 0,50 % |
| PUQU-3-F | 4,50 % |

wird mit dem erfindungsgemäßen Verfahren gereinigt.

### Beispiel 14

Eine flüssigkristalline Mischung, z. B. für TN-TFT-Anwendungen, der Zusammensetzung

| | |
|---|---|
| CC-3-V | 49,50 % |
| CCP-3-1 | 1,50 % |
| CCP-V-1 | 6,00 % |
| CPGU-3-OT | 7,00 % |
| PGP-2-3 | 8,50 % |
| PGP-2-4 | 5,50 % |
| PGUQU-3-F | 7,00 % |
| PGUQU-4-F | 4,00 % |
| PP-1-2V1 | 2,50 % |
| PPGU-3-F | 0,50 % |
| PUQU-3-F | 8,00 % |

wird mit dem erfindungsgemäßen Verfahren gereinigt.

### Beispiel 15

Eine flüssigkristalline Mischung, z. B. für VA-Anwendungen, der Zusammensetzung

| | |
|---|---|
| BCH-32 | 6,00 % |
| CCH-23 | 18,00 % |
| CCH-34 | 8,00 % |
| CCP-3-1 | 12,00 % |
| CCP-3-3 | 3,00 % |
| CCY-3-O2 | 6,00 % |
| CPY-2-O2 | 6,00 % |
| CPY-3-O2 | 7,00 % |
| CY-3-O2 | 14,00 % |
| CY-3-O4 | 8,00 % |
| CY-5-O2 | 9,00 % |
| PYP-2-3 | 3,00 % |

wird mit dem erfindungsgemäßen Verfahren gereinigt.

### Beispiel 16

Eine flüssigkristalline Mischung, z. B. für PS-VA-Anwendungen, der Zusammensetzung

| | |
|---|---|
| CC-3-V1 | 7,98 % |
| CCH-23 | 17,95 % |
| CCH-34 | 3,99 % |
| CCH-35 | 6,98 % |
| CCP-3-1 | 4,99 % |
| CCY-3-O2 | 12,46 % |
| CPY-2-O2 | 7,98 % |
| CPY-3-O2 | 10,97 % |
| CY-3-O2 | 15,45 % |
| RM-17 | 0,30 % |
| PY-3-O2 | 10,97 % |

wird mit dem erfindungsgemäßen Verfahren gereinigt.

### Beispiel 17

Eine flüssigkristalline Mischung, z. B. für VA-Anwendungen, der Zusammensetzung

| | |
|---|---|
| CC-3-V | 29,50 % |
| PP-1-3 | 11,00 % |
| PY-3-O2 | 12,00 % |
| CCP-3-1 | 9,50 % |
| CCOY-2-O2 | 18,00 % |
| CCOY-3-O2 | 13,00 % |
| GPP-5-2 | 7,00 % |

wird mit dem erfindungsgemäßen Verfahren gereinigt.

Die Mischungsbeispiele 1 bis 17 können zusätzlich noch einen oder mehrere z. B. einen oder zwei, Stabilisator(en), und/oder einen Dotierstoff aus den Tabellen C und D enthalten.

### Beispiel 18

Eine flüssigkristalline Mischung, z. B. für TN-Anwendungen, der Zusammensetzung

| | |
|---|---|
| BCH-3F.F | 7,50 % |
| BCH-5F.F | 7,50 % |
| CC-3-V | 35,00 % |
| CCGU-3-F | 4,00 % |
| CCP-3F.F.F | 12,00 % |
| CCPC-33 | 3,00 % |
| CCP-V-1 | 10,00 % |
| PGP-2-4 | 4,00 % |
| PPGU-3-F | 1,00 % |
| PUQU-3-F | 16,00 % |

wird mit dem erfindungsgemäßen Verfahren gereinigt.

### Beispiel 19

Eine flüssigkristalline Mischung, z. B. für TN-Anwendungen, der Zusammensetzung

| | |
|---|---|
| BCH-2F.F | 4,00 % |
| BCH-3F.F.F | 8,50 % |
| CC-3-V1 | 8,00 % |
| CC-4-V | 10,00 % |
| CCG-V-F | 8,00 % |
| CCP-20CF₃ | 7,00 % |
| CCP-2F.F.F | 8,00 % |
| CCP-30CF₃ | 5,00 % |
| CCP-3-1 | 3,00 % |
| CCPC-33 | 2,50 % |
| CCP-V-1 | 11,50 % |
| CCQU-3-F | 5,00 % |
| CDU-2-F | 7,00 % |
| CDU-3-F | 7,00 % |
| PUQU-3-F | 5,50 % |

wird mit dem erfindungsgemäßen Verfahren gereinigt.

### Beispiel 20

Eine flüssigkristalline Mischung, z. B. für PS-VA-Anwendungen, der Zusammensetzung

| | |
|---|---|
| BCH-32 | 7,48 % |
| CCH-23 | 21,93 % |
| CCH-34 | 3,49 % |
| CCY-3-O3 | 6,98 % |
| CCY-4-O2 | 7,98 % |
| CPY-2-O2 | 10,97 % |
| CPY-3-O2 | 10,97 % |
| CY-3-O2 | 15,45 % |
| RM-1 | 0,30 % |
| PCH-301 | 12,46 % |
| PCH-302 | 1,99 % |

wird mit dem erfindungsgemäßen Verfahren gereinigt.

### Beispiel 21

Eine flüssigkristalline Mischung, z. B. für VA-Anwendungen, der Zusammensetzung

| | |
|---|---|
| BCH-32 | 8,50 % |
| CC-3-V | 24,00 % |
| CC-3-V1 | 5,00 % |
| CCP-V-1 | 2,00 % |
| CCY-3-1 | 2,50 % |
| CCY-3-O1 | 7,00 % |
| CCY-3-O2 | 6,50 % |
| CCY-3-O3 | 4,00 % |
| CCY-4-O2 | 4,00 % |
| CPY-2-O2 | 7,50 % |
| CPY-3-O2 | 10,00 % |
| CY-3-O2 | 3,50 % |
| PY-3-O2 | 8,50 % |
| PYP-2-3 | 4,00 % |
| PYP-2-4 | 3,00 % |

wird mit dem erfindungsgemäßen Verfahren gereinigt.

### Beispiel 22

Eine flüssigkristalline Mischung, z. B. für FFS-Anwendungen, der Zusammensetzung

| | |
|---|---|
| APUQU-2-F | 4,00 % |
| CC-3-V | 26,50 % |
| CC-3-V1 | 7,00 % |
| CCGU-3-F | 1,50 % |
| CCP-2F.F.F | 1,50 % |
| CCP-30CF₃ | 8,00 % |
| CCP-3-1 | 2,00 % |
| CCP-V-1 | 10,00 % |
| CCP-V2-1 | 7,00 % |
| CDU-2-F | 5,00 % |
| CPGU-3-OT | 4,50 % |
| PGU-3-F | 3,00 % |
| PGUQU-3-F | 3,00 % |
| PGUQU-4-F | 3,00 % |
| PPGU-3-F | 1,50 % |
| PUQU-3-F | 12,50 % |

wird mit dem erfindungsgemäßen Verfahren gereinigt.

### Beispiel 23

Eine flüssigkristalline Mischung, z. B. für FFS-Anwendungen, der Zusammensetzung

| | |
|---|---|
| BCH-3F.F | 7,00 % |
| CBC-33 | 3,00 % |
| CC-3-V | 25,00 % |
| CCGU-3-F | 6,00 % |
| CCP-30CF₃ | 8,00 % |
| CCP-3-1 | 4,50 % |
| CCP-V-1 | 13,50 % |
| CCP-V2-1 | 6,00 % |
| CCQU-3-F | 8,00 % |
| CPGP-5-2 | 3,00 % |
| DPGU-4-F | 2,50 % |
| PPGU-3-F | 1,00 % |
| PUQU-3-F | 4,50 % |
| Y-4O-O4 | 8,00 % |

wird mit dem erfindungsgemäßen Verfahren gereinigt.

### Beispiel 24

Eine flüssigkristalline Mischung, z. B. für PS-VA-Anwendungen, der Zusammensetzung

| | |
|---|---|
| CC-3-V1 | 10,22 % |
| CCH-23 | 18,44 % |
| Irganox® 1076 | 0,01 % |
| RM-1 | 0,30 % |
| PY-3-O2 | 12,96 % |
| PP-1-2V1 | 3,74 % |
| CY-3-O2 | 11,47 % |
| CPY-3-O2 | 9,72 % |
| CPY-2-O2 | 5,98 % |
| CCY-3-O2 | 11,96 % |
| CCY-3-1 | 2,49 % |
| CCP-3-1 | 5,98 % |
| CCH-35 | 6,73 % |

wird mit dem erfindungsgemäßen Verfahren gereinigt.

### Beispiel 25

Eine flüssigkristalline Mischung, z. B. für TN-Anwendungen, der Zusammensetzung

| | |
|---|---|
| APUQU-2-F | 2,00 % |
| BCH-3F.F | 9,00 % |
| BCH-3F.F.F | 9,00 % |
| CC-3-V1 | 5,00 % |
| CC-4-V | 6,00 % |
| CCGU-3-F | 7,50 % |
| CCG-V-F | 15,50 % |
| CCP-2F.F.F | 8,50 % |
| CCP-30CF₃ | 6,00 % |
| CCP-3-1 | 2,00 % |
| CCP-3F.F.F | 10,00 % |
| CCQU-3-F | 9,50 % |
| CCQU-5-F | 9,00 % |
| PPGU-3-F | 1,00 % |

wird mit dem erfindungsgemäßen Verfahren gereinigt.

### Beispiel 26

Eine flüssigkristalline Mischung, z. B. für PS-VA-Anwendungen, der Zusammensetzung

| | |
|---|---|
| RM-1 | 0,199 % |
| Irganox® 1076 | 0,001 % |
| PYP-2-4 | 8,98 % |
| PYP-2-3 | 8,98 % |
| PCH-53 | 2,99 % |
| PCH-301 | 5,99 % |
| CY-3-O4 | 20,46 % |
| CPY-3-O2 | 4,49 % |
| CPY-2-O2 | 9,98 % |
| CCY-4-O2 | 6,99 % |
| CCY-3-O3 | 7,98 % |
| CCY-3-O2 | 6,99 % |
| CCH-35 | 5,99 % |
| BCH-52 | 3,99 % |
| CCH-34 | 5,99 % |

wird mit dem erfindungsgemäßen Verfahren gereinigt.

### Beispiel 27

Eine flüssigkristalline Mischung, z. B. für FFS-Anwendungen, der Zusammensetzung

| | |
|---|---|
| CDUQU-3-F | 3,00 % |
| CCP-V-1 | 13,50 % |
| CCP-3-3 | 2,50 % |
| CC-3-V | 44,00 % |
| APUQU-2-F | 4,50 % |
| CPGU-3-OT | 4,00 % |
| PUQU-2-F | 5,00 % |
| PGU-2-F | 6,00 % |
| PGU-3-F | 6,00 % |
| PGUQU-3-F | 3,50 % |
| PGUQU-4-F | 3,50 % |
| PPGU-3-F | 0,50 % |
| DPGU-4-F | 4,00 % |

wird mit dem erfindungsgemäßen Verfahren gereinigt.

### Beispiel 28

Eine flüssigkristalline Mischung, z. B. für FFS-Anwendungen, der Zusammensetzung

| | |
|---|---|
| BCH-3F.F | 15,00 % |
| BCH-3F.F.F | 8,00 % |
| CC-3-V | 10,00 % |
| CC-3-V1 | 10,50 % |
| CC-4-V | 10,50 % |
| CCP-30CF₃ | 10,00 % |
| CCP-V-1 | 15,00 % |
| CDUQU-3-F | 6,50 % |
| PGP-2-2V | 1,00 % |
| PGU-2-F | 8,00 % |
| PPGU-3-F | 1,00 % |
| PUQU-3-F | 4,50 % |

wird mit dem erfindungsgemäßen Verfahren gereinigt.

### Beispiel 29

Eine flüssigkristalline Mischung, z. B. für FFS-Anwendungen, der Zusammensetzung

| | |
|---|---|
| PUQU-3-F | 14,00 % |
| PPGU-3-F | 1,00 % |
| PGP-2-2V | 4,50 % |
| DPGU-4-F | 3,00 % |
| CPGU-3-OT | 3,00 % |
| STAB-37 | 0,01 % |
| CCP-V-1 | 14,00 % |
| CCP-30CF₃ | 6,00 % |
| CC-3-V1 | 5,50 % |
| CC-3-V | 38,99 % |
| APUQU-2-F | 4,00 % |
| CCY-3-O2 | 6,00 % |

wird mit dem erfindungsgemäßen Verfahren gereinigt.

### Beispiel 30

Eine flüssigkristalline Mischung, z. B. für VA-Anwendungen, der Zusammensetzung

| | |
|---|---|
| CLY-3-O2 | 10,00 % |
| CCY-3-O2 | 9,25 % |
| CCH-35 | 8,00 % |
| CC-3-V1 | 10,00 % |
| CC-3-V | 27,50 % |
| CPY-3-O2 | 11,75 % |
| PYP-2-4 | 0,50 % |
| PY-4-O2 | 9,00 % |
| PY-3-O2 | 14,00 % |

wird mit dem erfindungsgemäßen Verfahren gereinigt.

### Beispiel 31

Eine flüssigkristalline Mischung, z. B. für PVA-Anwendungen, der Zusammensetzung

| | |
|---|---|
| CCH-23 | 12,00 % |
| CCH-34 | 10,00 % |
| CCP-3-1 | 7,00 % |
| CCY-3-1 | 10,00 % |
| CCY-3-O2 | 9,00 % |
| CCY-3-O3 | 9,00 % |
| CCY-4-O2 | 9,00 % |
| CPGP-4-3 | 2,00 % |
| CPY-2-O2 | 8,00 % |
| CPY-3-O2 | 8,00 % |
| CY-3-O4 | 4,50 % |
| PCH-301 | 10,00 % |
| PYP-2-3 | 1,50 % |

wird mit dem erfindungsgemäßen Verfahren gereinigt.

### Beispiel 32

Eine flüssigkristalline Mischung, z. B. für FFS-Anwendungen, der Zusammensetzung

| | |
|---|---|
| CC-3-V | 33,00 % |
| CCY-3-O1 | 5,00 % |
| CCY-3-O2 | 6,50 % |
| CCY-4-O2 | 8,00 % |
| CCY-5-O2 | 3,50 % |
| CPY-2-O2 | 9,00 % |
| CPY-3-O2 | 9,00 % |
| CY-3-O2 | 10,00 % |
| CY-5-O2 | 2,00 % |
| PY-3-O2 | 9,00 % |
| PYP-2-3 | 5,00 % |

wird mit dem erfindungsgemäßen Verfahren gereinigt.

### Beispiel 33

Eine flüssigkristalline Mischung, z. B. für FFS-Anwendungen, der Zusammensetzung

| | |
|---|---|
| CC-3-V | 44,50 % |
| CC-3-V1 | 5,50 % |
| CCP-30CF₃ | 8,00 % |
| CCP-V-1 | 8,00 % |
| CCQU-3-F | 5,00 % |
| PGP-2-3 | 4,00 % |
| PGP-2-4 | 5,00 % |
| PGUQU-3-F | 3,00 % |
| PGUQU-4-F | 9,00 % |
| PGUQU-5-F | 5,50 % |
| PUQU-3-F | 2,50 % |

wird mit dem erfindungsgemäßen Verfahren gereinigt.

### Beispiel 34

Eine flüssigkristalline Mischung, z. B. für FFS-Anwendungen, der Zusammensetzung

| | |
|---|---|
| APUQU-2-F | 5,00 % |
| APUQU-3-F | 5,00 % |
| CC-3-V | 40,00 % |
| CC-3-V1 | 4,50 % |
| CCGU-3-F | 3,50 % |
| CCP-30CF₃ | 5,50 % |
| CCP-V-1 | 10,50 % |
| CCQU-3-F | 5,50 % |
| CPGU-3-OT | 3,00 % |
| PGUQU-4-F | 6,00 % |
| PGUQU-5-F | 4,50 % |
| PUQU-3-F | 7,00 % |

wird mit dem erfindungsgemäßen Verfahren gereinigt.

### Beispiel 35

Eine flüssigkristalline Mischung, z. B. für FFS-Anwendungen, der Zusammensetzung

| | |
|---|---|
| CC-3-V | 23,50 % |
| CC-3-V1 | 9,00 % |
| CCGU-3-F | 5,00 % |
| CCP-30CF₃ | 8,00 % |
| CCP-50CF₃ | 6,00 % |
| CCP-V-1 | 12,00 % |
| CCP-V2-1 | 5,00 % |
| CPGP-4-3 | 3,00 % |
| PCH-301 | 5,00 % |
| PGP-1-2V | 7,50 % |
| PGP-2-2V | 8,00 % |
| PUQU-3-F | 8,00 % |

wird mit dem erfindungsgemäßen Verfahren gereinigt.

### Beispiel 36

Eine flüssigkristalline Mischung, z. B. für IPS-Anwendungen, der Zusammensetzung

| | |
|---|---|
| APUQU-2-F | 5,00 % |
| APUQU-3-F | 8,00 % |
| CC-3-V | 36,00 % |
| CC-3-V1 | 5,00 % |
| CCP-V-1 | 8,00 % |
| CCQU-3-F | 9,50 % |
| PGP-2-2V | 3,00 % |
| PGUQU-3-F | 4,00 % |
| PGUQU-4-F | 8,00 % |
| PGUQU-5-F | 5,00 % |
| PUQU-3-F | 8,50 % |

wird mit dem erfindungsgemäßen Verfahren gereinigt.

### Beispiel 37

Eine flüssigkristalline Mischung, z. B. für IPS-Anwendungen, der Zusammensetzung

| | |
|---|---|
| APUQU-2-F | 7,00 % |
| APUQU-3-F | 7,00 % |
| CC-3-2V1 | 4,50 % |
| CC-3-V | 32,00 % |
| CC-3-V1 | 11,00 % |
| CCP-30CF₃ | 7,50 % |
| CCP-50CF₃ | 1,50 % |
| DGUQU-4-F | 8,00 % |
| DPGU-4-F | 5,00 % |
| PGUQU-3-F | 3,00 % |
| PGUQU-4-F | 8,00 % |
| PGUQU-5-F | 2,00 % |
| PP-1-2V1 | 2,00 % |
| PUQU-3-F | 1,50 % |

wird mit dem erfindungsgemäßen Verfahren gereinigt.

### Beispiel 38

Eine flüssigkristalline Mischung, z. B. für PS-VA-Anwendungen, der Zusammensetzung

| | |
|---|---|
| CCH-23 | 13,97 % |
| CCH-34 | 11,98 % |
| CCP-3-1 | 2,99 % |
| CCY-3-1 | 7,98 % |
| CCY-3-O2 | 11,98 % |
| CCY-3-O3 | 11,98 % |
| CCY-4-O2 | 9,98 % |
| CPY-2-O2 | 2,99 % |
| CPY-3-O2 | 9,98 % |
| PCH-301 | 9,98 % |
| PYP-2-3 | 5,99 % |
| RM-1 | 0,20 % |

wird mit dem erfindungsgemäßen Verfahren gereinigt.

### Beispiel 39

Eine flüssigkristalline Mischung, z. B. für FFS-Anwendungen, der Zusammensetzung

| | |
|---|---|
| CC-3-V | 29,00 % |
| CCY-3-O1 | 3,50 % |
| CCY-3-O2 | 9,00 % |
| CCY-4-O2 | 9,00 % |
| CCY-5-O2 | 3,00 % |
| CPY-3-O2 | 9,50 % |
| CY-3-O2 | 13,00 % |
| CY-5-O2 | 2,00 % |
| PY-3-O2 | 10,00 % |
| PYP-2-3 | 2,50 % |
| CPY-2-O2 | 9,50 % |

wird mit dem erfindungsgemäßen Verfahren gereinigt und anschließend mit 0,005 % STAB-35 versetzt.

### Beispiel 40

Eine flüssigkristalline Mischung, z. B. für PS-IPS-Anwendungen, der Zusammensetzung

| | |
|---|---|
| APUQU-2-F | 2,99 % |
| APUQU-3-F | 5,99 % |
| BCH-2F.F | 2,00 % |
| BCH-3F.F | 7,48 % |
| CC-3-V | 25,44 % |
| CC-3-V1 | 5,98 % |
| CCP-V-1 | 12,97 % |
| CCP-V2-1 | 5,98 % |
| CCQU-3-F | 7,98 % |
| CCQU-5-F | 3,98 % |
| PGUQU-3-F | 4,99 % |
| PPGU-3-F | 0,50 % |
| PUQU-3-F | 13,47 % |
| RM-35 | 0,25 % |

wird mit dem erfindungsgemäßen Verfahren gereinigt.

### Beispiel 41

Eine flüssigkristalline Mischung, z. B. für PS-IPS-Anwendungen, der Zusammensetzung

| | |
|---|---|
| APUQU-2-F | 2,99 % |
| APUQU-3-F | 5,99 % |
| BCH-2F.F | 2,00 % |
| BCH-3F.F | 7,48 % |
| CC-3-V | 25,44 % |
| CC-3-V1 | 5,98 % |
| CCP-V-1 | 12,97 % |
| CCP-V2-1 | 5,99 % |
| CCQU-3-F | 7,98 % |
| CCQU-5-F | 3,98 % |
| PGUQU-3-F | 4,98 % |
| PPGU-3-F | 0,50 % |
| PUQU-3-F | 13,47 % |
| RM-41 | 0,25 % |

wird mit dem erfindungsgemäßen Verfahren gereinigt.

### Beispiel 42

Eine flüssigkristalline Mischung, z. B. für TN-Anwendungen, der Zusammensetzung

| | |
|---|---|
| PPGU-3-F | 0,50 % |
| PP-1-2V1 | 1,50 % |
| PGUQU-4-F | 4,00 % |
| PGUQU-3-F | 5,00 % |
| PGP-2-5 | 2,00 % |
| PGP-2-4 | 5,00 % |
| PUQU-3-F | 6,00 % |
| PCH-302 | 6,00 % |
| CPGP-5-3 | 6,00 % |
| CPGP-5-2 | 6,00 % |
| CC-3-V | 30,00 % |
| BCH-3F.F.F | 12,00 % |
| BCH-3F.F | 10,00 % |
| PGP-2-3 | 6,00 % |

wird mit dem erfindungsgemäßen Verfahren gereinigt.

### Beispiel 43

Eine flüssigkristalline Mischung, z. B. für TN-TFT-Anwendungen, der Zusammensetzung

| | |
|---|---|
| CC-3-V | 29,00 % |
| CCGU-3-F | 4,00 % |
| CCG-V-F | 5,00 % |
| CCP-2F.F.F | 5,00 % |
| CCP-3F.F.F | 8,00 % |
| CCPC-33 | 3,00 % |
| CCPC-34 | 3,00 % |
| CCPC-35 | 1,50 % |
| CCP-V-1 | 10,00 % |
| CCP-V2-1 | 11,00 % |
| CCQU-2-F | 1,50 % |
| CCQU-3-F | 8,00 % |
| PUQU-3-F | 11,00 % |

wird mit dem erfindungsgemäßen Verfahren gereinigt.

### Beispiel 44

Eine flüssigkristalline Mischung, z. B. für FFS-Anwendungen, der Zusammensetzung

| | |
|---|---|
| BCH-32 | 4,50 % |
| CC-3-V | 23,50 % |
| CCH-301 | 4,00 % |
| CCY-3-O2 | 4,00 % |
| CCY-3-O3 | 7,00 % |
| CCY-4-O2 | 8,00 % |
| CLY-3-O2 | 8,00 % |
| CPY-2-O2 | 7,00 % |
| CPY-3-O2 | 11,00 % |
| CY-3-O2 | 11,00 % |
| PY-3-O2 | 12,00 % |

wird mit dem erfindungsgemäßen Verfahren gereinigt.

### Beispiel 45

Eine flüssigkristalline Mischung, z. B. für IPS-Anwendungen, der Zusammensetzung

| | |
|---|---|
| APUQU-2-F | 2,50 % |
| APUQU-3-F | 4,50 % |
| CC-3-V | 42,00 % |
| CCGU-3-F | 4,00 % |
| CCP-30CF₃ | 5,00 % |
| CCP-3-1 | 3,00 % |
| CCP-V-1 | 10,00 % |
| CCP-V2-1 | 2,50 % |
| CCQU-3-F | 6,00 % |
| CPGU-3-OT | 5,00 % |
| PGUQU-3-F | 4,50 % |
| PGUQU-4-F | 3,50 % |
| PPGU-3-F | 0,50 % |
| PUQU-3-F | 7,00 % |

wird mit dem erfindungsgemäßen Verfahren gereinigt.

### Beispiel 46

Eine flüssigkristalline Mischung, z. B. für IPS-Anwendungen, der Zusammensetzung

| | |
|---|---|
| BCH-32 | 2,99 % |
| CCH-303 | 1,49 % |
| CCH-34 | 12,93 % |
| CCH-501 | 5,97 % |
| CCY-2-1 | 5,97 % |
| CCY-3-1 | 5,97 % |
| CCY-3-O2 | 5,97 % |
| CCY-3-O3 | 5,97 % |
| CCY-4-O2 | 5,97 % |
| CCY-5-O2 | 2,99 % |
| CPY-2-O2 | 6,97 % |
| CPY-3-O2 | 6,97 % |
| CY-3-O2 | 14,93 % |
| CY-5-O2 | 9,46 % |
| PCH-302 | 4,98 % |
| RM-41 | 0,30 % |
| S-4011 | 0,17 % |

wird mit dem erfindungsgemäßen Verfahren gereinigt.

### Beispiel 47

Eine flüssigkristalline Mischung, z. B. für PM-VA-Anwendungen, der Zusammensetzung

| | |
|---|---|
| CPY-3-O2 | 8,00 % |
| CPY-2-O2 | 8,00 % |
| CH-43 | 3,00 % |
| CH-35 | 3,00 % |
| CH-33 | 3,00 % |
| CCY-5-O2 | 5,50 % |
| CCY-4-O2 | 6,50 % |
| CCY-3-O3 | 6,50 % |
| CCY-3-O2 | 6,50 % |
| CCPC-35 | 5,00 % |
| CCPC-34 | 5,00 % |
| CCPC-33 | 5,00 % |
| CC-4-V | 4,50 % |
| CY-3-O4 | 15,50 % |
| Y-4O-O4 | 15,00 % |

wird mit dem erfindungsgemäßen Verfahren gereinigt.

### Beispiel 48

Eine flüssigkristalline Mischung, z. B. für PS-FFS-Anwendungen, der Zusammensetzung

| | |
|---|---|
| APUQU-2-F | 2,49 % |
| APUQU-3-F | 6,98 % |
| CC-3-V | 24,94 % |
| CC-3-V1 | 7,98 % |
| CCGU-3-F | 3,49 % |
| CCP-30CF₃ | 4,99 % |
| CCP-V-1 | 5,99 % |
| CCP-V2-1 | 13,97 % |
| CCQU-3-F | 9,98 % |
| PCH-302 | 6,48 % |
| PGUQU-3-F | 3,99 % |
| PGUQU-4-F | 3,99 % |
| PPGU-3-F | 0,49 % |
| PUQU-3-F | 3,99 % |
| RM-41 | 0,25 % |

wird mit dem erfindungsgemäßen Verfahren gereinigt.

### Beispiel 49

Eine flüssigkristalline Mischung, z. B. für FFS-Anwendungen, der Zusammensetzung

| | |
|---|---|
| APUQU-2-F | 3,50 % |
| APUQU-3-F | 6,00 % |
| CC-3-V | 45,50 % |
| CCP-30CF₃ | 5,00 % |
| CCP-3-1 | 3,00 % |
| CCP-V2-1 | 8,50 % |
| CPGU-3-OT | 6,00 % |
| PGUQU-3-F | 5,00 % |
| PGUQU-4-F | 5,00 % |
| PPGU-3-F | 0,50 % |
| PUQU-3-F | 12,00 % |

wird mit dem erfindungsgemäßen Verfahren gereinigt.

### Beispiel 50

Eine flüssigkristalline Mischung, z. B. für FFS-Anwendungen, der Zusammensetzung

| | |
|---|---|
| APUQU-2-F | 4,00 % |
| APUQU-3-F | 6,00 % |
| CC-3-V | 45,00 % |
| CCP-20CF₃ | 4,00 % |
| CCP-30CF₃ | 4,00 % |
| CCP-40CF₃ | 2,50 % |
| CPGP-5-2 | 7,00 % |
| CPGP-5-3 | 7,00 % |
| PGP-2-3 | 5,50 % |
| PGP-2-4 | 5,00 % |
| PPGU-3-F | 0,50 % |
| PUQU-3-F | 9,50 % |

wird mit dem erfindungsgemäßen Verfahren gereinigt.

### Beispiel 51

Eine flüssigkristalline Mischung, z. B. für TN-Anwendungen, der Zusammensetzung

| | |
|---|---|
| CC-3-V | 49,50 % |
| CCP-3-1 | 1,50 % |
| CCP-V-1 | 6,00 % |
| CPGU-3-OT | 7,00 % |
| PGP-2-3 | 8,50 % |
| PGP-2-4 | 5,50 % |
| PGUQU-3-F | 7,00 % |
| PGUQU-4-F | 4,00 % |
| PP-1-2V1 | 2,50 % |
| PPGU-3-F | 0,50 % |
| PUQU-3-F | 8,00 % |

wird mit dem erfindungsgemäßen Verfahren gereinigt.

### Beispiel 52

Eine flüssigkristalline Mischung, z. B. für PA-VA-Anwendungen, der Zusammensetzung

| | |
|---|---|
| BCH-32 | 6,00 % |
| CCH-23 | 18,00 % |
| CCH-34 | 8,00 % |
| CCP-3-1 | 12,00 % |
| CCP-3-3 | 3,00 % |
| CCY-3-O2 | 6,00 % |
| CPY-2-O2 | 6,00 % |
| CPY-3-O2 | 7,00 % |
| CY-3-O2 | 14,00 % |
| CY-3-O4 | 8,00 % |
| CY-5-O2 | 9,00 % |
| PYP-2-3 | 3,00 % |

wird mit dem erfindungsgemäßen Verfahren gereinigt.

### Beispiel 53

Eine flüssigkristalline Mischung, z. B. für FFS-Anwendungen, der Zusammensetzung

| | |
|---|---|
| CCQU-3-F | 8,00 % |
| CCP-V2-1 | 7,00 % |
| CCP-V-1 | 10,00 % |
| CC-3-V | 32,50 % |
| PGP-2-2V | 10,00 % |
| PUQU-3-F | 12,50 % |
| PGUQU-5-F | 4,00 % |
| PGUQU-4-F | 5,00 % |
| PGUQU-3-F | 5,00 % |
| APUQU-3-F | 6,00 % |

wird mit dem erfindungsgemäßen Verfahren gereinigt.

### Beispiel 54

Eine flüssigkristalline Mischung, z. B. für FFS-Anwendungen, der Zusammensetzung

| | |
|---|---|
| APUQU-3-F | 1,00 % |
| BCH-3F.F.F | 17,00 % |
| CC-3-V | 35,00 % |
| CC-3-V1 | 6,00 % |
| CCP-3F.F.F | 2,50 % |
| CCP-V-1 | 12,00 % |
| CCP-V2-1 | 8,50 % |
| CPGP-5-2 | 3,00 % |
| CPGP-5-3 | 2,50 % |
| DPGU-4-F | 4,00 % |
| PGUQU-3-F | 4,00 % |
| PGUQU-4-F | 2,00 % |
| PGUQU-5-F | 2,00 % |
| PPGU-3-F | 0,50 % |

wird mit dem erfindungsgemäßen Verfahren gereinigt.

### Beispiel 55

Eine flüssigkristalline Mischung, z. B. für PM-VA-Anwendungen, der Zusammensetzung

| | |
|---|---|
| CH-35 | 3,00 % |
| CH-43 | 3,00 % |
| CLY-3-O2 | 3,25 % |
| CPY-2-O2 | 10,00 % |
| CY-3-O2 | 15,00 % |
| CH-33 | 3,00 % |
| CCY-5-O2 | 4,00 % |
| CCY-4-O2 | 6,00 % |
| CCY-3-O3 | 6,00 % |
| CCY-3-O2 | 6,00 % |
| CCY-3-1 | 2,00 % |
| CCY-2-1 | 8,75 % |
| CY-3-O4 | 20,00 % |
| CCPC-33 | 3,75 % |
| CCH-34 | 4,75 % |
| CCPC-34 | 1,50 % |

wird mit dem erfindungsgemäßen Verfahren gereinigt.

### Beispiel 56

Eine flüssigkristalline Mischung, z. B. für PS-FFS-Anwendungen, der Zusammensetzung

| | |
|---|---|
| APUQU-3-F | 5,99 % |
| BCH-3F.F | 5,49 % |
| CC-3-V | 24,94 % |
| CC-3-V1 | 7,98 % |
| CCGU-3-F | 5,98 % |
| CCP-30CF₃ | 2,99 % |
| CCP-V-1 | 16,96 % |
| CCP-V2-1 | 13,96 % |
| CCQU-3-F | 2,49 % |
| CCQU-5-F | 4,99 % |
| PGUQU-4-F | 4,49 % |
| PPGU-3-F | 0,50 % |
| PUQU-3-F | 2,99 % |
| RM-41 | 0,25 % |

wird mit dem erfindungsgemäßen Verfahren gereinigt.

Die nachfolgenden Mischungen werden ebenfalls mit dem erfindungsgemäßen Verfahren gereinigt:

### Beispiel 57

| | | | | |
|---|---|---|---|---|
| CY-3-O4 | 14,00 % | | Klärpunkt [°C]: | 106,0 |
| CCY-3-O2 | 8,00 % | | Δn [589 nm, 20°C]: | 0,1597 |
| CCY-4-O2 | 7,00 % | | ε_{∥} [1 kHz, 20°C]: | 3,9 |
| CCY-3-O3 | 6,00 % | | ε_{⊥} [1 kHz, 20°C]: | 8,5 |

| | | | | |
|---|---|---|---|---|
| CCY-5-O2 | 5,00 % | | Δ_{ε} [1 kHz, 20°C]: | -4,6 |
| CPY-2-O2 | 10,00 % | | K₁ [pN, 20°C]: | 16,6 |
| CPY-3-O2 | 8,00 % | | K₃ [pN, 20°C]: | 17,6 |
| PYP-2-3 | 14,00% | | V₀ [20°C, V]: | 2,08 |
| PYP-2-4 | 14,00 % | | γ₁ [mPa-s, 20°C]: | 316 |
| CCH-301 | 8,00 % | | | |
| PGP-2-3 | 6,00 % | | | |

### Beispiel 57a

Die Mischung gemäß Beispiel 57 enthält zusätzlich mit 0,025 % STAB-35.

### Beispiel 58

| | | | | |
|---|---|---|---|---|
| CY-3-O2 | 13,00 % | | Klärpunkt [°C]: | 111 |
| CY-5-O2 | 9,00 % | | | |
| CY-5-O4 | 8,00 % | | | |
| CCY-3-O2 | 6,00 % | | | |
| CCY-3-O3 | 5,00 % | | | |
| CCY-4-O2 | 5,00 % | | | |
| CCY-5-O2 | 3,50 % | | | |
| CPY-2-O2 | 7,00 % | | | |
| CPY-3-O2 | 3,00 % | | | |
| CCH-34 | 17,50 % | | | |
| CCP-3-1 | 4,50 % | | | |
| CH-35 | 3,00 % | | | |
| CH-43 | 3,00 % | | | |
| CH-45 | 0,50 % | | | |
| CCPC-33 | 3,00 % | | | |
| CCPC-34 | 3,00 % | | | |
| CCPC-35 | 3,00 % | | | |

### Beispiel 59

| | | | | |
|---|---|---|---|---|
| CC-3-V | 37,00 % | | Klärpunkt [°C]: | 75,2 |
| CCY-3-O1 | 5,00 % | | Δn [589 nm, 20°C]: | 0,1014 |
| CCY-3-O2 | 5,00 % | | Δε [1 kHz, 20°C]: | -3,7 |
| CCY-4-O2 | 4,00 % | | ε_{∥} [1 kHz, 20°C]: | 3,7 |
| CLY-3-O2 | 7,00 % | | ε_{⊥} [1 kHz, 20°C]: | 7,4 |
| CPY-2-O2 | 9,00 % | | K₁ [pN, 20°C]: | 13,2 |
| CPY-3-O2 | 10,00 % | | K₃ [pN, 20°C]: | 15,2 |
| CY-3-O2 | 11,50% | | V₀ [20°C, V]: | 2,13 |
| PY-3-O2 | 11,50 % | | | |

### Beispiel 60

| | | | | |
|---|---|---|---|---|
| CC-3-V | 40,00 % | | Klärpunkt [°C]: | 100,3 |
| CC-3-V1 | 5,00 % | | Δn [589 nm, 20°C]: | 0,1059 |
| CCP-30CF3 | 4,00 % | | Δε [1 kHz, 20°C]: | 3,9 |
| CCP-V-1 | 13,00 % | | ε_{∥} [1 kHz, 20°C]: | 6,7 |
| CCP-V2-1 | 4,00 % | | ε_{⊥} [1 kHz, 20°C]: | 2,8 |
| CCVC-3-V | 4,00 % | | K₁ [pN, 20°C]: | 14,9 |
| CDUQU-3-F | 2,00 % | | K₃ [pN, 20°C]: | 17,0 |
| CPGP-5-2 | 5,00 % | | V₀ [20°C, V]: | 2,07 |
| CPGP-5-3 | 1,50 % | | γ₁ [mPa·s, 20°C]: | 74 |
| DGUQU-4-F | 2,00 % | | | |
| DPGU-4-F | 3,00 % | | | |
| PGP-2-3 | 4,00 % | | | |
| PGP-2-4 | 4,00 % | | | |
| PPGU-3-F | 0,50 % | | | |
| PUQU-3-F | 8,00 % | | | |

### Beispiel 61

| | | | | |
|---|---|---|---|---|
| CY-3-O4 | 23,00 % | | Klärpunkt [°C]: | 71,3 |
| CCY-3-O1 | 6,00 % | | Δn [589 nm, 20°C]: | 0,1197 |
| CCY-3-O2 | 6,00 % | | Δε [1 kHz, 20°C]: | -7,0 |
| CCY-3-O3 | 7,00 % | | ε_{∥} [1 kHz, 20°C]: | 5,0 |
| CCY-4-O2 | 7,00 % | | ε_{⊥} [1 kHz, 20°C]: | 12,0 |
| CCY-5-O2 | 5,00 % | | K₁ [pN, 20°C]: | 11,7 |
| CPY-2-O2 | 8,00 % | | K₃ [pN, 20°C]: | 13,2 |
| CPY-3-O2 | 10,00 % | | V₀ [20°C, V]: | 1,44 |
| CCY-2-1 | 3,50 % | | γ₁ [mPa·s, 20°C]: | 246 |
| PYP-2-4 | 8,50 % | | | |
| PY-1-O4 | 8,00 % | | | |
| Y-4O-O4 | 8,00 % | | | |

### Beispiel 62

| | | | | |
|---|---|---|---|---|
| PUQU-3-F | 9,00 % | | Klärpunkt [°C]: | 75,9 |
| PGUQU-3-F | 7,00 % | | An [589 nm, 20°C]: | 0,1131 |
| PGUQU-4-F | 5,00 % | | Δε [1 kHz, 20°C]: | 6,1 |
| CPGU-3-OT | 4,50 % | | K₁ [pN, 20°C]: | 11,9 |
| PPGU-3-F | 0,50 % | | K₃ [pN, 20°C]: | 13,6 |
| CDUQU-3-F | 0,05 % | | V₀ [20°C]: | 1,14 |
| CC-3-V | 49,95 % | | γ₁ [mPa·s, 20°C]: | 57 |
| CCP-V-1 | 12,00 % | | | |
| PGP-2-3 | 8,00 % | | | |
| PGP-2-4 | 4,00 % | | | |

### Beispiel 63

| | | | | |
|---|---|---|---|---|
| PUQU-3-F | 8,00 % | | Klärpunkt [°C]: | 75,4 |
| PGUQU-3-F | 7,00 % | | Δn [589 nm, 20°C]: | 0,1191 |
| PGUQU-4-F | 4,00 % | | Δε [1 kHz, 20°C]: | 6,1 |
| PPGU-3-F | 0,50 % | | K₁ [pN, 20°C]: | 12,6 |
| CPGU-3-OT | 7,00 % | | K₃ [pN, 20°C]: | 12,5 |
| CC-3-V | 49,50 % | | V₀ [20°C, V]: | 1,52 |
| CCP-3-1 | 1,50 % | | γ₁ [mPa·s, 20°C]: | 57 |
| CCP-V-1 | 6,00 % | | | |
| PP-1-2V1 | 2,50 % | | | |
| PGP-2-3 | 8,50 % | | | |
| PGP-2-4 | 5,50 % | | | |

### Beispiel 64

| | | | | |
|---|---|---|---|---|
| CY-3-O4 | 12,00 % | | Klärpunkt [°C]: | 102,5 |
| CY-5-O4 | 12,00 % | | Δn [589 nm, 20°C]: | 0,1605 |
| CCY-3-O2 | 8,00 % | | Δε [1 kHz, 20°C]: | -5,6 |
| CCY-4-O2 | 7,00 % | | ε_{∥} [1 kHz, 20°C]: | 4,0 |
| CCY-3-O3 | 7,00 % | | ε_{⊥} [1 kHz, 20°C]: | 9,6 |
| CPY-2-O2 | 12,00 % | | K₁ [pN, 20°C]: | 16,9 |
| CPY-3-O2 | 12,00 % | | K₃ [pN, 20°C]: | 17,1 |
| PYP-2-3 | 15,00 % | | V₀ [V, 20°C]: | 1,84 |
| PYP-2-4 | 15,00 % | | γ₁ [mPa·s, 20°C]: | 401 |

### Beispiel 65

| | | | | |
|---|---|---|---|---|
| BCH-32 | 8,00 % | | Klärpunkt [°C]: | 80,6 |
| CC-3-V | 28,00% | | Δn [589 nm, 20°C]: | 0,1194 |
| CCY-3-O1 | 5,00 % | | Δε [1 kHz, 20°C]: | -3,9 |
| CCY-3-O2 | 6,00 % | | ε_{∥} [1 kHz, 20°C]: | 4,0 |
| CLY-3-O2 | 8,00 % | | ε_{⊥} [1 kHz, 20°C]: | 7,9 |
| CPY-2-O2 | 10,00 % | | K₁ [pN, 20°C]: | 13,0 |
| CPY-3-O2 | 10,00 % | | K₃ [pN, 20°C]: | 14,0 |
| PGIY-2-O4 | 8,00 % | | V₀ [20°C]: | 2,0 |
| PY-3-O2 | 9,00 % | | γ₁ [mPa·s, 20°C]: | 120 |
| Y-4O-O4 | 8,00 % | | | |

### Beispiel 66

| | | | | |
|---|---|---|---|---|
| CY-3-O2 | 15,00 % | | Klärpunkt [°C]: | 80,1 |
| CY-5-O2 | 7,00 % | | Δn [589 nm, 20°C]: | 0,1026 |
| CCY-3-O1 | 4,00 % | | Δε [1 kHz, 20°C]: | -3,5 |
| CCY-3-O2 | 2,00 % | | ε_{∥} [1 kHz, 20°C]: | 3,5 |
| CCY-3-O3 | 6,00 % | | ε_{⊥} [1 kHz, 20°C]: | 7,0 |
| CCY-4-O2 | 6,00 % | | K₁ [pN, 20°C]: | 13,9 |
| CPY-2-O2 | 8,00 % | | K₃ [pN, 20°C]: | 13,8 |
| CPY-3-O2 | 8,00 % | | V₀ [20°C]: | 2,11 |
| PYP-2-4 | 6,50 % | | γ₁ [mPa·s, 20°C]: | 132 |
| CCH-23 | 15,00 % | | | |
| CCH-34 | 5,00 % | | | |
| CCH-35 | 4,00 % | | | |
| CCH-301 | 6,00 % | | | |
| BCH-32 | 7,50 % | | | |

### Beispiel 67

| | | | | |
|---|---|---|---|---|
| APUQU-2-F | 3,00 % | | Klärpunkt [°C]: | 100,1 |
| APUQU-3-F | 2,50 % | | Δn [589 nm, 20°C]: | 0,1046 |
| CC-3-2V1 | 3,00 % | | | |
| CC-3-V | 37,00 % | | | |
| CC-3-V1 | 5,00 % | | | |
| CCP-V-1 | 13,00 % | | | |
| CCP-V2-1 | 7,50 % | | | |
| CCVC-3-V | 5,00 % | | | |
| CDUQU-3-F | 2,00 % | | | |
| CPGP-5-2 | 4,00 % | | | |
| DGUQU-4-F | 2,00 % | | | |
| PGP-2-3 | 5,00 % | | | |
| PGP-2-4 | 4,50 % | | | |
| PPGU-3-F | 0,50 % | | | |
| PUQU-3-F | 6,00 % | | | |

### Beispiel 68

| | | | | |
|---|---|---|---|---|
| PCH-3 | 6,00 % | | Klärpunkt [°C]: | 86,0 |
| CC-5-V | 20,00 % | | Δn [589 nm, 20°C]: | 0,1612 |
| PCH-301 | 14,00 % | | Δε [1 kHz, 20°C]: | 1,8 |
| PCH-302 | 15,00 % | | ε_{∥} [1 kHz, 20°C]: | 4,7 |
| PPTUI-3-2 | 15,00 % | | ε_{⊥} [1 kHz, 20°C]: | 2,9 |
| PPTUI-3-4 | 15,00 % | | | |
| CCP-V-1 | 8,00 % | | | |
| CCP-V2-1 | 7,00 % | | | |

### Beispiel 68a

Die Mischung gemäß Beispiel 68 enthält zusätzlich mit 2 % R-5011.

### Beispiel 69

| | | | | |
|---|---|---|---|---|
| CY-3-O | 13,00 % | | Klärpunkt [°C]: | 92,0 |
| CC-4-V | 17,00 % | | Δn [589 nm, 20°C]: | 0,1598 |
| CC-3-V1 | 8,00 % | | Δε [1 kHz, 20°C]: | -1,9 |
| CCP-V-1 | 12,00 % | | ε_{∥} [1 kHz, 20°C]: | 3,4 |
| CCP-V2-1 | 12,00 % | | ε_{⊥} [1 kHz, 20°C]: | 5,3 |
| PPTUI-3-2 | 10,00 % | | | |
| PTP-302FF | 10,00 % | | | |
| PTP-502FF | 10,00 % | | | |
| CPTP-302FF | 4,00 % | | | |
| CPTP-502FF | 4,00 % | | | |

### Beispiel 70

| | | | | |
|---|---|---|---|---|
| CY-3-O | 12,50 % | | Klärpunkt [°C]: | 75,4 |
| CY-5-O2 | 10,00 % | | Δn [589 nm, 20°C]: | 0,1077 |
| CCY-3-O1 | 4,50 % | | Δε [1 kHz, 20°C]: | -3,2 |
| CCY-3-O2 | 6,00 % | | ε_{∥} [1 kHz, 20°C]: | 3,5 |
| CLY-3-O2 | 7,00 % | | ε_{⊥} [1 kHz, 20°C]: | 6,7 |
| CPY-2-O2 | 10,00 % | | V₀ [20°C]: | 2,30 |
| CPY-3-O2 | 10,00 % | | γ₁ [mPa·s, 20°C]: | 112,9 |
| CC-3-V | 27,40 % | | | |
| BCH-32 | 3,50 % | | | |
| PP-1-2V1 | 9,00 % | | | |
| CDUQU-3-F | 0,10 % | | | |

### Beispiel 71

| | | | | |
|---|---|---|---|---|
| CY-3-O2 | 15,00 % | | Klärpunkt [°C]: | 75,8 |
| CY-3-O4 | 2,50 % | | Δn [589 nm, 20°C]: | 0,1021 |
| CY-5-O2 | 10,00 % | | Δε [1 kHz, 20°C]: | -3,2 |
| CCY-3-O1 | 5,00 % | | ε_{∥} [1 kHz, 20°C]: | 3,6 |
| CCY-4-O2 | 5,00 % | | ε_{⊥} [1 kHz, 20°C]: | 6,8 |
| CPY-2-O2 | 7,00 % | | K₁ [pN, 20°C]: | 13,4 |
| CPY-3-O2 | 7,00 % | | K₃ [pN, 20°C]: | 13,5 |
| CCY-2-1 | 6,00 % | | V₀ [20°C]: | 2,14 |
| CCY-3-1 | 6,00 % | | γ₁ [mPa·s, 20°C]: | 128 |
| CCH-23 | 15,50 % | | | |
| CCH-34 | 5,00 % | | | |
| BCH-32 | 13,00 % | | | |
| PP-1-4 | 3,00 % | | | |

### Beispiel 72

| | | | | |
|---|---|---|---|---|
| CC-3-V | 33,00 % | | Klärpunkt [°C]: | 80,2 |
| CCY-3-O1 | 6,00 % | | Δn [589 nm, 20°C]: | 0,1116 |
| CCY-3-O2 | 8,00 % | | Δε [1 kHz, 20°C]: | -4,1 |
| CCY-4-O2 | 2,50 % | | ε_{∥} [1 kHz, 20°C]: | 3,7 |
| CPY-2-O2 | 8,00 % | | ε_{⊥} [1 kHz, 20°C]: | 7,8 |
| CPY-3-O2 | 12,00 % | | K₁ [pN, 20°C]: | 14,5 |
| CLY-3-O2 | 8,00 % | | K₃ [pN, 20°C]: | 16,1 |
| PY-1-O4 | 1,50 % | | V₀ [20°C]: | 2,09 |
| PY-3-O2 | 10,00 % | | γ₁ [mPa·s, 20°C]: | 119 |
| PY-4-O2 | 8,00 % | | | |
| CY-3-O2 | 3,00 % | | | |

### Beispiel 73

| | | | | |
|---|---|---|---|---|
| BCH-32 | 2,00 % | | Klärpunkt [°C]: | 79,7 |
| BCH-52 | 2,50 % | | Δn [589 nm, 20°C]: | 0,1036 |
| CCY-2-1 | 9,50 % | | Δε [1 kHz, 20°C]: | -3,7 |
| CCY-3-1 | 9,50 % | | ε_{∥} [1 kHz, 20°C]: | 4,8 |
| CCY-3-O2 | 10,00 % | | ε_{⊥} [1 kHz, 20°C]: | 8,5 |
| CCY-5-O2 | 10,00 % | | K₁ [pN, 20°C]: | 13,9 |
| CPY-2-O2 | 12,00 % | | K₃ [pN, 20°C]: | 14,1 |
| CY-3-O4 | 15,00 % | | V₀ [20°C]: | 2,06 |
| CY-5-O4 | 15,50 % | | | |
| PCH-53 | 10,50 % | | | |
| APUQU-3-F | 3,50 % | | | |

### Beispiel 74

| | | | | |
|---|---|---|---|---|
| BCH-32 | 0,50 % | | Klärpunkt [°C]: | 79,2 |
| BCH-52 | 0,50 % | | Δn [589 nm, 20°C]: | 0,1037 |
| CCY-2-1 | 5,00 % | | Δε [1 kHz, 20°C]: | -3,8 |
| CCY-3-1 | 5,00 % | | ε_{∥} [1 kHz, 20°C]: | 6,2 |
| CCY-3-O2 | 13,00 % | | ε_{⊥} [1 kHz, 20°C]: | 10,0 |
| CCY-5-O2 | 13,00 % | | K₁ [pN, 20°C]: | 14,8 |
| CPY-2-O2 | 12,00 % | | K₃ [pN, 20°C]: | 14,5 |
| CY-3-O4 | 19,50 % | | V₀ [20°C]: | 2,12 |
| CY-5-O4 | 19,50 % | | | |
| PCH-53 | 5,00 % | | | |
| APUQU-3-F | 7,00% | | | |

### Beispiel 75

| | | | | |
|---|---|---|---|---|
| CY-3-O2 | 27,50 % | | Klärpunkt [°C]: | 80,0 |
| CCY-4-O2 | 26,50 % | | Δn [589 nm, 20°C]: | 0,0911 |
| CPY-3-O2 | 13,50 % | | Δε [1 kHz, 20°C]: | -3,6 |
| CC-3-V | 25,00 % | | ε_{∥} [1 kHz, 20°C]: | 4,4 |
| CCH-34 | 5,00 % | | ε_{⊥} [1 kHz, 20°C]: | 8,1 |
| APUQU-3-F | 2,50 % | | | |

### Beispiel 76

| | | | | |
|---|---|---|---|---|
| APUQU-3-F | 7,00 % | | Klärpunkt [°C]: | 88,0 |
| CC-3-V | 35,00 % | | Δn [589 nm, 20°C]: | 0,1150 |
| CC-3-V1 | 5,00 % | | Δε [1 kHz, 20°C]: | -2,2 |
| CCP-30CF₃ | 5,00 % | | ε_{∥} [1 kHz, 20°C]: | 1,0 |
| CCP-V-1 | 12,00 % | | ε_{⊥} [1 kHz, 20°C]: | 3,1 |
| CPGP-5-2 | 1,00 % | | K₁ [pN, 20°C]: | 14,3 |
| DPGU-4-F | 8,00 % | | K₃ [pN, 20°C]: | 14,7 |
| PGP-2-2V | 12,00 % | | V₀ [20°C]: | 1,53 |
| PUQU-3-F | 10,00 % | | γ₁ [mPa·s, 20°C]: | 66 |
| CC-2-V1 | 5,00 % | | | |

### Beispiel 77

| | | | | |
|---|---|---|---|---|
| BCH-32 | 6,00 % | | Klärpunkt [°C]: | 101,6 |
| CC-3-V | 39,50 % | | Δn [589 nm, 20°C]: | 0,1111 |
| CCP-3-1 | 6,50 % | | Δε [1 kHz, 20°C]: | 6,9 |
| CCP-30CF₃ | 1,00 % | | K₁ [pN, 20°C]: | 15,3 |
| CCP-V-1 | 16,00 % | | K₃ [pN, 20°C]: | 17,3 |
| CDUQU-3-F | 9,50 % | | V₀ [20°C]: | 1,57 |
| CPGP-5-2 | 3,00 % | | γ₁ [mPa·s, 20°C]: | 89 |
| CPGP-5-3 | 1,00 % | | LTS [bulk, -30 °C]: | > 1000 h |
| PGU-2-F | 7,50 % | | | |
| PGUQU-3-F | 3,50 % | | | |
| PGUQU-4-F | 2,00 % | | | |
| PGUQU-5-F | 3,50 % | | | |
| PPGU-3-F | 1,00 % | | | |

### Beispiel 78

| | | | | |
|---|---|---|---|---|
| BCH-32 | 5,00 % | | Klärpunkt [°C]: | 102,5 |
| CC-3-V | 35,00 % | | Δn [589 nm, 20°C]: | 0,1207 |
| CC-3-V1 | 5,00 % | | Δε [1 kHz, 20°C]: | 7,3 |
| CCP-V-1 | 15,00 % | | K₁ [pN, 20°C]: | 15,2 |
| CDUQU-3-F | 8,00 % | | K₃ [pN, 20°C]: | 16,6 |
| CPGP-4-3 | 3,00 % | | V₀ [20°C]: | 1,53 |
| CPGP-5-2 | 3,00 % | | γ₁ [mPa·s, 20°C]: | 96 |
| CPGP-5-3 | 3,00 % | | LTS [bulk, -30 °C]: | > 1000 h |
| CPGU-3-OT | 4,50 % | | | |
| PGU-2-F | 5,50 % | | | |
| PGU-3-F | 5,50 % | | | |
| PGUQU-3-F | 2,50 % | | | |
| PPGU-3-F | 0,50 % | | | |
| PUQU-3-F | 4,50 % | | | |

### Beispiel 79

| | | | | |
|---|---|---|---|---|
| BCH-32 | 6,00 % | | Klärpunkt [°C]: | 101 |
| CC-3-V | 34,50 % | | Δn [589 nm, 20°C]: | 0,1210 |
| CC-3-V1 | 6,00 % | | Δε [1 kHz, 20°C]: | 7,3 |
| CCP-V-1 | 15,00 % | | K₁ [pN, 20°C]: | 15,1 |
| CDUQU-3-F | 6,50 % | | K₃ [pN, 20°C]: | 16,5 |
| CPGP-4-3 | 3,00 % | | γ₁ [mPa·s, 20°C]: | 92 |
| CPGP-5-2 | 3,00 % | | LTS [bulk, -30 °C]: | > 1000 h |
| CPGP-5-3 | 1,50 % | | | |
| CPGU-3-OT | 5,00 % | | | |
| PGU-2-F | 5,50 % | | | |
| PGU-3-F | 4,50 % | | | |
| PGUQU-3-F | 4,00 % | | | |
| PPGU-3-F | 0,50 % | | | |
| PUQU-3-F | 5,00 % | | | |

### Beispiel 80

| | | | | |
|---|---|---|---|---|
| APUQU-3-F | 5,00 % | | Klärpunkt [°C]: | 104,4 |
| BCH-3F.F | 2,50 % | | Δn [589 nm, 20°C]: | 0,0947 |
| CC-3-V | 40,00 % | | Δε [1 kHz, 20°C]: | 7,2 |
| CCGU-3-F | 6,00 % | | K₁ [pN, 20°C]: | 15,5 |
| CCP-3-1 | 2,50 % | | K₃ [pN, 20°C]: | 18,3 |
| CCP-30CF₃ | 7,00 % | | V₀ [20°C]: | 1,55 |
| CCP-V-1 | 12,00 % | | γ₁ [mPa·s, 20°C]: | 93 |
| CCP-V2-1 | 6,00 % | | | |
| CDUQU-3-F | 10,00 % | | | |
| CPGP-5-2 | 2,00 % | | | |
| DPGU-4-F | 2,50 % | | | |
| PPGU-3-F | 0,50 % | | | |
| PUQU-3-F | 4,00 % | | | |

### Beispiel 81

| | | | | |
|---|---|---|---|---|
| APUQU-3-F | 5,00 % | | Klärpunkt [°C]: | 104,5 |
| CC-3-V | 39,00 % | | Δn [589 nm, 20°C]: | 0,0942 |
| CCGU-3-F | 10,00 % | | Δε [1 kHz, 20°C]: | 7,2 |
| CCP-3-1 | 3,00 % | | K₁ [pN, 20°C]: | 15,3 |
| CCP-30CF₃ | 7,50 % | | K₃ [pN, 20°C]: | 18,5 |
| CCP-V-1 | 13,00 % | | V₀ [20°C]: | 1,54 |
| CCP-V2-1 | 5,00 % | | γ₁ [mPa·s, 20°C]: | 94 |
| CDUQU-3-F | 8,00 % | | | |
| CPGP-5-2 | 2,00 % | | | |
| PPGU-3-F | 0,50 % | | | |
| PUQU-3-F | 7,00 % | | | |

### Beispiel 82

| | | | | |
|---|---|---|---|---|
| APUQU-3-F | 5,00 % | | Klärpunkt [°C]: | 104,5 |
| CC-3-V | 34,50 % | | Δn [589 nm, 20°C]: | 0,0940 |
| CC-3-V1 | 4,50 % | | Δε [1 kHz, 20°C]: | 7,3 |
| CCGU-3-F | 10,00 % | | K₁ [pN, 20°C]: | 15,5 |
| CCP-3-1 | 3,00 % | | K₃ [pN, 20°C]: | 18,7 |
| CCP-30CF₃ | 7,50 % | | V₀ [20°C]: | 1,54 |
| CCP-V-1 | 11,50 % | | γ₁ [mPa·s, 20°C]: | 97 |
| CCP-V2-1 | 4,00 % | | | |
| CCQU-3-F | 4,00 % | | | |
| CDUQU-3-F | 6,50 % | | | |
| CPGP-5-2 | 2,00 % | | | |
| PPGU-3-F | 0,50 % | | | |
| PUQU-3-F | 7,00 % | | | |

### Beispiel 83

| | | | | |
|---|---|---|---|---|
| BCH-3F.F.F | 12,00 % | | Klärpunkt [°C]: | 101,2 |
| CC-3-V | 8,00 % | | Δn [589 nm, 20°C]: | 0,1079 |
| CC-3-V1 | 9,00 % | | Δε [1 kHz, 20°C]: | 6,8 |
| CC-4-V | 10,00 % | | K₁ [pN, 20°C]: | 14,2 |
| CCGU-3-F | 4,00 % | | K₃ [pN, 20°C]: | 17,0 |
| CCP-1F.F.F | 4,50 % | | V₀ [20°C]: | 1,53 |
| CCP-30CF₃ | 8,00 % | | γ₁ [mPa·s, 20°C]: | 100 |
| CCP-3F.F.F | 8,00 % | | | |
| CCP-V-1 | 13,00 % | | | |
| CCP-V2-1 | 6,00 % | | | |
| CPGP-5-2 | 3,00 % | | | |
| CPGU-3-OT | 1,50 % | | | |
| PGP-2-2V | 3,00 % | | | |
| PPGU-3-F | 1,00 % | | | |
| PUQU-3-F | 9,00 % | | | |

### Beispiel 84

| | | | | |
|---|---|---|---|---|
| APUQU-2-F | 5,50 % | | Klärpunkt [°C]: | 80,5 |
| APUQU-3-F | 3,00 % | | Δn [589 nm, 20°C]: | 0,1017 |
| CC-3-V | 36,00 % | | Δε [1 kHz, 20°C]: | 9,2 |
| CC-3-V1 | 6,50 % | | ε_{∥} [1 kHz, 20°C]: | 12,9 |
| CCP-30CF₃ | 8,00 % | | ε_{⊥} [1 kHz, 20°C]: | 3,7 |
| CCP-V-1 | 11,50 % | | K₁ [pN, 20°C]: | 11,8 |
| CDUQU-3-F | 5,00 % | | K₃ [pN, 20°C]: | 12,8 |
| DPGU-4-F | 5,50 % | | V₀ [20°C]: | 1,20 |
| PGP-2-2V | 2,00 % | | γ₁ [mPa·s, 20°C]: | 53 |
| PGU-2-F | 7,50 % | | | |
| PUQU-3-F | 9,50 % | | | |

### Beispiel 84a

Die Mischung gemäß Beispiel 84 enthält zusätzlich mit 0,4 % RM-1.

### Beispiel 85

| | | | | |
|---|---|---|---|---|
| BCH-32 | 3,00 % | | Klärpunkt [°C]: | 109,8 |
| CCH-23 | 15,00 % | | Δn [589 nm, 20°C]: | 0,1028 |
| CCH-34 | 3,00 % | | Δε [1 kHz, 20°C]: | -3,7 |
| CCH-35 | 7,00 % | | ε_{∥} [1 kHz, 20°C]: | 3,3 |
| CCP-3-1 | 7,00 % | | ε_{⊥} [1 kHz, 20°C]: | 7,0 |
| CCY-3-1 | 8,00 % | | K₁ [pN, 20°C]: | 20,4 |
| CCY-3-O2 | 12,00 % | | K₃ [pN, 20°C]: | 20,6 |
| CCY-4-O2 | 10,00 % | | | |
| CCY-5-O2 | 5,50 % | | | |
| CPY-2-O2 | 5,00 % | | | |
| CPY-3-O2 | 11,00 % | | | |
| CY-3-O2 | 8,00 % | | | |
| PY-3-O2 | 5,50 % | | | |

### Beispiel 86

| | | | | |
|---|---|---|---|---|
| CC-3-V1 | 10,00 % | | Klärpunkt [°C]: | 74,6 |
| CCH-23 | 18,50 % | | Δn [589 nm, 20°C]: | 0,1032 |
| CCH-35 | 8,00 % | | Δε [1 kHz, 20°C]: | -3,0 |
| CCP-3-1 | 7,00 % | | ε_{∥} [1 kHz, 20°C]: | 3,4 |
| CCY-3-O2 | 12,00 % | | ε_{⊥} [1 kHz, 20°C]: | 6,3 |
| CPY-3-O2 | 10,50 % | | K₁ [pN, 20°C]: | 15,0 |
| CY-3-O2 | 15,50 % | | K₃ [pN, 20°C]: | 16,1 |
| PY-3-O2 | 10,50 % | | V₀ [20°C]: | 2,45 |
| PYP-2-3 | 8,00 % | | γ₁ [mPa·s, 20°C]: | 103 |

### Beispiel 86a

Die Mischung aus Beispiel 86 enthält zusätzlich mit 0,001 % Irganox® 1076 (Octadecyl-3-(3,5-di-tert. butyl-4-hydroxyphenyl)-proprionat, Fa. BASF) und 0,3 % RM-1.

### Beispiel 87

| | | | | |
|---|---|---|---|---|
| CDUQU-3-F | 7,00 % | | Klärpunkt [°C]: | 100 |
| CCP-V-1 | 2,00 % | | Δn [589 nm, 20°C]: | 0,0714 |
| CCQU-3-F | 5,00 % | | Δε [1 kHz, 20°C]: | 8,3 |
| CCQU-5-F | 5,00 % | | ε_{∥} [1 kHz, 20°C]: | 12,0 |
| CCZU-3-F | 13,50 % | | ε_{⊥} [1 kHz, 20°C]: | 3,8 |
| CCZU-5-F | 4,00 % | | K₁ [pN, 20°C]: | 11,4 |
| PUQU-3-F | 1,00 % | | K₃ [pN, 20°C]: | 15,8 |
| CC-5-V | 7,00 % | | V₀ [20°C]: | 1,23 |
| CCG-V-F | 7,50 % | | γ₁ [mPa·s, 20°C]: | 118 |
| CCH-301 | 14,00 % | | | |
| CCP-2F.F.F | 5,00 % | | | |
| CCP-30CF₃.F | 7,00 % | | | |
| CCP-3F.F.F | 7,00 % | | | |
| CCP-5F.F.F | 7,00 % | | | |
| CCPC-33 | 1,50 % | | | |
| CCPC-34 | 2,00 % | | | |
| CH-33 | 1,50 % | | | |
| CH-35 | 1,50 % | | | |
| CH-43 | 1,50 % | | | |

### Beispiel 88

| | | | | |
|---|---|---|---|---|
| APUQU-2-F | 8,00 % | | Klärpunkt [°C]: | 88,9 |
| APUQU-3-F | 8,00 % | | Δn [589 nm, 20°C]: | 0,0987 |
| CC-3-V | 30,00 % | | Δε [1 kHz, 20°C]: | 5,9 |
| CC-3-V1 | 8,50 % | | ε_{∥} [1 kHz, 20°C]: | 8,9 |
| CCP-3-1 | 4,00 % | | ε_{⊥} [1 kHz, 20°C]: | 2,9 |
| CCP-V-1 | 16,00 % | | K₁ [pN, 20°C]: | 13,4 |
| CCP-V2-1 | 11,00 % | | K₃ [pN, 20°C]: | 16,1 |
| PP-1-2V1 | 6,00 % | | V₀ [20°C]: | 1,59 |
| PUQU-3-F | 8,50 % | | γ₁ [mPa·s, 20°C]: | 56 |

### Beispiel 89

| | | | | |
|---|---|---|---|---|
| CC-3-V | 28,50 % | | Klärpunkt [°C]: | 74,6 |
| CC-3-V1 | 7,00 % | | Δn [589 nm, 20°C]: | 0,1040 |
| CCY-3-O2 | 12,50 % | | Δε [1 kHz, 20°C]: | -3,0 |
| CCY-4-O2 | 5,25 % | | ε_{∥} [1 kHz, 20°C]: | 3,5 |
| CPY-3-O2 | 9,75 % | | ε_{⊥} [1 kHz, 20°C]: | 6,5 |
| CY-3-O2 | 15,00 % | | K₁ [pN, 20°C]: | 13,2 |
| CY-3-O4 | 4,75 % | | K₃ [pN, 20°C]: | 15,5 |
| CY-5-O2 | 1,00 % | | V₀ [20°C]: | 2,40 |
| PCH-301 | 3,25 % | | γ₁ [mPa·s, 20°C]: | 98 |
| PPGU-3-F | 0,50 % | | | |
| PYP-2-3 | 12,50 % | | | |

### Beispiel 89a

Die Mischung aus Beispiel 89 enthält zusätzlich mit 0,001 % Irganox® 1076 (Octadecyl-3-(3,5-di-tert. butyl-4-hydroxyphenyl)-proprionat, Fa. BASF) und 0,3 % RM-1.

### Beispiel 90

| | | | | |
|---|---|---|---|---|
| CC-3-V | 15,00 % | | Klärpunkt [°C]: | 74,4 |
| CC-3-V1 | 9,00 % | | Δn [589 nm, 20°C]: | 0,1086 |
| CCH-23 | 8,00 % | | Δε [1 kHz, 20°C]: | -3,2 |
| CCH-34 | 7,50 % | | ε_{∥} [1 kHz, 20°C]: | 3,5 |
| CCY-3-O2 | 10,00 % | | ε_{⊥} [1 kHz, 20°C]: | 6,7 |
| CCY-5-O2 | 8,00 % | | K₁ [pN, 20°C]: | 14,3 |
| CPY-2-O2 | 3,00 % | | K₃ [pN, 20°C]: | 15,7 |
| CPY-3-O2 | 8,50 % | | V₀ [20°C]: | 2,33 |
| CY-3-O2 | 7,00 % | | γ₁ [mPa·s, 20°C]: | 102 |
| PY-3-O2 | 16,00 % | | | |
| PYP-2-3 | 8,00 % | | | |

### Beispiel 90a

Die Mischung aus Beispiel 90 enthält zusätzlich mit 0,3 % RM-1.

### Beispiel 91

| | | | | |
|---|---|---|---|---|
| CC-3-V | 29,00 % | | Klärpunkt [°C]: | 103 |
| CC-3-V1 | 9,00 % | | Δn [589 nm, 20°C]: | 0,1176 |
| CC-3-2V1 | 7,00 % | | Δε [1 kHz, 20°C]: | 4,8 |
| CCP-V-1 | 7,00 % | | ε_{∥} [1 kHz, 20°C]: | 7,6 |
| CCP-V2-1 | 7,50 % | | ε_{⊥} [1 kHz, 20°C]: | 2,9 |
| PP-1-2V1 | 3,00 % | | K₁ [pN, 20°C]: | 18,0 |
| PGP-1-2V | 4,00 % | | K₃ [pN, 20°C]: | 19,6 |
| PGP-2-2V | 6,00 % | | V₀ [20°C]: | 2,04 |
| PGP-3-2V | 4,00 % | | γ₁ [mPa·s, 20°C]: | 82 |
| CCP-30CF₃ | 5,00 % | | | |
| CCGU-3-F | 4,00 % | | | |
| PGUQU-4-F | 3,50 % | | | |
| CDUQU-3-F | 3,00 % | | | |
| DGUQU-4-F | 4,00 % | | | |
| CPGU-3-OT | 4,00 % | | | |

### Beispiel 91a

Die Mischung aus Beispiel 91 enthält zusätzlich 0,001 % STAB-35.

### Beispiel 92

| | | | | |
|---|---|---|---|---|
| PGUQU-3-F | 8,00 % | | Klärpunkt [°C]: | 82,5 |
| PGUQU-4-F | 9,00 % | | Δn [589 nm, 20°C]: | 0,2143 |
| PGUQU-5-F | 9,00 % | | Δε [1 kHz, 20°C]: | 65,8 |
| PGU-2-F | 7,00 % | | ε_{∥} [1 kHz, 20°C]: | 73,4 |
| PGU-3-F | 8,00% | | ε_{⊥} [1 kHz, 20°C]: | 7,6 |
| PGP-2-3 | 8,00 % | | | |
| PGP-2-4 | 8,00 % | | | |
| ME2N.F | 12,00 % | | | |
| ME3N.F | 12,00 % | | | |
| BCH-3F.F | 7,00 % | | | |
| BCH-5F.F | 7,00 % | | | |
| DPGU-4-F | 5,00 % | | | |

### Beispiel 93

| | | | | |
|---|---|---|---|---|
| CC-3-V | 10,50 % | | Klärpunkt [°C]: | 100,8 |
| CC-3-V1 | 5,50 % | | Δn [589 nm, 20°C]: | 0,0999 |
| CCP-V-1 | 6,50 % | | Δε [1 kHz, 20°C]: | 9,1 |
| PUQU-3-F | 7,00 % | | ε_{∥} [1 kHz, 20°C]: | 12,6 |
| CCGU-3-F | 6,00 % | | ε_{⊥} [1 kHz, 20°C]: | 3,5 |
| APUQU-3-F | 2,50 % | | K₁ [pN, 20°C]: | 13,4 |
| CCP-30CF₃ | 8,00 % | | K₃ [pN, 20°C]: | 17,0 |
| CCP-50CF₃ | 5,00 % | | V₀ [pN, 20°C]: | 1,28 |
| CCP-30CF₃.F | 12,00 % | | γ₁ [mPa·s, 20°C]: | 126 |
| CCQU-3-F | 10,00 % | | | |
| CCP-1 F.F.F | 9,00 % | | | |
| CCP-3F.F.F | 11,00 % | | | |
| PGP-2-2V | 6,00 % | | | |
| CDU-2-F | 1,00 % | | | |

### Beispiel 94

| | | | | |
|---|---|---|---|---|
| CY-3-O2 | 10,50 % | | Klärpunkt [°C]: | 79,7 |
| PY-1-O4 | 5,00 % | | Δn [589 nm, 20°C]: | 0,1113 |
| PY-3-O2 | 7,50 % | | Δε [1 kHz, 20°C]: | -4,4 |
| PY-4-O2 | 4,00 % | | K₁ [pN, 20°C]: | 14,5 |
| CCY-3-O1 | 5,50 % | | K₃ [pN, 20°C]: | 16,7 |
| CCY-3-O2 | 5,00 % | | V₀ [20°C]: | 2,05 |
| CCY-4-O2 | 4,00 % | | | |
| CLY-3-O2 | 9,00 % | | | |
| CPY-2-O2 | 9,00 % | | | |
| CPY-3-O2 | 9,00 % | | | |
| CC-3-V | 23,50 % | | | |
| CC-3-V1 | 7,00 % | | | |
| CBC-33F | 1,00 % | | | |

### Beispiel 95

| | | | | |
|---|---|---|---|---|
| DU-2-N | 2,50 % | | Klärpunkt [°C]: | 94,0 |
| ME2N.F | 8,00 % | | Δn [589 nm, 20°C]: | 0,2530 |
| ME3N.F | 8,00 % | | Δε [1 kHz, 20°C]: | 47,6 |
| ME4N.F | 16,00 % | | ε_{∥} [1 kHz, 20°C]: | 55,7 |
| ME5N.F | 8,00 % | | ε_{⊥} [1 kHz, 20°C]: | 8,1 |
| HP-3N.F | 5,00 % | | K₁ [pN, 20°C]: | 11,3 |
| HP-4N.F | 5,00 % | | K₃ [pN, 20°C]: | 13,8 |
| HP-5N.F | 2,50 % | | V₀ [20°C]: | 0,51 |
| PTP-102 | 5,00 % | | γ₁ [mPa·s, 20°C]: | 464 |
| PPTUI-3-2 | 20,00 % | | | |
| PPTUI-3-4 | 20,00 % | | | |

### Beispiel 95a

Die Mischung gemäß Beispiel 95 enthält zusätzlich mit 5 % RM-41.

### Beispiel 96

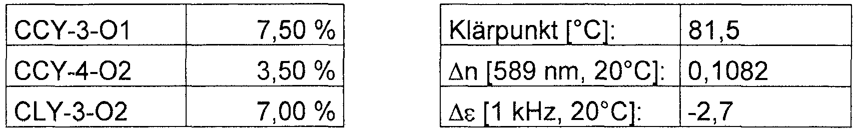

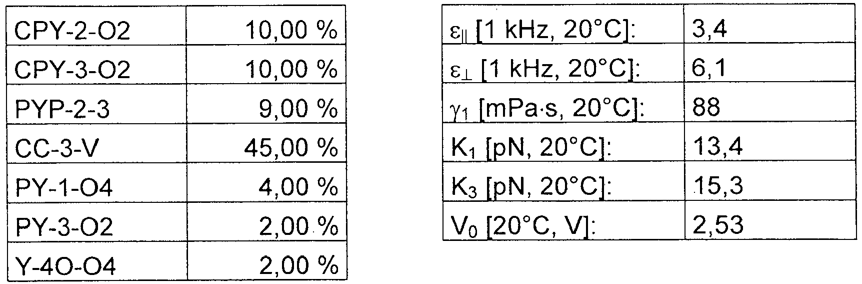

### Beispiel 97

| | |
|---|---|
| CCY-3-O1 | 7,50 % |
| CCY-4-O2 | 5,00 % |
| CLY-3-O2 | 7,00 % |
| CPY-2-O2 | 10,00 % |
| CPY-3-O2 | 8,50 % |
| PYP-2-3 | 9,00 % |
| CC-3-V | 45,50 % |
| PY-1-O4 | 5,00 % |
| Y-4O-O4 | 2,50 % |
| Klärpunkt [°C]: | 81 |
| Δn [589 nm, 20°C]: | 0,1054 |
| Δε [1 kHz, 20°C]: | -2,6 |
| ε_{∥} [1 kHz, 20°C]: | 3,4 |
| ε_{⊥} [1 kHz, 20°C]: | 6,0 |
| γ₁ [mPa·s, 20°C]: | 86 |
| K₁ [pN, 20°C]: | 13,3 |
| K₃ [pN, 20°C]: | 15,1 |
| V₀ [20°C, V]: | 2,54 |

### Beispiel 98

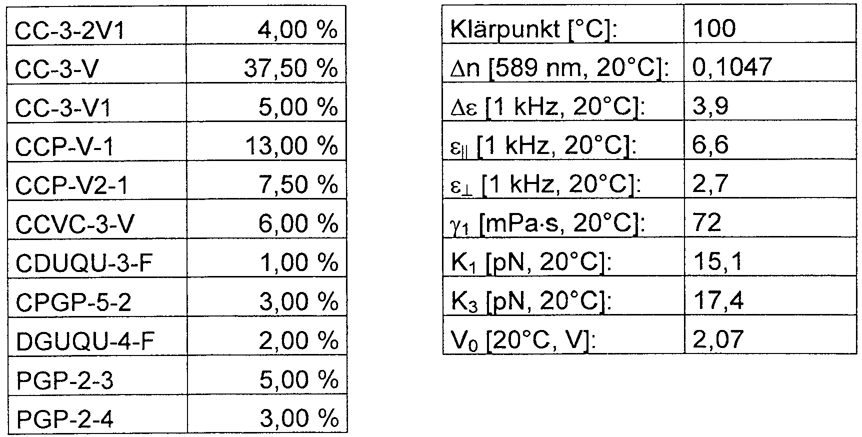

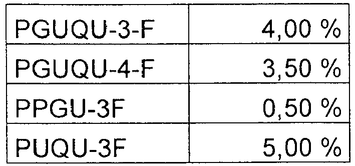

### Beispiel 99

| | |
|---|---|
| APUQU-2-F | 1,50 % |
| APUQU-3-F | 5,00 % |
| CC-3-2V1 | 4,00 % |
| CC-3-V | 36,00 % |
| CC-3-V1 | 5,00 % |
| CCP-V-1 | 13,00 % |
| CCP-V2-1 | 9,50 % |
| CCVC-3-V | 4,00 % |
| CDUQU-3-F | 3,00 % |
| DGUQU-4-F | 2,00 % |
| PGP-1-2V | 5,50 % |
| PGP-2-2V | 7,00 % |
| PPGU-3-F | 0,50 % |
| PUQU-3-F | 4,00 % |
| Klärpunkt [°C]: | 100 |
| Δn [589 nm, 20°C]: | 0,1056 |
| Δε [1 kHz, 20°C]: | 4,0 |
| ε_{∥} [1 kHz, 20°C]: | 6,8 |
| ε_{⊥} [1 kHz, 20°C]: | 2,8 |
| γ₁ [mPa·s, 20°C]: | 71 |
| K₁ [pN, 20°C]: | 15,4 |
| K₃ [pN, 20°C]: | 17,7 |
| V₀ [20°C, V]: | 2,07 |

### Beispiel 100

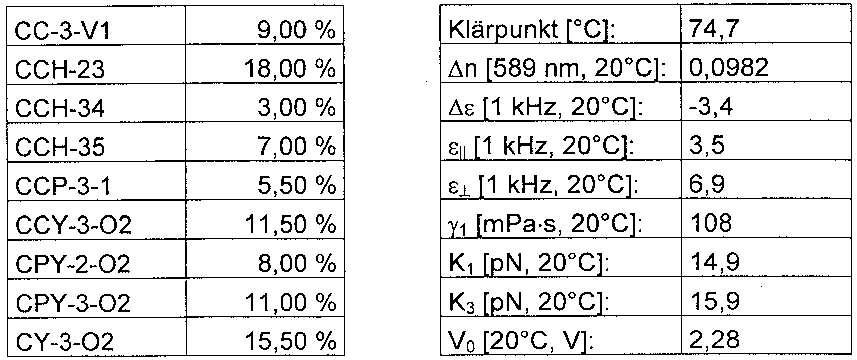

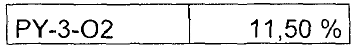

### Beispiel 100a

Die Mischung gemäß Beispiel 100 enthält zusätzlich mit 0,001 % Irganox® 1076 (Octadecyl-3-(3,5-di-tert. butyl-4-hydroxyphenyl)-proprionat, Fa. BASF) und 0,45 % RM-1

### Beispiel 101

| | |
|---|---|
| CC-3-V | 15,00 % |
| CPGP-4-3 | 2,00 % |
| CPGP-5-2 | 2,00 % |
| CPTP-301 | 6,00 % |
| DGUQU-4-F | 3,00 % |
| PCH-301 | 7,00 % |
| PGP-2-2V | 14,50 % |
| PGUQU-3-F | 7,50 % |
| PGUQU-4-F | 7,00 % |
| PGUQU-5-F | 6,00 % |
| PP-1-2V1 | 12,00 % |
| PTP-102 | 6,00 % |
| PTP-201 | 6,00 % |
| PUQU-3-F | 6,00 % |
| Klärpunkt [°C]: | 85 |
| Δn [589 nm, 20°C]: | 0,1981 |
| Δε [1 kHz, 20°C]: | 9,9 |
| ε_{∥} [1 kHz, 20°C]: | 13,6 |
| ε_{⊥} [1 kHz, 20°C]: | 3,7 |
| γ₁ [mPa·s, 20°C]: | 123 |
| K₁ [pN, 20°C]: | 15,1 |
| K₃ [pN, 20°C]: | 15,1 |
| V₀ [20°C, V]: | 1,29 |

### Beispiel 102

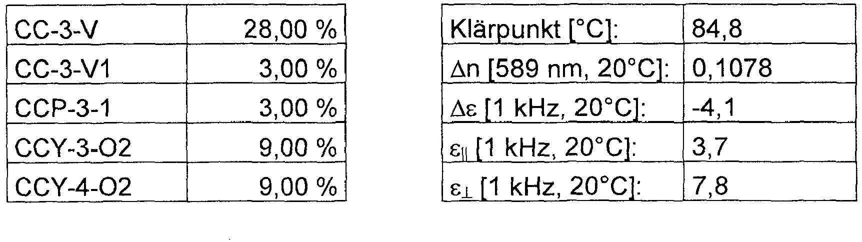

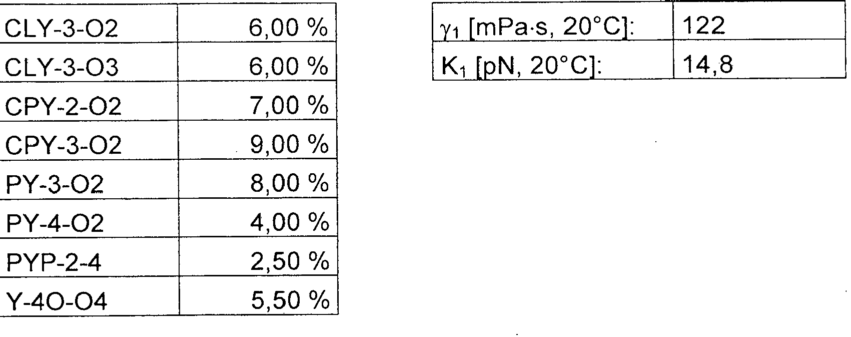

### Beispiel 102a

Die Mischung gemäß Beispiel 102 enthält zusätzlich

| | |
|---|---|
| 0,04 % | 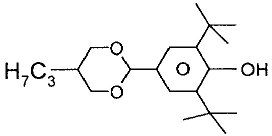 |

und

| | |
|---|---|
| 0,01 % | 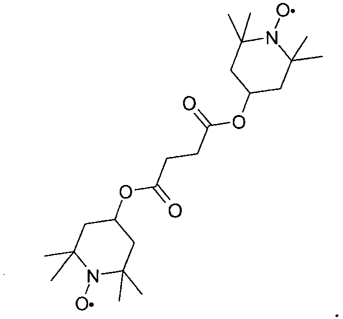 |

### Beispiel 103

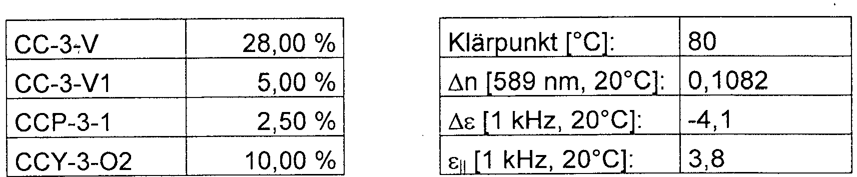

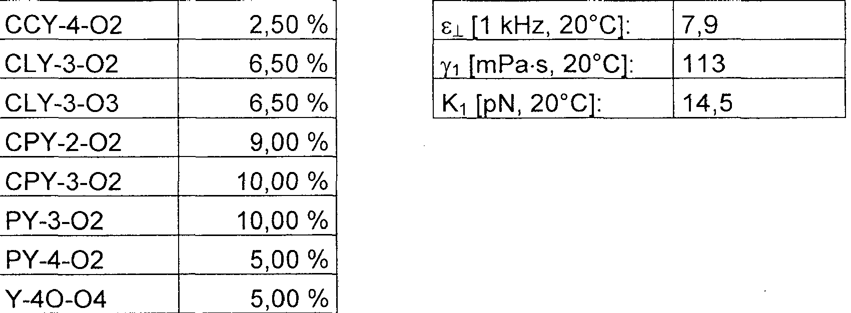

### Beispiel 103a

Die Mischung gemäß Beispiel 103 enthält zusätzlich

| | |
|---|---|
| 0,04 % | 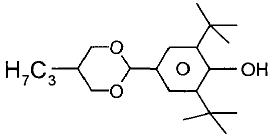 |

und

| | |
|---|---|
| 0,01 % | 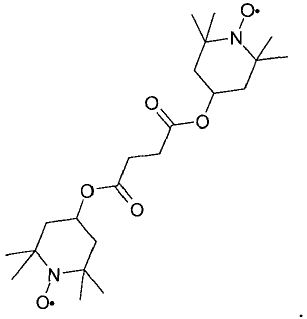 |

### Beispiel 104

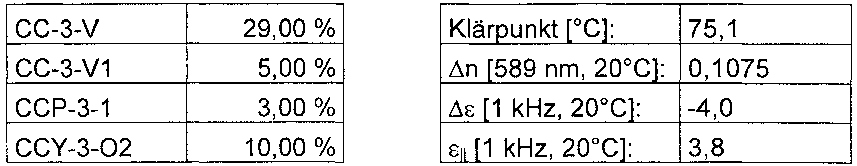

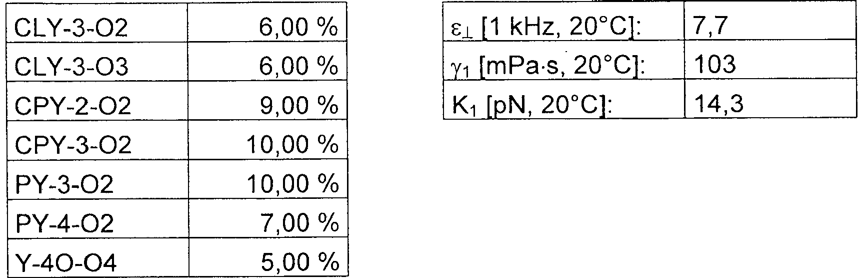

### Beispiel 104a

Die Mischung aus Beispiel 104 enthält zusätzlich

| | |
|---|---|
| 0,04 % | 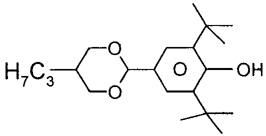 |

und

| | |
|---|---|
| 0,015 % | 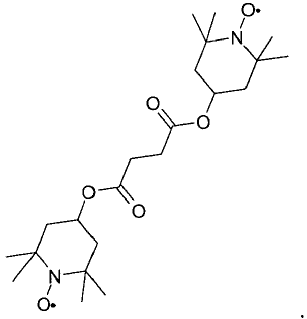 |

### Beispiel 105

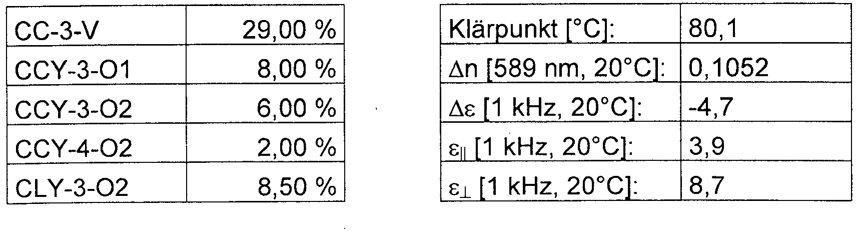

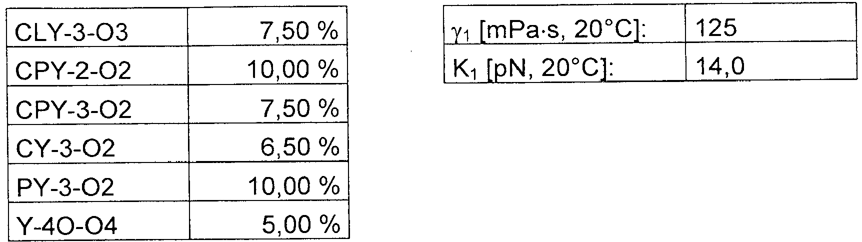

### Beispiel 105a

Die Mischung gemäß Beispiel 105 enthält zusätzlich

| | |
|---|---|
| 0,04 % | 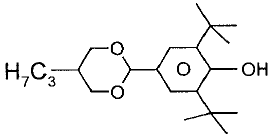 |

und

| | |
|---|---|
| 0,02 % | 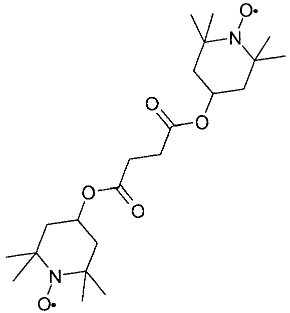 |

### Beispiel 106

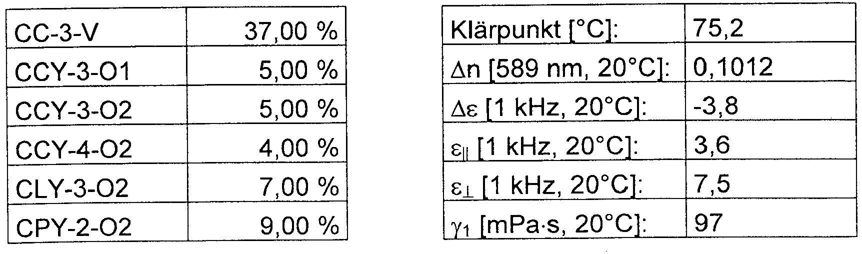

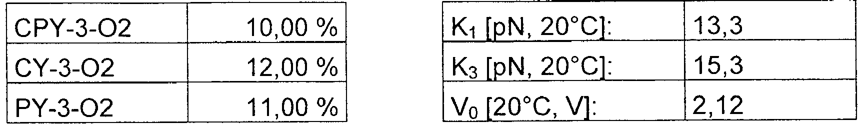

### Beispiel 106a

Die Mischung gemäß Beispiel 106 enthält zusätzlich

| | |
|---|---|
| 0,04 % | 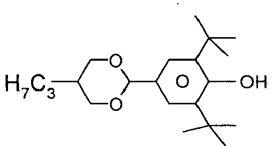 |

und

| | |
|---|---|
| 0,015 % | 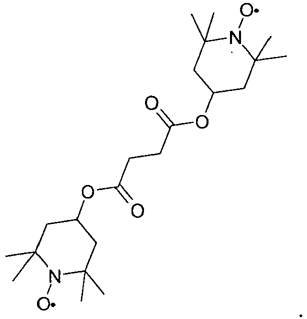 |

### Beispiel 107

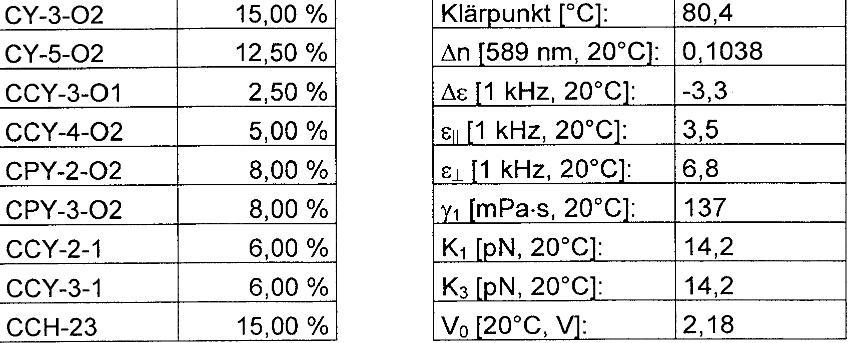

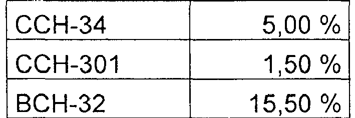

### Beispiel 107a

Die Mischung gemäß Beispiel 107 enthält zusätzlich

| | |
|---|---|
| 0,01 % | 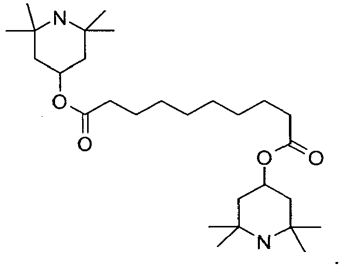 |

### Beispiel 108

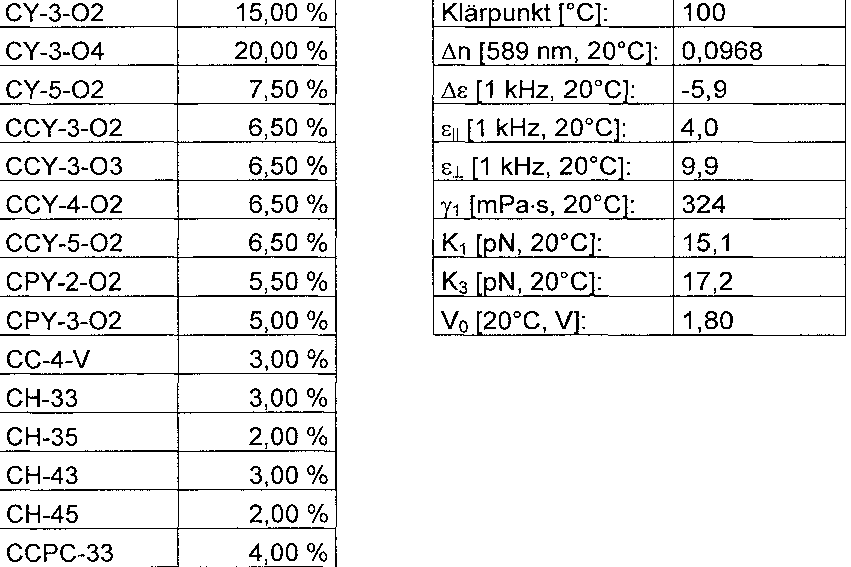

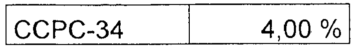

### Beispiel 109

| | |
|---|---|
| CY-3-O2 | 11,00 % |
| CY-3-O4 | 18,00 % |
| CCY-3-O2 | 6,00 % |
| CCY-3-O3 | 6,00 % |
| CCY-4-O2 | 6,00 % |
| CCY-5-O2 | 6,00 % |
| CPY-3-O2 | 6,00 % |
| CC-4-V | 3,00 % |
| CPTP-3-1 | 5,00 % |
| PTP-302FF | 10,00 % |
| PTP-502FF | 10,00 % |
| CPTP-302FF | 5,00 % |
| CPTP-502FF | 5,00 % |
| CCPC-33 | 3,00 % |
| Klärpunkt [°C]: | 101 |
| Δn [589 nm, 20°C]: | 0,1662 |
| Δε [1 kHz, 20°C]: | -6,1 |
| ε_{∥} [1 kHz, 20°]: | 4,2 |
| ε_{⊥} [1 kHz, 20°C]: | 10,3 |
| γ₁ [mPa·s, 20°C]: | 363 |
| K₁ [pN, 20°C]: | 16,5 |
| K₃ [pN, 20°C]: | 22,00 |
| V₀ [20°C, V]: | 2,00 |

### Beispiel 110

| | |
|---|---|
| CY-3-O2 | 8,00 % |
| CY-3-O4 | 13,00 % |
| CCY-3-O2 | 6,50 % |
| CPY-2-O2 | 3,50 % |
| CPY-3-O2 | 8,00 % |
| CCH-301 | 5,00 % |
| CC-4-V | 12,00 % |
| CC-5-V | 8,00 % |
| CCP-V-1 | 13,00 % |
| CCP-V2-1 | 13,00 % |
| BCH-32 | 5,00 % |
| CCPC-33 | 5,00 % |
| Klärpunkt [°C]: | 101 |
| Δn [589 nm, 20°C]: | 0,0970 |
| Δε [1 kHz, 20°C]: | -2,1 |
| ε_{∥} [1 kHz, 20°C]: | 3,2 |
| ε_{⊥} [1 kHz, 20°C]: | 5,3 |
| γ₁ [mPa·s, 20°C]: | 136 |
| K₁ [pN, 20°C]: | 14,8 |
| K₃ [pN, 20°C]: | 18,3 |
| V₀ [20°C, V]: | 3,11 |

### Beispiel 111

| | |
|---|---|
| CY-3-O4 | 12,00 % |
| CC-4-V | 13,00 % |
| CC-5-V | 9,50 % |
| CCP-V-1 | 10,50 % |
| CCP-V2-1 | 10,00 % |
| PTP-102 | 3,00 % |
| CPTP-3-1 | 5,00 % |
| CPTP-3-2 | 5,00 % |
| PTP-302FF | 9,50 % |
| PTP-502FF | 9,50 % |
| CPTP-302FF | 6,50 % |
| CPTP-502FF | 6,50 % |
| Klärpunkt [°C]: | 101 |
| Δn [589 nm, 20°C]: | 0,1660 |
| Δε [1 kHz, 20°C]: | -2,1 |
| ε_{∥} [1 kHz, 20°C]: | 3,4 |
| ε_{⊥} [1 kHz, 20°C]: | 5,5 |
| γ₁ [mPa·s, 20°C]: | 151 |
| K₁ [pN, 20°C]: | 16,2 |
| K₃ [pN, 20°C]: | 19,8 |
| V₀ [20°C, V]: | 3,25 |

### Beispiel 112

| | |
|---|---|
| CY-3-O2 | 15,00 % |
| CCY-3-O1 | 6,00 % |
| CCY-3-O2 | 8,00 % |
| CCY-3-O3 | 5,50 % |
| CCY-4-O2 | 8,00 % |
| CCY-5-O2 | 8,00 % |
| CPY-2-O2 | 1,50 % |
| CPY-3-O2 | 10,00 % |
| CLY-3-O2 | 8,00 % |
| PY-3-O2 | 6,00 % |
| PY-1-O4 | 8,00 % |
| PY-4-O2 | 8,00 % |
| Y-4O-O4 | 8,00 % |
| Klärpunkt [°C]: | 71,9 |
| Δn [589 nm, 20°C]: | 0,1203 |
| Δε [1 kHz, 20°C]: | -8,1 |
| ε_{∥} [1 kHz, 20°C]: | 5,2 |
| ε_{⊥} [1 kHz, 20°C]: | 13,3 |
| γ₁ [mPa·s, 20°C]: | 253 |
| K₁ [pN, 20°C]: | 13,2 |
| K₃ [pN, 20°C]: | 15,7 |
| V₀ [20°C, V]: | 1,46 |

### Beispiel 113

| | |
|---|---|
| CC-3-V1 | 8,00 % |
| CCH-23 | 18,00 % |
| CCH-34 | 4,00 % |
| CCH-35 | 7,00 % |
| CCP-3-1 | 5,00 % |
| CCY-3-O2 | 12,50 % |
| CPY-2-O2 | 8,00 % |
| CPY-3-O2 | 11,00 % |
| CY-3-O2 | 15,50 % |
| PY-3-O2 | 11,00 % |
| Klärpunkt [°C]: | 75,5 |
| Δn [589 nm, 20°C]: | 0,0978 |
| Δε [1 kHz, 20°C]: | -3,5 |
| ε_{∥} [1 kHz, 20°C]: | 3,5 |
| ε_{⊥} [1 kHz, 20°C]: | 6,9 |
| γ₁ [mPa·s, 20°C]: | 111 |
| K₁ [pN, 20°C]: | 14,9 |
| K₃ [pN, 20°C]: | 15,8 |
| V₀ [20°C, V]: | 2,26 |

### Beispiel 113a

Die Mischung gemäß Beispiel 113 enthält zusätzlich 0,3 % RM-1.

### Beispiel 114

| | |
|---|---|
| BCH-32 | 1,50 % |
| CC-3-V | 15,50 % |
| CC-3-V1 | 11,00 % |
| CCH-23 | 12,00 % |
| CCH-34 | 3,50 % |
| CCY-3-O2 | 11,50 % |
| CCY-5-O2 | 0,50 % |
| CPY-2-O2 | 8,50 % |
| CPY-3-O2 | 12,00 % |
| CY-3-O2 | 9,50 % |
| PY-3-O2 | 11,50 % |
| PYP-2-3 | 3,00 % |
| Klärpunkt [°C]: | 74,8 |
| Δn [589 nm, 20°C]: | 0,1035 |
| Δε [1 kHz, 20°C]: | -3,1 |
| ε_{∥} [1 kHz, 20°C]: | 3,4 |
| ε_{⊥} [1 kHz, 20°C]: | 6,5 |
| γ₁ [mPa·s, 20°C]: | 95 |
| K₁ [pN, 20°C]: | 14,1 |
| K₃ [pN, 20°C]: | 15,4 |
| V₀ [20°C, V]: | 2,36 |

### Beispiel 115a

Die Mischung gemäß Beispiel 115 enthält zusätzlich 0,001 % Irganox® 1076 (Octadecyl-3-(3,5-di-tert. butyl-4-hydroxyphenyl)-proprionat, Fa. BASF) und 0,3 % RM-1.

### Beispiel 116

| | |
|---|---|
| CC-3-V | 30,50 % |
| CC-3-V1 | 4,50 % |
| CCY-3-O1 | 5,00 % |
| CCY-3-O2 | 6,00 % |
| CCY-3-O3 | 4,00 % |
| CLY-3-O2 | 8,00 % |
| CPY-2-O2 | 8,00 % |
| CPY-3-O2 | 11,00 % |
| CY-3-O2 | 15,00 % |
| PY-3-O2 | 8,00 % |
| Klärpunkt [°C]: | 79,8 |
| Δn [589 nm, 20°C]: | 0,1022 |
| Δε [1 kHz, 20°C]: | -4,0 |
| ε_{∥} [1 kHz, 20°C]: | 3,6 |
| ε_{⊥} [1 kHz, 20°C]: | 7,6 |
| γ₁ [mPa·s, 20°C]: | 114 |
| K₁ [pN, 20°C]: | 14,5 |
| K₃ [pN, 20°C]: | 16,7 |
| V₀ [20°C, V]: | 2,14 |

### Beispiel 117

| | |
|---|---|
| CY-3-O2 | 15,00 % |
| CY-5-O2 | 12,50 % |
| CCY-3-O1 | 2,50 % |
| CCY-4-O2 | 5,00 % |
| CPY-2-O2 | 8,00 % |
| CPY-3-O2 | 8,00 % |
| CCY-2-1 | 6,00 % |
| CCY-3-1 | 6,00 % |
| CCH-23 | 15,00 % |
| CCH-34 | 5,00 % |
| CCH-301 | 1,50 % |
| BCH-32 | 15,50 % |
| Klärpunkt [°C]: | 80,4 |
| Δn [589 nm, 20°C]: | 0,1038 |
| Δε [1 kHz, 20°C]: | -3,3 |
| ε_{∥} [1 kHz, 20°C]: | 3,5 |
| ε_{⊥} [1 kHz, 20°C]: | 6,8 |
| γ₁ [mPa·s, 20°C]: | 137 |
| K₁ [pN, 20°C]: | 14,2 |
| K₃ [pN, 20°C]: | 14,2 |
| V₀ [20°C, V]: | 2,18 |

### Beispiel 118

| | |
|---|---|
| CY-3-O2 | 15,00 % |
| CY-3-O4 | 4,00 % |
| CY-5-O2 | 6,50 % |
| CCY-3-O1 | 5,00 % |
| CCY-3-O3 | 2,00 % |
| CCY-4-O2 | 6,00 % |
| CPY-2-O2 | 7,00 % |
| CPY-3-O2 | 7,00 % |
| CCY-2-1 | 6,00 % |
| CCY-3-1 | 6,00 % |
| CCH-23 | 15,50 % |
| CCH-34 | 5,00 % |
| BCH-32 | 13,00 % |
| PP-1-4 | 2,00 % |
| Klärpunkt [°C]: | 80,5 |
| Δn [589 nm, 20°C]: | 0,1025 |
| Δε [1 kHz, 20°C]: | -3,4 |
| ε_{∥} [1 kHz, 20°C]: | 3,5 |
| ε_{⊥} [1 kHz, 20°C]: | 6,9 |
| γ₁ [mPa·s, 20°C]: | 141 |
| K₁ [pN, 20°C]: | 14,0 |
| K₃ [pN, 20°C]: | 14,1 |
| V₀ [20°C, V]: | 2,16 |

### Beispiel 119

| | |
|---|---|
| PGUQU-3-F | 4,00 % |
| CCQU-3-F | 7,50 % |
| PUQU-3-F | 15,50 % |
| APUQU-2-F | 4,00 % |
| APUQU-3-F | 7,50 % |
| CC-3-V | 27,50 % |
| CCP-3-V1 | 6,00 % |
| CCP-V-1 | 13,00 % |
| CCP-V2-1 | 10,00 % |
| PPGU-3-F | 0,50 % |
| BCH-3F.F | 4,50 % |
| Klärpunkt [°C]: | 85,4 |
| Δn [589 nm, 20°C]: | 0,1028 |
| Δε [1 kHz, 20°C]: | 9,9 |
| ε_{∥} [1 kHz, 20°C]: | 13,3 |
| ε_{⊥} [1 kHz, 20°C]: | 3,4 |
| γ₁ [mPa·s, 20°C]: | 82 |
| K₁ [pN, 20°C]: | 12,6 |
| K₃ [pN, 20°C]: | 15,3 |
| V₀ [20°C, V]: | 1,19 |

### Beispiel 119a

Die Mischung gemäß Beispiel 119 enthält zusätzlich

| | |
|---|---|
| 0,01 % | 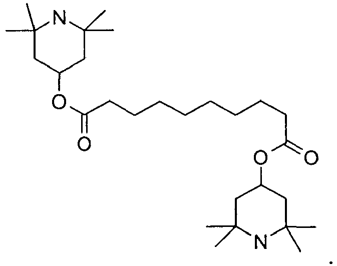 |

### Beispiel 120

| | |
|---|---|
| CC-3-V | 30,50 % |
| CC-3-V1 | 4,50 % |
| CCY-3-O1 | 6,00 % |
| CCY-3-O2 | 8,00 % |
| CLY-3-O2 | 8,00 % |
| CPY-2-O2 | 8,00 % |
| CPY-3-O2 | 12,00 % |
| CY-3-O2 | 15,00 % |
| PY-3-O2 | 8,00 % |
| Klärpunkt [°C]: | 80,1 |
| Δn [589 nm, 20°C]: | 0,1033 |
| Δε [1 kHz, 20°C]: | -4,0 |
| ε_{∥} [1 kHz, 20°C]: | 3,6 |
| ε_{⊥} [1 kHz, 20°C]: | 7,6 |
| γ₁ [mPa·s, 20°C]: | 113 |
| K₁ [pN, 20°C]: | 14,4 |
| K₃ [pN, 20°C]: | 17,0 |
| V₀ [20°C, V]: | 2,16 |

### Beispiel 120a

Die Mischung aus Beispiel 120 enthält zusätzlich

| | |
|---|---|
| 0,3 % | 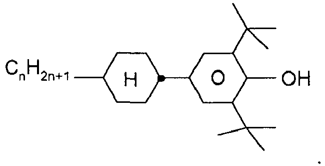 |

### Beispiel 121

| | |
|---|---|
| CC-3-V | 28,50 % |
| CC-3-V1 | 7,00 % |
| CCY-3-O2 | 12,50 % |
| CCY-4-O2 | 5,25 % |
| CPY-3-O2 | 9,75 % |
| CY-3-O2 | 15,00 % |
| CY-3-O4 | 4,75 % |
| CY-5-O2 | 1,00 % |
| PCH-301 | 3,25 % |
| PPGU-3-F | 0,50 % |
| PYP-2-3 | 12,50 % |
| Klärpunkt [°C]: | 74,6 |
| Δn [589 nm, 20°C]: | 0,1040 |
| Δε [1 kHz, 20°C]: | -3,0 |
| ε_{∥} [1 kHz, 20°C]: | 3,5 |
| ε_{⊥} [1 kHz, 20°C]: | 6,5 |
| γ₁ [mPa·s, 20°C]: | 98 |
| K₁ [pN, 20°C]: | 13,2 |
| K₃ [pN, 20°C]: | 15,5 |
| V₀ [20°C, V]: | 2,4 |

### Beispiel 121a

Die Mischung aus Beispiel 121 enthält zusätzlich mit 0,001 % Irganox® 1076 (Octadecyl-3-(3,5-di-tert. butyl-4-hydroxyphenyl)-proprionat, Fa. BASF) und 0,45 % RM-1.

### Beispiel 122

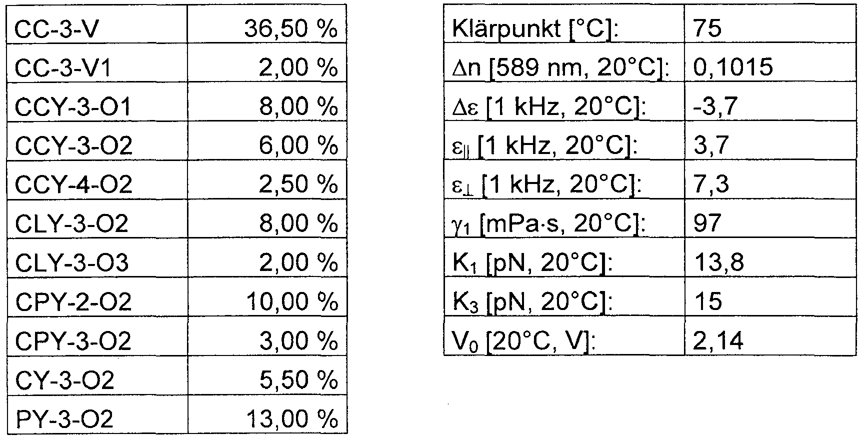

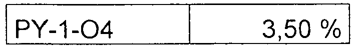

### Beispiel 123

| | |
|---|---|
| BCH-32 | 4,50 % |
| CCH-23 | 14,00 % |
| CCH-301 | 7,00 % |
| CCH-34 | 9,00 % |
| CCH-35 | 5,50 % |
| CCP-3-1 | 10,00 % |
| CY-3-O2 | 5,00 % |
| CY-V-O2 | 7,00 % |
| CCY-3-O1 | 5,00 % |
| CCY-3-O2 | 9,00 % |
| CPY-V-O2 | 10,00 % |
| PCH-302 | 5,00 % |
| PY-V2-O2 | 9,00 % |
| Klärpunkt [°C]: | 75,5 |
| Δn [589 nm, 20°C]: | 0,0938 |
| Δε [1 kHz, 20°C]: | -2,5 |
| ε_{∥} [1 kHz, 20°C]: | 3,3 |
| ε_{⊥} [1 kHz, 20°C]: | 5,8 |
| γ₁ [mPa·s, 20°C]: | 89 |
| K₁ [pN, 20°C]: | 13,5 |
| K₃ [pN, 20°C]: | 14,5 |
| V₀ [20°C, V]: | 2,54 |

### Beispiel 124

| | |
|---|---|
| BCH-32 | 1,50 % |
| CC-3-V | 37,00 % |
| CCP-3-1 | 8,00 % |
| CY-3-O2 | 15,00 % |
| CCY-3-O1 | 7,00 % |
| CCY-3-O2 | 9,50 % |
| CPY-3-O2 | 8,50 % |
| PCH-302 | 5,50 % |
| PY-V-O2 | 8,00 % |
| Klärpunkt [°C]: | 75 |
| Δn [589 nm, 20°C]: | 0,0960 |
| Δε [1 kHz, 20°C]: | -2,6 |
| ε_{∥} [1 kHz, 20°C]: | 3,4 |
| ε_{⊥} [1 kHz, 20°C]: | 6,0 |
| γ₁ [mPa·s, 20°C]: | 79 |
| K₁ [pN, 20°C]: | 13,0 |
| K₃ [pN, 20°C]: | 16,0 |
| V₀ [20°C, V]: | 2,6 |

### Beispiel 125

| | |
|---|---|
| BCH-32 | 1,00 % |
| CC-3-V | 41,00 % |
| CCP-3-1 | 8,50 % |
| CY-3-O2 | 13,00 % |
| CCY-3-O1 | 6,50 % |
| CCY-3-O2 | 8,50 % |
| CPY-3-O2 | 6,00 % |
| PCH-302 | 7,00 % |
| PY-1V-O2 | 8,50 % |
| Klärpunkt [°C]: | 75 |
| Δn [589 nm, 20°C]: | 0,0948 |
| Δε [1 kHz, 20°C]: | -2,3 |
| ε_{∥} [1 kHz, 20°C]: | 3,2 |
| ε_{⊥} [1 kHz, 20°C]: | 5,5 |
| γ₁ [mPa·s, 20°C]: | 70 |
| K₁ [pN, 20°C]: | 13,4 |
| K₃ [pN, 20°C]: | 16,5 |
| V₀ [20°C, V]: | 2,84 |

### Beispiel 126

| | |
|---|---|
| PY-3-O2 | 7,50 % |
| PY-1V-O2 | 4,00 % |
| CY-3-O2 | 14,50 % |
| CCY-3-O1 | 3,00 % |
| CCY-3-O2 | 9,00 % |
| CPY-2-O2 | 7,50 % |
| CPY-3-O2 | 9,00 % |
| CC-3-V | 37,00 % |
| BCH-32 | 8,00 % |
| PPGU-3-F | 0,50 % |
| Klärpunkt [°C]: | 74 |
| Δn [589 nm, 20°C]: | 0,1094 |
| Δε [1 kHz, 20°C]: | -3,0 |
| ε_{∥} [1 kHz, 20°C]: | 3,6 |
| ε_{⊥} [1 kHz, 20°C]: | 6,6 |
| γ₁ [mPa·s, 20°C]: | 85 |
| K₁ [pN, 20°C]: | 12,9 |
| K₃ [pN, 20°C]: | 14,6 |
| V₀ [20°C, V]: | 2,34 |

### Beispiel 127

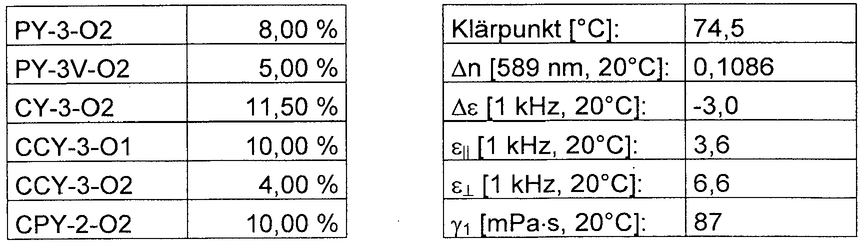

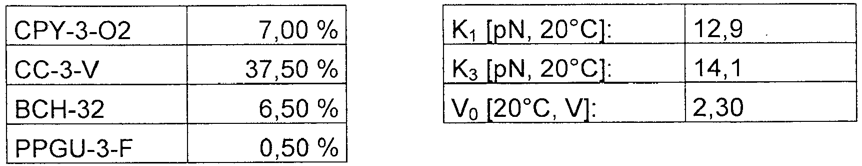

### Beispiel 128

| | |
|---|---|
| PY-V2-O2 | 12,00 % |
| CY-V-O2 | 9,00 % |
| CCY-3-O1 | 9,00 % |
| CCY-V2-O2 | 8,00 % |
| CPY-2-O2 | 8,00 % |
| CPY-V-O2 | 10,50 % |
| CC-3-V | 36,50 % |
| BCH-32 | 6,50 % |
| PPGU-3-F | 0,50 % |
| Klärpunkt [°C]: | 76 |
| Δn [589 nm, 20°C]: | 0,1087 |
| Δε [1 kHz, 20°C]: | -3,1 |
| ε_{∥} [1 kHz, 20°C]: | 3,7 |
| ε_{⊥} [1 kHz, 20°C]: | 6,9 |
| γ₁ [mPa·s, 20°C]: | 83 |
| K₁ [pN, 20°C]: | 12,4 |
| K₃ [pN, 20°C]: | 14,7 |
| V₀ [20°C, V]: | 2,28 |

### Beispiel 129

| | |
|---|---|
| PY-V2-O2 | 11,50 % |
| CY-3-O2 | 11,00 % |
| CCY-3-O1 | 9,00 % |
| CCY-3-O2 | 4,00 % |
| CPY-2-O2 | 12,00 % |
| CPY-3-O2 | 9,00 % |
| CC-3-V | 37,00 % |
| BCH-32 | 6,00 % |
| PPGU-3-F | 0,50 % |
| Klärpunkt [°C]: | 75,5 |
| Δn [589 nm, 20°C]: | 0,1074 |
| Δε [1 kHz, 20°C]: | -3,1 |
| ε_{∥} [1 kHz, 20°C]: | 3,7 |
| ε_{⊥} [1 kHz, 20°C]: | 6,8 |
| γ₁ [mPa·s, 20°C]: | 87 |
| K₁ [pN, 20°C]: | 13,0 |
| K₃ [pN, 20°C]: | 14,7 |
| V₀ [20°C, V]: | 2,29 |

### Beispiel 130

| | |
|---|---|
| PY-1V-O2 | 10,50 % |
| CY-3-O2 | 18,00 % |
| CCY-3-O1 | 7,00 % |
| CCY-3-O2 | 5,00 % |
| CPY-2-O2 | 7,00 % |
| CPY-3-O2 | 8,00 % |
| CC-3-V | 41,00 % |
| BCH-32 | 3,00 % |
| PPGU-3-F | 0,50 % |
| Klärpunkt [°C]: | 72 |
| Δn [589 nm, 20°C]: | 0,1068 |
| Δε [1 kHz, 20°C]: | -3,1 |
| ε_{∥} [1 kHz, 20°C]: | 3,6 |
| ε_{⊥} [1 kHz, 20°C]: | 6,7 |
| γ₁ [mPa·s, 20°C]: | 78 |
| K₁ [pN, 20°C]: | 12,6 |
| K₃ [pN, 20°C]: | 14,6 |
| V₀ [20°C, V]: | 2,30 |

### Beispiel 131

| | |
|---|---|
| PY-V2-O2 | 10,50 % |
| CY-3-O2 | 10,00 % |
| CCY-3-O1 | 6,00 % |
| CCY-3-O2 | 9,00 % |
| CPY-2-O2 | 8,00 % |
| CPY-3-O2 | 12,00 % |
| CC-3-V | 35,00 % |
| BCH-32 | 6,50 % |
| PPGU-3-F | 0,50 % |
| Y-4O-O4 | 2,50 % |
| Klärpunkt [°C]: | 75 |
| Δn [589 nm, 20°C]: | 0,1070 |
| Δε [1 kHz, 20°C]: | -3,3 |
| ε_{∥} [1 kHz, 20°C]: | 3,7 |
| ε_{⊥} [1 kHz, 20°C]: | 7,0 |
| γ₁ [mPa·s, 20°C]: | 90 |
| K₁ [pN, 20°C]: | 12,7 |
| K₃ [pN, 20°C]: | 14,5 |
| V₀ [20°C, V]: | 2,23 |
| LTS (bulk) [-20°C]: | > 1000 h |
| LTS (bulk) [-30°C]: | > 1000 h |

### Beispiel 132

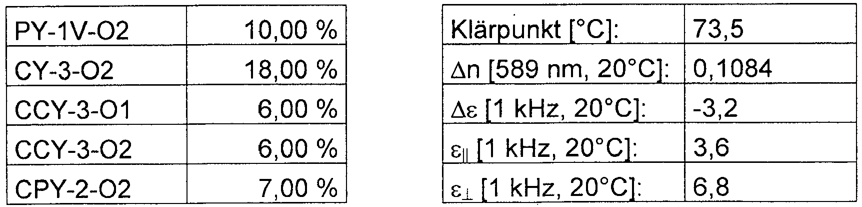

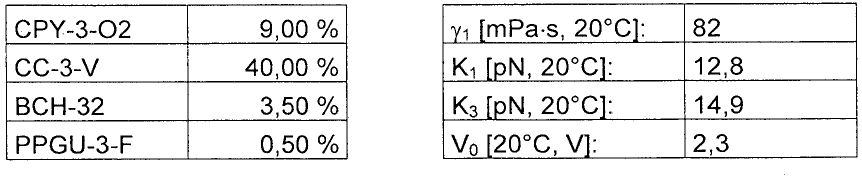

### Beispiel 133

| | |
|---|---|
| PY-V2-O2 | 11,50 % |
| CY-3-O2 | 10,00 % |
| CCY-3-O1 | 4,50 % |
| CCY-3-O2 | 11,00 % |
| CPY-2-O2 | 7,00 % |
| CPY-3-O2 | 12,50 % |
| CC-3-V | 34,50 % |
| BCH-32 | 6,00 % |
| PPGU-3-F | 0,50 % |
| Y-4O-O4 | 2,50 % |
| Klärpunkt [°C]: | 74,5 |
| Δn [589 nm, 20°C]: | 0,1071 |
| Δε [1 kHz, 20°C]: | -3,4 |
| ε_{∥} [1 kHz, 20°C]: | 3,8 |
| ε_{⊥} [1 kHz, 20°C]: | 7,1 |
| γ₁ [mPa·s, 20°C]: | 91 |
| K₁ [pN, 20°C]: | 12,7 |
| K₃ [pN, 20°C]: | 14,6 |
| V₀ [20°C, V]: | 2,2 |

### Beispiel 134

| | |
|---|---|
| PY-V2-O2 | 14,00 % |
| CY-3-O2 | 10,50 % |
| CCY-3-O1 | 5,00 % |
| CCY-3-O2 | 10,00 % |
| CPY-2-O2 | 9,00 % |
| CPY-3-O2 | 12,00 % |
| CC-3-V | 36,50 % |
| BCH-32 | 2,50 % |
| PPGU-3-F | 0,50 % |
| Klärpunkt [°C]: | 74,5 |
| Δn [589 nm, 20°C]: | 0,1075 |
| Δε [1 kHz, 20°C]: | -3,2 |
| ε_{∥} [1 kHz, 20°C] | 3,6 |
| ε_{⊥} [1 kHz, 20°C]: | 6,8 |
| γ₁ [mPa·s, 20°C]: | 90 |
| K₁ [pN, 20°C]: | 11,7 |
| K₃ [pN, 20°C]: | 14,1 |
| V₀ [20°C, V]: | 2,21 |

### Beispiel 135

| | |
|---|---|
| PY-3V-O2 | 10,50 % |
| CY-3-O2 | 15,00 % |
| CCY-3-O1 | 7,50 % |
| CCY-3-O2 | 4,00 % |
| CPY-2-O2 | 11,00 % |
| CPY-3-O2 | 8,00 % |
| CC-3-V | 40,50 % |
| BCH-32 | 3,00 % |
| PPGU-3-F | 0,50 % |
| Klärpunkt [°C]: | 74,5 |
| Δn [589 nm, 20°C]: | 0,1073 |
| Δε [1 kHz, 20°C]: | -3,0 |
| ε_{∥} [1 kHz, 20°C]: | 3,6 |
| ε_{⊥} [1 kHz, 20°C]: | 6,6 |
| γ₁ [mPa·s, 20°C]: | 84 |
| K₁ [pN, 20°C]: | 12,8 |
| K₃ [pN, 20°C]: | 14,1 |
| V₀ [20°C, V]: | 2,29 |

### Beispiel 136

| | |
|---|---|
| CC-3-V | 36,50 % |
| CY-3-O2 | 10,00 % |
| CCY-3-O1 | 6,50 % |
| CCY-3-O2 | 11,00 % |
| CCY-4-O2 | 6,00 % |
| CPY-3-O2 | 8,50 % |
| PY-3-O2 | 4,00 % |
| PY-3V-O2 | 6,50 % |
| PY-1-O4 | 4,50 % |
| PYP-2-3 | 3,00 % |
| PP-1-2V1 | 3,50 % |
| Klärpunkt [°C]: | 73 |
| Δn [589 nm, 20°C]: | 0,1081 |
| Δε [1 kHz, 20°C]: | -3,3 |
| ε_{∥} kHz, 20°C]: | 3,5 |
| ε_{⊥} [1 kHz, 20°C]: | 6,8 |
| γ₁ [mPa·s, 20°C]: | 90 |
| K₁ [pN, 20°C]: | 13,2 |
| K₃ [pN, 20°C]: | 15,0 |
| V₀ [20°C, V]: | 2,25 |

### Beispiel 137

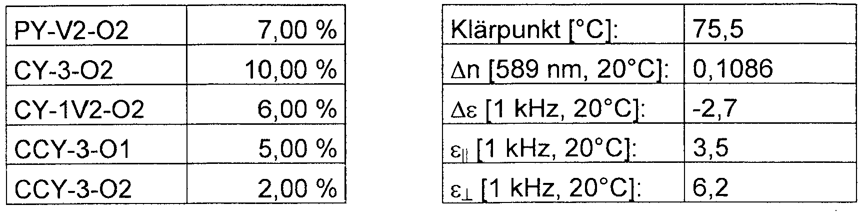

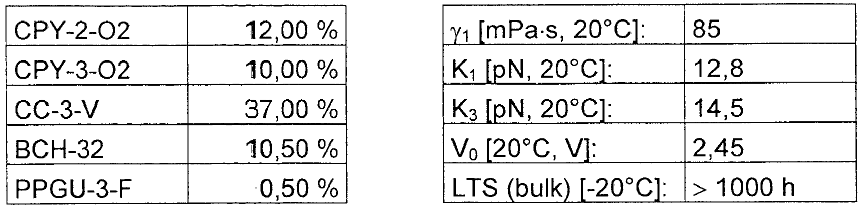

### Beispiel 138

| | |
|---|---|
| PY-V-O2 | 5,00 % |
| PY-V2-O2 | 5,00 % |
| PY-3-O2 | 3,00 % |
| CY-V-O2 | 4,00 % |
| CY-3-O2 | 3,00 % |
| CCY-3-O1 | 3,50 % |
| CCY-3-O2 | 7,00 % |
| CCY-4-O2 | 5,00 % |
| CPY-2-O2 | 8,00 % |
| CPY-3-O2 | 10,00 % |
| CC-3-V | 38,00 % |
| BCH-32 | 6,00 % |
| PPGU-3-F | 0,50 % |
| Y-4O-O4 | 2,00 % |
| Klärpunkt [°C]: | 75 |
| Δn [589 nm, 20°C]: | 0,1087 |
| Δε [1 kHz, 20°C]: | -3,1 |
| ε_{∥} [1 kHz, 20°C]: | 3,7 |
| ε_{⊥} [1 kHz, 20°C]: | 6,8 |
| γ₁ [mPa·s, 20°C]: | 83 |
| K₁ [pN, 20°C]: | 12,6 |
| K₃ [pN, 20°C]: | 14,2 |
| V₀ [20°C, V]: | 2,28 |
| LTS (bulk) [-20°C]: | > 1000 h |

### Beispiel 139

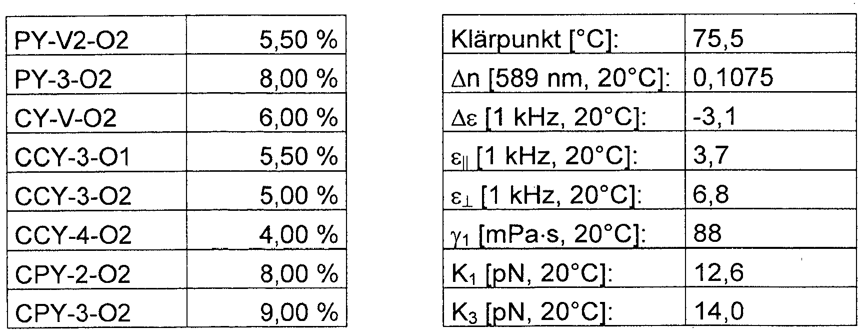

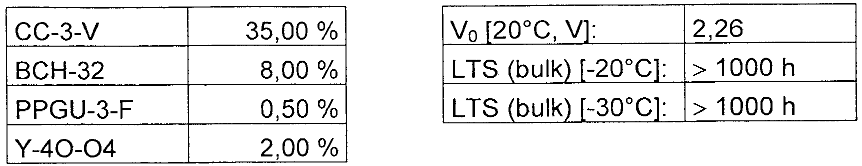

### Beispiel 140

| | |
|---|---|
| PY-V-O2 | 5,50 % |
| PY-3-O2 | 4,50 % |
| CY-3-O2 | 11,00 % |
| CCY-3-O2 | 10,50 % |
| CPY-2-O2 | 10,00 % |
| CPY-3-O2 | 11,00 % |
| CC-3-V | 37,00 % |
| BCH-32 | 8,00 % |
| PPGU-3-F | 0,50 % |
| Y-4O-O4 | 2,00 % |
| Klärpunkt [°C]: | 74,5 |
| Δn [589 nm, 20°C]: | 0,1098 |
| Δε [1 kHz, 20°C]: | -3,0 |
| ε_{∥} [1 kHz, 20°C]: | 3,7 |
| ε_{⊥} [1 kHz, 20°C]: | 6,7 |
| γ₁ [mPa·s, 20°C]: | 85 |
| K₁ [pN, 20°C]: | 12,9 |
| K₃ [pN, 20°C]: | 14,5 |
| V₀ [20°C, V]: | 2,31 |
| LTS (bulk) [-20°C]: | > 1000 h |
| LTS (bulk) [-30°C]: | > 1000 h |

### Beispiel 141

| | |
|---|---|
| PY-3-O2 | 6,00 % |
| PY-V2-O2 | 6,00 % |
| CY-3-O2 | 12,00 % |
| CCY-3-O1 | 4,00 % |
| CCY-3-O2 | 9,50 % |
| CPY-2-O2 | 9,50 % |
| CPY-3-O2 | 10,00 % |
| CC-3-V | 35,50 % |
| BCH-32 | 7,00 % |
| PPGU-3-F | 0,50 % |
| Klärpunkt [°C]: | 75 |
| Δn [589 nm, 20°C]: | 0,1079 |
| Δε [1 kHz, 20°C]: | -3,2 |
| ε_{∥} [1 kHz, 20°C]: | 3,7 |
| ε_{⊥} [1 kHz, 20°C]: | 6,9 |
| γ₁ [mPa·s, 20°C]: | 91 |
| K₁ [pN, 20°C]: | 13,1 |
| K₃ [pN, 20°C]: | 14,9 |
| V₀ [20°C, V]: | 2,29 |
| LTS (bulk) [-20°C]: | > 1000 h |
| LTS (bulk) [-30°C]: | > 1000 h |

### Beispiel 142

| | |
|---|---|
| PY-3-O2 | 6,00 % |
| PY-1V2-O2 | 6,50 % |
| CY-3-O2 | 13,00 % |
| CCY-3-O2 | 12,00 % |
| CPY-2-O2 | 8,00 % |
| CPY-3-O2 | 12,00 % |
| CC-3-V | 36,00 % |
| BCH-32 | 6,00 % |
| PPGU-3-F | 0,50 % |
| Klärpunkt [°C]: | 75 |
| Δn [589 nm, 20°C]: | 0,1088 |
| Δε [1 kHz, 20°C]: | -3,3 |
| ε_{∥} [1 kHz, 20°C]: | 3,7 |
| ε_{⊥} [1 kHz, 20°C]: | 6,9 |
| γ₁ [mPa·s, 20°C]: | 93 |
| K₁ [pN, 20°C]: | 13,5 |
| K₃ [pN, 20°C]: | 15,6 |
| V₀ [20°C, V]: | 2,32 |

### Beispiel 143

| | |
|---|---|
| PY-3-O2 | 4,50 % |
| PY-V2-O2 | 6,00 % |
| CY-3-O2 | 10,00 % |
| CCY-3-O1 | 2,00 % |
| CCY-3-O2 | 11,00 % |
| CPY-2-O2 | 8,00 % |
| CPY-3-O2 | 12,00 % |
| CC-3-V | 36,00 % |
| BCH-32 | 8,00 % |
| PPGU-3-F | 0,50 % |
| Y-4O-O4 | 2,00 % |
| Klärpunkt [°C]: | 75 |
| Δn [589 nm, 20°C]: | 0,1078 |
| Δε [1 kHz, 20°C]: | -3,1 |
| ε_{∥} [1 kHz, 20°C]: | 3,7 |
| ε_{⊥} [1 kHz, 20°C]: | 6,8 |
| γ₁ [mPa·s, 20°C]: | 88 |
| K₁ [pN, 20°C]: | 13,0 |
| K₃ [pN, 20°C]: | 14,8 |
| V₀ [20°C, V]: | 2,31 |
| LTS (bulk) [-30°C] | > 1000 h |

### Beispiel 143a

Die Mischung gemäß Beispiel 143 enthält zusätzlich

| | |
|---|---|
| 0,01 % | 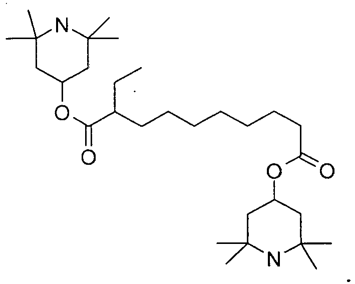 |

### Beispiel 144

| | |
|---|---|
| BCH-32 | 6,00 % |
| CCH-23 | 16,00 % |
| CCH-301 | 3,50 % |
| CCH-34 | 6,00 % |
| CCH-35 | 6,00 % |
| CCP-3-1 | 12,00 % |
| CY-3-O2 | 15,00 % |
| CCY-3-O1 | 5,00 % |
| CCY-3-O2 | 7,00 % |
| CPY-3-O2 | 8,50 % |
| PCH-302 | 6,00 % |
| PY-V2-O2 | 9,00 % |
| Klärpunkt [°C]: | 77 |
| Δn [589 nm, 20°C]: | 0,0953 |
| Δε [1 kHz, 20°C]: | -2,5 |
| ε_{∥} [1 kHz, 20°C]: | 3,3 |
| ε_{⊥} [1 kHz, 20°C]: | 5,8 |
| γ₁ [mPa·s, 20°C]: | 96 |
| K₁ [pN, 20°C]: | 14,6 |
| K₃ [pN, 20°C]: | 15,6 |
| V₀ [20°C, V]: | 2,66 |
| LTS (bulk) [-20°C] | > 1000 h |
| LTS (bulk) [-30°C] | > 1000 h |

### Beispiel 145

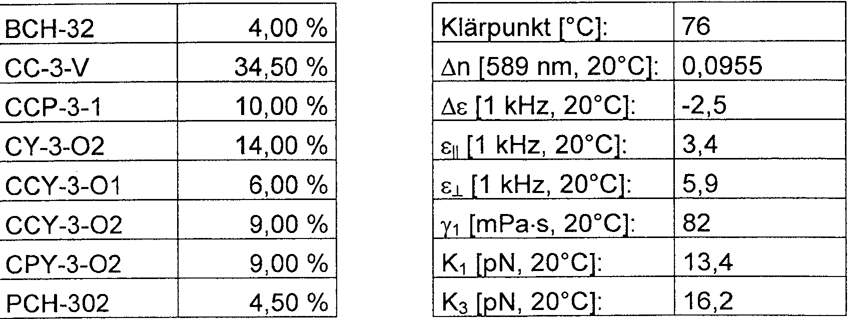

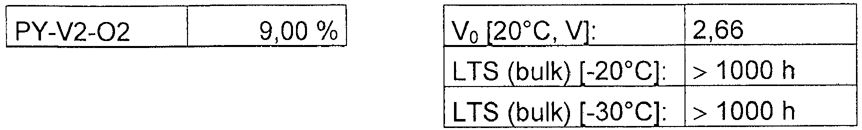

### Beispiel 146

| | |
|---|---|
| BCH-32 | 6,50 % |
| CCH-23 | 16,00 % |
| CCH-301 | 4,50 % |
| CCH-34 | 8,00 % |
| CCH-35 | 6,00 % |
| CCP-3-1 | 8,50 % |
| CY-3-O2 | 15,00 % |
| CCY-3-O1 | 5,50 % |
| CCY-3-O2 | 8,00 % |
| CPY-3-O2 | 9,00 % |
| PCH-302 | 4,50 % |
| PY-V2-O2 | 8,50 % |
| Klärpunkt [°C]: | 76,5 |
| Δn [589 nm, 20°C]: | 0,0933 |
| Δε [1 kHz, 20°C]: | -2,5 |
| ε_{∥} [1 kHz, 20°C]: | 3,3 |
| ε_{⊥} [1 kHz, 20°C]: | 5,8 |
| γ₁ [mPa·s, 20°C]: | 96 |
| K₁ [pN, 20°C]: | 14,3 |
| K₃ [pN, 20°C]: | 15,0 |
| V₀ [20°C, V]: | 2,57 |

### Beispiel 147

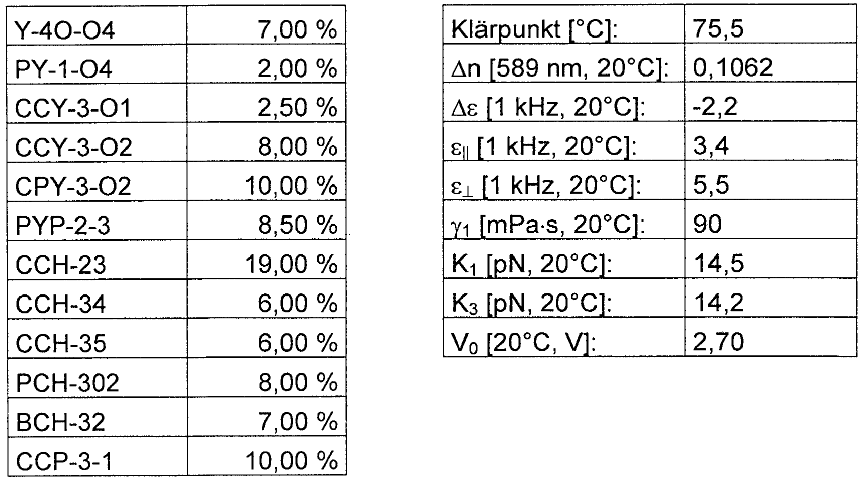

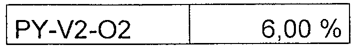

### Beispiel 148

| | |
|---|---|
| BCH-32 | 7,00 % |
| CCH-23 | 16,00 % |
| CCH-301 | 3,50 % |
| CCH-34 | 6,50 % |
| CCH-35 | 6,50 % |
| CCP-3-1 | 9,50 % |
| CY-3-O2 | 7,50 % |
| CY-V1-O2 | 7,00 % |
| CCY-3-O1 | 6,00 % |
| CCY-3-O2 | 9,00 % |
| CPY-3-O2 | 7,00 % |
| PCH-302 | 5,00 % |
| PY-V2-O2 | 9,50 % |
| Klärpunkt [°C]: | 75 |
| Δn [589 nm, 20°C]: | 0,0930 |
| Δε [1 kHz, 20°C]: | -2,5 |
| ε_{∥} [1 kHz, 20°C]: | 3,3 |
| ε_{⊥} [1 kHz, 20°C]: | 5,8 |
| γ₁ [mPa·s, 20°C]: | 93 |
| K₁ [pN, 20°C]: | 13,7 |
| K₃ [N, 20°C]: | 14,1 |
| V₀ [20°C, V]: | 2,52 |
| LTS (bulk) [-20°C] | > 1000 h |

### Beispiel 149

| | |
|---|---|
| BCH-32 | 7,00 % |
| CCH-23 | 15,00 % |
| CCH-301 | 4,00 % |
| CCH-34 | 8,00 % |
| CCH-35 | 7,00 % |
| CCP-3-1 | 8,00 % |
| CY-3-O2 | 9,00 % |
| CY-V1-O2 | 7,00 % |
| CCY-3-O1 | 9,00 % |
| CCY-3-O2 | 7,00 % |
| CPY-1V-O1 | 7,00 % |
| PCH-302 | 4,00 % |
| PY-V2-O2 | 8,00 % |
| Klärpunkt [°C]: | 74 |
| Δn [589 nm, 20°C]: | 0,0921 |
| Δε [1 kHz, 20°C]: | -2,5 |
| ε_{∥} [1 kHz, 20°C]: | 3,4 |
| ε_{⊥} [1 kHz, 20°C]: | 5,9 |
| γ₁ [mPa·s, 20°C]: | 95 |
| K₁ [pN, 20°C]: | 13,4 |
| K₃ [pN, 20°C]: | 14,1 |
| V₀ [20°C, V]: | 2,49 |

### Beispiel 150

| | |
|---|---|
| BCH-32 | 7,00 % |
| CCH-23 | 13,00 % |
| CCH-301 | 3,00 % |
| CCH-34 | 10,00 % |
| CCH-35 | 6,00 % |
| CCP-3-1 | 10,50 % |
| CY-3-O2 | 8,50 % |
| CY-V1-O2 | 5,50 % |
| CCY-3-O1 | 10,00 % |
| CCY-3-O2 | 6,00 % |
| CPY-1V-O1 | 5,50 % |
| PCH-302 | 6,00 % |
| PY-V2-O2 | 9,00 % |
| Klärpunkt [°C]: | 77 |
| Δn [589 nm, 20°C]: | 0,0935 |
| Δε [1 kHz, 20°C]: | -2,4 |
| ε_{∥} [1 kHz, 20°C]: | 3,3 |
| ε_{⊥} [1 kHz, 20°C]: | 5,7 |
| γ₁ [mPa·s, 20°C]: | 97 |
| K₁ [pN, 20°C]: | 14,1 |
| K₃ [pN, 20°C]: | 14,6 |
| V₀ [20°C, V]: | 2,62 |

### Beispiel 151

| | |
|---|---|
| CY-3-O2 | 9,50 % |
| PY-V-O2 | 9,50 % |
| CCY-3-O2 | 9,00 % |
| CCY-4-O2 | 6,00 % |
| CPY-2-O2 | 5,00 % |
| CPY-3-O2 | 9,50 % |
| CCH-34 | 10,00 % |
| CCH-23 | 21,00 % |
| PYP-2-3 | 7,00 % |
| CCP-3-1 | 3,00 % |
| PCH-301 | 10,50 % |
| Klärpunkt [°C]: | 75 |
| Δn [589 nm, 20°C]: | 0,1101 |
| Δε [1 kHz, 20°C]: | -3,0 |
| ε_{∥} [1 kHz, 20°C]: | 3,5 |
| ε_{⊥} [1 kHz, 20°C]: | 6,5 |
| γ₁ [mPa·s, 20°C]: | 100 |
| K₁ [pN, 20°C]: | 13,4 |
| K₃ [pN, 20°C]: | 14,3 |
| V₀ [20°C, V]: | 2,31 |

### Beispiel 152

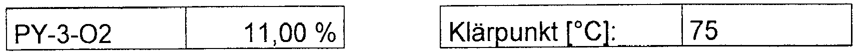

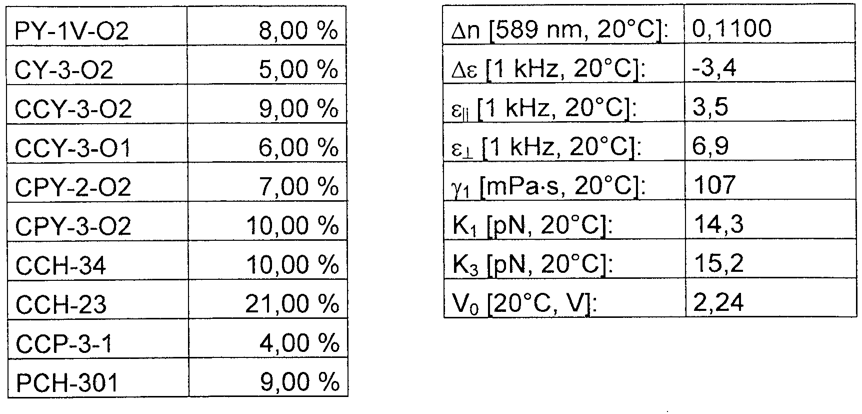

### Beispiel 153

| | |
|---|---|
| CY-3-O2 | 10,00 % |
| PY-V-O2 | 9,00 % |
| CCY-3-O2 | 9,00 % |
| CCY-4-O2 | 7,00 % |
| CPY-2-O2 | 7,00 % |
| CPY-3-O2 | 9,00 % |
| CCH-34 | 11,00 % |
| CCH-23 | 20,00 % |
| PYP-2-3 | 7,00 % |
| CCP-3-1 | 1,00 % |
| PCH-301 | 10,00 % |
| Klärpunkt [°C]: | 75 |
| Δn [589 nm, 20°C]: | 0,1099 |
| Δε [1 kHz, 20°C]: | -3,2 |
| ε_{∥} [1 kHz, 20°C]: | 3,5 |
| ε_{⊥} [1 kHz, 20°C]: | 6,7 |
| γ₁ [mPa·s, 20°C]: | 104 |
| K₁ [pN, 20°C]: | 13,2 |
| K₃ [pN, 20°C]: | 14,1 |
| V₀ [20°C, V]: | 2,24 |

### Beispiel 154

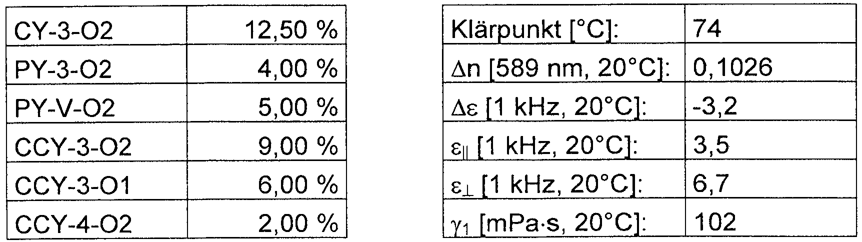

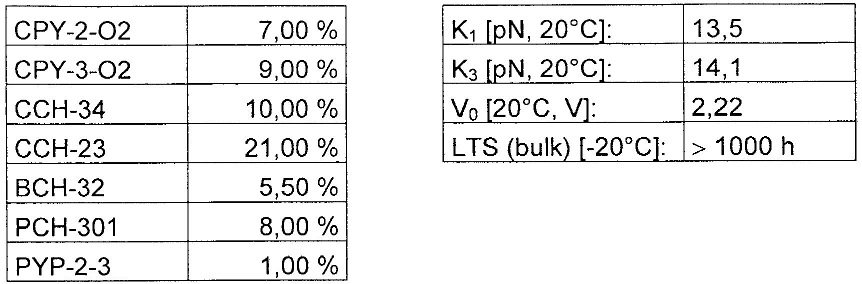

### Beispiel 155

| | |
|---|---|
| PY-3-O2 | 12,00 % |
| PY-V-O2 | 5,00 % |
| CCY-3-O2 | 10,00 % |
| CCY-4-O2 | 9,50 % |
| CPY-2-O2 | 6,00 % |
| CPY-3-O2 | 9,00 % |
| CCH-34 | 5,50 % |
| CCH-23 | 21,00 % |
| PYP-2-3 | 4,50 % |
| CCH-35 | 4,00 % |
| PCH-301 | 12,00 % |
| BCH-32 | 1,50 % |
| Klärpunkt [°C]: | 75 |
| Δn [589 nm, 20°C]: | 0,1112 |
| Δε [1 kHz, 20°C]: | -3,1 |
| ε_{∥} [1 kHz, 20°C]: | 3,5 |
| ε_{⊥} [1 kHz, 20°C]: | 6,6 |
| γ₁ [mPa·s, 20°C]: | 107 |
| K₁ [pN, 20°C]: | 13,7 |
| K₃ [pN, 20°C]: | 14,4 |
| V₀ [20°C, V]: | 2,29 |

### Beispiel 156

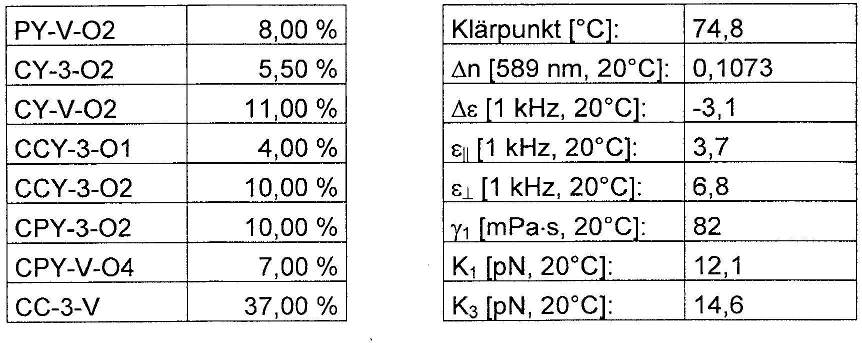

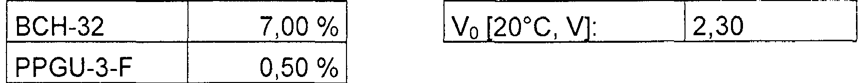

### Beispiel 157

| | |
|---|---|
| PY-3-O2 | 5,00 % |
| PY-V2-O2 | 6,50 % |
| CY-3-O2 | 12,00 % |
| CCY-3-O1 | 5,00 % |
| CCY-3-O2 | 10,00 % |
| CPY-V-O2 | 9,00 % |
| CPY-V-O4 | 10,00 % |
| CC-3-V | 35,00 % |
| BCH-32 | 7,00 % |
| PPGU-3-F | 0,50 % |
| Klärpunkt [°C]: | 76 |
| Δn [589 nm, 20°C]: | 0,1082 |
| Δε [1 kHz, 20°C]: | -3,2 |
| ε_{∥} [1 kHz, 20°C]: | 3,7 |
| ε_{⊥} [1 kHz, 20°C]: | 6,9 |
| γ₁ [mPa·s, 20°C]: | 89 |
| K₁ [pN, 20°C]: | 12,6 |
| K₃ [pN, 20°C]: | 14,6 |
| V₀ [20°C, V]: | 2,26 |

### Beispiel 157a

Die Mischung gemäß Beispiel 157 enthält zusätzlich

| | |
|---|---|
| 0,01 % | 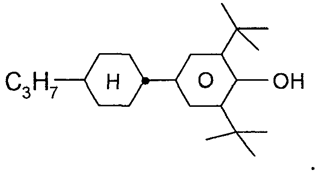 |

### Beispiel 157b

Die Mischung gemäß Beispiel 157 enthält zusätzlich

| | |
|---|---|
| 0,01 % | 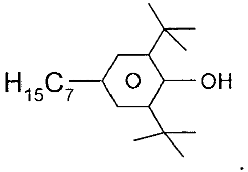 |

### Beispiel 158

| | |
|---|---|
| PY-V-O2 | 5,00 % |
| PY-V2-O2 | 5,00 % |
| PY-3-O2 | 3,00 % |
| CY-V-O2 | 4,00 % |
| CY-3-O2 | 3,00 % |
| CCY-3-O1 | 3,00 % |
| CCY-3-O2 | 6,00 % |
| CCY-4-O2 | 5,00 % |
| CPY-2-O2 | 7,50 % |
| CPY-3-O2 | 10,00 % |
| CC-3-V | 39,00 % |
| BCH-32 | 7,00 % |
| PPGU-3-F | 0,50 % |
| Y-4O-O4 | 2,00 % |
| Klärpunkt [°C]: | 73,5 |
| Δn [589 nm, 20°C]: | 0,1074 |
| Δε [1 kHz, 20°C]: | -2,9 |
| ε_{∥} [1 kHz, 20°C]: | 3,7 |
| ε_{⊥} [1 kHz, 20°C]: | 6,6 |
| γ₁ [mPa·s, 20°C]: | 78 |
| K₁ [pN, 20°C]: | 12,5 |
| K₃ [pN, 20°C]: | 14,0 |
| V₀ [20°C, V]: | 2,33 |

### Beispiel 159

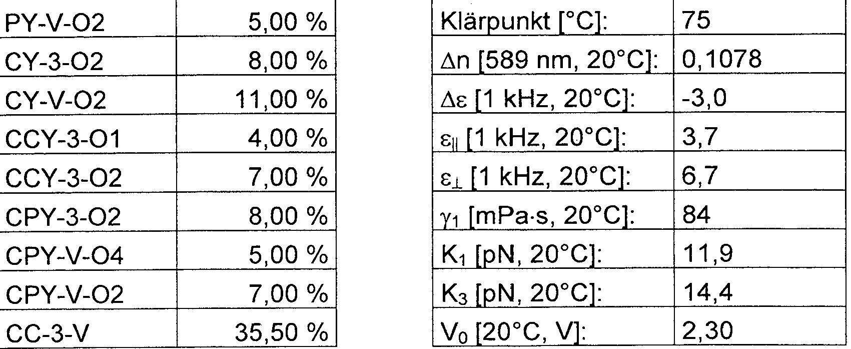

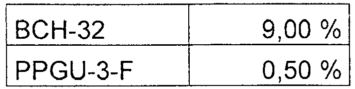

### Beispiel 160

| | |
|---|---|
| APUQU-2-F | 9,00 % |
| APUQU-3-F | 8,50 % |
| CC-3-V | 43,50 % |
| CCP-30CF₃ | 7,50 % |
| CCP-V-1 | 7,00 % |
| DPGU-4-F | 3,50 % |
| PGP-2-2V | 4,00 % |
| PGUQU-4-F | 4,50 % |
| PUQU-3-F | 8,50 % |
| PY-3V-O2 | 4,00 % |
| Klärpunkt [°C]: | 77,5 |
| Δn [589 nm, 20°C]: | 0,1087 |
| Δε [1 kHz, 20°C]: | 9,9 |
| ε_{∥} [1 kHz, 20°C]: | 13,7 |
| ε_{⊥} [1 kHz, 20°C]: | 3,8 |
| γ₁ [mPa·s, 20°C]: | 68 |
| K₁ [pN, 20°C]: | 12,4 |
| K₃ [pN, 20°C]: | 13,1 |
| V₀ [20°C, V]: | 1,18 |
| LTS (bulk) [-20°C]: | > 1000 h |
| LTS (bulk [-30°C]: | > 1000 h |

### Beispiel 161

| | |
|---|---|
| PY-1V-O2 | 4,50 % |
| PY-V2-O2 | 5,00 % |
| CY-3-O2 | 10,00 % |
| CY-V-O2 | 4,50 % |
| CCY-3-O1 | 6,00 % |
| CCY-3-O2 | 3,00 % |
| CPY-2-O2 | 9,00 % |
| CPY-3-O2 | 10,00 % |
| CC-3-V | 39,50 % |
| BCH-32 | 8,00 % |
| PPGU-3-F | 0,50 % |
| Klärpunkt [°C]: | 73,5 |
| Δn [589 nm, 20°C]: | 0,1074 |
| Δε [1 kHz, 20°C]: | -2,8 |
| ε∥ [1 kHz, 20°C]: | 3,6 |
| ε_{⊥} [1 kHz, 20°C]: | 6,4 |
| γ₁ [mPa·s, 20°C]: | 78 |
| K₁ [pN, 20°C]: | 12,5 |
| K₃ [pN, 20°C]: | 14,3 |
| V₀ [20°C, V]: | 2,40 |

### Beispiel 162

| | |
|---|---|
| PY-V2-O2 | 5,50 % |
| PY-3-O2 | 6,00 % |
| CY-V2-O2 | 5,00 % |
| CY-3-O2 | 4,00 % |
| CCY-3-O1 | 3,00 % |
| CCY-3-O2 | 3,00 % |
| CCY-4-O2 | 6,00 % |
| CPY-2-O2 | 8,00 % |
| CPY-3-O2 | 12,00 % |
| CC-3-V | 36,50 % |
| BCH-32 | 8,50 % |
| PPGU-3-F | 0,50 % |
| Y-4O-O4 | 2,00 % |
| Klärpunkt [°C]: | 74 |
| Δn [589 nm, 20°C]: | 0,1074 |
| εΔ [1 kHz, 20°C]: | -2,9 |
| ε_{∥} [1 kHz, 20°C]: | 3,7 |
| ε_{⊥} [1 kHz, 20°C]: | 6,6 |
| γ₁ [mPa·s, 20°C]: | 85 |
| K₁ [pN, 20°C]: | 12,6 |
| K₃ [pN, 20°C]: | 13,9 |
| V₀ 120°C, V]: | 2,30 |

### Beispiel 163

| | |
|---|---|
| PY-V2-O2 | 6,00 % |
| PY-3-O2 | 6,00 % |
| CY-1V2-O2 | 4,50 % |
| CY-3-O2 | 4,00 % |
| CCY-3-O1 | 3,00 % |
| CCY-3-O2 | 3,00 % |
| CCY-4-O2 | 6,00 % |
| CPY-2-O2 | 8,00 % |
| CPY-3-O2 | 12,00 % |
| CC-3-V | 37,00 % |
| BCH-32 | 8,00 % |
| PPGU-3-F | 0,50 % |
| Y-4O-O4 | 2,00 % |
| Klärpunkt [°C]: | 74,5 |
| Δn [589 nm, 20°C]: | 0,1086 |
| Δε [1 kHz, 20°C]: | -2,9 |
| ε_{∥} [1 kHz, 20°C]: | 3,6 |
| ε_{⊥} [1 kHz, 20°C]: | 6,5 |
| γ₁ [mPa·s, 20°C]: | 86 |
| K₁ [pN, 20°C]: | 12,8 |
| K₃ [pN, 20°C]: | 14,2 |
| V₀ [20°C, V]: | 2,33 |

### Beispiel 164

| | |
|---|---|
| PY-V2-O2 | 6,50 % |
| CY-3-O2 | 11,00 % |
| CY-V2-O2 | 6,50 % |
| CCY-3-O1 | 6,00 % |
| CCY-3-O2 | 2,00 % |
| CPY-2-O2 | 10,00 % |
| CPY-3-O2 | 12,00 % |
| CC-3-V | 36,00 % |
| BCH-32 | 9,50 % |
| PPGU-3-F | 0,50 % |
| Klärpunkt [°C]: | 74 |
| Δn [589 nm, 20°C]: | 0,1068 |
| Δε [1 kHz, 20°C]: | -2,8 |
| ε_{∥} [1 kHz, 20°C]: | 3,6 |
| ε_{⊥} [1 kHz, 20°C]: | 6,4 |
| γ₁ [mPa·s, 20°C]: | 85 |
| K₁ [pN, 20°C]: | 12,3 |
| K₃ [pN, 20°C]: | 14,1 |
| V₀ [20°C, V]: | 2,35 |

### Beispiel 165

| | |
|---|---|
| PCH-504FF | 10,00 % |
| PCH-502FF | 8,00 % |
| PCH-304FF | 4,00 % |
| CCP-V2-1 | 6,00 % |
| BCH-32 | 7,00 % |
| CCH-35 | 5,00 % |
| CC-5-V | 7,00 % |
| CC-3-V1 | 10,00 % |
| CPY-2-O2 | 10,00 % |
| CPY-3-O2 | 13,00 % |
| PY-V2-O2 | 20,00 % |
| Klärpunkt [°C]: | 72 |
| Δn [589 nm, 20°C]: | 0,1216 |
| Δε [1 kHz, 20°C]: | -4,0 |
| ε_{∥} [1 kHz, 20°C]: | 3,9 |
| ε_{⊥} [1 kHz, 20°C]: | 7,9 |
| γ₁ [mPa·s, 20°C]: | 125 |
| K₁ [pN, 20°C]: | 14,6 |
| K₃ [pN, 20°C]: | 14,7 |
| V₀ [20°C, V]: | 2,03 |

### Beispiel 166

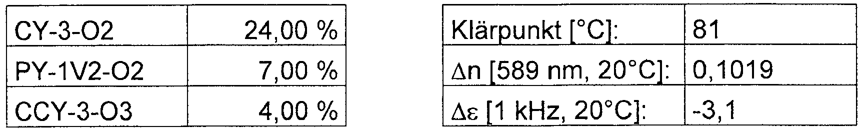

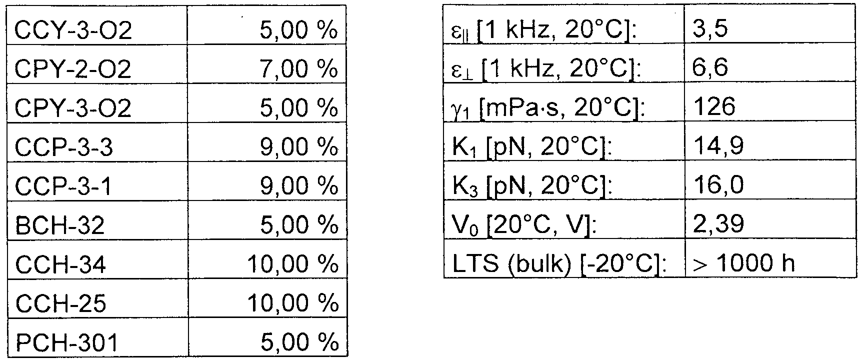

### Beispiel 167

| | |
|---|---|
| CY-3-O2 | 18,00 % |
| PY-1V2-O2 | 6,00 % |
| CCY-3-O2 | 8,00 % |
| CCY-4-O2 | 4,00 % |
| CPY-2-O2 | 7,00 % |
| CPY-3-O2 | 10,00 % |
| CCH-34 | 8,00 % |
| CCH-23 | 22,00 % |
| CCP-3-3 | 7,00 % |
| CCP-3-1 | 7,00 % |
| PCH-301 | 3,00 % |
| Klärpunkt [°C]: | 80,5 |
| Δn [589 nm, 20°C]: | 0,0949 |
| Δε [1 kHz, 20°C]: | -3,1 |
| ε_{∥} [1 kHz, 20°C]: | 3,4 |
| ε_{⊥} [1 kHz, 20°C]: | 6,4 |
| γ₁ [mPa·s, 20°C]: | 113 |
| K₁ [pN, 20°C]: | 14,9 |
| K₃ [pN, 20°C]: | 16,0 |
| V₀ [20°C, V]: | 2,41 |
| LTS (bulk) [-20°C]: | > 1000 h |

### Beispiel 168

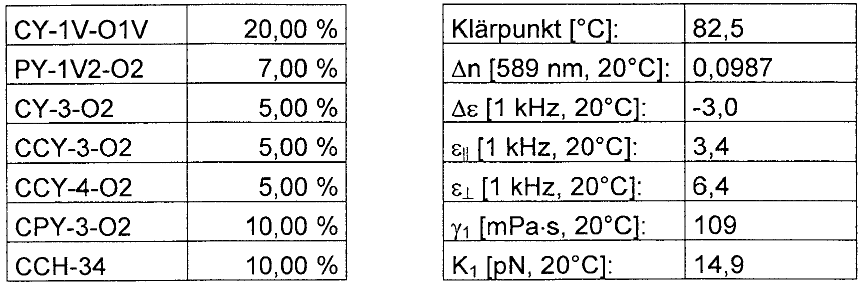

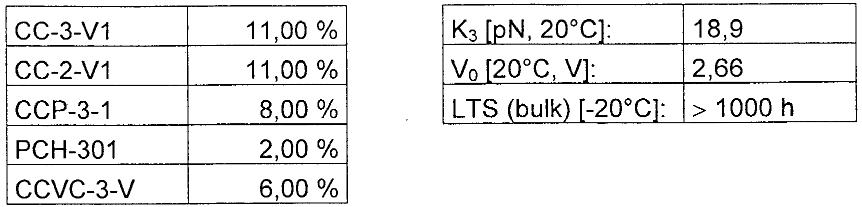

### Beispiel 169

| | |
|---|---|
| CY-1V-O1V | 20,00 % |
| PY-1V2-O2 | 5,00 % |
| CY-3-O2 | 7,00 % |
| CCY-3-O2 | 6,00 % |
| CCY-3-O1 | 6,00 % |
| CPY-3-O2 | 8,00 % |
| CCH-34 | 10,00 % |
| CC-3-V1 | 11,00 % |
| CC-2-V1 | 11,00 % |
| CCP-3-1 | 8,00 % |
| PCH-301 | 2,00 % |
| CCVC-3-V | 6,00 % |
| Klärpunkt [°C]: | 81 |
| Δn [589 nm, 20°C]: | 0,0953 |
| Δε [1 kHz, 20°C]: | -3,0 |
| ε_{∥} [1 kHz, 20°C]: | 3,4 |
| ε_{⊥} [1 kHz, 20°C]: | 6,4 |
| γ₁ [mPa·s, 20°C]: | 106 |
| K₁ [pN, 20°C]: | 14,5 |
| K₃ [pN, 20°C]: | 18,6 |
| V₀ [20°C, V]: | 2,63 |
| LTS (bulk) [-20°C]: | > 1000 h |

### Beispiel 170

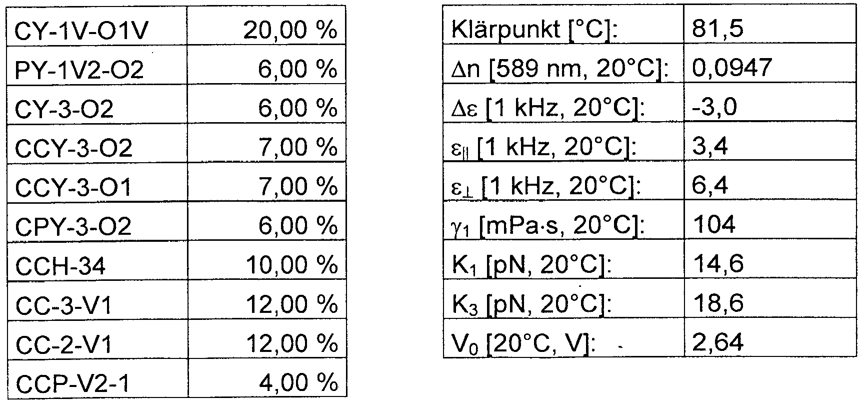

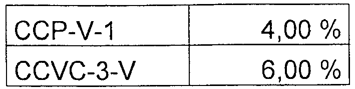

### Beispiel 171

| | |
|---|---|
| CY-1V-O1V | 20,00 % |
| PY-1V2-O2 | 5,00 % |
| CY-3-O2 | 12,00 % |
| CCY-3-O2 | 6,00 % |
| CCY-4-O2 | 6,00 % |
| CPY-3-O2 | 8,00 % |
| CCH-34 | 7,00 % |
| CC-3-V1 | 11,00 % |
| CC-2-V1 | 11,00 % |
| CCP-3-1 | 6,00 % |
| CCVC-3-V | 8,00 % |
| Klärpunkt [°C]: | 80,5 |
| Δn [589 nm, 20°C]: | 0,0962 |
| Δε [1 kHz, 20°C]: | -3,4 |
| ε_{∥} [1 kHz, 20°C]: | 3,5 |
| ε_{⊥} [1 kHz, 20°C]: | 6,9 |
| γ₁ [mPa·s, 20°C]: | 112 |
| K₁ [pN, 20°C]: | 14,3 |
| K₃ [pN, 20°C]: | 18,5 |
| V₀ [20°C, V]: | 2,45 |

### Beispiel 172

| | |
|---|---|
| CY-1V-O1V | 20,00 % |
| PY-1V2-O2 | 7,00 % |
| CY-3-O2 | 7,50 % |
| CCY-3-O2 | 10,50 % |
| CCY-4-O2 | 10,00 % |
| CC-3-V2 | 11,00 % |
| CC-3-V1 | 11,00 % |
| CC-2-V1 | 11,00 % |
| CCP-3-1 | 6,00 % |
| CCVC-3-V | 6,00 % |
| Klärpunkt [°C]: | 81,5 |
| Δn [589 nm, 20°C]: | 0,0932 |
| Δε [1 kHz, 20°C]: | -3,3 |
| ε_{∥} [1 kHz, 20°C]: | 3,4 |
| ε_{⊥} [1 kHz, 20°C]: | 6,7 |
| γ₁ [mPa·s, 20°C]: | 104 |
| K₁ [pN, 20°C]: | 14,9 |
| K₃ [pN, 20°C]: | 19,0 |
| V₀ [20°C, V]: | 2,55 |
| LTS (bulk) [-20°C] | > 1000 h |

### Beispiel 173

| | |
|---|---|
| CY-3-O2 | 12,00 % |
| PY-1V2-O2 | 11,00 % |
| CCY-3-O2 | 10,00 % |
| CCY-4-O2 | 10,00 % |
| CPY-3-O2 | 10,00 % |
| CCH-34 | 8,00 % |
| CCH-23 | 22,00 % |
| CCP-3-3 | 3,00 % |
| CCP-3-1 | 7,00 % |
| PCH-301 | 7,00 % |
| Klärpunkt [°C]: | 80,0 |
| Δn [589 nm, 20°C]: | 0,0950 |
| Δε [1 kHz, 20°C]: | -3,1 |
| ε_{∥} [1 kHz, 20°C]: | 3,3 |
| ε_{⊥} [1 kHz, 20°C]: | 6,4 |
| γ₁ [mPa·s, 20°C]: | 111 |
| K₁ [pN, 20°C]; | 15,1 |
| K₃ [pN, 20°C]: | 16,6 |
| V₀ [20°C, V]: | 2,46 |
| LTS (bulk) [-20°C] | > 1000 h |

### Beispiel 174

| | |
|---|---|
| CY-1V-O1V | 18,00 % |
| PY-1V2-O2 | 4,00 % |
| CY-3-O2 | 15,00 % |
| CCY-3-O2 | 8,00 % |
| CCY-4-O2 | 7,00 % |
| CPY-3-O2 | 7,00 % |
| CCH-34 | 7,00 % |
| CC-3-V1 | 11,00 % |
| CC-2-V1 | 11,00 % |
| CCP-3-1 | 3,00 % |
| CCVC-3-V | 9,00 % |
| Klärpunkt [°C]: | 80,5 |
| Δn [589 nm, 20°C]: | 0,0943 |
| Δε [1 kHz, 20°C]: | -3,6 |
| ε_{∥} [1 kHz, 20°C]: | 3,5 |
| ε_{⊥} [1 kHz, 20°C]: | 7,2 |
| γ₁ [mPa·s, 20°C]: | 112 |
| K₁ [pN, 20°C]: | 14,2 |
| K₃ [pN, 20°C]: | 18,2 |
| V₀ [20°C, V]: | 2,37 |

### Beispiel 175

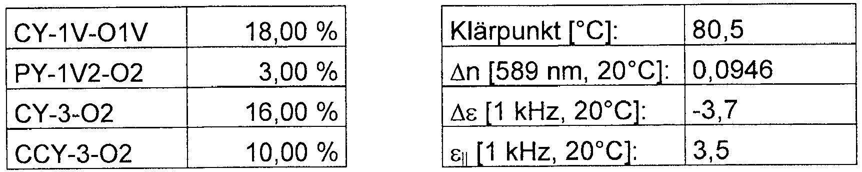

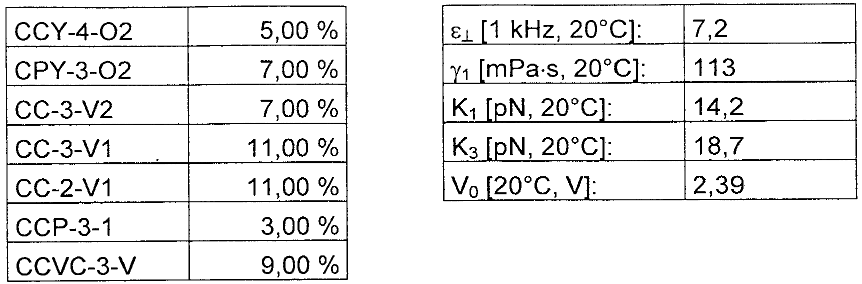

### Beispiel 176

| | |
|---|---|
| PY-3-O2 | 11,00 % |
| PY-V2-O2 | 6,50 % |
| CCY-3-O2 | 9,00 % |
| CCY-4-O2 | 3,00 % |
| CCY-3-O1 | 5,00 % |
| CPY-2-O2 | 6,50 % |
| CPY-3-O2 | 10,00 % |
| CCH-34 | 10,00 % |
| CCH-23 | 21,00 % |
| PYP-2-3 | 6,00 % |
| CCP-3-1 | 3,00 % |
| PCH-301 | 9,00 % |
| Klärpunkt [°C]: | 75 |
| Δn [589 nm, 20°C]: | 0,1105 |
| Δε [1 kHz, 20°C]: | -3,1 |
| ε_{∥} [1 kHz, 20°C]: | 3,5 |
| ε_{⊥} [1 kHz, 20°C]: | 6,6 |
| γ₁ [mPa·s, 20°C]: | 105 |
| K₁ [pN, 20°C]: | 13.9 |
| K₃ [pN, 20°C]: | 14,3 |
| V₀ [20°C, V]: | 2,28 |
| LTS (bulk) [-20°C] | > 1000 h |

### Beispiel 177

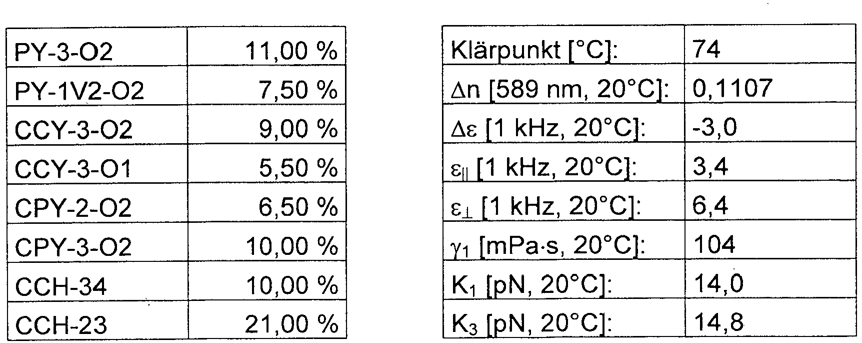

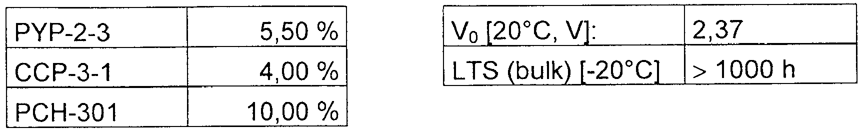

### Beispiel 178

| | |
|---|---|
| PY-3-O2 | 11,00 % |
| PY-1V2-O2 | 8,00 % |
| CY-3-O2 | 3,00 % |
| CCY-3-O2 | 9,00 % |
| CCY-3-O1 | 6,00 % |
| CPY-2-O2 | 6,50 % |
| CPY-3-O2 | 10,00 % |
| CCH-34 | 10,00 % |
| CCH-23 | 21,00 % |
| PYP-2-3 | 5,00 % |
| CCP-3-1 | 4,00 % |
| PCH-301 | 6,50 % |
| Klärpunkt [°C]: | 74 |
| Δn [589 nm, 20°C]: | 0,1119 |
| Δε [1 kHz, 20°C]: | -3,3 |
| ε_{∥} [1 kHz, 20°C]: | 3,5 |
| ε_{⊥} [1 kHz, 20°C]: | 6,8 |
| γ₁ [mPa·s, 20°C]: | 108 |
| K₁ [pN, 20°C]: | 14,3 |
| K₃ [pN, 20°C]: | 15,0 |
| V₀ [20°C, V]: | 2,26 |
| LTS (bulk) [-20°C] | > 1000 h |

### Beispiel 179

| | |
|---|---|
| CC-3-V | 39,00 % |
| CC-3-V1 | 3,00 % |
| CCP-V-1 | 8,00 % |
| CCP-V2-1 | 12,00 % |
| PGP-2-2V | 3,50 % |
| PP-1-2V1 | 9,00 % |
| PPGU-3-F | 1,00 % |
| PUQU-3-F | 15,50 % |
| CCY-3-O2 | 9,00 % |

| | |
|---|---|
| Klärpunkt [°C]: | 74,5 |
| Δn [589 nm, 20°C]: | 0,1017 |
| Δε [1 kHz, 20°C]: | 3,2 |
| γ₁ [mPa·s, 20°C]: | 64 |
| K₁ [pN, 20°C]: | 13 |
| K₃ [pN, 20°C]: | 15,4 |
| V₀ [20°C, V]: | 2,13 |

### Beispiel 180

| | |
|---|---|
| BCH-32 | 5,00 % |
| CC-3-V | 41,50 % |
| CC-3-V1 | 8,50 % |
| CCH-35 | 2,00 % |
| CCP-3-1 | 3,00 % |
| CCY-3-O2 | 7,00 % |
| CPY-2-O2 | 5,50 % |
| CPY-3-O2 | 12,50 % |
| PY-3-O2 | 15,00 % |
| Klärpunkt [°C]: | 75,3 |
| Δn [589 nm, 20°C]: | 0,0989 |
| Δε [1 kHz, 20°C]: | -1,9 |
| ε_{∥} [1 kHz, 20°C]: | 3,2 |
| ε_{⊥} [1 kHz, 20°C]: | 5,0 |
| γ₁ [mPa·s, 20°C]: | 69 |
| K₁ [pN, 20°C]: | 14,2 |
| K₃ [pN, 20°C]: | 15,5 |
| V₀ [20°C, V]: | 3,02 |

### Beispiel 180a

Die Mischung gemäß Beispiel 180 enthält zusätzlich 0,001 % Irganox® 1076 (Octadecyl-3-(3,5-di-tert. butyl-4-hydroxyphenyl)-proprionat, Fa. BASF) und 0,3 % RM-1.

### Beispiel 181

| | |
|---|---|
| CCY-3-O1 | 8,00 % |
| CCY-4-O2 | 7,50 % |
| CPY-2-O2 | 10,00% |
| CPY-3-O2 | 10,00 % |
| CC-3-V | 15,00 % |
| PY-1-O4 | 5,00 % |
| PY-3-O2 | 9,00 % |
| PY-4-O2 | 5,00 % |
| CC-3-V1 | 9,00 % |
| CCY-3-O2 | 6,50 % |
| PCH-301 | 15,00% |
| Klärpunkt [°C]: | 74,9 |
| Δn [589 nm, 20°C]: | 0,1123 |
| Δε [1 kHz, 20°C]: | -3,7 |
| ε_{∥} [1 kHz, 20°C]: | 3,7 |
| ε_{⊥} [1 kHz, 20°C]: | 7,5 |
| γ₁ [mPa·s, 20°C]: | 121 |
| K₁ [pN, 20°C]: | 13,2 |
| K₃ [pN, 20°C]: | 15,5 |
| V₀ [20°C, V]: | 2,15 |

### Beispiel 181a

Die Mischung gemäß Beispiel 181 enthält zusätzlich

| | |
|---|---|
| 0,01 % | 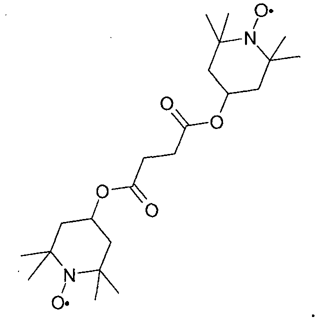 |

### Beispiel 182

| | |
|---|---|
| CY-3-O2 | 10,00 % |
| CY-3-O4 | 20,00 % |
| CY-5-O4 | 20,00 % |
| CCY-3-O2 | 6,00 % |
| CCY-3-O3 | 6,00 % |
| CCY-4-O2 | 6,00 % |
| CCY-5-O2 | 6,00 % |
| CH-33 | 3,00 % |
| CH-35 | 3,50 % |
| CH-43 | 3,50 % |
| CH-45 | 3,50 % |
| CCPC-33 | 4,00 % |
| CCPC-34 | 4,50 % |
| CCPC-35 | 4,00 % |
| Klärpunkt [°C]: | 100 |
| Δn [589 nm, 20°C]: | 0,0865 |
| Δε [1 kHz, 20°C]: | -5,4 |
| ε_{∥} [1 kHz, 20°C]: | 3,9 |
| ε_{⊥}[1 kHz, 20°C]: | 9,3 |
| γ₁ [mPa·s, 20°C]: | 347 |
| K₁ [pN, 20°C]: | 15,6 |
| K₃ [pN, 20°C]: | 16,6 |
| V₀ [20°C, V]: | 1,84 |

### Beispiel 183

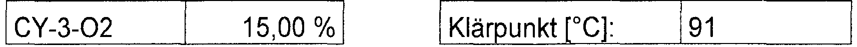

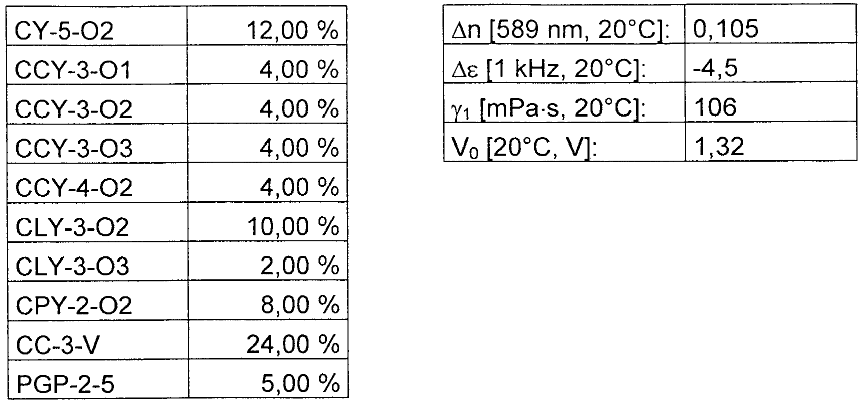

### Beispiel 184

| | |
|---|---|
| CY-3-O2 | 14,00 % |
| CY-3-O4 | 4,00 % |
| CY-5-O2 | 7,00 % |
| CCY-3-O1 | 4,00 % |
| CCY-3-O2 | 5,00 % |
| CCY-4-O2 | 8,00 % |
| CCY-5-O2 | 3,00 % |
| CPY-2-O2 | 9,00 % |
| CPY-3-O2 | 9,00 % |
| PYP-2-3 | 6,00 % |
| CC-3-V | 22,00 % |
| CC-3-V1 | 3,50 % |
| CCP-V-1 | 5,00 % |
| PPGU-3-F | 0,50 % |
| Klärpunkt [°C]: | 84,7 |
| Δn [589 nm, 20°C]: | 0,1068 |
| Δε [1 kHz, 20°C]: | -4,0 |
| γ₁ [mPa·s, 20°C]: | 138 |
| K₁ [pN, 20°C]: | 14,1 |
| K₃ [pN, 20°C]: | 16,2 |
| V₀ [20°C, V]: | 2,13 |

### Beispiel 185

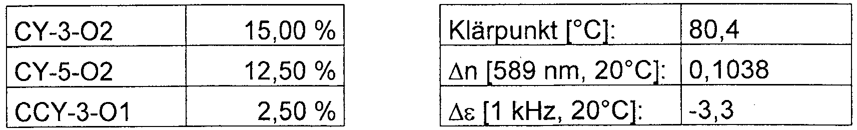

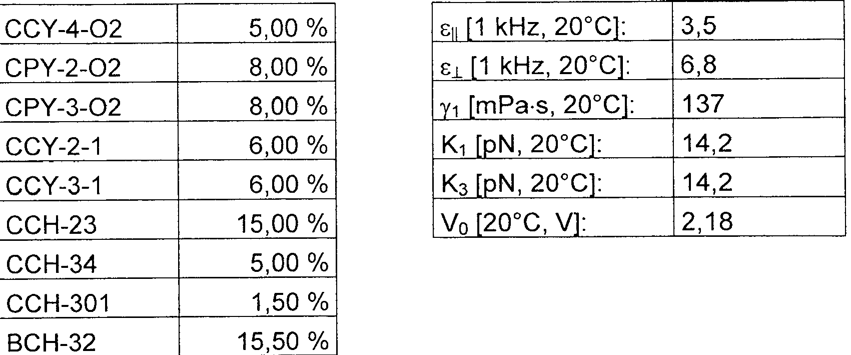

### Beispiel 185a

Die Mischung gemäß Beispiel 185 enthält zusätzlich 0,25 % RM-35. 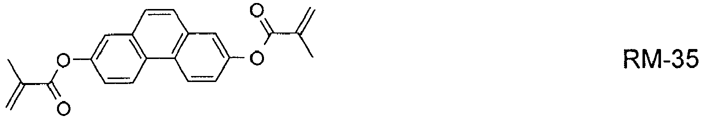 und

| | |
|---|---|
| 0,025 % | 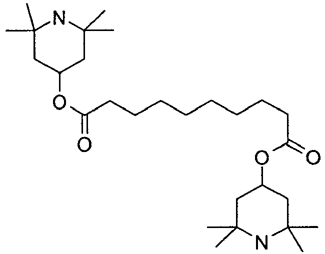 |

### Beispiel 186

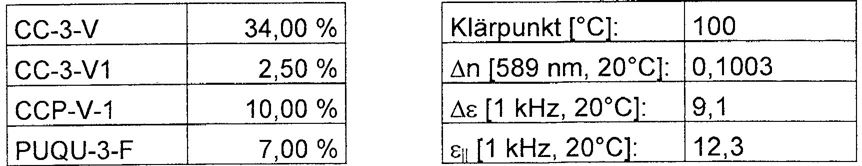

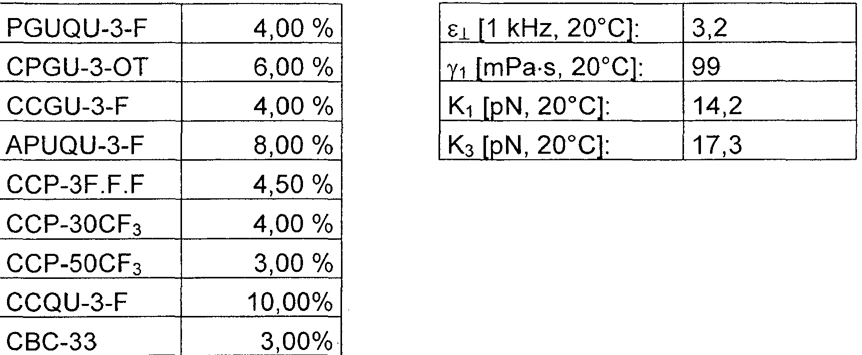

### Beispiel 186a

Die Mischung gemäß Beispiel 186 enthält zusätzlich

| | |
|---|---|
| 0,03 % | 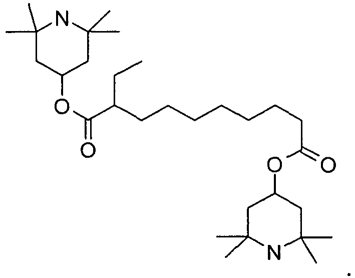 |

### Beispiel 186b

Die Mischung gemäß Beispiel 186 enthält zusätzlich

| | |
|---|---|
| 0,03 % | 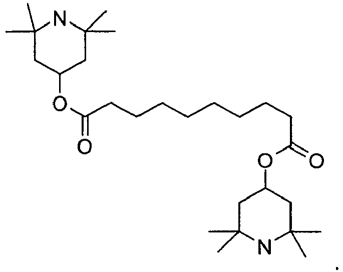 |

### Beispiel 187

| | |
|---|---|
| Y-4O-O4 | 4,50 % |
| PYP-2-3 | 2,00 % |
| CC-3-V | 25,00 % |
| CC-4-V | 10,00 % |
| CCP-V-1 | 14,00 % |
| PTP-302FF | 10,00 % |
| CPTP-302FF | 10,00 % |
| CPTP-302FF | 10,00 % |
| PPTUI-3-2 | 14,50 % |
| Klärpunkt [°C]: | 100 |
| Δn [589 nm, 20°C]: | 0,1716 |
| Δε [1 kHz, 20°C]: | -1,5 |
| ε_{∥} [1 kHz, 20°C]: | 3,4 |
| ε_{⊥} [1 kHz, 20°C]: | 4,9 |
| γ₁ [mPa·s, 20°C]: | 114 |
| K₁ [pN, 20°C]: | 15,2 |
| K₃ [pN, 20°C]: | 18,5 |
| V₀ [20°C, V]: | 3,76 |

### Beispiel 188

| | |
|---|---|
| CCH-23 | 25,00 % |
| CC-3-V | 4,50 % |
| PCH-53 | 25,00 % |
| CCY-2-1 | 12,00 % |
| CCY-3-1 | 12,00 % |
| CCY-3-O2 | 12,00 % |
| CCY-3-O3 | 5,00 % |
| CBC-33F | 4,50 % |
| Klärpunkt [°C]: | 70,3 |
| Δn [589 nm, 20°C]: | 0,0737 |
| Δε [1 kHz, 20°C]: | -1,1 |
| ε_{∥} [1 kHz, 20°C]: | 2,8 |
| ε_{⊥} [1 kHz, 20°C]: | 3,9 |
| K₁ [pN, 20°C]: | 11,7 |
| K₃ [pN, 20°C]: | 13,1 |

### Beispiel 189

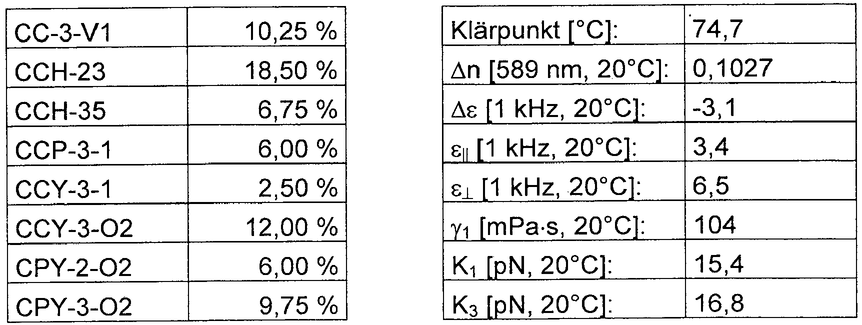

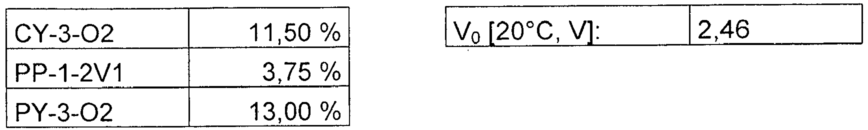

### Beispiel 189a

Die Mischung gemäß Beispiel 189 enthält zusätzlich 0,01 % Irganox® 1076 (Octadecyl-3-(3,5-di-tert. butyl-4-hydroxyphenyl)-proprionat, Fa. BASF) und 0,3 % RM-1.

### Beispiel 190

| | |
|---|---|
| BCH-3F.F | 10,00 % |
| BCH-3F.F.F | 12,00 % |
| CBC-33 | 3,00 % |
| CBC-33F | 3,00 % |
| CCGU-3-F | 8,00 % |
| CCH-34 | 10,00 % |
| CCH-35 | 6,50 % |
| CCP-1F.F.F | 10,00 % |
| CCP-2F.F.F | 10,00 % |
| CCP-3-1 | 2,50 % |
| CCP-3F.F.F | 8,00 % |
| CPGP-4-3 | 3,00 % |
| CPGP-5-2 | 2,00 % |
| CPGP-5-3 | 1,00 % |
| PUQU-2-F | 1,00 % |
| PUQU-3-F | 10,00 % |
| Klärpunkt [°C]: | 99,6 |
| Δn [589 nm, 20°C]: | 0,1122 |
| Δε [1 kHz, 20°C]: | 10,1 |
| ε_{∥} [1 kHz, 20°C]: | 13,8 |
| ε_{⊥} [1 kHz, 20°C]: | 3,6 |
| γ₁ [mPa·s, 20°C]: | 164 |
| K₁ [pN, 20°C]: | 11,8 |
| K₃ [pN, 20°C]: | 15,9 |
| V₀ [20°C, V]: | 1,14 |

### Beispiel 191

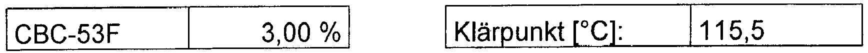

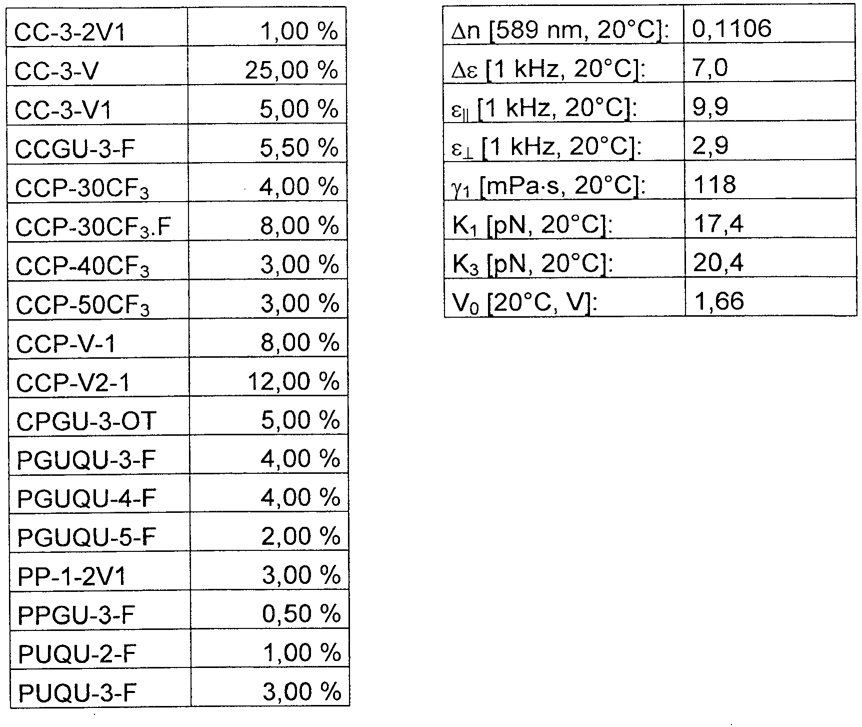

### Beispiel 192

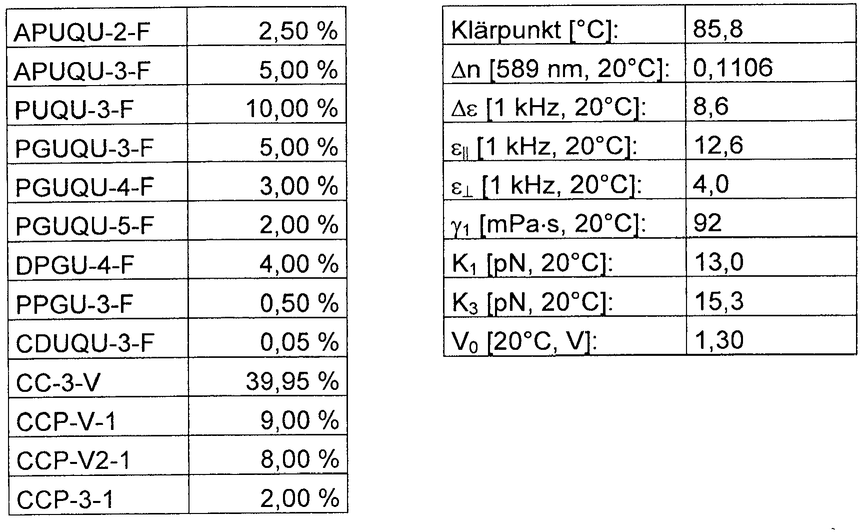

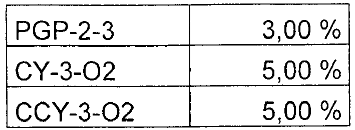

### Beispiel 193

| | |
|---|---|
| APUQU-2-F | 2,50 % |
| APUQU-3-F | 5,00 % |
| PUQU-3-F | 12,50 % |
| PGUQU-3-F | 5,00 % |
| PGUQU-4-F | 4,00 % |
| PGUQU-5-F | 4,00 % |
| DPGU-4-F | 4,00 % |
| PPGU-3-F | 0,50 % |
| CDUQU-3-F | 0,05 % |
| CC-3-V | 34,95 % |
| CCP-V-1 | 7,00 % |
| CCP-V2-1 | 6,00 % |
| CCP-3-1 | 2,50 % |
| CCPC-33 | 2,00 % |
| CY-3-O2 | 5,00 % |
| CCY-3-O2 | 5,00 % |
| Klärpunkt [°C]: | 85,8 |
| Δn [589 nm, 20°C]: | 0,1105 |
| Δε [1 kHz, 20°C]: | 10,6 |
| ε_{∥} [1 kHz, 20°C]: | 14,8 |
| ε_{┴} [1 kHz, 20°C]: | 4,2 |
| γ₁ [mPa·s, 20°C]: | 98 |
| K₁ [pN, 20°C]: | 12,7 |
| K₃ [pN, 20°C]: | 15,1 |

### Beispiel 194

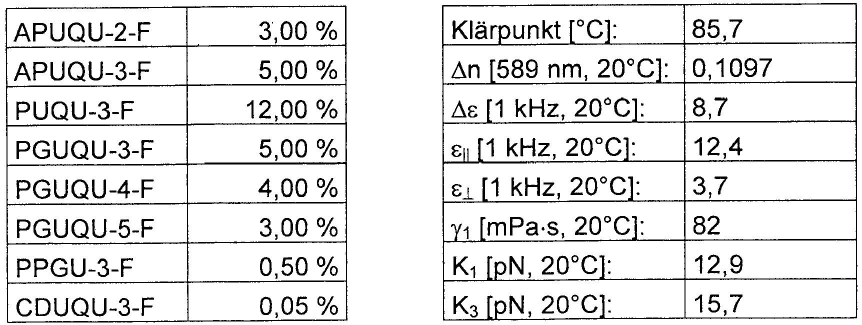

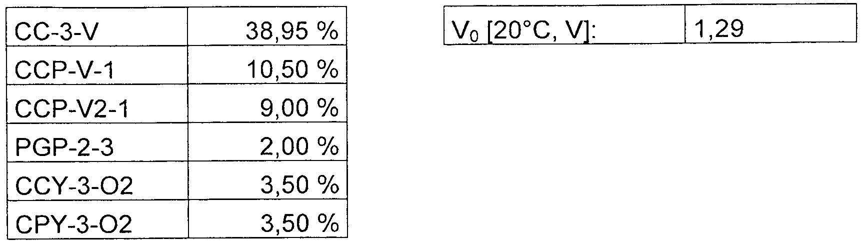

### Beispiel 195

| | |
|---|---|
| APUQU-2-F | 3,00 % |
| APUQU-3-F | 5,00 % |
| PUQU-3-F | 12,00 % |
| PGUQU-3-F | 5,00 % |
| PGUQU-4-F | 4,00 % |
| PGUQU-5-F | 3,00 % |
| PPGU-3-F | 0,50 % |
| CDUQU-3-F | 0,05 % |
| CC-3-V | 38,95 % |
| CCP-V-1 | 10,50 % |
| CCP-V2-1 | 9,00 % |
| PGP-2-3 | 2,00 % |
| CCY-3-O2 | 3,50 % |
| CPY-3-O2 | 3,50 % |
| Klärpunkt [°C]: | 85,7 |
| Δn [589 nm, 20°C]: | 0,1097 |
| Δε [1 kHz, 20°C]: | 8,7 |
| ε_{∥} [1 kHz, 20°C]: | 12,4 |
| ε_{┴} [1 kHz, 20°C]: | 3,7 |
| γ₁ [mPa·s, 20°C]: | 82 |
| K₁ [pN, 20°C]: | 12,9 |
| K₃ [pN, 20°C] | 15,7 |
| V₀ [20°C, V]: | 1,29 |

### Beispiel 196

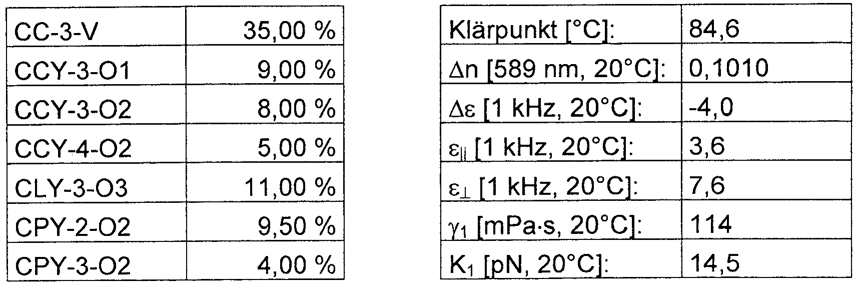

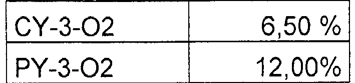

### Beispiel 196a

Die Mischung gemäß Beispiel 196 enthält zusätzlich

| | |
|---|---|
| 0,04 % | 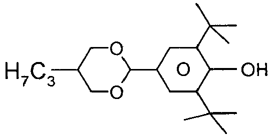 |

und

| | |
|---|---|
| 0,015 % | 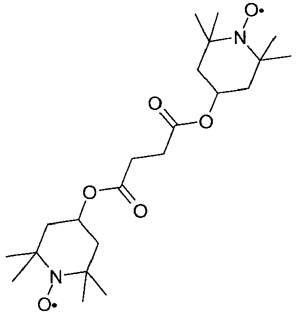 |

### Beispiel 197

| | |
|---|---|
| CC-3-V | 33,00 % |
| CCY-3-O1 | 7,00 % |
| CCY-3-O2 | 7,00 % |
| CCY-4-O2 | 5,00 % |
| CLY-3-O3 | 11,00 % |
| CPY-2-O2 | 9,00 % |
| CPY-3-O2 | 8,00 % |
| PP-1-2V1 | 1,50 % |
| PY-1-O4 | 8,50 % |
| PY-3-O2 | 10,00 % |
| Klärpunkt [°C]: | 84 |
| Δn [589 nm, 20°C]: | 0,1111 |
| Δε [1 kHz, 20°C]: | -4,0 |
| ε_{∥} [1 kHz, 20°C]: | 3,7 |
| ε_{┴} [1 kHz, 20°C]: | 7,6 |
| γ₁ [mPa·s, 20°C]: | 119 |
| K₁ [pN, 20°C]: | 14,8 |

### Beispiel 197a

Die Mischung gemäß Beispiel 197 enthält zusätzlich

| | |
|---|---|
| 0,04 % | 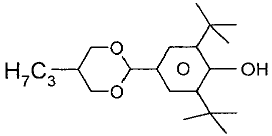 |

und

| | |
|---|---|
| 0,015 % | 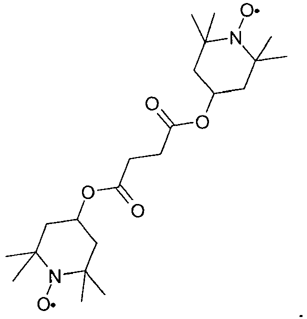 |

### Beispiel 198

| | |
|---|---|
| APUQU-2-F | 4,00 % |
| APUQU-3-F | 7,00 % |
| PUQU-3-F | 5,00 % |
| PGUQU-3-F | 4,00 % |
| PGUQU-4-F | 3,00 % |
| PGUQU-5-F | 3,00 % |
| CCP-V-1 | 16,00 % |
| CC-3-V | 40,00 % |
| CC-3-V1 | 4,00 % |
| CC-4-V | 3,00 % |
| PGP-2-3 | 4,00 % |
| PGP-2-4 | 1,00 % |
| PPGU-3-F | 1,00 % |
| CCOC-4-3 | 5,00 % |
| Klärpunkt [°C]: | 85,6 |
| Δn [589 nm, 20°C]: | 0,1021 |
| Δε [1 kHz, 20°C]: | 6,9 |
| ε_{∥} [1 kHz, 20°C]: | 10,0 |
| ε_{┴} [1 kHz, 20°C]: | 3,1 |
| γ₁ [mPa·s, 20°C]: | 71 |
| K₁ [pN, 20°C]: | 13,1 |
| K₃ [pN, 20°C]: | 15,3 |
| V₀ [20°C, V]: | 1,45 |

### Beispiel 198a

Die Mischung gemäß Beispiel 198 enthält zusätzlich 0,25 % RM-41

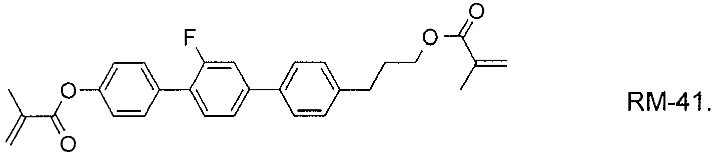

### Beispiel 198b

Die Mischung gemäß Beispiel 198 enthält zusätzlich mit 0,3 % RM-17

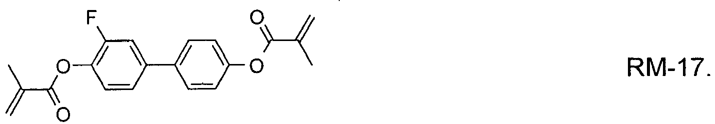

### Beispiel 199

| | |
|---|---|
| Y-4O-O4 | 12,00 % |
| CY-3-O2 | 14,00 % |
| CCY-3-O1 | 5,00 % |
| CCY-3-O2 | 6,00 % |
| CCY-3-O3 | 6,00 % |
| CCY-4-O2 | 6,00 % |
| CPY-2-O2 | 2,50 % |
| PTP-302FF | 10,00 % |
| CPTP-302FF | 10,00 % |
| CPTP-502FF | 10,00 % |
| CC-4-V | 2,50 % |
| CCP-V-1 | 11,50 % |
| CCPC-33 | 4,50 % |
| Klärpunkt [°C]: | 101 |
| Δn [589 nm, 20°C]: | 0,1504 |
| Δε [1 kHz, 20°C]: | -6,2 |
| ε_{∥} [1 kHz, 20°C]: | 4,5 |
| ε_{┴} [1 kHz, 20°C]: | 10,7 |
| γ₁ [mPa·s, 20°C]: | 281 |
| K₁ [pN, 20°C]: | 15,7 |
| K₃ [pN, 20°C]: | 19,9 |
| V₀ [20°C, V]: | 1,90 |

### Beispiel 200

| | |
|---|---|
| Y-4O-O4 | 12,00 % |
| CCY-3-O1 | 5,00 % |
| CCY-3-O2 | 6,00 % |
| CCY-3-O3 | 6,00 % |
| CCY-4-O2 | 2,00 % |
| CC-4-V | 15,00 % |
| CCP-V-1 | 11,00 % |
| CCP-V2-1 | 5,00 % |
| BCH-32 | 5,00 % |
| PTP-302FF | 10,00 % |
| PTP-502FF | 3,00 % |
| CPTP-302FF | 10,00 % |
| CPTP-502FF | 10,00 % |
| Klärpunkt [°C]: | 100 |
| Δn [589 nm, 20°C]: | 0,1496 |
| Δε [1 kHz, 20°C]: | -4,1 |
| ε_{∥} [1 kHz, 20°C]: | 4,0 |
| ε_{┴} [1 kHz, 20°C]: | 8,1 |
| γ₁ [mPa·s, 20°C]: | 180 |
| K₁ [pN, 20°C]: | 16,1 |
| K₃ [pN, 20°C]: | 18,5 |
| V₀ [20°C, V]: | 2,25 |

### Beispiel 201

| | |
|---|---|
| Y-4O-O4 | 10,00 % |
| CCY-3-O1 | 2,50 % |
| PTP-302FF | 10,00 % |
| PTP-502FF | 3,50 % |
| CPTP-302FF | 10,00 % |
| CPTP-502FF | 3,50 % |
| CC-4-V | 15,00 % |
| CC-3-V1 | 8,00 % |
| CCP-V-1 | 12,00 % |
| CCP-V2-1 | 12,00 % |
| BCH-32 | 5,00 % |
| CPTP-3-1 | 5,00 % |
| CPTP-3-2 | 3,50 % |
| Klärpunkt [°C]: | 100 |
| Δn [589 nm, 20°C]: | 0,1515 |
| Δε [1 kHz, 20°C]: | -2,1 |
| ε_{∥} [1 kHz, 20°C]: | 3,5 |
| ε_{⊥} [1 kHz, 20°C]: | 5,6 |
| γ₁ [mPa·s, 20°C]: | 125 |
| K₁ [pN, 20°C]: | 16,6 |
| K₃ [pN, 20°C]: | 18,7 |
| V₀ [20°C, V]: | 3,13 |

### Beispiel 202

| | |
|---|---|
| Y-4O-O4 | 12,00 % |
| CY-3-O2 | 6,00 % |
| CY-3-O4 | 15,00 % |
| CCY-3-O2 | 6,00 % |
| CCY-3-O3 | 6,00 % |
| CCY-4-O2 | 6,00 % |
| CLY-3-O2 | 5,00 % |
| CPY-2-O2 | 8,00 % |
| CPY-3-O2 | 8,00 % |
| CPTP-302FF | 4,00 % |
| CPTP-502FF | 4,00 % |
| CCP-V-1 | 11,00 % |
| CCPC-33 | 4,50 % |
| CCPC-34 | 4,50 % |
| Klärpunkt [°C]: | 101 |
| Δn [589 nm, 20°C]: | 0,1218 |
| Δε [1 kHz, 20°C]: | -6,2 |
| ε_{∥} [1 kHz, 20°C]: | 4,5 |
| ε_{┴} [1 kHz, 20°C]: | 10,7 |
| γ₁ [mPa·s, 20°C]: | 302 |
| K₁ [pN, 20°C]: | 15,7 |
| K₃ [pN, 20°C]: | 18,9 |
| V₀ [20°C, V]: | 1,83 |

### Beispiel 203

| | |
|---|---|
| Y-4O-O4 | 15,00 % |
| CCY-3-O2 | 5,00 % |
| CCY-3-O3 | 5,00 % |
| CCY-4-O2 | 5,00 % |
| CLY-3-O2 | 4,00 % |
| CPY-2-O2 | 8,00 % |
| CPY-3-O2 | 8,00 % |
| CPTP-302FF | 5,00 % |
| CPTP-502FF | 5,00 % |
| CC-4-V | 13,50 % |
| CCP-V-1 | 11,50 % |
| CCP-V2-1 | 10,00 % |
| BCH-32 | 5,00 % |
| Klärpunkt [°C]: | 101 |
| Δn [589 nm, 20°C]: | 0,1216 |
| Δε [1 kHz, 20°C]: | -4,0 |
| ε_{∥} [1 kHz, 20°C]: | 4,0 |
| ε_{┴} [1 kHz, 20°C]: | 8,0 |
| γ₁ [mPa·s, 20°C]: | 167 |
| K₁ [pN, 20°C]: | 16,1 |
| K₃ [pN, 20°C]: | 17,3 |
| V₀ [20°C, V]: | 2,19 |

### Beispiel 204

| | |
|---|---|
| Y-4O-O4 | 10,00 % |
| CCY-3-O2 | 5,00 % |
| CCY-3-O3 | 3,50 % |
| CPY-3-O2 | 5,50 % |
| PTP-302FF | 3,50 % |
| CPTP-302FF | 5,00 % |
| CPTP-502FF | 5,00 % |
| CCH-301 | 5,00 % |
| CC-4-V | 15,00 % |
| CC-3-V1 | 8,00 % |
| CCP-V-1 | 13,00 % |
| CCP-V2-1 | 13,00 % |
| BCH-32 | 5,00 % |
| CPTP-3-1 | 3,50 % |
| Klärpunkt [°C]: | 100 |
| Δn [589 nm, 20°C]: | 0,1203 |
| Δε [1 kHz, 20°C]: | -2,0 |
| ε_{∥} [1 kHz, 20°C]: | 3,4 |
| ε_{∥} [1 kHz, 20°C]: | 5,4 |
| γ₁ [mPa·s, 20°C]: | 117 |
| K₁ [pN, 20°C]: | 15,6 |
| K₃ [pN, 20°C]: | 18,5 |
| V₀ 20°C, V]: | 3,17 |

### Beispiel 205

| | |
|---|---|
| BCH-32 | 16,00 % |
| BCH-52 | 6,50 % |
| CCY-3-O1 | 5,00 % |
| CCY-3-O2 | 8,00 % |
| CCY-3-O3 | 6,00 % |
| CCY-4-O2 | 8,00 % |
| CCY-5-O2 | 7,00 % |
| CY-3-O4 | 13,00 % |
| PY-3-O2 | 5,50 % |
| PY-4-O2 | 9,00 % |
| PYP-2-3 | 8,00 % |
| PYP-2-4 | 8,00 % |
| Klärpunkt [°C]: | 10,5 |
| Δn [589 nm, 20°C]: | 0,1503 |
| Δε [1 kHz, 20°C]: | -4,2 |
| [1 kHz, 20°C]: | 3,8 |
| ε_{┴} [1 kHz, 20°C]: | 8,0 |
| γ₁ [mPa·s, 20°C]: | 297 |
| K₁ [pN, 20°C]: | 18,3 |
| K₃ [pN, 20°C]: | 17,3 |
| V₀ [20°C, V]: | 2,13 |

### Beispiel 205a

Die Mischung gemäß Beispiel 205 enthält zusätzlich

| | |
|---|---|
| 0,015 % | 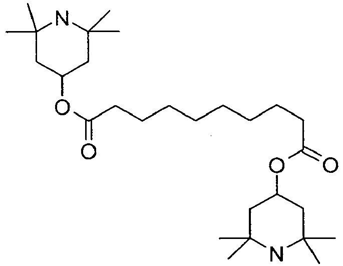 |
| 0,015 % | 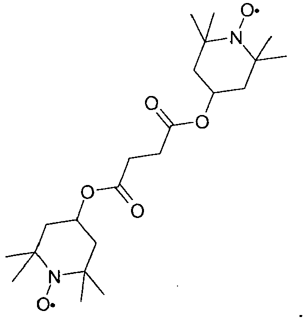 |

### Beispiel 206

| | |
|---|---|
| CC-3-V | 35,50 % |
| CCY-3-O2 | 6,00 % |
| CCY-3-O3 | 6,00 % |
| CCY-4-O2 | 6,00 % |
| CCY-5-O2 | 3,50 % |
| CPY-2-O2 | 10,00 % |
| CPY-3-O2 | 9,00 % |
| CY-3-O4 | 10,00 % |
| CY-5-O2 | 9,00 % |
| PGIGI-3-F | 5,00 % |
| Klärpunkt [°C]: | 79,8 |
| Δn [589 nm, 20°C]: | 0,0962 |
| Δε [1 kHz, 20°C]: | -3,4 |
| ε_{∥} [1 kHz, 20°C]: | 3,6 |
| ε_{┴} [1 kHz, 20°C]: | 7,0 |
| γ₁ [mPa·s, 20°C]: | 111 |
| K₁ [pN, 20°C]: | 13,3 |
| K₃ [pN, 20°C]: | 15,2 |
| V₀ [20°C, V]: | 2,23 |

### Beispiel 207

| | |
|---|---|
| CC-3-V | 31,50 % |
| CCP-V-1 | 5,00 % |
| CCY-3-O2 | 6,00 % |
| CCY-3-O3 | 6,00 % |
| CCY-4-O2 | 5,50 % |
| CPY-2-O2 | 10,00 % |
| CPY-3-O2 | 10,00 % |
| CY-3-O4 | 7,00 % |
| CY-5-O2 | 7,00 % |
| PGIGI-3-F | 5,00 % |
| PY-3-O2 | 7,00 % |
| Klärpunkt [°C]: | 79,6 |
| Δn [589 nm, 20°C]: | 0,1044 |
| Δε [1 kHz, 20°C]: | -3,4 |
| ε_{∥} [1 kHz, 20°C]: | 3,6 |
| ε_{┴} [1 kHz, 20°C]: | 7,0 |
| γ₁ [mPa·s, 20°C]: | 115 |
| K₁ [pN, 20°C]: | 13,3 |
| K₃ [pN, 20°C]: | 15,2 |
| V₀ [20°C, V]: | 2,24 |

### Beispiel 208

| | |
|---|---|
| CC-3-V | 36,50 % |
| CCP-V-1 | 3,00 % |
| CCY-3-O1 | 6,50 % |
| CCY-3-O2 | 3,50 % |
| CCY-4-O2 | 5,00 % |
| CLY-3-O3 | 9,00 % |
| CPY-2-O2 | 11,00 % |
| CPY-3-O2 | 9,00 % |
| CY-3-O2 | 3,00 % |
| PY-3-O2 | 13,50 % |
| Klärpunkt [°C]: | 84,9 |
| Δn [589 nm, 20°C]: | 0,1054 |
| Δε [1 kHz, 20°C]: | -3,5 |
| ε_{∥} [1 kHz, 20°C]: | 3,5 |
| ε_{┴} [1 kHz, 20°C]: | 7,0 |
| γ₁ [mPa·s, 20°C]: | 108 |
| K₁ [pN, 20°C]: | 14,4 |
| K₃ [pN, 20°C]: | 15,7 |
| V₀ [20°C, V]: | 2,24 |

### Beispiel 209

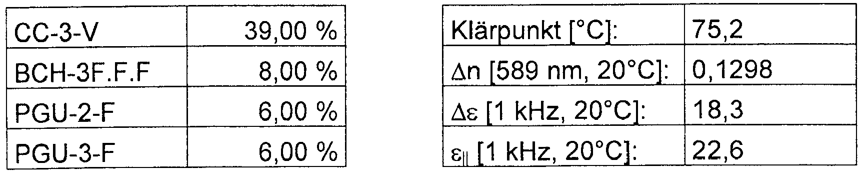

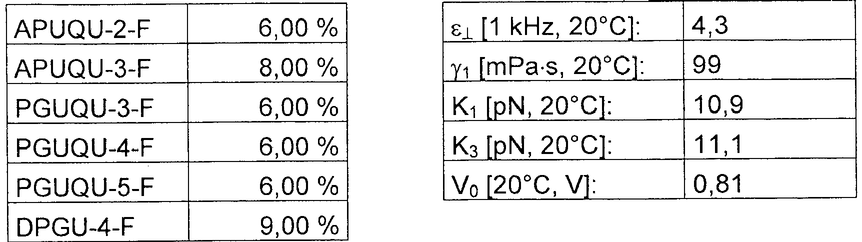

### Beispiel 210

| | |
|---|---|
| CC-3-V | 38,50 % |
| CCY-3-O1 | 4,50 % |
| CCY-3-O2 | 4,00 % |
| CCY-4-O2 | 8,00 % |
| CLY-3-O2 | 8,00 % |
| CPY-2-O2 | 10,00 % |
| CPY-3-O2 | 9,00 % |
| PY-1-O4 | 7,50 % |
| PY-3-O2 | 6,00 % |
| Y-4O-O4 | 4,50 % |
| Klärpunkt [°C]: | 74,9 |
| Δn [589 nm, 20°C]: | 0,1012 |
| Δε [1 kHz, 20°C]: | -3,7 |
| ε_{∥} [1 kHz, 20°C]: | 3,7 |
| ε_{⊥} [1 kHz, 20°C]: | 7,4 |
| γ₁ [mPa·s, 20°C]: | 94 |
| K₁ [pN, 20°C]: | 13,4 |
| K₃ [pN, 20°C]: | 14,4 |
| V₀ [20°C, V]: | 2,08 |
| LTS (bulk) [-20°C] | > 1000 h |

### Beispiel 210a

Die Mischung gemäß Beispiel 210 enthält zusätzlich

| | |
|---|---|
| 0,25 % | 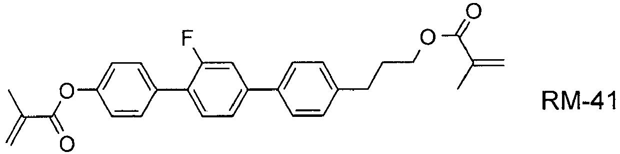 |

und

| | |
|---|---|
| 0,25 % | 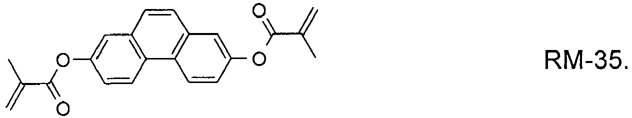 |

### Beispiel 211

| | |
|---|---|
| CC-3-V | 40,50 % |
| CC-3-V1 | 5,00 % |
| CCPC-33 | 3,00 % |
| CCY-3-O2 | 9,00 % |
| CPY-2-O2 | 9,00 % |
| CPY-3-O2 | 9,50 % |
| PP-1-2V1 | 6,00 % |
| PY-3-O2 | 7,00 % |
| PYP-2-3 | 8,00 % |
| Y-4O-O4 | 3,00 % |
| Klärpunkt [°C]: | 74,8 |
| Δn [589 nm, 20°C]: | 0,1073 |
| Δε [1 kHz, 20°C]: | -1,9 |
| ε_{∥} [1 kHz, 20°C]: | 3,2 |
| ε_{┴} [1 kHz, 20°C]: | 5,2 |
| γ₁ [mPa·s, 20°C]: | 63 |
| K₁ [pN, 20°C]: | 12,6 |
| K₃ [pN, 20°C]: | 14,1 |
| V₀ [20°C, V]: | 2,86 |

### Beispiel 211a

Die Mischung gemäß Beispiel 211 enthält zusätzlich

| | |
|---|---|
| 0,04 % | 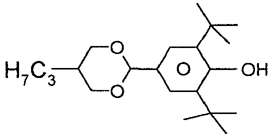 |

und

| | |
|---|---|
| 0,02 % | 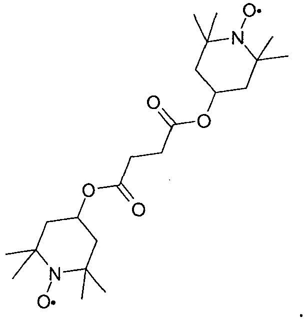 |

### Beispiel 212

| | |
|---|---|
| APUQU-2-F | 2,50 % |
| APUQU-3-F | 7,00 % |
| PGUQU-3-F | 4,00 % |
| PGUQU-4-F | 4,00 % |
| PUQU-3-F | 4,00 % |
| CCP-V-1 | 6,00 % |
| CCP-V2-1 | 14,00 % |
| CCGU-3-F | 3,50 % |
| CCQU-3-F | 10,00 % |
| PCH-302 | 6,50 % |
| CC-3-V | 25,00 % |
| CC-3-V1 | 8,00 % |
| CCP-30CF₃ | 5,00 % |
| PPGU-3-F | 0,50 % |
| Klärpunkt [°C]: | 97,5 |
| Δn [589 nm, 20°C]: | 0,1000 |
| Δε [1 kHz, 20°C]: | 8,0 |
| ε_{∥} [1 kHz, 20°C]: | 11,1 |
| ε_{⊥} [1 kHz, 20°C]: | 3,1 |
| γ₁ [mPa·s, 20°C]: | 93 |
| K₁ [pN, 20°C]: | 15,3 |
| K₃ [pN, 20°C]: | 17,6 |
| V₀ [20°C, V]: | 1,45 |

### Beispiel 212a

Die Mischung gemäß Beispiel 212 enthält zusätzlich

| | |
|---|---|
| 0,25 % | 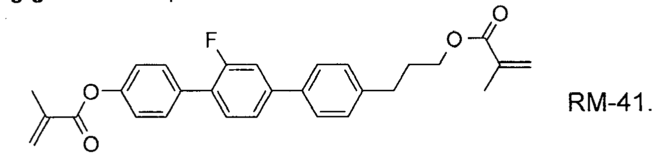 |

### Beispiel 213

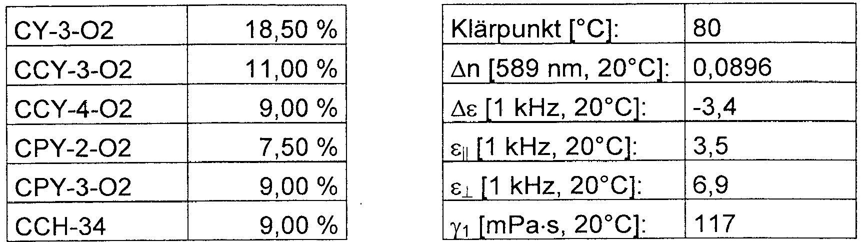

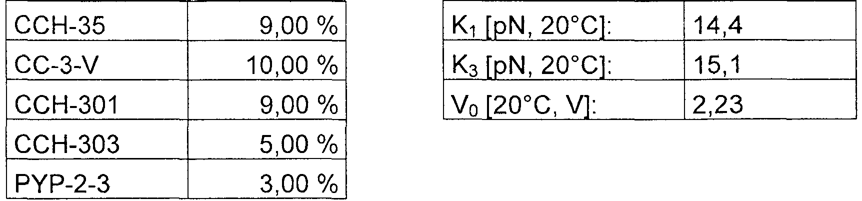

### Beispiel 213a

Die Mischung gemäß Beispiel 213 enthält zusätzlich

| | |
|---|---|
| 0,2 % | 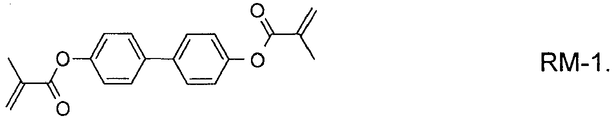 |

### Beispiel 214

| | |
|---|---|
| CY-3-O2 | 10,50 % |
| PY-1-O4 | 5,00 % |
| PY-3-O2 | 7,50 % |
| PY-4-O2 | 4,00 % |
| CCY-3-O1 | 5,50 % |
| CCY-3-O2 | 5,00 % |
| CCY-4-O2 | 4,00 % |
| CLY-3-O2 | 9,00 % |
| CPY-2-O2 | 9,00 % |
| CPY-3-O2 | 9,00 % |
| CC-3-V | 23,50 % |
| CC-3-V1 | 7,00 % |
| CBC-33F | 1,00 % |
| Klärpunkt [°C]: | 79,7 |
| Δn [589 nm, 20°C]: | 0,1113 |
| Δε [1 kHz, 20°C]: | -4,4 |
| K₁ [pN, 20°C]: | 14,5 |
| K₃ [pN, 20°C]: | 16,7 |
| V₀ [20°C, V]: | 2,05 |

### Beispiel 215

| | |
|---|---|
| APUQU-3-F | 3,00 % |
| CC-3-V1 | 7,75 % |
| CC-4-V | 10,00 % |
| CC-5-V | 9,25 % |
| CCGU-3-F | 7,00 % |
| CCH-34 | 3,00 % |
| CCP-30CF₃ | 2,50 % |
| CCP-V-1 | 14,00 % |
| CCP-V2-1 | 9,50 % |
| PCH-301 | 11,00 % |
| PGP-2-2V | 2,00 % |
| PGUQU-3-F | 5,00 % |
| PPGU-3-F | 0,50 % |
| PUQU-3-F | 12,00 % |
| APUQU-2-F | 3,50 % |
| Klärpunkt [°C]: | 90,5 |
| Δn [589 nm, 20°C]: | 0,1057 |
| Δε [1 kHz, 20°C]: | 7,4 |
| γ₁ [mPa·s, 20°C]: | 91 |
| K₁ [pN, 20°C]: | 13,6 |
| K₃ [pN, 20°C]: | 15,5 |
| V₀ [20°C, V]: | 1,43 |

### Beispiel 216

| | |
|---|---|
| CC-3-V | 27,00 % |
| CCY-3-1 | 9,50 % |
| CCP-3-1 | 8,00 % |
| CLY-3-O2 | 6,00 % |
| CPY-2-O2 | 10,50 % |
| CPY-3-O2 | 10,50 % |
| CY-3-O2 | 15,00 % |
| PY-3-O2 | 13,50 % |
| Klärpunkt [°C]: | 74,9 |
| Δn [589 nm, 20°C]: | 0,1093 |
| Δε [1 kHz, 20°C]: | -3,8 |
| ε_{∥} [1 kHz, 20°C]: | 3,7 |
| ε_{┴} [1 kHz, 20°C]: | 7,5 |
| γ₁ [mPa·s, 20°C]: | 108 |
| K₁ [pN, 20°C]: | 14,1 |
| K₃ [pN, 20°C]: | 15,8 |
| V₀ [20°C, V]: | 2,16 |

### Beispiel 217

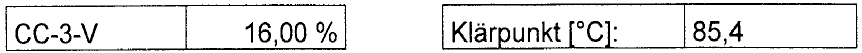

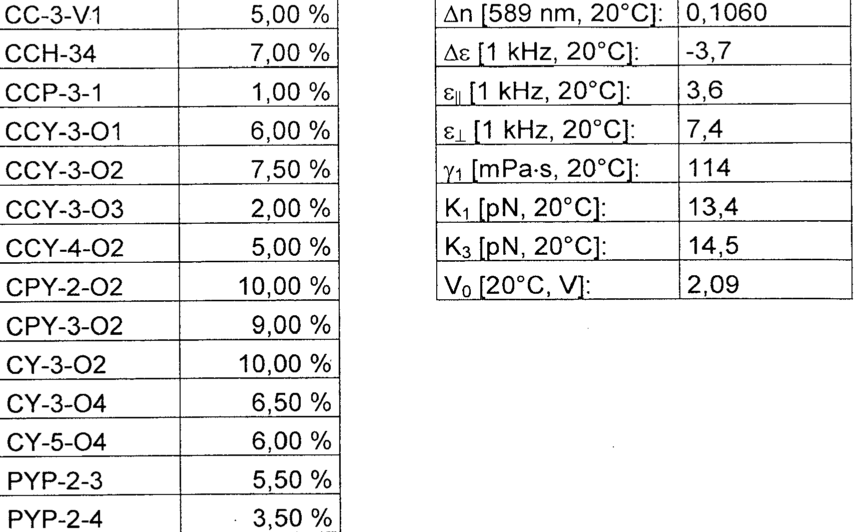

### Beispiel 217a

Die Mischung gemäß Beispiel 217 enthält zusätzlich

| | |
|---|---|
| 0,04 % | 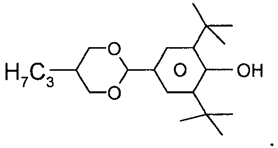 |

### Beispiel 218

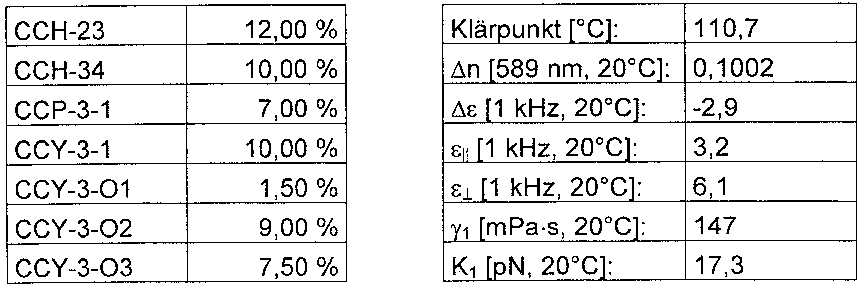

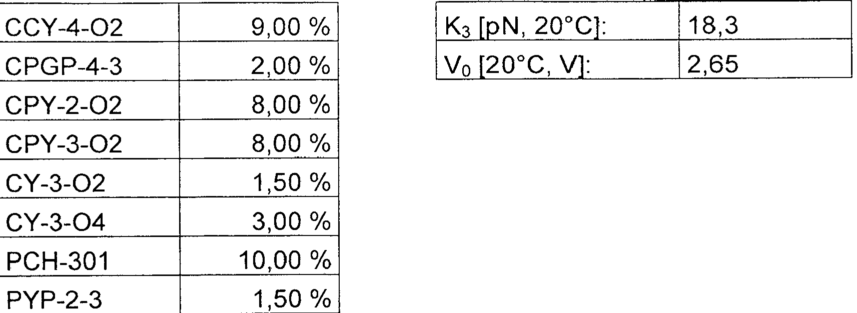

### Beispiel 218a

Die Mischung gemäß Beispiel 218 enthält zusätzlich

| | |
|---|---|
| 0,04 % | 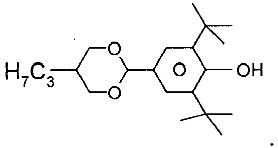 |

### Beispiel 219

| | |
|---|---|
| BCH-32 | 1,50 % |
| CC-3-V | 19,50 % |
| CC-3-V1 | 5,50 % |
| CCP-3-1 | 8,00 % |
| CCP-3-3 | 4,50 % |
| CLY-3-O2 | 6,00 % |
| CPY-2-O2 | 10,50 % |
| CPY-3-O2 | 10,50 % |
| CY-3-O2 | 15,00 % |
| CY-5-O2 | 9,00 % |
| PY-3-O2 | 10,00 % |
| Klärpunkt [°C]: | 74,3 |
| Δn [589 nm, 20°C]: | 0,1089 |
| Δε [1 kHz, 20°C]: | -3,8 |
| ε_{∥} [1 kHz, 20°C]: | 3,7 |
| ε_{┴} [1 kHz, 20°C]: | 7,5 |
| γ₁ [mPa·s, 20°C]: | 115 |
| K₁ [pN, 20°C]: | 13,7 |
| K₃ [pN, 20°C]: | 16,1 |
| V₀ [20°C, V]: | 2,18 |

### Beispiel 220

| | |
|---|---|
| CY-3-O2 | 15,00 % |
| CY-5-O2 | 6,50 % |
| CCY-3-O2 | 11,00 % |
| CPY-2-O2 | 5,50 % |
| CPY-3-O2 | 10,50 % |
| CC-3-V | 28,50 % |
| CC-3-V1 | 10,00 % |
| PYP-2-3 | 12,50 % |
| PPGU-3-F | 0,50 % |
| Klärpunkt [°C]: | 74,7 |
| Δn [589 nm, 20°C]: | 0,1082 |
| Δε [1 kHz, 20°C]: | -3,0 |
| ε_{∥} [1 kHz, 20°C]: | 3,6 |
| ε_{┴} [1 kHz, 20°C]: | 6,6 |
| γ₁ [mPa·s, 20°C]: | 97 |
| K₁ [pN, 20°C]: | 12,9 |
| K₃ [pN, 20°C]: | 15,7 |
| V₀ [20°C, V]: | 2,42 |

### Beispiel 221

| | |
|---|---|
| PGUQU-3-F | 5,00 % |
| CCQU-3-F | 8,00 % |
| CCQU-5-F | 4,00 % |
| PUQU-3-F | 13,50 % |
| APUQU-2-F | 3,00 % |
| APUQU-3-F | 6,00 % |
| CC-3-V | 25,50 % |
| CC-3-V1 | 6,00 % |
| CCP-V-1 | 13,00 % |
| CCP-V2-1 | 6,00 % |
| PPGU-3-F | 0,50 % |
| BCH-3F.F | 7,50 % |
| BCH-2F.F | 2,00 % |
| Klärpunkt [°C]: | 84,8 |
| Δn [589 nm, 20°C]: | 0,1035 |
| Δε [1 kHz, 20°C]: | 10,1 |
| ε_{∥}[1 kHz, 20°C]: | 13,5 |
| ε_{┴} [1 kHz, 20°C]: | 3,4 |
| γ₁ [mPa·s, 20°C]: | 86 |
| K₁ [pN, 20°C]: | 12,3 |
| K₃ [pN, 20°C]: | 15,0 |
| V₀ [20°C, V]: | 1,17 |

### Beispiel 221a

Die Mischung gemäß Beispiel 221 enthält zusätzlich

| | |
|---|---|
| 0,25 % | 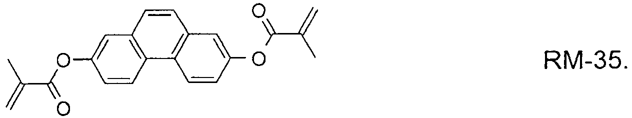 |

### Beispiel 222

| | |
|---|---|
| CY-3-O2 | 12,00 % |
| CY-5-O2 | 12,00 % |
| CCY-3-O3 | 5,00 % |
| CCY-4-O2 | 5,00 % |
| CPY-2-O2 | 10,00 % |
| CPY-3-O2 | 10,00 % |
| CCY-2-1 | 4,00 % |
| CC-3-V | 16,00 % |
| CCH-23 | 10,00 % |
| CCH-34 | 4,00 % |
| CCP-V-1 | 4,00 % |
| PGP-2-5 | 2,00 % |
| CPGP-5-2 | 3,00 % |
| CPGP-5-3 | 3,00 % |
| Klärpunkt [°C]: | 85,4 |
| Δn[589 nm, 20°C]: | 0,1039 |

### Beispiel 223

| | |
|---|---|
| CC-3-V | 41,50 % |
| CCY-3-O1 | 2,50 % |
| CCY-3-O2 | 11,50 % |
| CCY-3-O3 | 5,00 % |
| CPY-2-O2 | 5,00 % |
| CPY-3-O2 | 12,00 % |
| CY-3-O2 | 9,50 % |
| PY-3-O2 | 7,00 % |
| PY-4-O2 | 3,00 % |
| PYP-2-3 | 3,00 % |
| Klärpunkt [°C]: | 74,5 |
| Δn [589 nm, 20°C]: | 0,0984 |
| Δε [1 kHz, 20°C]: | -3,3 |
| ε_{∥} [1 kHz, 20°C]: | 3,5 |
| ε_{⊥} [1 kHz, 20°C]: | 6,7 |
| γ₁ [mPa·s, 20°C]: | 89 |
| K₁ [pN, 20°C]: | 13,2 |
| K₃ [pN, 20°C]: | 15,2 |
| V₀ [20°C, V]: | 2,29 |

### Beispiel 223a

Die Mischung gemäß Beispiel 223 enthält zusätzlich 0,001 % Irganox® 1076 (Octadecyl-3-(3,5-di-tert. butyl-4-hydroxyphenyl)-proprionat, Fa. BASF) und

| | |
|---|---|
| 0,4 % | 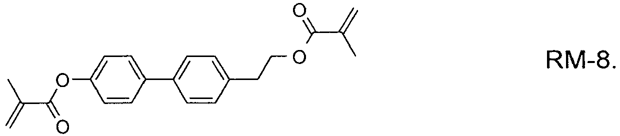 |

### Beispiel 224

| | |
|---|---|
| CC-3-V | 30,50 % |
| CC-3-V1 | 4,50 % |
| CCY-3-O1 | 6,00 % |
| CCY-3-O2 | 8,00 % |
| CLY-3-O2 | 8,00 % |
| CPY-2-O2 | 8,00 % |
| CPY-3-O2 | 12,00 % |
| CY-3-O2 | 15,00 % |
| PY-3-O2 | 8,00 % |
| Klärpunkt [°C]: | 80,1 |
| Δn [589 nm, 20°C]: | 0,1033 |
| Δε [1 kHz, 20°C]: | -4,0 |
| ε_{∥} [1 kHz, 20°C]: | 3,6 |
| ε_{⊥} [1 kHz, 20°C]: | 7,6 |
| γ₁ [mPa·s, 20°C]: | 113 |
| K₁ [pN, 20°C]: | 14,4 |
| K₃ [pN, 20°C]: | 17,0 |
| V₀ [20°C, V]: | 2,16 |

### Beispiel 225

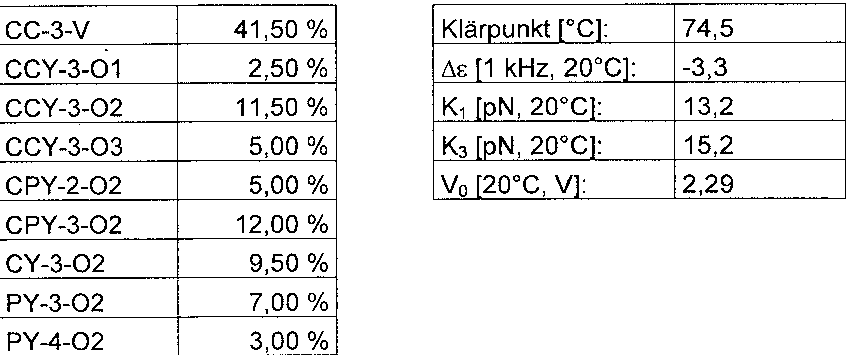

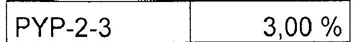

### Beispiel 226

| | |
|---|---|
| CC-3-V | 26,00 % |
| CCY-3-O2 | 6,00 % |
| CCY-3-O3 | 6,00 % |
| CCY-4-O2 | 6,00 % |
| CCY-5-O2 | 6,00 % |
| CPY-2-O2 | 6,00 % |
| CPY-3-O2 | 6,00 % |
| PYP-2-3 | 7,00 % |
| CY-3-O2 | 15,00 % |
| CY-5-O2 | 12,00 % |
| BCH-32 | 4,00 % |
| Klärpunkt [°C]: | 80,5 |
| Δn [589 nm, 20°C] | 0,1040 |
| Δε [1 kHz, 20°C]: | -4,0 |
| ε_{∥} [1 kHz, 20°C]: | 3,7 |
| ε_{⊥} [1 kHz, 20°C]: | 7,7 |
| γ₁ [mPa·s, 20°C]: | 133 |
| K₁ [pN, 20°C]: | 13,6 |
| K₃ [pN, 20°C]: | 15,4 |
| V₀ [20°C, V]: | 2,07 |
| LTS (bulk) [-20°C] | > 1000 h |

### Beispiel 226a

Die Mischung gemäß Beispiel 226 enthält zusätzlich

| | |
|---|---|
| 0,3 % | 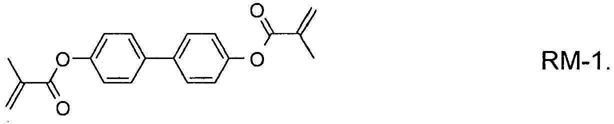 |

### Beispiel 227

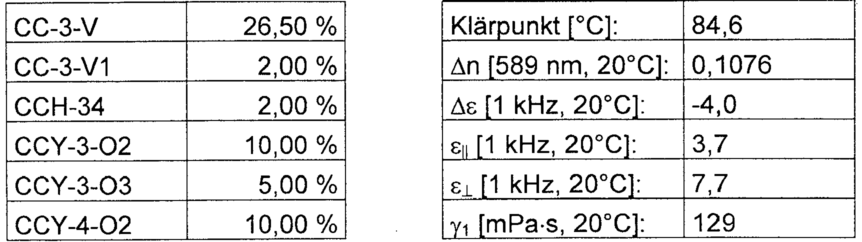

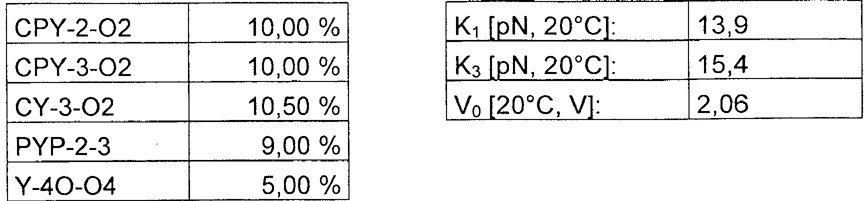

### Beispiel 227a

Die Mischung gemäß Beispiel 227 enthält zusätzlich

| | |
|---|---|
| 0,04 % | 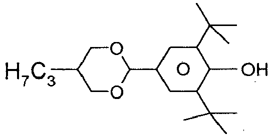 |

und

| | |
|---|---|
| 0,015 % | 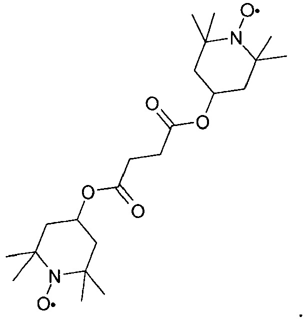 |

### Beispiel 228

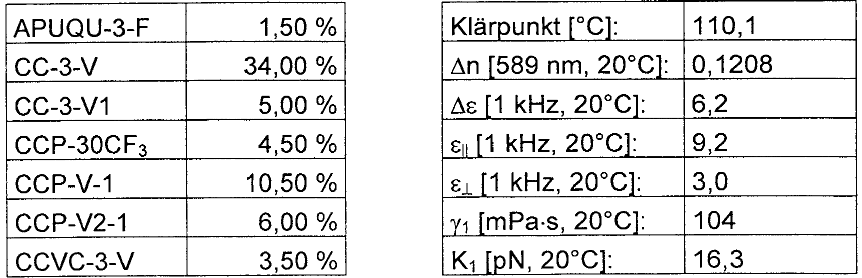

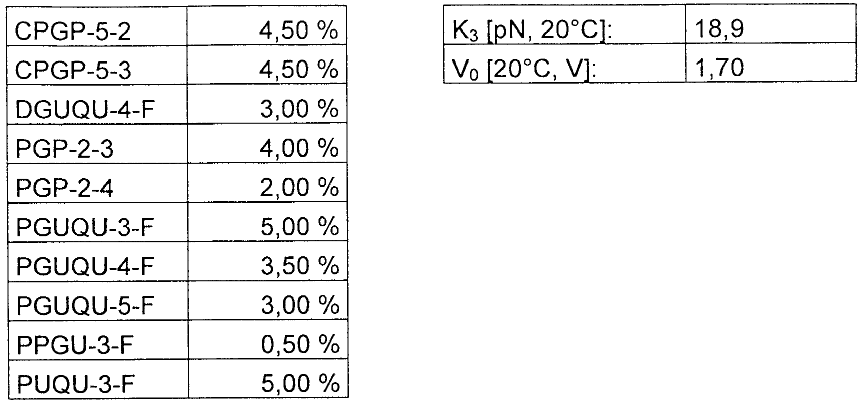

### Beispiel 229

| | |
|---|---|
| APUQU-3-F | 1,50 % |
| CC-3-V | 35,50 % |
| CCP-30CF₃ | 4,00 % |
| CCP-V-1 | 12,00 % |
| CCP-V2-1 | 4,50 % |
| CCVC-3-V | 4,00 % |
| CPGP-5-2 | 5,00 % |
| CPGP-5-3 | 5,00 % |
| DGUQU-4-F | 3,00 % |
| PGP-2-3 | 4,00 % |
| PGP-2-4 | 2,00 % |
| PGUQU-3-F | 5,00 % |
| PGUQU-4-F | 3,50 % |
| PGUQU-5-F | 3,00 % |
| PPGU-3-F | 0,50 % |
| PUQU-3-F | 5,00 % |
| PP-1-2V1 | 2,50 % |
| Klärpunkt [°C]: | 110 |
| Δn [589 nm, 20°C]: | 0,1257 |
| Δε [1 kHz, 20°C]: | 6,3 |
| ε_{∥} [1 kHz, 20°C]: | 9,3 |
| ε_{⊥} f1 kHz, 20°Cl: | 3,0 |
| γ₁ [mPa·s, 20°C]: | 104 |
| K₁ [pN, 20°C]: | 16,1 |
| K₃ [pN, 20°C]: | 18,7 |
| V₀ [20°C, V]: | 1,69 |

### Beispiel 230

| | |
|---|---|
| CY-3-O2 | 5,00 % |
| CY-3-O4 | 15,00 % |
| CCY-3-O2 | 6,00 % |
| CCY-3-O3 | 6,00 % |
| CPY-2-O2 | 3,00 % |
| PTP-102 | 5,00 % |
| PPTUI-3-2 | 15,00 % |
| PPTUI-3-4 | 11,00 % |
| PTP-302FF | 12,00 % |
| PTP-502FF | 12,00 % |
| CPTP-302FF | 5,00 % |
| CPTP-502FF | 5,00 % |
| Klärpunkt [°C]: | 102 |
| Δn [589 nm, 20°C]: | 0,2503 |
| Δε [1 kHz, 20°C]: | -4,0 |
| ε_{∥} [1 kHz, 20°C]: | 4,3 |
| ε_{⊥} [1 kHz, 20°C]: | 8,3 |
| γ₁ [mPa·s, 20°C]: | 392 |
| K₁ [pN, 20°C]: | 19,5 |
| K₃ [pN, 20°C]: | 24,0 |
| V₀ [20°C, V]: | 2,57 |

### Beispiel 231

| | |
|---|---|
| CC-3-V | 35,00 % |
| CCP-3-1 | 7,50 % |
| CCPC-33 | 2,00 % |
| CCY-3-O2 | 7,00 % |
| CCY-4-O2 | 7,50 % |
| CPY-2-O2 | 8,50 % |
| CPY-3-O2 | 9,00 % |
| PP-1-2V1 | 5,50 % |
| PY-3-O2 | 8,00 % |
| PYP-2-3 | 5,00 % |
| Y-4O-O4 | 5,00 % |
| Klärpunkt [°C]: | 79,6 |
| Δn [589 nm, 20°C]: | 0,1095 |
| Δε [1 kHz, 20°C]: | -2,6 |
| ε_{∥} [1 kHz, 20°C]: | 3,5 |
| ε_{⊥} [1 kHz, 20°C]: | 6,1 |
| γ₁ [mPa·s, 20°C]: | 92 |
| K₁ [pN, 20°C]: | 14,5 |

### Beispiel 231a

Die Mischung gemäß Beispiel 231 enthält zusätzlich

| | |
|---|---|
| 0,04 % | 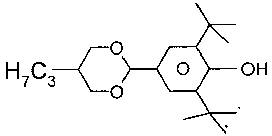 |

und

| | |
|---|---|
| 0,02 % | 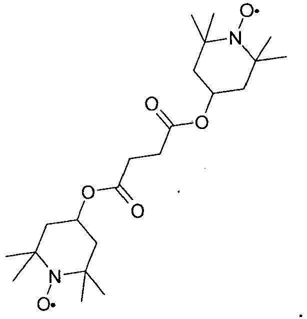 |

### Beispiel 232

| | |
|---|---|
| CY-3-O4 | 25,00 % |
| CY-5-O2 | 9,00 % |
| CCY-3-O2 | 7,00 % |
| CCY-3-O3 | 4,50 % |
| CPY-2-O2 | 10,00 % |
| CPY-3-O2 | 10,00 % |
| PYP-2-3 | 14,00 % |
| PYP-2-4 | 10,00 % |
| CCP-V-1 | 3,00 % |
| BCH-32 | 2,00 % |
| PP-1-2V1 | 3,50 % |
| PGP-2-3 | 2,00 % |
| Klärpunkt [°C:] | 81,2 |
| Δn [589 nm, 20°C]: | 0,1531 |
| Δε [1 kHz, 20°C]: | -5,0 |
| ε_{∥} [1 kHz, 20°C]: | 4,1 |
| ε_{⊥} [1 kHz, 20°C]: | 9,1 |
| γ₁ [mPa·s, 20°C]: | 298 |
| K₁ [pN, 20°C]: | 13,1 |
| K₃ [pN, 20°C]: | 15,9 |
| V₀ [20°C, V]: | 1,89 |

### Beispiel 232a

Die Mischung gemäß Beispiel 232 enthält zusätzlich

| | |
|---|---|
| 10 % | 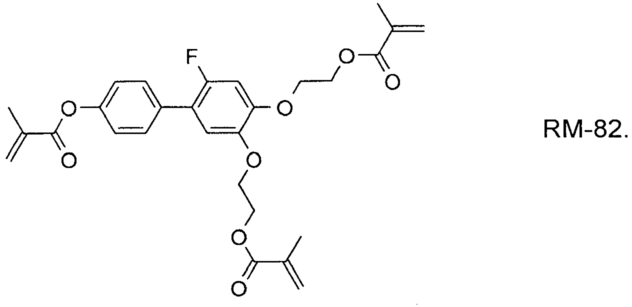 |

### Beispiel 233

| | |
|---|---|
| CC-3-V | 29,00 % |
| CCY-3-O1 | 8,00 % |
| CCY-3-O2 | 6,00 % |
| CCY-4-O2 | 2,00 % |
| CLY-3-O2 | 8,50 % |
| CLY-3-O3 | 7,50 % |
| CPY-2-O2 | 10,00 % |
| CPY-3-O2 | 7,50 % |
| CY-3-O2 | 6,50 % |
| PY-3-O2 | 10,00 % |
| Y-4O-O4 | 5,00 % |
| Klärpunkt [°C]: | 80,1 |
| Δn [589 nm, 20°C]: | 0,1033 |
| Δε [1 kHz, 20°C]: | -4,5 |
| ε_{∥} [1 kHz, 20°C]: | 4,0 |
| ε_{⊥} [1 kHz, 20°C]: | 8,4 |
| γ₁ [mPa·s, 20°C]: | 98 |
| K₁ [pN, 20°C]: | 13,2 |
| K₃ [pN, 20°C]: | 14,6 |
| V₀ [20°C, V]: | 1,91 |

### Beispiel 233a

Die Mischung gemäß Beispiel 233 enthält zusätzlich

| | |
|---|---|
| 0,04 % | 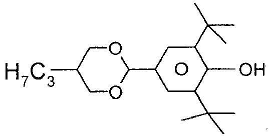 |

und

| | |
|---|---|
| 0,02 % | 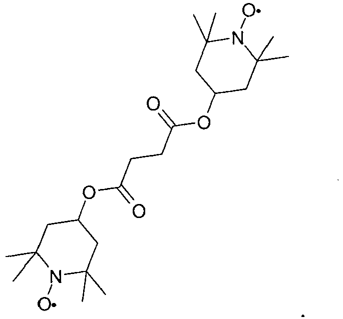 |

### Beispiel 234

| | |
|---|---|
| CC-3-V | 34,00 % |
| CCPC-33 | 1,00 % |
| CCY-3-1 | 4,00 % |
| CCY-3-O2 | 10,00 % |
| CCY-4-O2 | 9,50 % |
| CPY-2-O2 | 9,00 % |
| CPY-3-O2 | 10,00 % |
| PP-1-2V1 | 1,50 % |
| PY-3-O2 | 10,00 % |
| PYP-2-3 | 6,00 % |
| Y-4O-O4 | 5,00 % |
| Klärpunkt [°C]: | 79,7 |
| Δn [589 nm, 20°C]: | 0,1095 |
| Δε [1 kHz, 20°C]: | -3,5 |
| ε_{∥} [1 kHz, 20°C]: | 3,7 |
| ε_{⊥} [1 kHz, 20°C]: | 7,2 |
| γ₁ [mPa·s, 20°C]: | 105 |
| K₁ [pN, 20°C]: | 14,0 |

### Beispiel 234a

Die Mischung gemäß Beispiel 234 enthält zusätzlich

| | |
|---|---|
| 0,04 % | 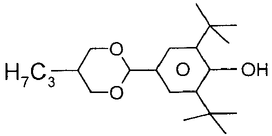 |

und

| | |
|---|---|
| 0,02 % | 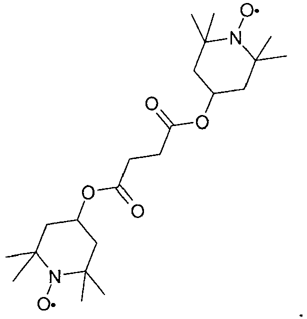 |

### Beispiel 235

| | |
|---|---|
| CC-3-V | 19,00 % |
| CCY-3-O1 | 5,00 % |
| CCY-3-O2 | 7,00 % |
| CCY-3-O3 | 12,00 % |
| CCY-4-O2 | 8,00 % |
| CPY-2-O2 | 9,50 % |
| CPY-3-O2 | 10,00 % |
| CY-3-O2 | 12,00 % |
| CY-3-O4 | 3,50 % |
| PP-1-3 | 7,00 % |
| PP-1-4 | 7,00 % |
| Klärpunkt [°C]: | 80,2 |
| Δn 589 nm, 20°C]: | 0,1104 |
| Δε [1 kHz, 20°C]: | -3,7 |
| ε_{∥} [1 kHz, 20°C]: | 3,6 |
| ε_{⊥} [1 kHz, 20°C]: | 7,3 |
| γ₁ [mPa·s, 20°C]: | 143 |
| K₁ [pN, 20°C]: | 12,9 |
| K₃ [pN, 20°C]: | 14,5 |
| V₀ [20°C, V]: | 2,09 |

### Beispiel 236

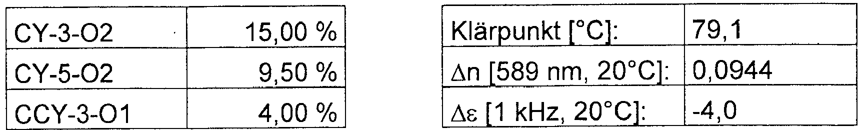

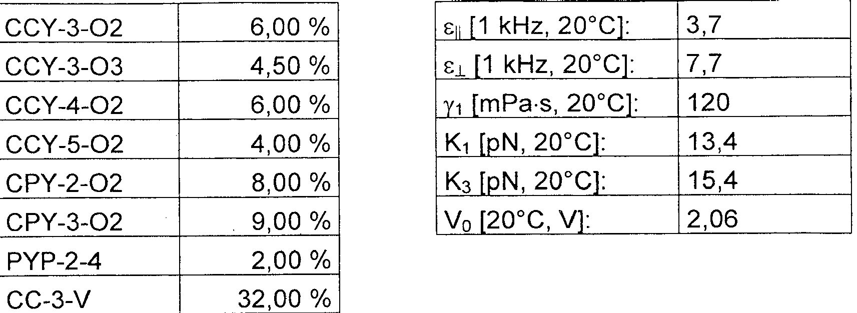

### Beispiel 236a

Die Mischung gemäß Beispiel 236 enthält zusätzlich

| | |
|---|---|
| 0,015 % | 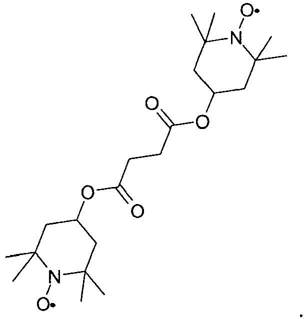 |

### Beispiel 237

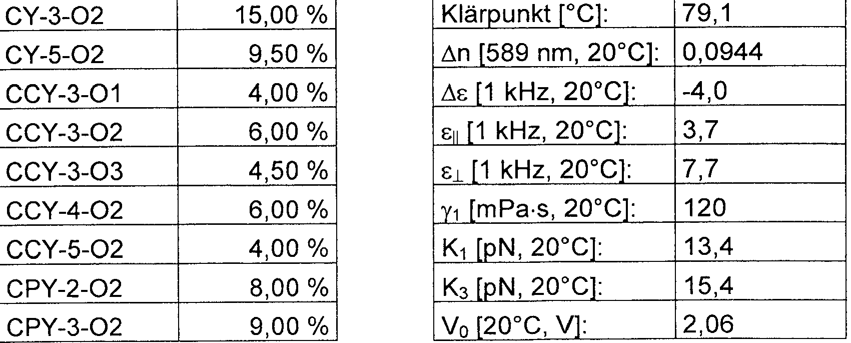

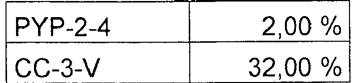

### Beispiel 237a

Die Mischung gemäß Beispiel 237 enthält zusätzlich

| | |
|---|---|
| 0,015 % | 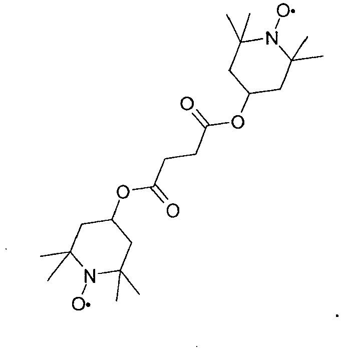 |

### Beispiel 238

| | |
|---|---|
| APUQU-3-F | 4,00 % |
| CC-3-V | 41,00 % |
| CC-3-V1 | 6,50 % |
| CCP-V-1 | 12,00 % |
| CCP-V2-1 | 11,00 % |
| CPGP-5-3 | 2,50 % |
| PGUQU-3-F | 5,00 % |
| PGUQU-4-F | 4,00 % |
| PGUQU-5-F | 3,50 % |
| PUQU-3-F | 10,50 % |
| Klärpunkt [°C]: | 85,7 |
| Δn [589 nm, 20°C]: | 0,1004 |
| Δε [1 kHz, 20°C]: | 6,8 |
| ε_{∥} [1 kHz, 20°C]: | 9,8 |
| ε_{⊥} [1 kHz, 20°C]: | 3,0 |
| γ₁ [mPa·s, 20°C]: | 69 |
| K₁ [pN, 20°C]: | 13,0 |
| K₃ [pN, 20°C]: | 16,6 |
| V₀ [20°C, V]: | 1,47 |

### Beispiel 239

| | |
|---|---|
| CC-3-V | 32,50 % |
| CC-3-V1 | 1,50 % |
| CCY-3-O1 | 8,50 % |
| CCY-3-O2 | 5,50 % |
| CLY-3-O2 | 10,00 % |
| CPY-3-O2 | 9,50 % |
| PY-3-O2 | 10,50 % |
| CY-3-O2 | 14,00 % |
| PYP-2-3 | 8,00 % |
| Klärpunkt [°C]: | 74,7 |
| Δn [589 nm, 20°C]: | 0,1090 |
| Δε [1 kHz, 20°C]; | -3,8 |
| ε_{∥} [1 kHz, 20°C]: | 3,7 |
| ε_{⊥} [1 kHz, 20°C]: | 7,5 |
| γ₁ [mPa·s, 20°C]: | 102 |
| K₁ [pN, 20°C]: | 13,8 |
| K₃ [pN, 20°C]: | 15,7 |
| V₀ [20°C, V]: | 2,15 |

### Beispiel 240

| | |
|---|---|
| CC-3-V | 33,00 % |
| CCY-3-O1 | 6,00 % |
| CCY-3-O2 | 8,00 % |
| CCY-4-O2 | 2,50 % |
| CPY-2-O2 | 8,00 % |
| CPY-3-O2 | 12,00 % |
| CLY-3-O2 | 8,00 % |
| PY-1-O4 | 1,50 % |
| PY-3-O2 | 10,00 % |
| PY-4-O2 | 8,00 % |
| CY-3-O2 | 3,00 % |
| Klärpunkt [°C]: | 80,2 |
| Δn [589 nm, 20°C]: | 0,1116 |
| Δε [1 kHz, 20°C]: | -4,1 |
| ε_{∥} [1 kHz, 20°C]: | 3,7 |
| ε_{⊥} [1 kHz, 20°C]: | 7,8 |
| γ₁ [mPa·s, 20°C]: | 119 |
| K₁ [pN, 20°C]: | 14,5 |
| K₃ [pN, 20°C]: | 16,1 |
| V₀ [20°C, V]: | 2,09 |

### Beispiel 240a

Die Mischung gemäß Beispiel 240 enthält zusätzlich

| | |
|---|---|
| 0,008 % | 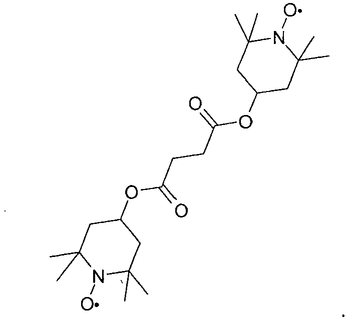 |

### Beispiel 241

| | |
|---|---|
| BCH-3F.F | 5,00 % |
| BCH-3F.F.F | 8,50 % |
| CC-3-V1 | 10,00 % |
| CC-4-V | 12,50 % |
| CCG-V-F | 9,00 % |
| CCP-2F.F.F | 3,50 % |
| CCP-3-1 | 4,50 % |
| CCP-3F.F.F | 10,00 % |
| CCP-V-1 | 12,00 % |
| CCP-V2-1 | 7,00 % |
| ECCP-5F.F | 13,00 % |
| PUQU-3-F | 5,00 % |
| Klärpunkt [°C]: | 101 |
| Δn 589 nm, 20°C]: | 0,0925 |
| Δε [1 kHz, 20°C]: | 5,3 |
| ε_{∥} [1 kHz, 20°C]: | 8,3 |
| γ₁ [mPa·s, 20°C]: | 119 |
| K₁ [pN, 20°C]: | 14,2 |
| K₃ [pN, 20°C]: | 19,9 |
| V₀ [20°C, V]: | 1,73 |

### Beispiel 242

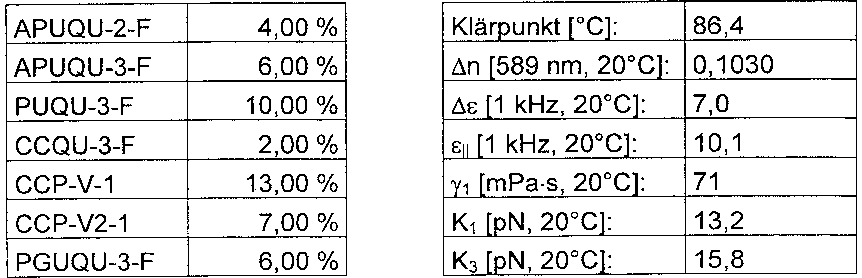

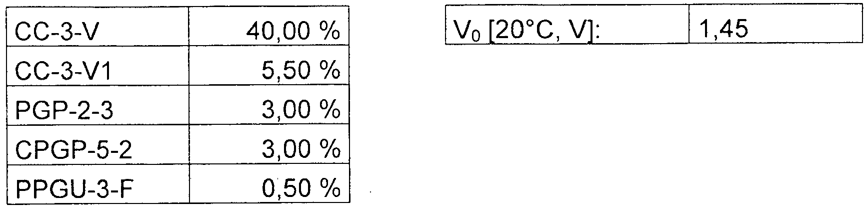

### Beispiel 242a

Die Mischung gemäß Beispiel 242 enthält zusätzlich 0,25 % RM-41

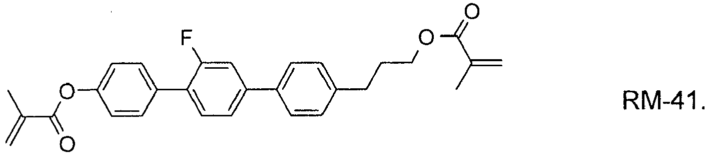

### Beispiel 243

| | |
|---|---|
| Y-4O-O4 | 9,00 % |
| CY-3-O4 | 12,00 % |
| CCY-3-O1 | 5,00 % |
| CCY-3-O2 | 5,50 % |
| CCY-3-O3 | 5,50 % |
| CC-4-V | 15,00 % |
| CC-5-V | 5,50 % |
| CC-3-V1 | 6,50 % |
| CCP-V-1 | 11,00 % |
| CCP-V2-1 | 10,00 % |
| CH-33 | 3,00 % |
| CH-35 | 3,00 % |
| CCPC-33 | 4,50 % |
| CCPC-34 | 4,50 % |
| Klärpunkt [°C]: | 96 |
| Δn [589 nm, 20°C]: | 0,0796 |
| Δε [1 kHz, 20°C]: | -2,3 |
| ε_{∥} [1 kHz, 20°C]: | 3,4 |
| ε_{⊥} [1 kHz, 20°C]: | 5,7 |
| K₁ [pN, 20°C]: | 14,8 |
| K₃ [pN, 20°C]: | 16,6 |
| V₀ [20°C, V]: | 2,85 |

### Beispiel 244

| | |
|---|---|
| Y-4O-O4 | 11,50 % |
| CCY-3-O1 | 4,00 % |
| CCY-3-O2 | 5,00 % |
| CCY-3-O3 | 2,50 % |
| CPY-3-O2 | 4,00 % |
| CC-4-V | 10,00 % |
| CCP-V-1 | 6,00 % |
| CCP-V2-1 | 12,00 % |
| BCH-32 | 5,00 % |
| PTP-302FF | 12,00 % |
| PTP-502FF | 12,00 % |
| CPTP-302FF | 8,00 % |
| CPTP-502FF | 8,00 % |
| Klärpunkt [°C]; | 95 |
| Δn [589 nm, 20°C]: | 0,1697 |
| Δε [1 kHz, 20°C]: | -4,4 |
| ε_{∥} [1 kHz, 20°C]: | 4,1 |
| ε_{⊥} [1 kHz, 20°C]: | 8,5 |
| γ₁ [mPa·s, 20°C]: | 193 |
| K₁ [pN, 20°C]: | 16,8 |
| K₃ [pN, 20°C]: | 19,5 |
| V₀ [20°C, V]: | 2,23 |

### Beispiel 245

| | |
|---|---|
| CY-3-O2 | 10,00 % |
| PY-1-O4 | 5,00 % |
| PY-3-O2 | 6,50 % |
| PY-4-O2 | 3,00 % |
| CCY-3-O1 | 5,00 % |
| CCY-3-O2 | 5,00 % |
| CCY-4-O2 | 3,00 % |
| CLY-3-O2 | 8,00 % |
| CPY-2-O2 | 10,00 % |
| CPY-3-O2 | 10,00 % |
| CCH-301 | 8,50 % |
| CCH-23 | 12,00 % |
| CCH-34 | 4,50 % |
| CCH-35 | 3,00 % |
| BCH-32 | 6,50 % |
| Klärpunkt [°C]: | 80,7 |
| Δn [589 nm, 20°C]: | 0,1123 |
| Δε [1 kHz, 20°C]: | -4,2 |
| ε_{∥} [1 kHz, 20°C]: | 3,8 |
| ε_{⊥} [1 kHz, 20°C]: | 8,0 |
| γ₁ [mPa·s, 20°C]: | 150 |
| K₁ [pN, 20°C]: | 14,6 |
| K₃ [pN, 20°C]: | 15,2 |
| V₀ [20°C, V]: | 2,01 |

### Beispiel 246

| | |
|---|---|
| PCH-3N.F.F | 7,00 % |
| CP-1V-N | 18,00 % |
| CP-V2-N | 16,00 % |
| CC-4-V | 12,00 % |
| CCP-V-1 | 9,00 % |
| PPTUI-3-2 | 18,00 % |
| PPTUI-3-4 | 20,00 % |
| Klärpunkt [°C]: | 91 |
| Δn [589 nm, 20°C]: | 0,2003 |
| Δε [1 kHz, 20°C]: | 10,3 |
| ε_{∥} [1 kHz, 20°C]: | 14,3 |
| ε_{⊥} [1 kHz, 20°C]: | 4,0 |

### Beispiel 247

| | |
|---|---|
| BCH-32 | 8,00 % |
| CC-3-V | 24,50 % |
| CCP-V-1 | 8,00 % |
| CCY-2-1 | 2,00 % |
| CCY-3-O1 | 6,00 % |
| CCY-3-O3 | 2,00 % |
| CLY-3-O2 | 5,00 % |
| CLY-3-O3 | 5,00 % |
| CPY-2-O2 | 6,50 % |
| CPY-3-O2 | 6,00 % |
| CY-3-O2 | 6,00 % |
| CY-3-O4 | 3,00 % |
| CY-5-O2 | 5,00 % |
| PYP-2-3 | 6,50 % |
| PYP-2-4 | 6,50 % |
| Klärpunkt [°C]: | 96 |
| Δn [589 nm, 20°C]: | 0,1195 |
| Δε [1 kHz, 20°C]: | -2,7 |
| ε_{∥} [1 kHz, 20°C]: | 3,3 |

### Beispiel 247a

Die Mischung gemäß Beispiel 247 enthält zusätzlich

| | |
|---|---|
| 0,03 % | 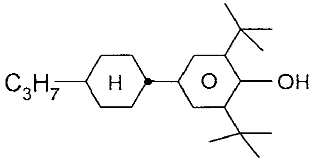 |

und

| | |
|---|---|
| 0,4 % | 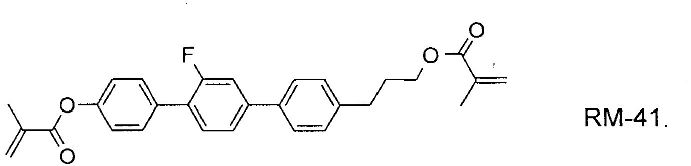 |

### Beispiel 248

| | |
|---|---|
| BCH-32 | 2,00 % |
| CC-3-V | 31,00 % |
| CCY-3-O1 | 4,50 % |
| CCY-3-O2 | 6,00 % |
| CCY-4-O2 | 7,00 % |
| CLY-3-O2 | 8,00 % |
| CPY-2-O2 | 7,50 % |
| CPY-3-O2 | 10,00 % |
| CY-3-O2 | 6,25 % |
| PY-3-O2 | 5,75 % |
| PY-1-O4 | 6,00 % |
| PY-4-O2 | 6,00 % |
| Klärpunkt [°C]: | 80 |
| Δn 589 nm, 20°C]: | 0,1083 |
| Δε [1 kHz, 20°C]: | -3,9 |
| ε_{∥} [1 kHz, 20°C]: | 3,7 |
| γ₁ [mPa·s, 20°C]: | 120 |
| K₁ [pN, 20°C]: | 12,7 |
| K₃ [pN, 20°C]: | 15,1 |
| V₀ [20°C, V]: | 2,07 |

### Beispiel 248a

Die Mischung gemäß Beispiel 248 enthält zusätzlich

| | |
|---|---|
| 0,005 % | 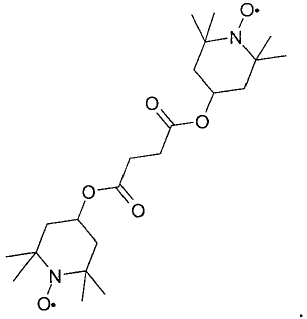 |

### Beispiel 249

| | |
|---|---|
| CC-3-V | 37,00 % |
| CCY-3-O1 | 5,00 % |
| CCY-3-O2 | 5,00 % |
| CCY-4-O2 | 4,00 % |
| CLY-3-O2 | 7,00 % |
| CPY-2-O2 | 9,00 % |
| CPY-3-O2 | 10,00 % |
| CY-3-O2 | 11,50 % |
| PY-3-O2 | 11,50 % |
| Klärpunkt [°C]: | 75,2 |
| Δn [589 nm, 20°C]: | 0,1016 |
| Δε [1 kHz, 20°C]: | -3,7 |
| ε_{∥} [1 kHz, 20°C]: | 3,7 |
| γ₁ [mPa·s, 20°C]: | 99 |
| V₀ [20°C, V]: | 2,13 |

### Beispiel 249a

Die Mischung gemäß Beispiel 249 enthält zusätzlich

| | |
|---|---|
| 0,015 % | 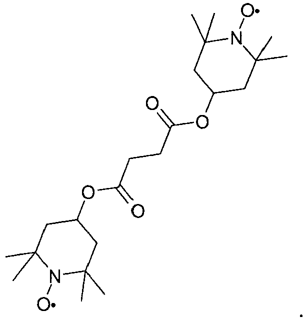 |

### Beispiel 249b

Die Mischung gemäß Beispiel 249 enthält zusätzlich

| | |
|---|---|
| 0,005 % | 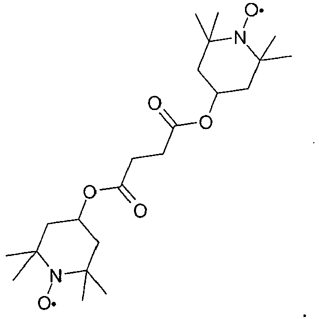 |

### Beispiel 250

| | |
|---|---|
| PUQU-3-F | 8,00 % |
| APUQU-2-F | 6,00 % |
| APUQU-3-F | 6,00 % |
| CDUQU-3-F | 6,00 % |
| DPGU-4-F | 6,00 % |
| CCGU-3-F | 4,00 % |
| CC-3-V | 36,00 % |
| CC-3-V1 | 8,00 % |
| CCP-V-1 | 12,00 % |
| CCP-V2-1 | 6,00 % |
| CBC-33F | 1,50 % |
| PPGU-3-F | 0,50 % |
| Klärpunkt [°C]: | 96,3 |
| Δn [589 nm, 20°C]: | 0,0994 |
| Δε [1 kHz, 20°C]: | 9,6 |
| γ₁ [mPa·s, 20°C]: | 87 |
| K₁ [pN, 20°C]: | 14,5 |
| K₃ [pN, 20°C]: | 16,6 |
| V₀ [20°C, V]: | 1,29 |

## Patentansprüche

1. Verfahren zum Reinigen einer Flüssigkristallmischung (7), wobei die Flüssigkristallmischung (7) durch eine erste Elektrodialysezelle (2) gefördert wird, wobei eine Konzentratlösung (14) durch eine an die erste Elektrodialysezelle (2) benachbart angrenzende und durch eine lonenaustauschermembran (9) getrennte zweite Elektrodialysezelle (8) gefördert wird, und wobei mit Hilfe von einer außerhalb der Elektrodialysezellen (2, 8) angeordneten Anoden-Kathoden-Anordnung (15, 16) ein elektrisches Feld quer zu einer Förderrichtung der Flüssigkristallmischung (7) durch die erste Elektrodialysezelle (2) erzeugt wird, so dass ionisierte Bestandteile der Flüssigkristallmischung (7) an der lonenaustauschermembran (9) abgeführt und aus der Flüssigkristallmischung (7) abgeschieden werden.

2. Verfahren nach Anspruch 1, **dadurch gekennzeichnet, dass** die Flüssigkristallmischung (7) mehrfach durch die erste Elektrodialysezelle (2) gefördert wird.

3. Verfahren nach Anspruch 1, **dadurch gekennzeichnet, dass** die Flüssigkristallmischung (7) nacheinander durch mehrere Elektrodialysezellen mit einer mit der ersten Elektrodialysezelle (2) vergleichbaren Anordnung von einer lonenaustauschmembran (9) und einer angrenzenden zweiten Elektrodialysezelle (8) und von einem elektrischen Feld gefördert wird.

4. Verfahren nach einem oder mehreren der Ansprüche 1 bis 3, **dadurch gekennzeichnet, dass** die Flüssigkristallmischung (7) über einen Zeitraum von mehr als einer Stunde, vorzugsweise von mehr als vier Stunden durch die erste Elektrodialysezelle (2) gefördert wird.

5. Verfahren nach einem oder mehreren der Ansprüche 1 bis 4, **dadurch gekennzeichnet, dass** als Konzentratlösung (14) deionisiertes Wasser verwendet wird.

6. Verfahren nach einem oder mehreren der Ansprüche 1 bis 5, **dadurch gekennzeichnet**, das als lonenaustauschermembran (9) eine Membran mit einer Durchschlagsspannung von mehr als 10 Volt, vorzugsweise von mehr als 80 Volt und besonders bevorzugt von 400 Volt und mehr verwendet wird, und mit Hilfe der Anoden-Kathoden-Anordnung (15, 16) eine elektrische Potentialdifferenz vorgegeben wird, die einen möglichst großen, jedoch unterhalb der Durchschlagsspannung liegenden Spannungsabfall an der lonenaustauschermembran (9) bewirkt.

7. Verfahren nach einem oder mehreren der Ansprüche 1 bis 6, **dadurch gekennzeichnet, dass** die Anode (15) und die Kathode (16) während der Durchführung des Verfahrens mit Transformatorenöl (19) gespült werden.

8. Verfahren nach einem oder mehreren der Ansprüche 1 bis 7, **dadurch gekennzeichnet, dass** zur Förderung der Flüssigkristallmischung (7) und der Konzentratlösung (14) pulsationsarme Pumpen verwendet werden.

9. Verfahren nach einem oder mehreren der Ansprüche 1 bis 8, **dadurch gekennzeichnet, dass** die Flüssigkristallmischung (7) vor einem Einbringen in die erste Elektrodialysezelle (2) durchmischt und homogenisiert wird.

## Claims

1. Process for the purification of a liquid-crystal mixture (7) in which the liquid-crystal mixture (7) is passed through a first electrodialysis cell (2), a concentrate solution (14) is passed through a second electrodialysis cell (8) which is adjacent to the first electrodialysis cell (2) and is separated by an ion-exchanger membrane (9), and, with the aid of an anode/cathode arrangement (15, 16) arranged outside the electrodialysis cells (2, 8), an electric field transverse to a direction of passage of the liquid-crystal mixture (7) through the first electrodialysis cell (2) is generated so that ionised constituents of the liquid-crystal mixture (7) are discharged at the ion-exchanger membrane (9) and removed from the liquid-crystal mixture (7).

2. Process according to Claim 1, **characterised in that** the liquid-crystal mixture (7) is passed through the first electrodialysis cell (2) a number of times.

3. Process according to Claim 1, **characterised in that** the liquid-crystal mixture (7) is passed successively through a plurality of electrodialysis cells having an arrangement, comparable to the first electrodialysis cell (2), of an ion-exchanger membrane (9) and an adjacent second electrodialysis cell (8) and an electric field.

4. Process according to one or more of Claims 1 to 3, **characterised in that** the liquid-crystal mixture (7) is passed through the first electrodialysis cell (2) over a period of more than one hour, preferably more than four hours.

5. Process according to one or more of Claims 1 to 4, **characterised in that** the concentrate solution (14) used is deionised water.

6. Process according to one or more of Claims 1 to 5, **characterised in that** the ion-exchanger membrane (9) used is a membrane having a breakdown voltage of greater than 10 volts, preferably greater than 80 volts and particularly preferably 400 volts or more, and an electric potential difference which effects the greatest possible drop in voltage at the ion-exchanger membrane (9), but which is below the breakdown voltage, is pre-specified with the aid of the anode/cathode arrangement (15, 16).

7. Process according to one or more of Claims 1 to 6, **characterised in that** the anode (15) and the cathode (16) are rinsed with transformer oil (19) while the process is being carried out.

8. Process according to one or more of Claims 1 to 7, **characterised in that** low-pulsation pumps are used to convey the liquid-crystal mixture (7) and the concentrate solution (14).

9. Process according to one or more of Claims 1 to 8, **characterised in that** the liquid-crystal mixture (7) is thoroughly mixed and homogenised before introduction into the first electrodialysis cell (2).

## Revendications

1. Procédé pour la purification d'un mélange de cristaux liquides (7) selon lequel le mélange de cristaux liquides (7) est passé au travers d'une première cellule d'électrodialyse (2), une solution de concentré (14) est passée au travers d'une seconde cellule d'électrodialyse (8) qui est adjacente à la première cellule d'électrodialyse (2) et est séparée par une membrane échangeuse d'ions (9), et, à l'aide d'un agencement d'anode(s)/de cathode(s) (15, 16) qui est agencé à l'extérieur des cellules d'électrodialyse (2, 8), un champ électrique qui est transversal à une direction de passage du mélange de cristaux liquides (7) au travers de la première cellule d'électrodialyse (2) est généré de telle sorte que des constituants ionisés du mélange de cristaux liquides (7) soient déchargés au niveau de la membrane échangeuse d'ions (9) et soient enlevés du mélange de cristaux liquides (7).

2. Procédé selon la revendication 1, **caractérisé en ce que** le mélange de cristaux liquides (7) est passé au travers de la première cellule d'électrodialyse (2) un certain nombre de fois.

3. Procédé selon la revendication 1, **caractérisé en ce que** le mélange de cristaux liquides (7) est passé de façon successive au travers d'une pluralité de cellules d'électrodialyse qui présentent un agencement, comparable à celui de la première cellule d'électrodialyse (2), qui est constitué par une membrane échangeuse d'ions (9) et une seconde cellule d'électrodialyse (8) et un champ électrique.

4. Procédé selon une ou plusieurs des revendications 1 à 3, **caractérisé en ce que** le mélange de cristaux liquides (7) est passé au travers de la première cellule d'électrodialyse (2) sur une période supérieure à une heure, de préférence supérieure à quatre heures.

5. Procédé selon une ou plusieurs des revendications 1 à 4, **caractérisé en ce que** la solution de concentré (14) qui est utilisée est de l'eau désionisée.

6. Procédé selon une ou plusieurs des revendications 1 à 5, **caractérisé en ce que** la membrane échangeuse d'ions (9) qui est utilisée est une membrane qui présente une tension de rupture/claquage supérieure à 10 volts, de préférence supérieure à 80 volts et de façon particulièrement préférable de 400 volts ou plus, et une différence de potentiel électrique qui réalise la chute de tension possible la plus importante au niveau de la membrane échangeuse d'ions (9), mais qui est inférieure à la tension de rupture/claquage, est pré-spécifiée à l'aide de l'agencement d'anodes/de cathodes (15, 16).

7. Procédé selon une ou plusieurs des revendications 1 à 6, **caractérisé en ce que** l'anode (15) et la cathode (16) sont rincées à l'aide d'huile de transformateur/isolante (19) tandis que le processus est en cours de réalisation.

8. Procédé selon une ou plusieurs des revendications 1 à 7, **caractérisé en ce que** des pompes à faible pulsation sont utilisées de manière à convoyer le mélange de cristaux liquides (7) et la solution de concentré (14).

9. Procédé selon une ou plusieurs des revendications 1 à 8, **caractérisé en ce que** le mélange de cristaux liquides (7) est mélangé et homogénéisé soigneusement avant son introduction à l'intérieur de la première cellule d'électrodialyse (2)
